# EUROPEAN PATENT APPLICATION

(11) **EP 4 663 875 A1**
(43) Date of publication of application: **17.12.2025**
(21) Application number: 24752856.5
(22) Date of filing: 05.02.2024
(51) Int. Cl.: E04H 4/16, C02F 1/00, B01D 35/02, B01D 35/30, B25J 19/00

(54) **CLEANING DEVICE AND CLEANING DEVICE SYSTEM**

(30) Priority: 06.02.2023 CN 202320121909 U; 16.02.2023 CN 202320232759 U; 23.02.2023 CN 202320298525 U; 27.04.2023 WO PCT/CN2023/091116; 27.04.2023 WO PCT/CN2023/091115; 08.09.2023 CN 202311159683; 17.11.2023 CN 202311540590; 19.12.2023 CN 202323471851 U; 17.01.2024 CN 202410070430; 18.01.2024 CN 202410077690
(71) Applicant: Xingmai Innovation Technology (Suzhou) Co., Ltd., Suzhou, Jiangsu 215124 (CN)
(72) Inventor: WANG, Shengle, Suzhou, Jiangsu 215124 (CN); ZHANG, Shilei, Suzhou, Jiangsu 215124 (CN)
(74) Representative: Huang, Liwei
(86) International application number: PCT/CN2024/076021
(87) International publication number: WO 2024/165001

(57) **Abstract**

The present disclosure provides a cleaning device and a cleaning device system. The cleaning device includes a cleaning device body. The cleaning device body includes a filtering mechanism, a drive mechanism, an adjustment assembly, a moving assembly, and a propulsion assembly. The filtering mechanism is at least partially disposed inside the cleaning device body. The drive mechanism is configured to generate a suction force to drive liquid to flow through the at least one filtering mechanism. The adjustment assembly is configured to adjust an action force applied to the cleaning device in a first direction or a second direction, so that the cleaning device is switched between a first motion state and a third motion state. The moving assembly is disposed at the bottom of the cleaning device body and configured to drive the cleaning device to move on a to-be-cleaned surface. The propulsion assembly is configured to drive the cleaning device to move away from the to-be-cleaned surface. The cleaning device can be switched between the first motion state and the third motion state to perform underwater cleaning and water surface cleaning to meet different use requirements.

## Description

### CROSS REFERENCE TO RELATED APPLICATIONS

The present application claims priority to: Chinese Patent Application No. 202320121909.7, filed with the China National Intellectual Property Administration on February 6, 2023 and entitled "POOL CLEANING ROBOT", International Patent Application No. PCT/CN2023/091116, filed with the World Intellectual Property Organization on April 27, 2023 and entitled "MOVING APPARATUS USED IN LIQUID AND SWIMMING POOL CLEANING ROBOT", Chinese Patent Application No. 202320298525.2, filed with the China National Intellectual Property Administration on February 23, 2023 and entitled "POOL CLEANING ROBOT", Chinese Patent Application No. 202320232759.7, filed with the China National Intellectual Property Administration on February 16, 2023 and entitled "TRANSMISSION APPARATUS AND POOL CLEANING ROBOT", International Patent Application No. PCT/CN2023/091115, filed with the World Intellectual Property Organization on April 27, 2023 and entitled "AUTOMATIC UNDERWATER SPREADING APPARATUS", Chinese Patent Application No. 202323471851.8, filed with the China National Intellectual Property Administration on December 19, 2023 and entitled "POOL CLEANING ROBOT", Chinese Patent Application No. 202311159683.0, filed with the China National Intellectual Property Administration on September 8, 2023 and entitled "FILTERING ASSEMBLY AND UNDERWATER CLEANING DEVICE", Chinese Patent Application No. 202311540590.2, filed with the China National Intellectual Property Administration on November 17, 2023 and entitled "FILTERING ASSEMBLY AND UNDERWATER CLEANING DEVICE", Chinese Patent Application No. 202410070430.4, filed with the China National Intellectual Property Administration on January 17, 2024 and entitled "POOL ROBOT AND CONTROL METHOD THEREFOR, AND STORAGE MEDIUM", and Chinese Patent Application No. 202410077690.4, filed with the China National Intellectual Property Administration on January 18, 2024 and entitled "SOLOR SYSTEM", all of which are hereby incorporated by reference herein.

### TECHNICAL FIELD

The present disclosure relates to the technical field of operating devices for liquid, and in particular to, a cleaning device and a cleaning device system.

### BACKGROUND

Swimming pool cleaning and maintenance are essential to keep water clean and the swimming pool hygienic. Swimming pool cleaning robots in the market can be classified into three categories. For the first category, the cleaning robot can clean the bottom of the swimming pool only. For the second category, the cleaning robot can clean both the bottom and vertical wall surfaces of the swimming pool, but the cleaning robot should operate under a water surface. For the third category, the cleaning robot constantly floats on the water surface and cleans only the water surface. The three categories of swimming pool cleaning robots have their own characteristics, but these swimming pool cleaning robots cannot effectively adjust positions in a liquid environment and their depth in the liquid environment based on actual needs. As a result, the bottom of the swimming pool, the wall surfaces of the swimming pool, and the water surface cannot be comprehensively cleaned. Consequently, application ranges and operating efficiencies of these cleaning robots are limited.

Therefore, there is a need for a moving apparatus used in liquid and a swimming pool cleaning robot which can be flexibly switched between a position on a liquid surface and a position under the liquid surface, to improve the operating efficiency in cleaning water and the application range and reduce cleaning costs.

### SUMMARY OF THE DISCLOSURE

The present disclosure provides a cleaning device, including a cleaning device body. The cleaning device body includes: at least one filtering mechanism, where the at least one filtering mechanism is at least partially disposed inside the cleaning device body; at least one drive mechanism configured to generate a suction force to drive liquid to flow through the at least one filtering mechanism; at least one adjustment assembly configured to adjust an action force applied to the cleaning device in a first direction or a second direction, so that the cleaning device is switched between a first motion state and a third motion state, where the cleaning device is configured to perform underwater cleaning in the first motion state, and the cleaning device is configured to perform water surface cleaning in the third motion state; a moving assembly disposed at the bottom of the cleaning device body and configured to drive the cleaning device to move on a to-be-cleaned surface; and a propulsion assembly configured to drive the cleaning device to move away from the to-be-cleaned surface.

In some embodiments, the cleaning device body includes a liquid inlet portion. The liquid inlet portion includes at least one first water inlet. The first water inlet is provided at the bottom of the cleaning device body and in fluid communication with the filtering mechanism.

In some embodiments, the filtering mechanism includes at least one filtering box. The filtering box includes at least a first inlet. The first inlet is in fluid communication with the first water inlet.

In some embodiments, the liquid inlet portion further includes at least a second water inlet. The second water inlet is provided on a side surface or at the top of the cleaning device body. The second water inlet is in fluid communication with the filtering mechanism.

In some embodiments, the second water inlet is in fluid communication with the first inlet.

In some embodiments, the filtering mechanism includes at least one filtering box. The filtering box further includes at least a second inlet. The second inlet and the first inlet are located on different surfaces of the filtering box. The second inlet is in fluid communication with the second water inlet.

In some embodiments, the cleaning device further has a second motion state. The filtering mechanism includes at least one filtering box. The filtering box is provided with at least one flow guiding opening and a cover part mating with the flow guiding opening. When the cleaning device is in the first motion state, the cover part covers the flow guiding opening. When the cleaning device is in the second motion state, the cover part is opened to expose the flow guiding opening.

In some embodiments, the cover part is pivotally connected to the filtering box. The cleaning device further includes an adjustment part mounted on the cover part. The adjustment part is configured to assist the cover part in covering the flow guiding opening or being opened to expose the flow guiding opening.

In some embodiments, the filtering mechanism includes a filtering box. The filtering box includes a first sub-filtering box and a second sub-filtering box. A first sub-filtering layer is disposed on a side wall of the first sub-filtering box. A second sub-filtering layer is disposed on a side wall of the second sub-filtering box. The second sub-filtering box is sleeved inside the first sub-filtering box. First filtering mesh holes of the first sub-filtering layer and second filtering mesh holes of the second sub-filtering layer are at least partially staggered to each other.

In some embodiments, the cleaning device body includes a movement propulsion mechanism and a first cleaning part. The movement propulsion mechanism includes at least a first wheel, a second wheel, and a track. The first wheel and the second wheel are in transmission connection to each other through the track. The first wheel is driven by a moving drive part. The second wheel is configured to drive the first cleaning part to rotate.

In some embodiments, the cleaning device body further includes a cleaning member disposed on a side portion of the cleaning device body.

In some embodiments, the cleaning device further includes an in-position detection mechanism for the filtering box configured to detect whether the filtering box is mounted in position on the cleaning device body. The in-position detection mechanism for the filtering box includes at least one of a sensing assembly, a Hall assembly, an inductance assembly, or a switch assembly.

In some embodiments, the adjustment assembly is configured to adjust a buoyancy force applied to the cleaning device or the action force applied to the cleaning device in the first direction or the second direction.

In some embodiments, the adjustment assembly is a mode switching member configured to adjust a magnitude of the buoyancy force applied to the cleaning device in a vertical direction. The mode switching member includes: a buoyancy cavity configured to accommodate liquid and/or gas; and a buoyancy adjustment part configured to adjust a volume of the liquid or the gas in the buoyancy cavity.

In some embodiments, the cleaning device body includes: a storage assembly configured to store a to-be-spread reagent; a spreading drive assembly connected to the storage assembly and configured to drive the to-be-spread reagent to be discharged from the storage assembly; a reagent outlet configured to allow the to-be-spread reagent to be discharged from the storage assembly and enter liquid; and a control assembly, electrically connected to the spreading drive assembly and configured to control the spreading drive assembly.

In some embodiments, the cleaning device further includes a water quality detection module. The water quality detection module is electrically connected to the control assembly. The control assembly is configured to control the spreading drive assembly based on detection information of the water quality detection module.

In some embodiments, the cleaning device body further includes a reagent inlet portion. The reagent inlet portion is configured to allow the to-be-spread reagent to enter the storage assembly.

In some embodiments, the cleaning device body further includes a first sealed cavity. The first sealed cavity is configured to accommodate at least one motor assembly of the cleaning device. The storage assembly, the first sealed cavity, and the filtering mechanism are disposed sequentially along a forward direction of the cleaning device.

In some embodiments, the cleaning device body includes the first sealed cavity. The drive mechanism at least includes a main water pump motor. The moving assembly includes a movement drive motor. The main water pump motor and the movement drive motor are disposed in the first sealed cavity. The first sealed cavity and the filtering mechanism are sequentially disposed along the forward direction of the cleaning device. The filtering mechanism is disposed at a front portion of the cleaning device body. The first sealed cavity is disposed at a rear portion of the cleaning device body.

The present disclosure provides a cleaning device system, including the above cleaning device and a solar energy system. The solar energy system includes: a solar panel and a control mechanism electrically connected to the solar panel. The control mechanism is configured to control, based on obtained information, the solar panel and/or the cleaning device to perform a target event. The cleaning device is powered directly or indirectly by the solar energy system.

### BRIEF DESCRIPTION OF THE DRAWINGS

To more clearly describe the technical solutions in embodiments of the present disclosure, the following briefly introduces the accompanying drawings required for describing embodiments. It is clear that the accompanying drawings in the following description show merely some embodiments of the present disclosure, and a person of ordinary skill in the art may still derive other drawings from these accompanying drawings without creative efforts.

To more clearly describe the technical solutions in embodiments of the present disclosure, the following briefly introduces the accompanying drawings required for describing embodiments. It is clear that the accompanying drawings in the following description show merely some embodiments of the present disclosure, and a person of ordinary skill in the art may still derive other drawings from these accompanying drawings without creative efforts.
FIG. 1 is a cross-sectional view of a cleaning device from a first angle according to a first embodiment of the present disclosure;
FIG. 2 is an enlarged view of a portion A shown in FIG. 1;
FIG. 3 is a cross-sectional view of a cleaning device from a second angle according to a first embodiment of the present disclosure;
FIG. 4 is a first brief view of a filtering mechanism of a cleaning device according to the present disclosure;
FIG. 5 is a second brief view of a filtering mechanism of a cleaning device according to the present disclosure;
FIG. 6 is a third brief view of a filtering mechanism of a cleaning device according to the present disclosure;
FIG. 7 is a schematic structural view of a filtering assembly of a cleaning device according to the present disclosure;
FIG. 8 is an enlarged view of a portion B in FIG. 7;
FIG. 9 is a cross-sectional view of a filtering assembly of a cleaning device according to the present disclosure;
FIG. 10 is a first schematic structural view of a first sub-filtering layer and a second sub-filtering layer of a cleaning device according to the present disclosure;
FIG. 11 is a second schematic structural view of a first sub-filtering layer and a second sub-filtering layer of a cleaning device according to the present disclosure;
FIG. 12 is a third schematic structural view of a first filtering layer and a second filtering layer of a cleaning device according to the present disclosure;
FIG. 13 is a cross-sectional view of a filtering assembly of a cleaning device in a first motion state according to a second embodiment of the present disclosure;
FIG. 14 is an enlarged view of a portion C in FIG. 13;
FIG. 15 is a cross-sectional view of a filtering assembly of a cleaning device in a second motion state according to a second embodiment of the present disclosure;
FIG. 16 is an enlarged view of a portion D in FIG. 15;
FIG. 17 is a cross-sectional view of a filtering assembly of a cleaning device in a first motion state according to a third embodiment of the present disclosure.
FIG. 18 is an enlarged view of a portion E in FIG. 17;
FIG. 19 is a cross-sectional view of a filtering assembly of a cleaning device in a second motion state according to a third embodiment of the present disclosure;
FIG. 20 is an enlarged view of a portion F in FIG. 19;
FIG. 21 is a partial schematic view of a filtering assembly of a cleaning device in a first motion state according to a second embodiment of the present disclosure;
FIG. 22 is a partial schematic view of a filtering assembly of a cleaning device in a second motion state according to a second embodiment of the present disclosure;
FIG. 23 is a partial schematic view of a filtering assembly of a cleaning device in a second motion state according to a second embodiment of the present disclosure;
FIG. 24 is a schematic structural view of a mounting bracket in a filtering assembly of a cleaning device according to a third embodiment of the present disclosure;
FIG. 25 is a partial schematic view of an underwater cleaning device according to a second embodiment of the present disclosure;
FIG. 26 is a partial exploded view of an underwater cleaning device according to a second embodiment of the present disclosure;
FIG. 27 is a partial cross-sectional view of an underwater cleaning device according to a second embodiment of the present disclosure;
FIG. 28 is a schematic view of a cleaning device according to a fourth embodiment of the present disclosure;
FIG. 29 is an exploded view of a cleaning device according to a fourth embodiment of the present disclosure;
FIG. 30 is a cross-sectional view of a cleaning device according to a fifth embodiment of the present disclosure;
FIG. 31 is a schematic structural view of a portion G in FIG. 30;
FIG. 32 is a schematic structural view of a connection portion of a cleaning device according to a sixth embodiment of the present disclosure;
FIG. 33 is a schematic structural view of a connection portion of a cleaning device according to a seventh embodiment of the present disclosure;
FIG. 34 is a schematic structural view of a first transmission mechanism of a cleaning device according to a sixth embodiment of the present disclosure;
FIG. 35 is a schematic structural view of a cleaning device according to a seventh embodiment of the present disclosure;
FIG. 36 is a flow chart of a control method for a cleaning device according to an embodiment of the present disclosure;
FIG. 37 is a diagram of a framework of an electronic device according to an embodiment of the present disclosure;
FIG. 38 is a diagram of a framework of a computer-readable storage medium according to an embodiment of the present disclosure;
FIG. 39 is a cross-sectional view of a filtering assembly of a cleaning device according to an eighth embodiment of the present disclosure;
FIG. 40 is an enlarged view of a portion H in FIG. 39;
FIG. 41 is a cross-sectional view of a filtering assembly of a cleaning device according to a ninth embodiment of the present disclosure;
FIG. 42 is an enlarged view of a portion I in FIG. 41;
FIG. 43 is a partial schematic view of a cleaning device according to a ninth embodiment of the present disclosure.
FIG. 44 is a cross-sectional view of a cleaning device according to a tenth embodiment of the present disclosure;
FIG. 45 is an enlarged view of a portion J in FIG. 44;
FIG. 46 is a schematic view of a sensing drive assembly of a cleaning device in a first state according to a tenth embodiment of the present disclosure;
FIG. 47 is a schematic view of a sensing drive assembly of a cleaning device in a second state according to a tenth embodiment of the present disclosure;
FIG. 48 is a schematic diagram of modules of a cleaning device according to an eleventh embodiment of the present disclosure;
FIG. 49 a schematic structural view of a cleaning device according to a twelfth embodiment of the present disclosure;
FIG. 50 is a partial schematic view of a cleaning device according to a twelfth embodiment of the present disclosure;
FIG. 51 is a schematic view of movement of a cleaning device on a side wall of a target region according to a twelfth embodiment of the present disclosure;
FIG. 52 is a schematic view of floating of a cleaning device on a liquid surface according to a twelfth embodiment of the present disclosure;
FIG. 53 is a schematic structural view of a cleaning device according to a twelfth embodiment of the present disclosure;
FIG. 54 is a schematic view of movement of a cleaning device on a bottom wall of a target region according to a thirteenth embodiment of the present disclosure;
FIG. 55 is a schematic view of movement of a cleaning device on a bottom wall and a side wall of a target region according to a thirteenth embodiment of the present disclosure;
FIG. 56 is a schematic view of movement of a cleaning device on a side wall of a target region according to a thirteenth embodiment of the present disclosure;
FIG. 57 is a first sectional view of a cleaning device according to a thirteenth embodiment of the present disclosure;
FIG. 58 is a second sectional view of a cleaning device according to a thirteenth embodiment of the present disclosure;
FIG. 59 is a schematic structural view of a cleaning device according to a fourteenth embodiment of the present disclosure.
FIG. 60 is a sectional view of a cleaning device according to a fourteenth embodiment of the present disclosure;
FIG. 61 is a flow chart of a liquid cleaning control method according to the present disclosure;
FIG. 62 is a first schematic structural view of a cleaning device according to a fifteenth embodiment of the present disclosure;
FIG. 63 is a second schematic structural view of a cleaning device according to a fifteenth embodiment of the present disclosure;
FIG. 64 is a schematic diagram of modules of a cleaning device according to a fifteenth embodiment of the present disclosure;
FIG. 65 is a first schematic structural view of a cleaning device according to a fifteenth embodiment of the present disclosure;
FIG. 66 is a first sectional schematic view of a cleaning device according to a fifteenth embodiment of the present disclosure;
FIG. 67 is a second sectional schematic view of a cleaning device according to a fifteenth embodiment of the present disclosure;
FIG. 68 is a schematic diagram of a solid storage module of a cleaning device according to a fifteenth embodiment of the present disclosure;
FIG. 69 is a schematic structural view of a cleaning device according to a sixteenth embodiment of the present disclosure;
FIG. 70 is a sectional view of a cleaning device according to a sixteenth embodiment of the present disclosure;
FIG. 71 is an enlarged view of a portion 0 in FIG. 70;
FIG. 72 is a schematic view of a partial structure of a flow rate adjustment assembly of a cleaning device according to a sixteenth embodiment of the present disclosure;
FIG. 73 is a schematic structural view of a detection module of a cleaning device according to a seventeenth embodiment of the present disclosure;
FIG. 74 is a flow chart of an automatic underwater spreading method according to the present disclosure;
FIG. 75 is a schematic view of a three-dimensional structure existing when a sealing structure and a blocking structure are assembled according to the present disclosure;
FIG. 76 is a front view existing when the sealing structure and the blocking structure shown in FIG. 75 are assembled;
FIG. 77 is a schematic view of a partial three-dimensional structure existing when the sealing structure and the blocking structure shown in FIG. 75 are assembled on a cleaning device body;
FIG. 78 is a sectional view of the structure shown in FIG. 77;
FIG. 79 is an enlarged view of a portion K in FIG. 78;
FIG. 80 is a schematic view of a three-dimensional structure existing when the sealing structure and the blocking structure shown in FIG. 75 are assembled on a swimming pool cleaning robot;
FIG. 81 is a schematic view of a three-dimensional structure of a structure of the cleaning device, shown in FIG. 80, on which the sealing structure and the blocking structure are assembled;
FIG. 82 is a schematic view of a three-dimensional structure of the sealing structure of the cleaning device shown in FIG. 75;
FIG. 83 is a front view of the sealing structure shown in FIG. 82;
FIG. 84 is a schematic view of a three-dimensional structure of the blocking structure of the cleaning device shown in FIG. 75;
FIG. 85 is a schematic view of a three-dimensional structure of the blocking structure shown in FIG. 84 from another angle;
FIG. 86 is a schematic view of a three-dimensional structure of a liquid storage structure of the cleaning device shown in FIG. 75;
FIG. 87 is a first schematic structural view of a cleaning system according to the present disclosure;
FIG. 88 is a second schematic structural view of a cleaning system according to the present disclosure;
FIG. 89 is a first schematic structural view of a cleaning device according to an eighteenth embodiment of the present disclosure;
FIG. 90 is a side view of a cleaning device according to an eighteenth embodiment of the present disclosure;

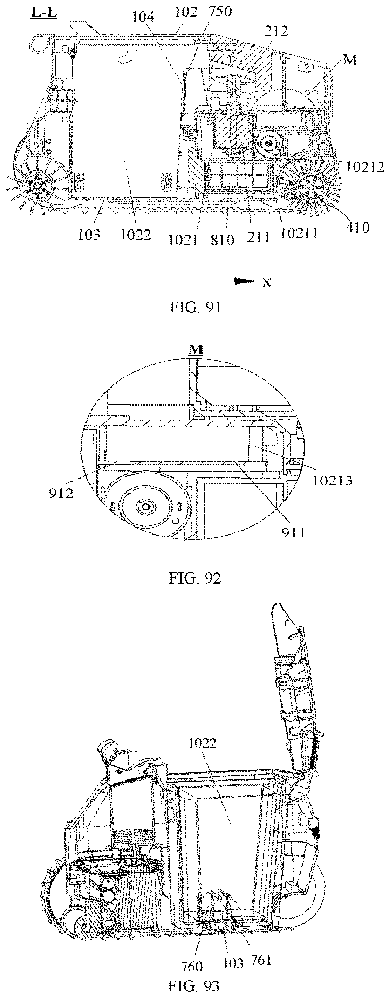

FIG. 91 is a sectional view of a cleaning device along a direction of L-L shown in FIG. 90;
FIG. 92 is an enlarged view of a portion M in FIG. 91;
FIG. 93 is a second schematic structural view of a cleaning device according to an eighteenth embodiment of the present disclosure;

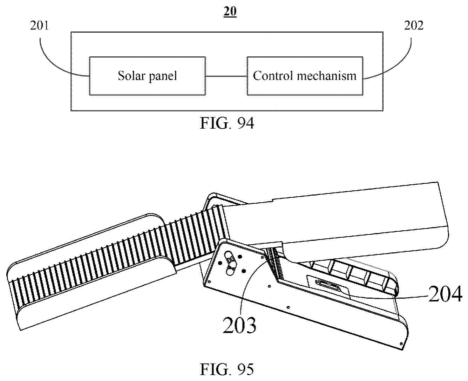

FIG. 94 is a schematic structural view of a cleaning device system according to an embodiment of the present disclosure; and
FIG. 95 is a schematic structural view of a cleaning device including a flipping plate according to the present disclosure.

Reference numerals in the drawings: 10: cleaning device; 101: cleaning device body; 102: housing; 1021: first sealed cavity; 10211: accommodating groove; 10212: pressing plate; 10213: suspension arm; 1022: second sealed cavity; 1023: filtering box cavity; 10231: second cavity; 10232: filtering box cavity opening; 10233: filtering box cavity duct; 103: liquid inlet portion; 1031: first water inlet; 1032: second water inlet; 104: liquid outlet portion; 105: interaction connection portion; 106: garbage guiding member; 1061: first port; 1062: second port; 107: reagent inlet portion; 1071: stepped surface; 108: filtered liquid outlet portion; 100: movement propulsion mechanism; 110: moving assembly; 111: track; 112: wheel; 1121: first wheel; 11211: drive paddle; 1122: second wheel; 120: transmission assembly; 121: movement drive part; 122: first gear; 123: first driven part; 1231: sixth gear; 1132: seventh gear; 1233: eighth gear; 124: second driven part; 1241: second gear; 1242: third gear; 1243: transmission belt; 1244: fourth gear; 1245: fifth gear; 130: propulsion assembly; 131: first propeller; 1331: first propeller impeller; 1332: first propulsion motor; 1313: first propeller opening; 132: second propeller; 210: main water pump; 211: main water pump motor; 212: main water pump impeller; 213: main pump water inlet; 214: main pump water outlet; 215: main water pump impeller casing; 400: cleaning mechanism; 410: first cleaning part; 411: roller brush for underwater cleaning; 420: second cleaning part; 421: roller brush for water surface cleaning; 510: mode switching member; 511: buoyancy adjustment assembly; 5111: buoyancy cavity; 5112: buoyancy cavity pump; 5113: air inlet; 5114: connection duct; 601: reagent dose detection assembly; 610: storage assembly; 611: storage cavity; 612: rigid storage cavity outlet; 613: first bent portion; 614: second bent portion; 615: third bent portion; 616: fourth bent portion; 617: opening portion; 6181: reagent opening; 61811: first reagent opening; 61812: second reagent opening; 6182: first one-way valve; 6183: sealing cap; 61813: avoidance opening; 61814: connection opening; 61815: rigid connection portion; 620: spreading drive assembly; 621: spreading drive pump; 6211: spreading drive pump body; 6212: first duct; 6213: second duct; 622: flow rate adjustment assembly; 6221: spreading duct; 6222: flow rate adjustment part; 6223: position-limiting groove; 630: reagent outlet; 640: stirring assembly; 650: valve structure; 660: mounting structure; 661: tubular mounting portion; 6611: first tubular structure; 6612: plate structure; 662: penetration hole; 663: first connection plate; 670: sealing structure; 671: first sealing portion; 672: through hole; 673: annular sealing portion; 674: conical sealing portion; 6741: first conical mating surface; 680: blocking structure; 681: tubular body; 6811: second conical mating surface; 6812: second tubular structure; 6813: third tubular structure; 6814: second connection plate; 682: blocking plate; 683: pushing post; 684: positioning plate; 690: water quality detection assembly; 691: detection part; 692: second drive pump; 693: detection cavity; 6911: first detection opening; 6912: second detection opening; 694: third drive pump; 695: third detection opening; 696: first flow channel; 6971: first detection one-way valve; 6972: second detection one-way valve; 698: water purifier; 699: second flow channel; 710: filtering assembly; 711: filtering box; 7111a: first side surface; 7111b: second side surface; 7111c: third side surface; 7111d: fourth side surface; 7111e: fifth side surface; 712: first filtering box; 7121: first filtering mesh hole; 7122: first inlet; 713: second filtering box; 7131: second filtering mesh hole; 7132: second inlet; 714: first cavity; 715: flow guiding opening; 716: filtering box water inlet portion; 7161: filtering box opening for water surface cleaning; 7162: filtering box opening for underwater cleaning; 717: filtering box roller brush assembly; 718: filtering box opening cover plate for water surface cleaning; 719: filtering box opening cover plate for underwater cleaning; 720: cover part; 720a: first end; 720b: second end; 721: connection portion; 722: accommodating channel; 723: pivoting portion; 724: lap portion; 725: inner side surface; 730a, 730b: adjustment part; 731: moving part; 740: mounting bracket; 741: grill hole; 742: accommodating cavity; 743: pivoting portion mounting groove; 744: mounting portion; 745: mounting buckle; 750: filtering part; 760: filtering bag; 761: gravity part; 770: first filtering assembly; 780: second filtering assembly; 790: valve part; 810: power supply assembly; 910: control assembly; 911: control board; 912: avoidance portion; 970: light assembly; 971: light control board; 980: sensing assembly; 981: sensing part; 982: sensing mating part; 990: sensing drive assembly; 991: sensing bracket; 9911: first sensing bracket; 99111: first bracket portion; 9912: second sensing bracket; 99121: second bracket portion; 992: sensing elastic part; 20: solar energy system; 201: solar panel; 202: control mechanism; 203: flipping plate; 204: position; 30: liquid surface; 40: target region; 401: target bottom wall; 402: target side wall; 50: pool control assembly; 501: station; 502: water cycling system; 5021: discharging opening; 60: automatic underwater spreading assembly; 1: cleaning device system.

### DETAILED DESCRIPTION

The following clearly and completely describes the technical solutions in embodiments of the present disclosure with reference to the accompanying drawings in embodiments of the present disclosure. Apparently, the described embodiments are merely some but not all of embodiments of the present disclosure. All other embodiments obtained by a person of ordinary skill in the art based on embodiments of the present disclosure without creative efforts shall fall within the protection scope of the present disclosure.

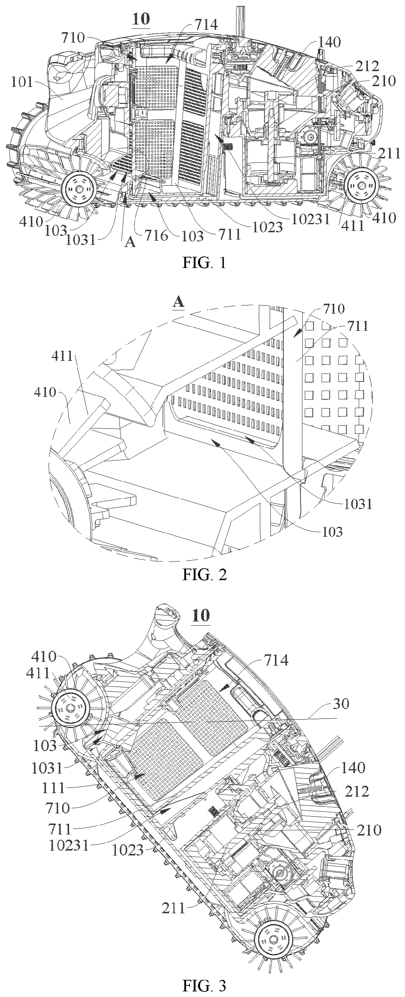

FIG. 1 is a cross-sectional view of a cleaning device from a first angle according to a first embodiment of the present disclosure. FIG. 2 is an enlarged view of a portion A shown in FIG. 1. FIG. 3 is a cross-sectional view of the cleaning device from a second angle according to the first embodiment of the present disclosure. Cleaning devices 10 on the market cannot effectively adjust positions in a liquid environment and their depth in the liquid environment based on actual needs. As a result, the bottom of a swimming pool, wall surfaces of the swimming pool, and a water surface cannot be comprehensively cleaned. Consequently, application ranges and operating efficiencies of these cleaning robots are limited. The present disclosure provides a cleaning device 10. The cleaning device 10 is configured to clean stains and suspended objects in a target region 40. The target region 40 may be a pool, a swimming pool, or the like. The cleaning device 10 may be a pool cleaning robot, a swimming pool cleaning robot, an underwater cleaning device, or the like. This is not limited herein. The cleaning device 10 of the present disclosure can be flexibly switched between a position on a liquid surface 30 and a position under the liquid surface 30, so that the cleaning device 10 can comprehensively clean the target region 40. This improves operating efficiency in cleaning liquid in the target region 40 and an application range and reduces cleaning costs of the target region 40.

A cleaning device body 101 is configured to move within the target region 40 that contains liquid, and may be switched between the position on the liquid surface 30 and the position under the liquid surface 30. The target region 40 may be a region in which the cleaning device body 101 moves and the liquid is contained. The target region 40 may include a swimming pool. For example, the cleaning device body 101 may move in water in the swimming pool and be switched between a position on a water surface of the swimming pool and a position under the water surface of the swimming pool. In some embodiments, the target region 40 may be other regions. For example, the target region 40 may include an oil well, a sewer, and the like. The target region 40 may include a target bottom wall 401 and a target side wall 402. In some embodiments, the cleaning device body 101 may move on the target bottom wall 401 and the target side wall 402 of the target region 40. For example, the cleaning device body 101 may move on the target bottom wall 401 and the target side wall 402 of the swimming pool. For details about movement of the cleaning device body 101 on the target bottom wall 401 and the target side wall 402 of the target region 40, refer to the following description.

The present disclosure provides a cleaning device. The cleaning device 10 includes a cleaning device body 101. The cleaning device body 101 includes at least one filtering mechanism, at least one drive mechanism, at least one adjustment assembly, and a movement propulsion mechanism. The filtering mechanism is configured to allow the cleaning device 10 to perform filtering. The at least one filtering mechanism is at least partially disposed inside the cleaning device body and configured to collect stains and suspended objects in the target region 40 and filter liquid. The drive mechanism is configured to generate a suction force. The drive mechanism is configured to generate the suction force, so that liquid flows through the at least one filtering mechanism. The at least one drive mechanism is disposed in the cleaning device body 101. The drive mechanism is configured to form the suction force to guide a flow direction of the liquid.

The adjustment assembly is configured to adjust an action force applied to the cleaning device 10 in a first direction or a second direction. When forces in various directions are formed by using the adjustment assembly, the adjustment assembly can adjust the forces, so that at least some of the forces can be applied along the first direction or the second direction. Under the action of the adjustment assembly, the cleaning device 10 is switched between a first motion state and a third motion state. The cleaning device 10 may perform underwater cleaning in the first motion state, and the cleaning device may perform water surface cleaning in the third motion state. The first direction is a direction in which the cleaning device 10 is switched from the first motion state to the third motion state. The second direction is a direction in which the cleaning device 10 is switched from the third motion state to the first motion state.

The movement propulsion mechanism 100 includes a moving assembly 110 and a propulsion assembly 130. The moving assembly 110 is disposed at the bottom of the cleaning device body 101. The moving assembly 110 is configured to drive the cleaning device 10 to move on a to-be-cleaned surface. The moving assembly 110 includes a wheel 112 or includes a wheel 112 and a track 111. The propulsion assembly 130 is configured to drive the cleaning device 10 to move away from the to-be-cleaned surface. The propulsion assembly 130 includes a first propeller 131 and/or a second propeller 132. Certainly, at least one of a main water pump 210, a main pump water inlet 213, or a main pump water outlet 214 in the drive mechanism can also provide a certain force component for the cleaning device 10 to move on the to-be-cleaned surface or to move away from the to-be-cleaned surface. The to-be-cleaned surface may be the target bottom wall 401 or the target side wall 402 of the target region 40.

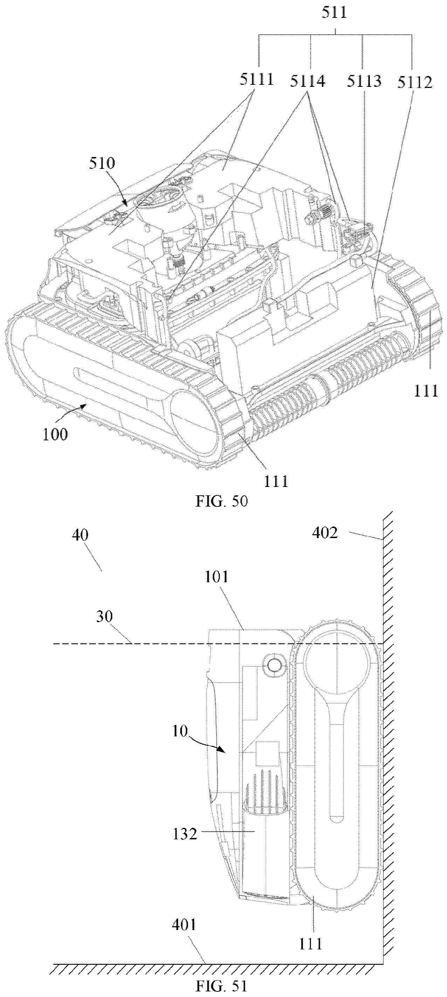

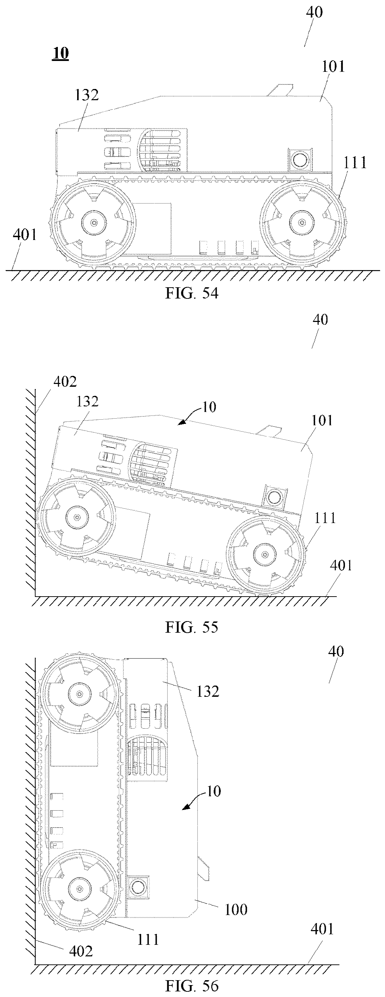

As shown in FIG. 51, FIG. 52, FIG. 54, FIG. 55, and FIG. 56, the first motion state is defined as a state in which the cleaning device 10 moves on the target bottom wall 401, or an angle between the target bottom wall 401 and an overall direction of the cleaning device 10 is less than 90° and the cleaning device 10 is away from the liquid surface 30. As shown in FIG. 54, that the cleaning device 10 is away from the liquid surface 30 may be understood as that the cleaning device 10 cleans the bottom of the pool or performs an action underwater. A second motion state is defined as a state in which the cleaning device 10 moves on the side wall 402, or the overall direction of the cleaning device 10 is substantially parallel to the side wall 402, as shown in FIG. 51 and FIG. 56. The third motion state is defined as a state in which the cleaning device 10 moves on the liquid surface 30, or the cleaning device 10 is at least partially exposed at the liquid surface 30, or the cleaning device 10 is entirely located under the liquid surface 30 and close to the liquid surface 30. That the cleaning device 10 is close to the liquid surface 30 may be understood as that a distance between the cleaning device 10 and the liquid surface 30 is less than a threshold, and the cleaning device 10 can perform water surface cleaning. The overall direction of the cleaning device 10 is defined as a direction of a plane in which the movement propulsion mechanism 100 of the cleaning device 10, such as the track 111 or the wheel 112, is in contact with the to-be-cleaned surface.

Therefore, under the action of the adjustment assembly, the cleaning device 10 can be switched between the position on the liquid surface 30 and the position under the liquid surface 30, so that the cleaning device 10 is switched between the first motion state and the third motion state. The cleaning device 10 can perform underwater cleaning in the first motion state. The cleaning device 10 can perform water surface cleaning in the third motion state. Therefore, the cleaning device 10 can be adjusted to perform at least two operating conditions: underwater cleaning and water surface cleaning, thereby meeting various use requirements.

In some embodiments, the cleaning device 10 further has the second motion state. The cleaning device 10 can clean a pool wall or a waterline in the second motion state. Switching of the cleaning device 10 between the first motion state and the third motion state may include or exclude switching of the second motion state. In other words, the cleaning device 10 may have the first motion state and the third motion state, or the cleaning device 10 may have the first motion state, the second motion state, and the third motion state. The second motion state may be selected based on an actual requirement. This is not limited herein.

In some embodiments, the adjustment assembly is configured to adjust a buoyancy force applied to the cleaning device 10 or an action force applied to the cleaning device 10 in the first direction or the second direction. The action force may include a first driving force in a vertical direction.

In some embodiments, a first adjustment assembly and a second adjustment assembly may be a same assembly. In other words, a structure of the first adjustment assembly may be the same as a structure of the second adjustment assembly. The first adjustment assembly is configured to adjust the action force applied to the cleaning device 10 in the first direction. The second adjustment assembly is configured to adjust the action force applied to the cleaning device 10 in the second direction. The action force may be a force received in the vertical direction, such as an upward action force in the first direction and an upward action force in the second direction.

In some embodiments, the cleaning device 10 includes a liquid inlet portion 103 and a liquid outlet portion 104. The liquid inlet portion 103 is configured for liquid to enter the cleaning device body 101. The liquid inlet portion 103 includes at least a first water inlet 1031. The first water inlet 1031 is provided at the cleaning device body 101. In other words, the liquid enters the cleaning device body 101 through the first water inlet 1031. The liquid outlet portion 104 is configured for the liquid inside the cleaning device body 101 to be discharged from the cleaning device body 101. The liquid outlet portion 104 includes at least a first water outlet. The first water outlet is provided at the cleaning device body 101. In other words, the liquid is discharged from the cleaning device body 101 through the first water outlet. The first water inlet 1031, the filtering mechanism, the drive mechanism, and the first water outlet communicate with each other in sequence to from a first water flow path. Under the guidance of the drive mechanism, the liquid enters the cleaning device body 101 through the first water inlet 1031, flows toward the filtering mechanism and the drive mechanism, and then is discharged through the first water outlet. In an actual process, the liquid may flow reversely. In other words, the liquid flows through the first water outlet, the drive mechanism, the filtering mechanism, and the first water inlet 1031 in sequence. When the liquid flows reversely, the filtering mechanism may perform self-cleaning. In other words, the liquid enters the filtering mechanism through an outlet of the filtering mechanism (such as an outer side of a filtering mesh of the filtering mechanism), flows out of the filtering mechanism through an inlet of the filtering mechanism, and then flows out of the cleaning device 10 through the first water inlet 1031. In this way, accumulations attached to an inner side of the filtering mesh of the filtering mechanism and garbage in the filtering mechanism can be discharged from the filtering mechanism.

In some embodiments, the liquid inlet portion includes at least a first water inlet 1031. The first water inlet 1031 is located at a lower front portion of the cleaning device body 101. The first water inlet 1031 is used for both underwater cleaning and water surface cleaning. When the cleaning device 10 performs underwater cleaning, the first water inlet 1031 is located under the liquid surface 30 and can allow garbage under the liquid surface 30 to be sucked. When the cleaning device 10 performs water surface cleaning, the first water inlet is at least partially exposed at the liquid surface 30 and can allow garbage floating on the liquid surface 30 to be sucked. In other words, the cleaning device body 101 can implement underwater cleaning and water surface cleaning through the first water inlet and by adjusting an attitude of the cleaning device 10 in the target region 40. This improves cleaning efficiency. The liquid flows sequentially through the first water inlet 1031, a first inlet, the filtering mechanism, the outlet, the drive mechanism, and the liquid outlet portion. In the above embodiment, when the cleaning device 10 performs underwater cleaning, the attitude of the cleaning device 10 is in a normal state. When the cleaning device 10 performs water surface cleaning, a front portion of the cleaning device 10 is lifted upwardly to be exposed at the liquid surface 30, so that the first water inlet 1031 is at least partially exposed at the liquid surface 30.

In some other embodiments, the liquid inlet portion 1031 includes a first water inlet 1031. The first water inlet 1031 is located at the bottom of the cleaning device body 101. The first water inlet 1031 is used for both underwater cleaning and water surface cleaning. When the cleaning device 10 performs underwater cleaning, the first water inlet 1031 is located under the liquid surface 30 and faces the to-be-cleaned surface. When the cleaning device 10 performs water surface cleaning, the first water inlet 1031 is located under the liquid surface 30, is close to the liquid surface 30, and faces the liquid surface 30. In other words, the cleaning device body 101 can implement underwater cleaning and water surface cleaning through the first water inlet and by adjusting an attitude of the cleaning device 10 in the target region 40. This improves cleaning efficiency. The liquid flows sequentially through the first water inlet 1031, a first inlet, the filtering mechanism, the outlet, the drive mechanism, and the liquid outlet portion. In the above embodiment, when the cleaning device 10 performs underwater cleaning, the attitude of the cleaning device 10 is in a normal state. When the cleaning device 10 performs water surface cleaning, the cleaning device 10 can be flipped, that is, the bottom of the cleaning device 10 faces upward. When the bottom of the cleaning device 10 faces upward, the filtering mechanism may be in a closed state, so that a risk of leaking garbage from the filtering mechanism is reduced.

In some embodiments, the liquid inlet portion 1031 includes at least a first water inlet 1031 and a second water inlet 1032. The first water inlet 1031 is provided at the bottom of the cleaning device body 101. When the cleaning device 10 cleans the bottom or the wall of the pool, the first water inlet 1031 is close to the bottom or the wall of the pool to allow liquid to be sucked into the cleaning device 10. The liquid inlet portion 103 includes the second water inlet 1032. In other words, the liquid enters the cleaning device body 101 through the second water inlet 1032. The second water inlet 1032 is provided at a side surface of the front portion of the cleaning device body 101. When the cleaning device 10 performs water surface cleaning, the second water inlet 1032 is at least partially exposed at the liquid surface 30 and can allow garbage floating on the liquid surface 30 to be sucked. The cleaning device 10 can implement water surface cleaning through the second water inlet 1032. In addition, the first water inlet 1031 and the second water inlet 1032 may operate cooperatively to improve the cleaning efficiency of the cleaning device 10.

In some embodiments, the liquid inlet portion 103 includes a first water inlet 1031 and a second water inlet 1032. The first water inlet 1031 is provided at the bottom of the cleaning device body 101. The second water inlet 1032 is provided at the top or a side portion of the cleaning device body 101. The first water inlet 1031 is configured to clean the bottom or the wall of the pool. The second water inlet 1032 is configured to perform water surface cleaning. When the second water inlet 1032 is provided at the top of the cleaning device body 101, the cleaning device 10 floats up to be close to the liquid surface 30, and an attitude of the cleaning device 10 is the same as that existing when the cleaning device 10 moves on the bottom of the pool. The second water inlet 1032 is opened and is located close to and under the liquid surface under the action of the drive mechanism, such as a main water pump, so that the garbage on the liquid surface enters the cleaning device 10 through the second water inlet 1032. When the second water inlet 1032 is provided on the side portion of the cleaning device body 101, the attitude of the cleaning device 10 may be adjusted in a process in which the cleaning device 10 floats up to be close to the liquid surface 30 until the second water inlet 1032 faces the liquid surface 30 and is located under and close to the liquid surface 30.

In some embodiments, the liquid inlet portion 103 includes a first water inlet 1031 and a second water inlet 1032. In addition to being provided at the lower front portion of the cleaning device body 101, the first water inlet 1031 may alternatively be provided at a lower rear portion of the cleaning device body 101 or a side surface of the cleaning device body 101. It should be noted that a position of the liquid inlet portion 103 is related to a position of the filtering mechanism. When the filtering mechanism is disposed at the front portion of the cleaning device 10, the liquid inlet portion 103 is provided at the front portion of the cleaning device 10. When the filtering mechanism is disposed at the rear portion of the cleaning device 10, the liquid inlet portion 103 is provided at the rear portion of the cleaning device 10.

In some embodiments, the filtering mechanism includes a filtering assembly 710. The filtering assembly 710 has a filtering function. The filtering assembly 710 includes the first inlet. The first water inlet 1031 and the second water inlet 1032 are both in fluid communication with the first inlet of the filtering assembly 710. Under the action of the drive mechanism, at least a part of liquid sequentially flows through the first water inlet 1031, the first inlet, the filtering assembly 710, the drive mechanism, and the liquid outlet portion 104. At least a part of the liquid sequentially flows through the second water inlet 1032, the first inlet, the filtering assembly 710, the drive mechanism, and the liquid outlet portion 104. The first water inlet 1031 and the second water inlet 1032 both communicate with the first inlet to improve the cleaning efficiency of the cleaning device 10. The second water inlet 1032 and the first inlet may communicate with each other through a duct or the like, and/or the first water inlet 1031 and the first inlet may communicate with each other through a duct or the like.

The filtering mechanism may include one, two, three, or more filtering assemblies 710. A quantity of filtering assemblies 710 may be determined based on an actual requirement. When there are two, three, or more filtering assemblies 710, adjacent filtering assemblies 710 may be connected to each other in series or in parallel, which may be determined based on various use requirements of the cleaning device 10. This is not limited herein.

In some embodiments, the filtering mechanism includes one filtering assembly 710. The filtering assembly 710 includes the first inlet and a second inlet. The first water inlet 1031 is in fluid communication with the first inlet of the filtering assembly 710. The second inlet and the first inlet are located on different surfaces of the filtering mechanism. In other words, at least a part of the liquid sequentially flows through the first water inlet 1031, the first inlet, the filtering assembly 710, the drive mechanism, and the liquid outlet portion 104. The second water inlet 1032 communicates with the second inlet of the filtering assembly 710. In other words, at least a part of the liquid sequentially flows through the second water inlet 1032, the second inlet, the filtering assembly 710, the drive mechanism, and the liquid outlet portion 104. The first water inlet 1031 is in fluid communication with the first inlet, and the second water inlet 1032 is in fluid communication with the second inlet, so that liquid flow paths are increased. In this way, cleaning requirements of at least two operating conditions: underwater cleaning and water surface cleaning are met, thereby meeting various use requirements.

In some embodiments, the filtering mechanism includes two filtering assemblies 710. The two filtering assemblies 710 are a first filtering assembly 770 and a second filtering assembly 780. The first filtering assembly 770 is provided with the first inlet. The second filtering assembly 780 is provided with a second inlet. The first water inlet 1031 is in fluid communication with the first inlet of the first filtering assembly 770. In other words, at least a part of the liquid sequentially flows through the first water inlet 1031, the first inlet, the first filtering assembly 770, the drive mechanism, and the liquid outlet portion 104. The second water inlet 1032 is in fluid communication with the second inlet of the second filtering assembly 780. In other words, at least a part of the liquid sequentially flows through the second water inlet 1032, the second inlet, the second filtering assembly 780, the drive mechanism, and the liquid outlet portion 104. The two filtering assemblies 710 are configured to implement different liquid flow paths to improve the cleaning efficiency of the cleaning device 10.

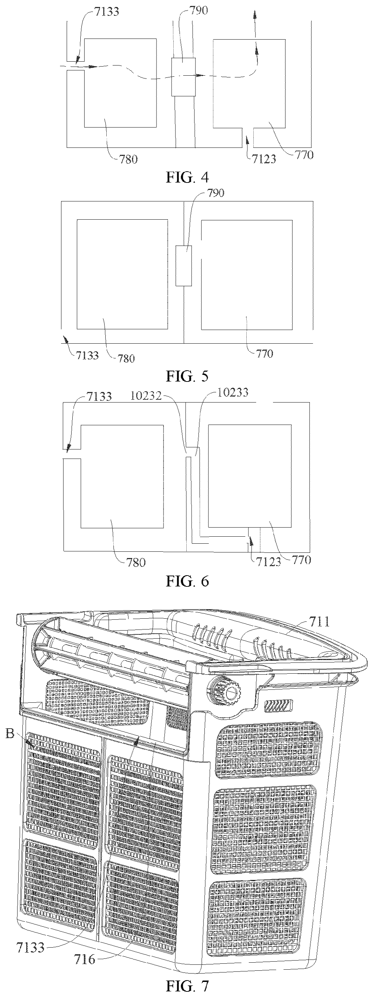

FIG. 4 is a first brief view of a filtering mechanism of the cleaning device according to the present disclosure. FIG. 5 is a second brief view of the filtering mechanism of the cleaning device according to the present disclosure. FIG. 6 is a third brief view of the filtering mechanism of the cleaning device according to the present disclosure. In some embodiments, the liquid inlet portion 103 includes the first water inlet 1031 and the second water inlet 1032. The filtering mechanism includes the first filtering assembly 770 and the second filtering assembly 780. The second filtering assembly 780 is sleeved inside the first filtering assembly 770. The first water inlet 1031 communicates with the first inlet 7123 of the first filtering assembly 770. The first water inlet 1031 is configured to allow the liquid to enter the first filtering assembly 770 through the first inlet 7123. The second water inlet 1032 communicates with the second inlet 7133 of the second filtering assembly 780. The second water inlet 1032 is configured to allow the liquid to enter the second filtering assembly 780 through the second inlet 7133. When the cleaning device 10 performs underwater cleaning, the liquid sequentially flows through the first water inlet 1031, the first inlet 7123, the first filtering assembly 770, and a main water pump 210, so that the cleaning device 10 implements underwater cleaning. When the cleaning device 10 performs water surface cleaning, the liquid sequentially flows through the second water inlet 1032, the second inlet 7133, the second filtering assembly 780, the first filtering assembly 770, and the main water pump 210, so that the cleaning device 10 implements water surface cleaning. When the cleaning device 10 performs water surface cleaning, the liquid flows through double layers of filtering boxes, so that the cleaning efficiency of the cleaning device 10 in water surface cleaning is improved.

By connecting the two filtering assemblies 710 in series, the first water inlet 1031 communicates with the first inlet 7123 of the first filtering assembly 770, and the second water inlet 1032 communicates with the second inlet 7133 of the second filtering assembly 780, so that the cleaning device 10 can perform underwater cleaning and water surface cleaning. This expands usage scenarios of the cleaning device 10 and improves user experience. Structures of the first filtering assembly 770 and the second filtering assembly 780 may be substantially the same or different. This is not limited herein.

When the cleaning device 10 performs underwater cleaning, the second water inlet 1032 or the second inlet 7133 may be closed to prevent the second water inlet 1032, the second filtering assembly 780, and the main water pump 210 from diverting the liquid and to ensure a suction effect at the first water inlet 1031 and the first inlet 7123. In practice, when a power of the main water pump 210 is sufficiently high, the second water inlet 1032 or the second inlet 7133 may alternatively not be closed. Similarly, when the cleaning device 10 performs water surface cleaning, the first water inlet 1031 or the first inlet 7123 may be closed to prevent the first water inlet 1031, the first filtering assembly 770, and the main water pump 210 from diverting the liquid and to ensure a suction effect at the second water inlet 1032 and the second inlet 7133. In practice, when the power of the main water pump 210 is sufficiently high, the first water inlet 1031 or the first inlet 7123 may alternatively not be closed.

In some embodiments, the cleaning device body 101 includes a first filtering box cavity, a second filtering box cavity, and the liquid inlet portion 103. The first filtering box cavity and the second filtering box cavity are disposed side by side. In other words, the first filtering box cavity and the second filtering box cavity are independent of each other. The liquid inlet portion 103 is configured to allow the liquid to enter the cleaning device body 101. The liquid inlet portion 103 includes the first water inlet 1031 and the second water inlet 1032. The filtering mechanism includes the first filtering assembly 770 and the second filtering assembly 780. The first filtering assembly 770 is disposed in the first filtering box cavity. The second filtering assembly 780 is disposed in the second filtering box cavity. The first water inlet 1031 communicates with the first inlet 7123 of the first filtering assembly 770. The first water inlet 1031 is configured to allow the liquid to enter the first filtering assembly 770 through the first inlet 7123. The second water inlet 1032 communicates with the second inlet 7133 of the second filtering assembly 780. The second inlet is configured to allow the liquid to enter the second filtering assembly 780 through the second inlet 7133. The main water pump 210 communicates with the first filtering box cavity and the second filtering box cavity.

When the cleaning device 10 performs underwater cleaning, under the action of the main water pump 210, the liquid sequentially flows through the first water inlet 1031, the first inlet 7123, the first filtering assembly 770, and the main water pump 210. When the cleaning device 10 performs water surface cleaning, under the action of the main water pump 210, the liquid sequentially flows through the second water inlet 1032, the second inlet 7133, the second filtering assembly 780, and the main water pump 210. By connecting the two filtering assemblies 710 in parallel, two water flow paths are independently controlled and do not affect each other. Corresponding closed structures are disposed on the two water flow paths, so that the two water flow paths are independent of each other. The closed structure may be disposed at a position that needs to be closed, such as a junction of the first filtering box cavity and the second filtering box cavity. This is not limited herein. There may be one or two main water pumps 210. When there is one main water pump 210, the first filtering assembly 770 and the second filtering assembly 780 share the main water pump 210. When there are two main water pumps 210, one main water pump 210 communicates with the first filtering assembly 770, and the other main water pump 210 communicates with the second filtering assembly 780.

In some embodiments, the first filtering box cavity and the second filtering box cavity are isolated from each other. The main water pump 210 acts on the first filtering box cavity. The second filtering box cavity is provided with a filtering box cavity opening 10232. The filtering box cavity opening 10232 communicates, through a filtering box cavity duct 10233, with the first inlet 7123 of the first filtering assembly 770 disposed in the first filtering box cavity, so that during water surface cleaning, the liquid sequentially flows through the second filtering assembly 780 and the first filtering assembly 770, to implement a good water surface cleaning effect.

In some embodiments, the cleaning device body 101 includes the first filtering box cavity, the second filtering box cavity, and the liquid inlet portion 103. The first filtering box cavity and the second filtering box cavity are disposed side by side. In other words, the first filtering box cavity and the second filtering box cavity are independent of each other. The liquid inlet portion 103 is configured to allow the liquid to enter the cleaning device body 101. The liquid inlet portion 103 includes the first water inlet 1031 and the second water inlet 1032. The filtering mechanism includes the first filtering assembly 770, the second filtering assembly 780, and a valve part 790. The first filtering assembly 770 is disposed in the first filtering box cavity. The second filtering assembly 780 is disposed in the second filtering box cavity. The valve part 790 may communicate with the first filtering box cavity and the second filtering box cavity in an open-close manner. When the valve part 790 is opened, the first filtering box cavity communicates with the second filtering box cavity. When the valve part 790 is closed, the first filtering box cavity dis-communicates with the second filtering box cavity.

Specifically, when the cleaning device 10 performs underwater cleaning, the valve part 790 is closed. The liquid sequentially flows through the first water inlet 1031, the first inlet 7123 of the first filtering assembly 770, the first filtering assembly 770, the first filtering box cavity, and the main water pump 210, and then is discharged from the cleaning device 10, so that the cleaning device 10 implements underwater cleaning. When the cleaning device 10 performs water surface cleaning, the valve part 790 is opened. The liquid sequentially flows through the second water inlet 1032, the second inlet 7133 of the second filtering assembly 780, the second filtering assembly 780, a space between the second filtering assembly 780 and the second filtering box cavity, the valve part 790, the first filtering assembly 770, and the main water pump 210, and then is discharged from the cleaning device 10, so that the cleaning device 10 implements water surface cleaning. In this way, the two water flow paths are independently controlled and do not affect each other. In addition, when the cleaning device 10 performs water surface cleaning, the second filtering assembly 780 and the first filtering assembly 770 are disposed to increase the water flow path, thereby improving the cleaning efficiency of the cleaning device 10 in water surface cleaning. A specific structure of the valve part 790 is not limited herein, provided that the valve part 790 can be opened and closed. Certainly, in other embodiments, the filtering mechanism may not include the valve part 790, and the first filtering assembly 770 and the second filtering assembly 780 directly communicate with each other through a duct or the like. A structure, for example, a cover plate, may be disposed at the second inlet of the second filtering assembly 780, and the cover plate may close the second inlet in an open-close manner.

The first filtering assembly 770 and second filtering assembly 780 may extend along a moving direction of the cleaning device 10. In other words, the first filtering assembly 770 and the second filtering assembly 780 are disposed one behind the other. Alternatively, the first filtering assembly 770 and the second filtering assembly 780 are disposed along a direction perpendicular to the moving direction of the cleaning device 10. In other words, the first filtering assembly 770 and the second filtering assembly are arranged left and right. Alternatively, the first filtering assembly 770 and the second filtering assembly 780 are disposed vertically. Certainly, the first filtering assembly 770 and the second filtering assembly 780 may be disposed side by side in another manner. This is not limited herein.

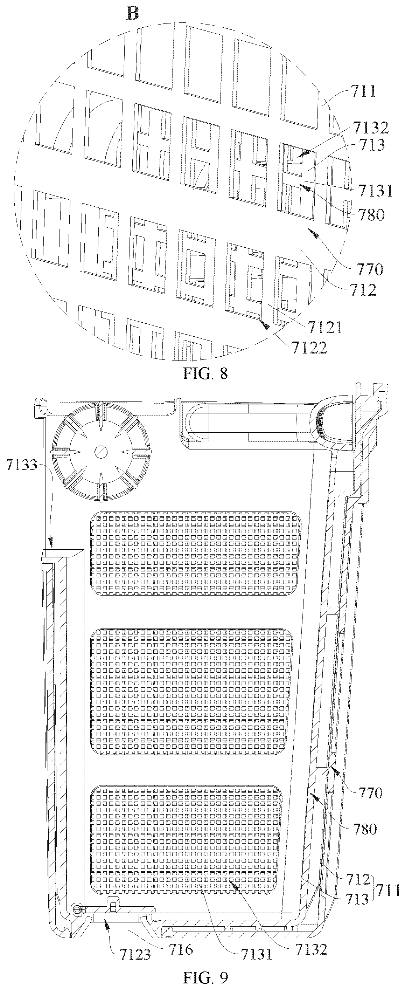

FIG. 7 is a schematic structural view of a filtering assembly of the cleaning device according to the present disclosure. FIG. 8 is an enlarged view of a portion B in FIG. 7. FIG. 9 is a cross-sectional view of the filtering assembly of the cleaning device according to the present disclosure. A filtering box 711 in the filtering mechanism plays a crucial role in performing filtering. Therefore, a higher mesh count of a first filtering layer disposed on a side wall of the filtering box 711 indicates a better filtering effect of the filtering box 711. However, when the mesh count of the first filtering layer increases, the filtering box 711 is clogged more easily, and it is difficult to clean the first filtering layer. Therefore, the present disclosure provides double layers or multiple layers of filtering boxes 711. For example, corresponding filtering meshes of the double layers of filtering boxes 711 are disposed in a staggered manner. This can improve a filtering effect of the filtering mechanism and reduce a corresponding mesh count, thereby conveniently cleaning the filtering layer.

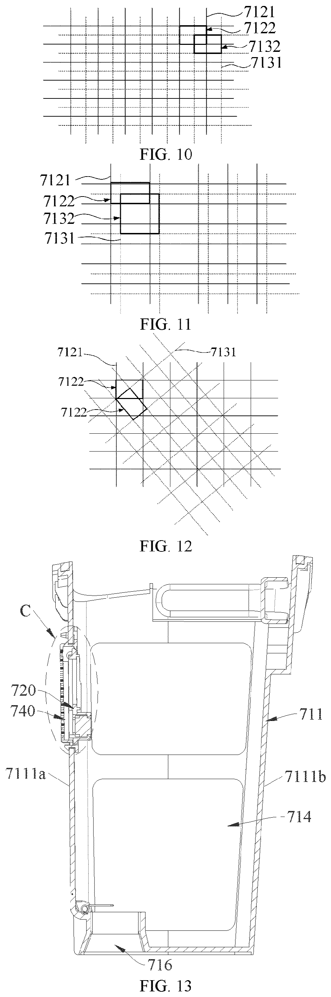

FIG. 10 is a first schematic structural view of a first sub-filtering layer and a sub-second filtering layer in the cleaning device according to the present disclosure. FIG. 11 is a second schematic structural view of the first sub-filtering layer and the second sub-filtering layer in the cleaning device according to the present disclosure. FIG. 12 is a third schematic structural view of the first sub-filtering layer and the second sub-filtering layer in the cleaning device according to the present disclosure. With reference to FIG. 7, FIG. 8, and FIG. 9, in some embodiments, the filtering box 711 includes a first sub-filtering box 712 and a second sub-filtering box 713. A first sub-filtering layer 7121 is disposed on a side wall of the first sub-filtering box 712. The first sub-filtering layer 7121 performs a filtering function. The first sub-filtering layer 7121 includes a certain quantity of first filtering mesh holes 7122. A second sub-filtering layer 7131 is disposed on a side wall of the second sub-filtering box 713. The second sub-filtering layer 7131 includes a certain quantity of second filtering mesh holes 7132. A material of the first sub-filtering layer 7121 may be the same as or different from that of the second sub-filtering layer 7131. This is not limited herein. The second sub-filtering box 713 is sleeved inside the first sub-filtering box 712. The first filtering mesh holes 7122 of the first sub-filtering layer 7121 and the second filtering mesh holes 7132 of the second sub-filtering layer 7131 are at least partially disposed in a staggered manner.

In the present disclosure, the first sub-filtering box 712 is stacked on the second sub-filtering box 713, and the first filtering mesh holes 7122 and the second filtering mesh holes 7132 are at least partially disposed in a staggered manner. When a gap between the first sub-filtering box 712 and the second sub-filtering box 713 is small, the two staggered sub-filtering layers each with a low mesh count form a filtering effect equivalent to that implemented by a filtering layer of a high mesh count. Compared to the conventional technology in which only one filtering box 711 is configured to perform filtering, the present disclosure implements the same filtering effect through two filtering layers as that implemented by a filtering layer of a high mesh count. The filtering box 711 is disassembled into the first sub-filtering box 712 and the second sub-filtering box 713, so that it is easier to clean the first sub-filtering box 712 and the second sub-filtering box 713 each with a low mesh count.

In some embodiments, the first filtering mesh holes 7122 and the second filtering mesh holes 7132 are movably or rotationally staggered, so that the first filtering mesh holes 7122 and the second filtering mesh holes 7132 are at least partially disposed in a staggered manner. That the first filtering mesh holes 7122 and the second filtering mesh holes 7132 are movably staggered means that the first filtering mesh holes 7122 and the second filtering mesh holes 7132 may be staggered along a straight-line direction, for example, a horizontal direction or a vertical direction. A quantity of first filtering mesh holes 7122 may be equal to or different from that of the second filtering mesh holes 7132.

In some embodiments, the first filtering mesh holes 7122 and the second filtering mesh holes 7132 are rotationally staggered, so that the first filtering mesh holes 7122 and the second filtering mesh holes 7132 are at least partially disposed in a staggered manner. That the first filtering mesh holes 7122 and the second filtering mesh holes 7132 are rotationally staggered means that the first sub-filtering layer 7121 rotates, the second sub-filtering layer 7131 rotates, or both the first sub-filtering layer 7121 and the second sub-filtering layer 7131 rotate, so that the first filtering mesh holes 7122 and the second filtering mesh holes 7132 are at least partially disposed in a staggered manner. A quantity of first filtering mesh holes 7122 may be equal to or different from that of second filtering mesh holes 7132.

In some embodiments, a size of the first filtering mesh hole 7122 may be different from that of the second filtering mesh hole 7132. For example, the size of the first filtering mesh hole 7122 is larger or smaller than that of the second filtering mesh hole 7132, so that the first filtering mesh holes 7122 and the second filtering mesh holes 7132 are at least partially disposed in a staggered manner. A quantity of the first filtering mesh holes 7122 is different from that of the second filtering mesh holes 7132. Certainly, the first filtering mesh holes 7122 and the second filtering mesh holes 7132 may be staggered in another manner. This is not limited herein.

In a process of sleeving the second sub-filtering box 713 inside the first sub-filtering box 712, the first sub-filtering layer 7121 in the first sub-filtering box 712 and the second sub-filtering layer 7131 in the second sub-filtering box 713 may be attached to each other, or a small gap is formed between the first sub-filtering layer 7121 and the second sub-filtering layer 7131. The gap is less than or equal to a size of a filtering mesh hole. The filtering mesh hole may be the first filtering mesh hole 7122 or the second filtering mesh hole 7132. The size of the filtering mesh hole may be a diameter, a length, or a width of the filtering mesh hole. This is not limited herein.

In some embodiments, when the filtering mechanism includes one filtering assembly 710, the filtering assembly 710 may include one layer of, two layers of, or multiple layers of filtering boxes 711. When the filtering mechanism includes the first filtering assembly 770 and the second filtering assembly 780, the first filtering assembly 770 may include one layer of, two layers of, or multiple layers of filtering boxes 711, and the second filtering assembly 780 may include one layer of, two layers of, or multiple layers of filtering boxes 711. When the filtering mechanism includes both the first filtering assembly 770 and the second filtering assembly 780, and the first filtering assembly 770 and the second filtering assembly 780 are disposed side by side, the size of the filtering mesh hole of the first filtering assembly 770 is smaller than the size of the filtering mesh hole of the second filtering assembly 780. In this way, the first filtering assembly 770 is more suitable to clean underwater garbage, and the second filtering assembly 780 is more suitable to clean water surface garbage. The filtering mesh holes of the two layers or multiple layers of filtering boxes 711 are at least partially disposed in a staggered manner to improve the cleaning efficiency of the filtering mechanism.

In some embodiments, when the filtering mechanism includes one filtering assembly 710, the filtering assembly 710 may include one layer of, two layers of, or multiple layers of filtering boxes 711. When the filtering mechanism includes the first filtering assembly 770 and the second filtering assembly 780, the first filtering assembly 770 may include one layer of, two layers of, or multiple layers of filtering boxes 711, and the second filtering assembly 780 may include one layer of, two layers of, or multiple layers of filtering boxes 711. When the filtering mechanism includes both the first filtering assembly 770 and the second filtering assembly 780, and the first filtering assembly 770 and the second filtering assembly 780 are disposed side by side, the size of the filtering mesh hole of the first filtering assembly 770 is smaller than the size of the filtering mesh hole of the second filtering assembly 780. In this way, the first filtering assembly 770 is more suitable to clean underwater garbage, and the second filtering assembly 780 is more suitable to clean water surface garbage. The filtering mesh holes of the two layers or multiple layers of filtering boxes 711 are at least partially disposed in a staggered manner to improve the cleaning efficiency of the filtering mechanism.

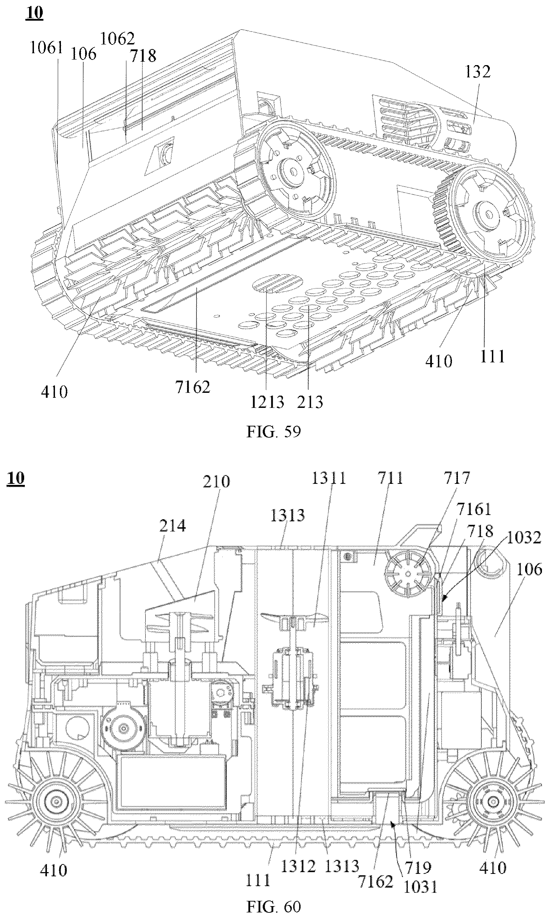

FIG. 59 is a schematic structural view of the cleaning device according to a fourteenth embodiment of the present disclosure. FIG. 60 is a sectional view of the cleaning device according to the fourteenth embodiment of the present disclosure. The cleaning device 10 may include a control member (not shown in the figure). The control member of the cleaning device 10 controls the cleaning device 10 to be switched between the position on the water surface of the pool and the position under the water surface of the pool, to implement water surface cleaning or underwater cleaning.

In some embodiments, the filtering mechanism includes the filtering box 711. The filtering box 711 may be configured to perform water surface cleaning and underwater cleaning on the swimming pool. As shown in FIG. 50 and FIG. 60, the filtering box 711 may include a filtering box water inlet portion 716. The filtering box water inlet portion 716 communicates with the liquid inlet portion 103. The filtering box water inlet portion 716 is an inlet for garbage or other debris in the swimming pool to enter the cleaning device 10.

In some embodiments, the filtering box water inlet portion 716 includes a filtering box opening for water surface cleaning 7161. The filtering box opening for water surface cleaning 7161 may be an inlet for garbage or debris on the water surface of the swimming pool to enter the filtering box 711. The filtering box opening for water surface cleaning 7161 may be provided on a side (such as a front side) or at the top or the bottom of the cleaning device 10 and is aligned with a floating position of the cleaning device 10 on the water surface. In this way, garbage or other debris on the water surface of the swimming pool can enter the filtering box 711 with the liquid through the filtering box opening for water surface cleaning 7161. For example, when the filtering box opening for water surface cleaning 7161 is located on the side or the bottom of the cleaning device 10, the floating position of the cleaning device 10 on the water surface may be a midline position or a 1/3 position on the filtering box opening for water surface cleaning 7161. In this case, the cleaning device 10 is in a normal attitude. When the filtering box opening for water surface cleaning 7161 is located at the top or the bottom or a side surface of the cleaning device 10, the floating position of the cleaning device 10 on the water surface may be a position at which the filtering box opening for water surface cleaning 7161 is close to the water surface. In this case, the cleaning device 10 is in an inverted attitude.

In some embodiments, the filtering box water inlet portion 716 may further include a filtering box opening for underwater cleaning 7162. The filtering box opening for underwater cleaning 7162 may be an inlet for garbage or debris in the water in the swimming pool to enter the filtering box 711. The filtering box opening for underwater cleaning 7162 may be provided under the floating position of the cleaning device 10 on the water surface. For example, the filtering box opening for underwater cleaning 7162 may be provided at the bottom of the cleaning device 10. For another example, the filtering box opening for underwater cleaning 7162 may be provided on a side of the cleaning device 10 under the floating position on the water surface. The filtering box opening for water surface cleaning 7161 and the filtering box opening for underwater cleaning 7162 are provided, so that the cleaning device 10 can perform water surface cleaning and underwater cleaning. This expands usage scenarios of the cleaning device 10 and improves user experience.

In some embodiments, the filtering box 711 may further include a filtering box roller brush assembly 717. The filtering box 711 may include one or more filtering box roller brush assemblies 717. The filtering box roller brush assembly 717 may be configured to draw garbage or other debris on the water surface into the filtering box 711 during water surface cleaning, to improve water surface cleaning efficiency. The filtering box roller brush assembly 717 may be disposed in the filtering box opening for water surface cleaning 7161. As shown in FIG. 60, the filtering box roller brush assembly 717 may be disposed inside the filtering box opening for water surface cleaning 7161.

In some embodiments, the filtering box roller brush assembly 717 may alternatively be disposed outside the filtering box opening for water surface cleaning 7161 or on the filtering box opening for water surface cleaning 7161.

In some embodiments, the filtering box 711 may further include an adjustment part for water surface cleaning (not shown in the figure) and an adjustment part for underwater cleaning (not shown in the figure). The adjustment part for water surface cleaning is configured to adjust an open state and a closed state of the filtering box opening for water surface cleaning 7161. The adjustment part for underwater cleaning is configured to adjust an open state and a closed state of the filtering box opening for underwater cleaning 7162. The control member may adjust the adjustment part for water surface cleaning and/or the adjustment part for underwater cleaning to correspondingly control the filtering box opening for water surface cleaning 7161 and/or the filtering box opening for underwater cleaning 7162 to be opened or closed.

When the cleaning device 10 performs underwater cleaning, both the adjustment part for water surface cleaning and the adjustment part for underwater cleaning are in the open state, that is, the adjustment part for water surface cleaning opens the filtering box opening for water surface cleaning 7161, and the adjustment part for underwater cleaning opens the filtering box opening for underwater cleaning 7162. Both the filtering box opening for water surface cleaning 7161 and the filtering box opening for underwater cleaning 7162 are opened to allow more liquid to be sucked to improve the cleaning efficiency. Alternatively, the adjustment part for water surface cleaning is in the closed state, and the adjustment part for underwater cleaning is in the open state, that is, the adjustment part for water surface cleaning closes the filtering box opening for water surface cleaning 7161, and the adjustment part for underwater cleaning opens the filtering box opening for underwater cleaning 7162. The filtering box opening for water surface cleaning 7161 is closed, and the filtering box opening for underwater cleaning 7162 is opened, so that a suction power of the filtering box opening for underwater cleaning 7162 of the cleaning device 10 can be increased to prevent the filtering box opening for water surface cleaning 7161 from diverting liquid. This improves underwater cleaning efficiency of the cleaning device 10.

When the cleaning device 10 performs water surface cleaning, both the adjustment part for water surface cleaning and the adjustment part for underwater cleaning are in the open state, that is, the adjustment part for water surface cleaning opens the filtering box opening for water surface cleaning 7161, and the adjustment part for underwater cleaning opens the filtering box opening for underwater cleaning 7162. Both the filtering box opening for water surface cleaning 7161 and the filtering box opening for underwater cleaning 7162 are opened, so that stability of the attitude of the cleaning device 10 at the water surface is facilitated. Alternatively, the adjustment part for water surface cleaning is in the open state, and the adjustment part for underwater cleaning is in the closed state, that is, the adjustment part for water surface cleaning opens the filtering box opening for water surface cleaning 7161, and the adjustment part for underwater cleaning closes the filtering box opening for underwater cleaning 7162. The filtering box opening for water surface cleaning 7161 is opened, and the filtering box opening for underwater cleaning 7162 is closed, so that a suction power of the filtering box opening for water surface cleaning 7161 can be increased to prevent the filtering box opening for underwater cleaning 7162 from diverting liquid. This improves underwater cleaning efficiency of the cleaning device 10. In the normal attitude or the inverted attitude, the cleaning device 10 can adjust the open state and the closed state of the filtering box opening for water surface cleaning 7161 by using the adjustment part for water surface cleaning, and/or the open state and the closed state of the filtering box opening for underwater cleaning 7162 by using the adjustment part for underwater cleaning.

In some embodiments, the filtering box 711 may further include a filtering box opening cover plate for water surface cleaning 718 and a filtering box opening cover plate for underwater cleaning 719. The adjustment part for water surface cleaning may include the filtering box opening cover plate for water surface cleaning 718. The adjustment part for underwater cleaning may include the filtering box opening cover plate for underwater cleaning 719. The filtering box opening cover plate for water surface cleaning 718 is configured to adjust the open state and the closed state of the filtering box opening for water surface cleaning 7161. When the filtering box opening for water surface cleaning 7161 is in the open state, liquid at the water surface of the swimming pool can enter the filtering box 711 through the filtering box opening for water surface cleaning 7161. When the filtering box opening for water surface cleaning 7161 is in the closed state, the liquid at the water surface of the swimming pool cannot enter the filtering box 711 through the filtering box opening for water surface cleaning 7161. The filtering box opening cover plate for water surface cleaning 718 is disposed at the filtering box opening cover plate for water surface cleaning 718. As shown in FIG. 60, the filtering box opening cover plate for water surface cleaning 718 may be disposed in the filtering box opening for water surface cleaning 7161. The filtering box opening cover plate for water surface cleaning 718 may alternatively be disposed inside or outside the filtering box opening for water surface cleaning 7161.

Similar to the filtering box opening cover plate for water surface cleaning 718, the filtering box opening cover plate for underwater cleaning 719 is configured to adjust the open state and the closed state of the filtering box opening for underwater cleaning 7162. The filtering box opening cover plate for underwater cleaning 719 is disposed in the filtering box opening for underwater cleaning 7162 or inside or outside the filtering box opening for underwater cleaning 7162.

The filtering box opening cover plate for water surface cleaning 718 and the filtering box opening cover plate for underwater cleaning 719 may be movable parts. The control member may adjust the filtering box opening cover plate for water surface cleaning 718 and/or the filtering box opening cover plate for underwater cleaning 719 to correspondingly open or close the filtering box water inlet portion 716. For example, the filtering box opening cover plate for water surface cleaning 718 may be a rotatable part, and the control member can control the filtering box opening cover plate for water surface cleaning 718 to rotate to switch the filtering box opening for water surface cleaning 7161 from the closed state to the open state.

In some embodiments, when the cleaning device 10 needs to perform underwater cleaning, the control member can enable, by using the filtering box opening cover plate for water surface cleaning 718, the filtering box opening for water surface cleaning 7161 to remain in the closed state, and enable, by using the filtering box opening cover plate for underwater cleaning 719, the filtering box opening for underwater cleaning 7162 to remain in the open state, to prevent the filtering box opening for water surface cleaning 7161 from diverting liquid and ensure the suction power of the filtering box opening for underwater cleaning 7162. This can improve the underwater cleaning efficiency of the cleaning device 10. In other embodiments, the filtering box opening for water surface cleaning 7161 may be also in the open state.

Similarly, when the cleaning device 10 needs to perform water surface cleaning, the control member may enable, by using the filtering box opening cover plate for underwater cleaning 719, the filtering box opening for underwater cleaning 7162 to remain in the closed state, and enable, by using the filtering box opening cover plate for water surface cleaning 718, the filtering box opening for water surface cleaning 7161 to remain in the open state, to prevent the filtering box opening for underwater cleaning 7162 from diverting liquid and ensure the suction power of the filtering box opening for water surface cleaning 7161. This can improve the water surface cleaning efficiency of the cleaning device 10. In other embodiments, the filtering box opening for underwater cleaning 7162 may be also in the open state.

In some embodiments, the adjustment part for water surface cleaning may alternatively be an adjustment valve for water surface cleaning. The adjustment part for underwater cleaning may alternatively be an adjustment valve for underwater cleaning. Opening of the adjustment valve for water surface cleaning and the adjustment valve for underwater cleaning may be determined based on an operating parameter of the main water pump 210, such as an operating power of the main water pump 210. The adjustment valve for water surface cleaning and the adjustment valve for underwater cleaning can be opened only after a certain pressure threshold is met. When the operating power of the main water pump 210 is greater than a pressure threshold of the adjustment valve for water surface cleaning, the adjustment valve for water surface cleaning opens the filtering box opening for water surface cleaning 7161. When the operating power of the main water pump 210 is less than the pressure threshold of the adjustment valve for water surface cleaning, the adjustment valve for water surface cleaning closes the filtering box opening for water surface cleaning 7161. When the operating power of the main water pump 210 is greater than a pressure threshold of the adjustment valve for underwater cleaning, the adjustment valve for underwater cleaning opens the filtering box opening for underwater cleaning 7162. When the operating power of the main water pump 210 is less than the pressure threshold of the adjustment valve for underwater cleaning, the adjustment valve for underwater cleaning closes the filtering box opening for underwater cleaning 7162. The adjustment valve for water surface cleaning and the adjustment valve for underwater cleaning may be, but are not limited to, a duckbill valve. This is not limited herein.

In some embodiments, the filtering box 711 may further include other structures. For example, the filtering box 711 may further include a filtering layer. The filtering layer may be configured to filter the liquid entering the filtering box 711.

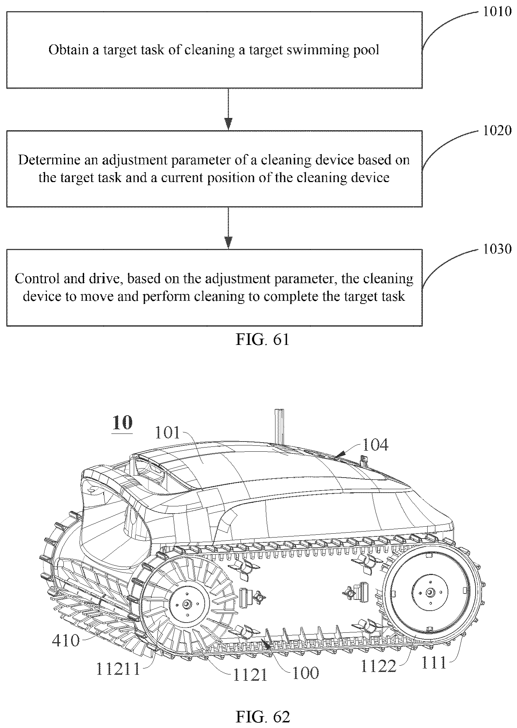

The control member may be configured to control the cleaning device 10 to perform water surface cleaning or underwater cleaning for the swimming pool. In some embodiments, the control member may obtain a target task for cleaning a target swimming pool, where the target task includes water surface cleaning and underwater cleaning; determine an adjustment parameter of the cleaning device based on the target task and a current position of the cleaning device 10; and control, based on the adjustment parameter, the cleaning device to drive the cleaning device 10 to move to a target position to perform the target task. For more details of the above embodiments, refer to FIG. 61 and related descriptions thereof.

The cleaning device 10 may comprehensively clean the bottom of the pool, perform underwater cleaning, and perform water surface cleaning to ensure comprehensive cleaning of the pool.

In some embodiments, the cleaning device 10 may further include a garbage guiding member 106. The garbage guiding member 106 may drive garbage at the liquid surface 30 of the swimming pool to enter the filtering box opening for water surface cleaning 7161. As shown in FIG. 59 and FIG. 60, the garbage guiding member 106 may be disposed outside the filtering box opening for water surface cleaning 7161, and the interior of the garbage guiding member 106 is hollow. A first port 1061 of the garbage guiding member 106 is away from the filtering box opening for water surface cleaning 7161, and a size of the first port 1061 is greater than a size of the filtering box opening for water surface cleaning 7161. A size of a second port 1062 connected to the filtering box opening for water surface cleaning 7161 is not less than the size of the filtering box opening for water surface cleaning 7161. The garbage guiding member 106 may include, but is not limited to, a truncated cone or a trapezoid structure with the interior thereof being hollow.

In some embodiments, the size of the first port 1061 may be in proportion to the size of the filtering box opening for water surface cleaning 7161. For example, a ratio of the size of the first port 1061 to the size of the filtering box opening for water surface cleaning 7161 may be not greater than 10:1, to prevent excessive garbage or debris from entering the filtering box opening for water surface cleaning 7161 at the same time, so that the filtering box opening for water surface cleaning 7161 is prevented from being clogged. The garbage guiding member 106 is disposed, so that garbage at a wide water surface can be gathered together and enter the filtering box opening for water surface cleaning 7161. This avoids the following case: The water surface cleaning efficiency of the cleaning device 10 is reduced due to the excessively small filtering box opening for water surface cleaning 7161.

As shown in FIG. 59 and FIG. 60, the cleaning device 10 may further include a roller brush for underwater cleaning 411. The roller brush for underwater cleaning 411 may be configured to clean the target bottom wall 401 and the target side wall 402 of the swimming pool. The cleaning device 10 may include one or more roller brushes for underwater cleaning 411. The roller brush for underwater cleaning 411 may be disposed at the bottom of and/or on the side of the cleaning device 10. As shown in FIG. 59, a front portion and a rear portion of the bottom of the cleaning device 10 are both provided with one roller brush for underwater cleaning 411. When the cleaning device 10 moves on the bottom of the swimming pool, the roller brush for underwater cleaning 411 can clean the bottom of the swimming pool (such as cleaning debris or algae). When the cleaning device 10 moves on the wall of the swimming pool, the roller brush for underwater cleaning 411 may further clean the wall of the swimming pool.

It should be noted that the above description of the cleaning device 10 and various members thereof is merely for ease of description and does not limit the present disclosure to the scope of the cited embodiments. It may be understood that a person skilled in the art, with understanding of the principle of the device, may make any combination of the various members or form a sub-member to be connected to other members without departing from the principle.

FIG. 61 is a flow chart of a liquid cleaning control method according to the present disclosure. The method 1000 may be applied to the cleaning device 10 and executed by the control member. As shown in FIG. 61, the method 1000 may include the following steps.

Step 1010: Obtain a target task of cleaning a target swimming pool.

The target swimming pool may be a to-be-cleaned swimming pool. The target task may be a task of cleaning the target swimming pool. The target task may include water surface cleaning and/or underwater cleaning. The water surface cleaning may mean cleaning a water surface of the target swimming pool. The underwater cleaning may mean cleaning an underwater part of the target swimming pool (such as water in the swimming pool and a wall of the swimming pool). In some embodiments, the target task may further include a specific to-be-cleaned part. For example, underwater cleaning may further include, but is not limited to, cleaning the water, cleaning the bottom of the pool, cleaning each wall of the pool, and the like.

The control member may obtain the target task in various manners. For example, the control member may obtain the target task input by a user. For another example, the control member may be configured to perform the target task periodically, such as performing water surface cleaning once every three days and performing underwater cleaning once every two days. For another example, the cleaning device 10 may further include a detection member. The detection member may detect water quality of the target swimming pool to obtain water quality data of the target swimming pool. The control member may obtain the water quality data and determine the target task based on the water quality data. The water quality data may be data reflecting a water quality condition of the target swimming pool. The water quality data includes, but is not limited to, a picture of the water surface of the target swimming pool, a picture of the water in the target swimming pool, and a picture of each pool wall. The control member may input the water quality data into a task determining model, and an output of the task determining model may include the target task. The task determining model may analyze the water quality data of the target swimming pool to determine cleanliness (such as clarity, algae distribution, and debris) of various regions (such as the water surface, water in the swimming pool, and each pool wall) to determine a corresponding target task. The task determining model may be a convolutional neural network model, a graph neural network, or any machine learning model that implements the above functions. The task determining model may be obtained by performing training based on a plurality of groups of training samples with labels. The training samples may include sample water quality data of a sample swimming pool, and the labels may include a sample task. The sample task may be obtained by manually labeling the sample water quality data.

Step 1020: Determine an adjustment parameter of the cleaning device based on the target task and a current position of the cleaning device 10.

The control member may obtain the current position of the cleaning device 10. For more details about obtaining the current position of the cleaning device 10, refer to the above description of the first sensor.

The adjustment parameter may include information of a route from the current position to a position, in the target swimming pool, at which the target task needs to be performed and route information required to complete the target task.

The control member may determine, based on the target task, a starting position, in the target swimming pool, at which the target task needs to be performed; determine, based on the starting position and the current position, the information of the route of the cleaning device 10 from the current position to the position, in the target swimming pool, at which the target task needs to be performed; and determine, based on the target task for the target swimming pool, the route information required to complete the target task, to determine the adjustment parameter of the cleaning device.

Step 1030: Control, based on the adjustment parameter, the cleaning device to drive the cleaning device 10 to move and perform cleaning to complete the target task.

The control member may control, based on the information of the route from the current position to the position, in the target swimming pool, at which the target task needs to be performed in the adjustment parameter, the cleaning device to drive the cleaning device 10 to move from the current position to the starting position at which the target task needs to be performed, and turn on, based on the route information required to complete the target task in the adjustment parameter, the filtering box 711 and the roller brush for underwater cleaning 411 of the cleaning device 10 to perform cleaning to complete the target task. After completing the target task, the cleaning device 10 may stay at an end position, return to the starting position before moving, or move to a preset default position.

According to the liquid cleaning control method, the cleaning device 10 can be controlled to clean all parts of the swimming pool. This improves efficiency in cleaning the swimming pool and ensures comprehensive cleaning of the swimming pool.

It should be noted that the foregoing description of the method 1000 is merely for description and does not limit the scope of the present disclosure. For a person of ordinary skill in the art, various modifications and changes can be made to the method 1000 under the guidance of the present disclosure. The modifications and changes still fall within the scope of the present disclosure.

Some embodiments of the present disclosure further provide a computer-readable storage medium 60. The storage medium can store computer instructions. When the computer instructions are executed by a processor 52, the liquid cleaning control method is implemented.

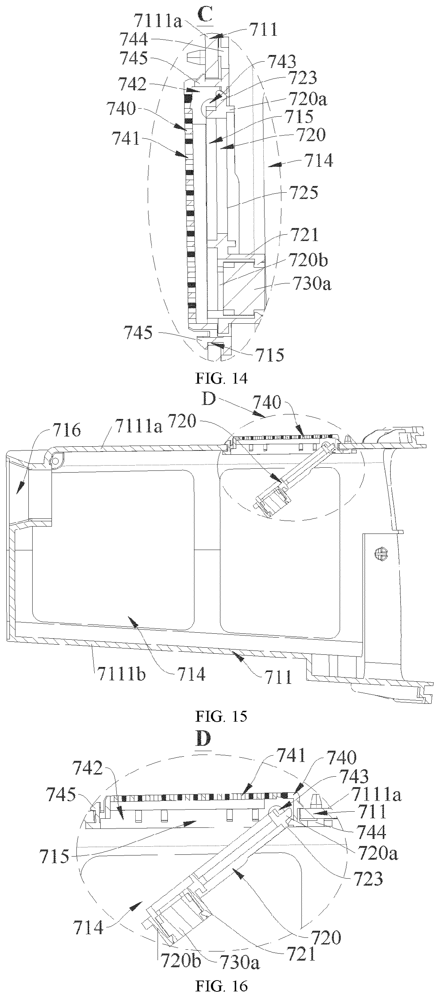

FIG. 13 is a cross-sectional view of the filtering assembly of the cleaning device in the first motion state according to a second embodiment of the present disclosure. FIG. 14 is an enlarged view of a portion C in FIG. 13. In some embodiments, the cleaning device body 101 includes at least one filtering box cavity. The filtering mechanism includes at least one filtering assembly 710. The filtering assembly 710 includes at least one filtering box 711, a first filtering layer (not shown in the figure), at least one flow guiding opening 715, and a cover part 720. A first cavity 714 is formed in the filtering box 711. The filtering box 711 is at least partially fixedly disposed in the cleaning device 10 and moves with the cleaning device 10. The filtering box 711 has at least the first motion state and the second motion state. The first filtering layer is disposed at least on a side wall of the filtering box 711. The first filtering layer communicates with the first cavity 714. The flow guiding opening 715 is provided on the filtering box 711 and/or the first filtering layer. For example, the flow guiding opening 715 may be provided on the filtering box 711, the flow guiding opening 715 may be provided on the first filtering layer, or the flow guiding opening 715 may be provided on both the filtering box 711 and the first filtering layer. When the filtering box 711 is in the first motion state, the cover part 720 seals and covers the flow guiding opening 715. When the filtering box 711 is in the second motion state, the cover part 720 is opened to expose the flow guiding opening 715. It may understood that opening the flow guiding opening 715 indicates that at least a part of water can flow out of the filtering box 711 through the flow guiding opening 715.

The filtering box water inlet portion 716 of the filtering box 711 is configured to allow water to enter the first cavity 714. The first filtering layer is configured to perform filtering. The water enters the first cavity 714 of the filtering box 711 through the filtering box water inlet portion 716, and the first filtering layer filters debris in the water out. The filtered water enters the filtering box cavity 1023 of the filtering assembly 710 and then enters the main water pump 210 through the filtering box cavity 1023.

The first motion state or the third motion state may be a state of the filtering assembly 710 when the cleaning device 10 cleans the bottom of the pool or the water surface. In the first motion state or the third motion state, the filtering assembly 710 is in a normal placement state, the cover part 720 covers the flow guiding opening 715 in a natural placement state, and a thrust generated by the water normally flowing through the filtering assembly 710 is not sufficient to push the cover part 720 to be opened to expose the flow guiding opening 715. The second motion state is a state of the filtering assembly 710 when the cleaning device 10 climbs a slope or a wall under the water surface or when the first filtering layer is clogged. In the second motion state, the filtering assembly 710 tilts, is inverted, or is in an operating state with the cleaning device 10, and the cover part 720 moves under the action of gravity and/or an external force, such as the thrust generated by the water flow, so that the flow guiding opening 715 is opened. Both the first motion state and the second motion state are different from the third motion state.

FIG. 15 is a cross-sectional view of the filtering assembly of the cleaning device in the second motion state according to the second embodiment of the present disclosure. FIG. 16 is an enlarged view of a portion D in FIG. 15. With reference to FIG. 13 and FIG. 14, when the filtering box 711 is in the first motion state or the third motion state, the cover part 720 covers the flow guiding opening 715, and the water in the first cavity 714 flows out through the first filtering layer of the filtering box 711 to reduce impact on a cleaning effect of the cleaning device 10, so that the cleaning device 10 implements the normal cleaning function.

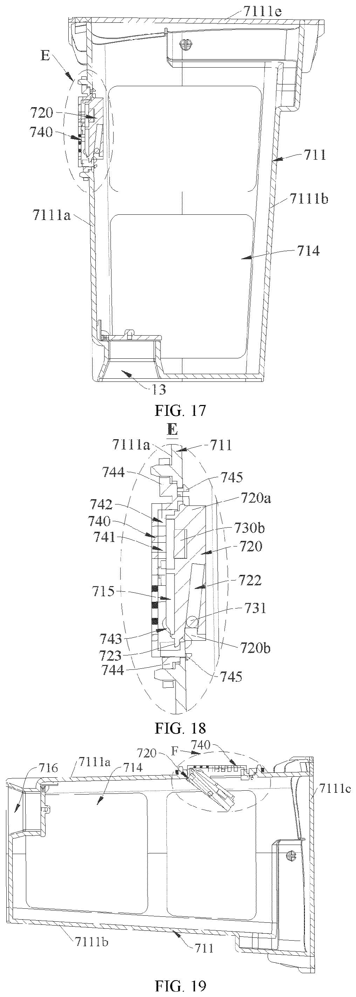

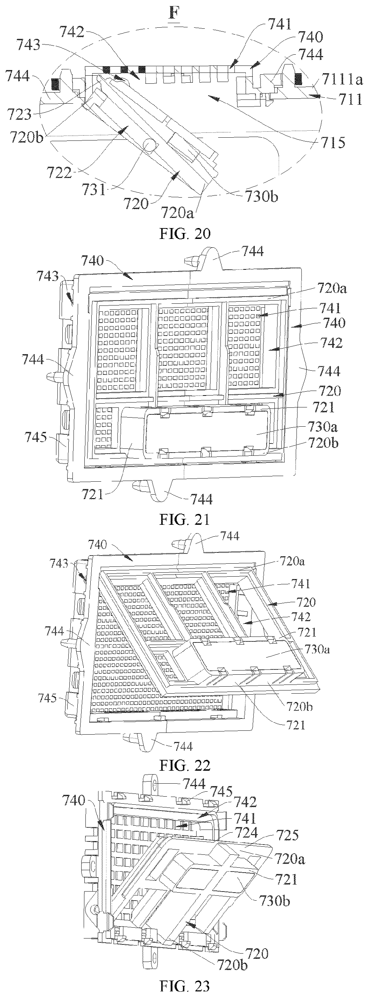

FIG. 17 is a cross-sectional view of the filtering assembly of the cleaning device in the first motion state according to a third embodiment of the present disclosure. FIG. 18 is an enlarged view of a portion E in FIG. 17. FIG. 19 is a cross-sectional view of the filtering assembly of the cleaning device in the second motion state according to the third embodiment of the present disclosure. FIG. 20 is an enlarged view of a portion F in FIG. 19. With reference to FIG. 13 to FIG. 16, when the filtering assembly 710 is in the second motion state, the cover part 720 is gradually opened to expose the flow guiding opening 715. At least a part of the water in the first cavity 714 flows out directly through the flow guiding opening 715. This increases an amount of water flowing out of the filtering box 711. In this way, when the cleaning device 10 climbs the wall or the slope or when the first filtering layer is clogged to a certain extent, a requirement for the amount of water flowing into the main water pump 210 can always be met, so that the cleaning device 10 can stably climb the wall or the slope or operate stably. Therefore, the cleaning device 10 can be applied to more situations, such as underwater cleaning and water surface cleaning.

For example, when the filtering assembly 710 operates in the first motion state or the third motion state, and the first filtering layer is not clogged by stains to a certain extent, the filtering assembly 710 is in a normal operating state. When the cleaning device 10 climbs the wall or the slope, the cover part 720 moves under the action of gravity of the cover part or an external force to be opened to expose the flow guiding opening 715, so that the cleaning device 10 can stably climb the wall or the slope.

When the filtering assembly 710 operates in the first motion state or the third motion state, and the first filtering layer is clogged by stains to a certain extent, the filtering assembly 710 cannot operate normally. In this case, the cover part 720 is opened to expose the flow guiding opening 715 to increase the amount of water flowing into the main water pump 210 and maintain stable operation performance of the cleaning device 10, so that the cleaning device 10 can stably climb the slope or the wall.

When the cleaning device 10 is climbing the slope or climbs the slope, and the first filtering layer is clogged by stains, the cover part 720 is opened under the action of gravity of the cover part or the external force to expose the flow guiding opening 715, so that the cleaning device 10 can stably climb the wall or the slope.

Therefore, the first cavity 714, the flow guiding opening 715, and the cover part 720 of the filtering box 711 cooperate with each other, so that when the filtering box 711 is in the first motion state or the third motion state, the cover part 720 covers the flow guiding opening 715 to reduce impact on the cleaning effect of the cleaning device 10. When the filtering box 711 is in the second motion state, the cover part 720 is opened to expose the flow guiding opening 715 to increase the amount of water flowing out of the first cavity 714 and increase the amount of water flowing into the main water pump 210. In this way, a thrust applied to the cleaning device 10 is improved, so that wall climbing, slope climbing, or operating performance of the cleaning device 10 is improved. This improves user experience.

The flow guiding opening 715 may include one flow guiding sub-opening (not shown in the figure), or the flow guiding opening 715 may include more than two flow guiding sub-openings, such as two flow guiding sub-openings, three flow guiding sub-openings, or a plurality of flow guiding sub-openings. A quantity of flow guiding sub-openings may be determined based on an actual situation. When there are a plurality of flow guiding sub-openings, an amount of water flowing out from the flow guiding opening formed by the plurality of flow guiding sub-openings needs to be substantially equal to an amount of water flowing out from the flow guiding opening 715 formed by one flow guiding sub-opening to ensure the amount of water flowing out from the flow guiding opening 715 to be consistent. In this way, the requirement for the amount of water flowing into the main water pump 210 can always be met when the cleaning device 10 climbs the wall or the slope or when the first filtering layer is clogged to a certain extent, so that the cleaning device 10 can stably climb the wall or the slope or operate stably.

There may be one, two, three, or four flow guiding openings 715. This is not limited herein. The periphery of the filtering box 711 is hollow. The first filtering layer is located in a hollowed region. The flow guiding opening 715 may be provided at the hollowed region of the filtering box 711 or at a position of the filtering box 711 other than the hollowed region, or the flow guiding opening 715 is provided on the first filtering layer. When the flow guiding opening 715 is provided on the first filtering layer, the periphery of the flow guiding opening 715 is defined by the filtering box 711, so that the cover part 720 covers the flow guiding opening 715 or is opened to expose the flow guiding opening 715 more stably.

In some embodiments, the cover part 720 may be driven by a drive assembly (not shown in the figure). The drive assembly is connected to the cover part 720, so that the cover part 720 covers the flow guiding opening 715 or is opened to expose the flow guiding opening 715. The drive assembly may include a drive motor (not shown in the figure). The drive motor is connected to the cover part 720 to control the cover part 720 to move. Alternatively, a related structure is disposed on the cover part 720, and the cover part 720 is driven by the cover part 720 and the related structure, so that the cover part 720 covers the flow guiding opening 715 or is opened to expose the flow guiding opening 715. In other embodiments, the cover part 720 may cover the flow guiding opening 715 or be opened to expose the flow guiding opening 715 in other manners. This is not limited herein. The cover part 720 may be a cover plate, a flipping plate, or the like.

The cover part 720 may be mounted on the filtering box 711. The cover part 720 may be mounted on the filtering box 711 through pivoting, telescoping, hinging, or the like, to cover the flow guiding opening 715 or be opened to expose the flow guiding opening 715.

FIG. 21 is a partial schematic view of the filtering assembly of the cleaning device in the first motion state according to the second embodiment of the present disclosure. FIG. 22 is a partial schematic view of the filtering assembly of the cleaning device in the second motion state according to the second embodiment of the present disclosure. With reference to FIG. 13 to FIG. 16, in some embodiments, the cover part 720 is pivotally connected to the filtering box 711. When the cover part 720 is pivotally connected to the filtering box 711, it is more labor-saving for the cover part 720 to cover the flow guiding opening 715 or be opened to expose the flow guiding opening 715. The filtering assembly 710 further includes adjustment parts 730a and 730b mounted on the cover part 720. The adjustment parts 730a and 730b are away from a pivoting joint between the cover part 720 and the filtering box 711. Mounting positions of the adjustment parts 730a and 730b are away from the pivoting joint between the cover part 720 and the filtering box 711. The adjustment parts 730a and 730b assist the cover part 720 in covering the flow guiding opening 715 or being opened to expose the flow guiding opening 715.

In the first motion state or the third motion state, a pivot point at which the cover part 720 rotates around the filtering box 711 is located on an action line of a sum of gravity and a buoyancy force applied to the cover part 720 and the adjustment parts 730a and 730b. In other words, a rotation moment of the cover part 720 around the filtering box 711 is zero. Therefore, the cover part 720 does not pivot and always remains in a vertical state to better cover the flow guiding opening 715.

In the second motion state, the filtering assembly 710 tilts or is flipped and inverted, and the pivot point at which the cover part 720 rotates around the filtering box 711 deviates from the action line of the sum of the gravity and the buoyancy force applied to the cover part 720 and the adjustment parts 730a and 730b. In other words, the rotation moment of the cover part 720 around the filtering box 711 is not zero, so that the cover part 720 has the rotation moment for rotating around the filtering box 711 to force the cover part 720 to rotate to expose the flow guiding opening 715. The adjustment parts 730a and 730b may have different densities, provided that the adjustment parts 730a and 730b can assist the cover part 720 in moving. Specific structures of the adjustment parts 730a and 730b are not limited herein. In another second state, when the first filtering layer of the filtering assembly 710 is clogged, and the filtering assembly 710 does not obviously tilt or is not flipped and inverted, a large pressure difference between the filtering box cavity 1023 and the first cavity 714 is formed due to a pumping action of the main water pump 210. In response to the pressure difference, the cover part 720 can be opened to expose the flow guiding opening 715 to balance the pressure difference.

The adjustment parts 730a and 730b are disposed and mounted on the cover part 720, so that the cover part 720 can cover the flow guiding opening 715 or be opened to expose the flow guiding opening 715 more quickly, and the amount of water flowing out from the first cavity 714 is increased to improve the amount of water flowing into the main water pump 210. In this way, the wall climbing, slope climbing, or operating performance of the cleaning device 10 is improved. In addition, the cover part 720 can be switched autonomously between the first motion state or the third motion state and the second motion state to reduce usage of the drive assembly. This reduces costs.

Specifically, the cover part 720 includes a first end 720a and a second end 720b opposite to each other. When the filtering assembly 710 is in the first motion state or the second motion state, the first end 720a is located at an uppermost end of the cover part 720, and the second end 720b is located at a lowermost end of the cover part 720. Both the first end 720a and the second end 720b may be configured to be pivotally connected to the filtering box 711. However, because the first end 720a and the second end 720b are disposed at different positions, a force applied to the cover part 720 when the first end 720a is pivotally connected to the filtering box 711 is different from a force applied to the cover part 720 when the second end 720b is pivotally connected to the filtering box 711. To close the flow guiding opening 715 in the first motion state or the third motion state and open the flow guiding opening 715 in the second motion state, when the first end 720a or the second end 720b is pivotally connected to the filtering box 711, the positions of the adjustment parts 730a and 730b need to be adjusted to adjust a force applied to the cover part 720. Based on this, the following describes and analyzes specific results when the first end 720a or the second end 720b is pivotally connected to the filtering box 711.

### Embodiment 1:

In the Embodiment 1, the first end 720a is pivotally connected to the filtering box 711, and the second end 720b pivots around the first end 720a to be away from or abut against the filtering box 711 to open or close the flow guiding opening 715. In this case, the filtering assembly 710 is entirely located underwater, that is, the filtering assembly 710 is entirely located at a position under the water surface, and the gravity of the adjustment part 730a is greater than a buoyancy force.

Specifically, the first end 720a is pivotally connected to the filtering box 711, and the adjustment part 730a is away from a pivoting joint between the first end 720a and the filtering box 711. Because the gravity of the adjustment part 730a is greater than the buoyancy force, the second end 720b can pivot around the first end 720a to be away from the filtering box 711, so that the cover part 720 is opened to expose the flow guiding opening 715. Alternatively, the second end 720b can pivot around the first end 720a to abut against the filtering box 711, so that the cover part 720 covers the flow guiding opening 715. The gravity of the adjustment part 730a is much greater than the buoyancy force applied to the cover part 720 underwater. When the filtering box 711 is in the first motion state or the third motion state, a gravity center of the cover part 720 is changed by using the adjustment part 730a. In this way, a certain preload force may be applied to the cover part 720 in a gravity direction. The cover part 720 can be attached to the filtering box 711 under the preload force. When the filtering box 711 is in the second motion state, the second end 720b pivots around the first end 720b to be away from the filtering box 711 under the gravity of the cover part 720 and the gravity of the adjustment part 730a.

The first end 720a is pivotally connected to the filtering box 711, the second end 720b pivots around the first end 720a to be away from or abut against the filtering box 711, and the gravity of the adjustment part 730a is greater than the buoyancy force. This increases a speed at which the cover part 720 covers the flow guiding opening 715 or is opened to expose the flow guiding opening 715, facilitates autonomous switching of the cover part 720 between the first motion state and the second motion state, reduces usage of the drive assembly, and reduces costs.

Optionally, in this embodiment, a density of the adjustment part 730a is greater than a density of water, which is generally 1 kg/m³. The density of the adjustment part 730a may be 1.1 kg/m³, 2 kg/m³, 3 kg/m³, 3.4 kg/m³, 4.3 kg/m³, or the like. This is not limited herein. In other words, the density of the adjustment part 730a needs to be greater than the density of water. When the filtering box 711 is in the first motion state or the third motion state, the gravity of the cover part 720 is changed depending on the adjustment part 730a, so that the cover part 720 extends along the gravity direction, that is, the cover part 720 remains in a vertical state. In this case, the cover part 720 can cover the flow guiding opening 715. In addition, when the filtering box 711 is in the second motion state, the cover part 720 can be opened under the gravity of the cover part 720 and the gravity of the adjustment part 730a to expose the flow guiding opening 715.

The density of the adjustment part 730a is defined, so that the cover part 720 can quickly cover the flow guiding opening 715 or be opened to expose the flow guiding opening 715. The adjustment part 730a may be a counterweight block (not shown in the figure). The counterweight block may be a metal block, an alloy block, a stone, or the like. This is not limited herein.

More specifically, a ratio of a distance between a center of the adjustment part 730a and the first end 720a to a distance between the center of the adjustment part 730a to the second end 720b is less than 1. The distance between the center of the adjustment part 730a and the first end 720a is S1. The distance between the center of the adjustment part 730a and the second end 720b is S2. The ratio of S1 to S2 is less than 1. A position relationship between the adjustment part 730a and the first end 720a and a position relationship between the adjustment part 730a and the second end 720b are limited, and a position of the gravity center of the cover part 720 is adjusted, so that the preload force is applied to the cover part 720 in the first motion state or the third motion state. Therefore, the cover part 720 is tightly attached to the filtering box 711.

In some specific application scenarios, the adjustment part 730a protrudes from an inner side surface 725 of the cover part 720, and the inner side surface 725 faces the first cavity 714. When the filtering box 711 is in the first motion state or the third motion state, an angle between the gravity direction and a connection line between a gravity center of the adjustment part 730a and a pivoting center of the cover part 720 is an acute angle. The adjustment part 730a may be detachably or fixedly connected to the cover part 720. The detachable connection may be clamping, inserting, or bolt fastening. That the angle between the gravity direction and the connection line between the gravity center of the adjustment part 730a and the pivoting center of the cover part 720 is the acute angle means that the gravity center of the adjustment part 730a is higher than that of the side surface of the cover part 720 and facing the first cavity 714 to increase the preload force applied to the cover part 720 in the first motion state or the third motion state, so that the speed at which the cover part 720 covers the flow guiding opening 715 is increased. In addition, the cover part 720 more easily pivots to be away from the flow guiding opening 715, so that the speed at which the cover part is opened to expose the flow guiding opening 715 is increased.

Further, the cover part 720 is provided with an adjustment part mounting portion 721. The adjustment part mounting portion 721 provides a mounting position for the adjustment part 730a. The adjustment part 730a may be disposed in the adjustment part mounting portion 721 through clamping, inserting, or bolt fastening.

### Embodiment 2:

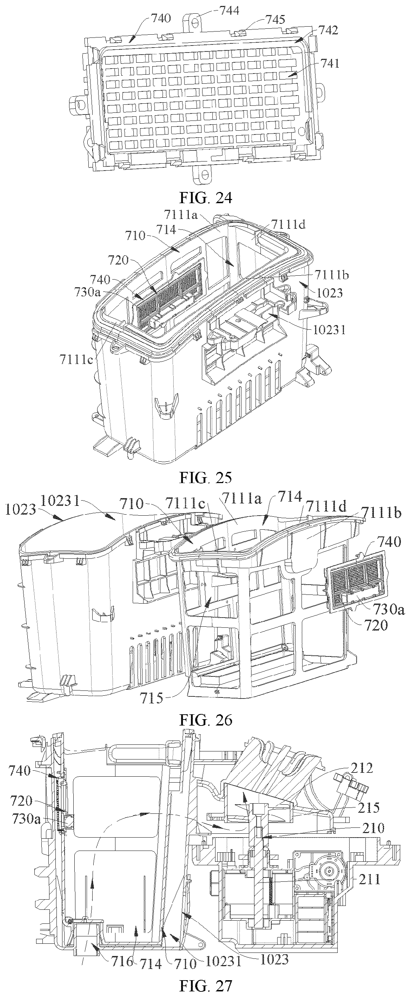

FIG. 23 is a partial schematic view of the filtering assembly of the cleaning device in the second motion state according to the second embodiment of the present disclosure. FIG. 24 is a schematic structural view of a mounting bracket in the filtering assembly of the cleaning device according to the third embodiment of the present disclosure. With reference FIG. 17 and FIG. 18, the second end 720b is pivotally connected to the filtering box 711. The first end 720a pivots around the second end 720b to be away from or abut against the filtering box 711 to open or close the flow guiding opening 715. In this case, the filtering assembly 710 is entirely located underwater, that is, the filtering assembly 710 is entirely located at a position under the water surface, and a buoyancy force applied to the adjustment part 730b is greater than the gravity of the adjustment part 730b.

Specifically, the second end 720b is pivotally connected to the filtering box 711, and the adjustment part 730b is away from a pivoting joint between the second end 720b and the filtering box 711. The first end 720a can pivot around the second end 720b to be away from the filtering box 711, so that the cover part 720 is opened to expose the flow guiding opening 715. Alternatively, the first end 720a can pivot around the second end 720b to abut against the filtering box 711. Because the buoyancy force applied to the adjustment part 730b is greater than the gravity of the adjustment part 730b, the cover part 720 can cover the flow guiding opening 715. The buoyancy force applied to the adjustment part 730b is much greater than the gravity of the cover part 720 in the water. When the filtering box 711 is in the first motion state or the third motion state, the cover part 720 extends along a direction of gravity under the buoyancy force applied to the adjustment part 730b. In this case, the cover part 720 can cover the flow guiding opening 715. When the filtering box 711 is in the second motion state, the second end 720b pivots around the first end 720a to be away from the filtering box 711 under the gravity of the cover part 720.

The first end 720a is pivotally connected to the filtering box 711, the second end 720b pivots around the first end 720a to be away from or abut against the filtering box 711, and the gravity of the adjustment part 730b is greater than the buoyancy force. This increases a speed at which the cover part 720 covers the flow guiding opening 715 or is opened to expose the flow guiding opening 715, facilitates autonomous switching of the cover part 720 between the first motion state and the second motion state, reduces usage of the drive assembly, and reduces costs.

Optionally, in this embodiment, a density of the adjustment part 730b is less than a density of water, such as 1 kg/m³. The density of the adjustment part 730b may be 0.9 kg/m³, 0.8 kg/m³, 0.64 kg/m³, 0.54 kg/m³, 0.1 kg/m³, or the like. This is not limited herein. In other words, the density of the adjustment part 730b needs to be less than the density of water. When the filtering box 711 is in the first motion state or the third motion state, the cover part 720 is in the vertical state under the buoyancy force applied to the adjustment part 730b, so that the cover part 720 covers the flow guiding opening 715. In addition, when the filtering box 711 is in the second motion state, the cover part 720 may be opened under the gravity of the cover part 720 to expose the flow guiding opening 715.

The density of the adjustment part 730b is defined, so that the cover part 720 can be adjusted to quickly cover the flow guiding opening 715. The adjustment part 730b may be a hollow structure, foam, plastic, an air bag filled with other matters, or the like. This is not limited herein. The hollow structure may be a hollow box-like structure. In this embodiment, the adjustment part 730b is foam.

More specifically, in the Embodiment 2, the filtering assembly 710 further includes a moving part 731. The cover part 720 further includes an accommodating channel 722. The accommodating channel 722 is provided between the first end 720a and the second end 720b. A center line of the accommodating channel 722 intersects a plane on which the first end 720a or the second end 720b is located. The moving part 731 is accommodated in the accommodating channel 722 and can move along the accommodating channel 722.

In a process of switching the filtering box 711 from the first motion state to the second motion state or a process of switching the filtering box 711 from the second motion state to the first motion state, the moving part 731 is accommodated in the accommodating channel 722 and can move along the accommodating channel 722. A position of the moving part 731 can be changed to change a position of the gravity center of the cover part 720, so that the cover part 720 can quickly cover the flow guiding opening 715 or be opened to expose the flow guiding opening 715. This improves the wall climbing, slope climbing, or operating performance of the cleaning device 10. The moving part 731 may be a rolling part (not shown in the figure). The rolling part rolls in the accommodating channel 722, so that friction between the rolling part and the accommodating channel 722 can be reduced, and the position of the gravity center of the cover part 720 can be changed more quickly. The rolling part may be a rolling ball. A density of the rolling ball may be greater than 1 kg/m³. A size of the rolling ball may be determined based on an actual situation. This is not limited herein.

The accommodating channel 722 is provided between the first end 720a and the second end 720b, and the center line of the accommodating channel 722 intersects the plane on which the first end 720a is located, that is, the accommodating channel 722 is provided close to the first end 720a. Alternatively, the accommodating channel 722 is provided between the first end 720a and the second end 720b, and the center line of the accommodating channel 722 intersects the plane on which the second end 720b is located, that is, the accommodating channel 722 is provided close to the second end 720b. The accommodating channel 722 may be provided at any angle at the first end 720a or the second end 720b.

In some embodiments, the center line of the accommodating channel 722 vertically intersects the plane on which the first end 720a or the second end 720b is located. The center line of the accommodating channel 722 vertically intersects the plane on which the first end 720a is located, or the center line of the accommodating channel 722 vertically intersects the plane on which the second end 720b is located. When the moving part 731 moves along the accommodating channel 722, the gravity center can be changed along a direction from the first end 720a to the second end 720b, so that the gravity center of the cover part 720 can be changed regularly, which is simple and can be implemented easily.

In some embodiments, the cover part 720 includes the inner side surface 725 facing the first cavity 714. The accommodating channel 722 extends from the second end 720b to the first end 720a along a direction close to the inner side surface 725. The accommodating channel 722 extends from the second end 720b along a direction close to the inner side surface 725 and extends toward the first end 720a. In other words, the accommodating channel 722 tilts. When the filtering box 711 is in the second motion state, the moving part 731 moves, under the gravity, from the second end 720b to the first end 720a along the accommodating channel 722 that tilts. In this case, the gravity center of the cover part 720 moves forward, and the gravity of the cover part 720 is greater than the buoyancy force applied to the cover part 720, so that the cover part 720 is opened to expose the flow guiding opening 715.

A tilting direction of the accommodating channel 722 is changed, so that the moving part 731 can conveniently move, and the gravity center of the cover part 720 can be quickly changed. In this way, the cover part 720 can be quickly opened to expose the flow guiding opening 715 or quickly cover the flow guiding opening 715.

In the Embodiment 1, the Embodiment 2, or any other specific embodiments, the cover part 720 may be directly pivotally connected to a side wall of the filtering box 711. However, to implement stable and firm mounting, the cover part 720 may be indirectly pivotally connected to the side wall of the filtering box 711 by using other mounting parts, such as a mounting bracket 740.

In some embodiments, as shown in FIG. 13 to FIG. 24, the mounting bracket 740 is disposed on the side wall of the filtering box 711. At least a part of the mounting bracket 740 covers the flow guiding opening 715. The part of the mounting bracket 740 covers the flow guiding opening 715, and the part is provided with a plurality of grill holes 741. The plurality of grill holes 741 communicate with the flow guiding opening 715. The cover part 720 is movably mounted on the mounting bracket 740.

Specifically, the mounting bracket 740 is detachably connected to or fixed to the side wall of the filtering box 711. In a process of mounting the mounting bracket 740 to the side wall of the filtering box 711, at least a part of the mounting bracket 740 covers the flow guiding opening 715. The part of the mounting bracket 740 covers the flow guiding opening 715, and the part is provided with the plurality of grill holes 741. The plurality of grill holes 741 communicate with the flow guiding opening 715. At least a part of the water in the first cavity 714 flows out through the flow guiding opening 715 and the grill holes 741 sequentially. The plurality of grill holes 741 are provided on the mounting bracket 740 to prevent large debris (leaves or the like) from entering the main water pump 210 when the cover part 720 is opened, so that the main water pump impeller 212 in the main water pump 210 is prevented from being damaged. Sizes and shapes of the grill holes 741 are not limited, provided that an actual use requirement can be met. In this embodiment, each of the plurality of grill holes 741 is square.

Further, the mounting bracket 740 is detachably mounted to the side wall of the filtering box 711. The detachable connection may be clamping, bolt fastening, or inserting. In this embodiment, the periphery of the mounting bracket 740 is provided with a plurality of mounting portions 744. Each of the plurality of mounting portions 744 is provided with a mounting hole (not shown in the figure). A fixed part extends through the mounting hole to be fixed to the side wall of the filtering box 711. In addition, a plurality of mounting buckles 745 are provided on the periphery of the mounting bracket 740. The plurality of mounting buckles 745 are inserted into the flow guiding opening 715 to be clamped to a side wall of the flow guiding opening 715. The mounting portions 744 mate with the mounting buckles 745, so that the mounting bracket 740 is mounted to the side wall of the filtering box 711 more stably. This improves stability of the filtering assembly 710. Positions and quantities of the mounting bracket 740 and the mounting buckles 745 are determined based on an actual situation. This is not limited herein.

In addition, when the filtering box 711 is provided with the mounting bracket 740, the cover part 720 may be movably mounted on the mounting bracket 740. The movable connection may be a rotatable connection. The cover part 720 is rotatably connected to the mounting bracket 740.

In some specific embodiments, a side surface of the mounting bracket 740 faces the first cavity 714, and the side surface is recessed to form the accommodating cavity 742. A side wall of the accommodating cavity 742 is provided with a pivoting portion mounting groove 743. The cover part 720 is movably accommodated in the accommodating cavity 742. The cover part 720 is provided with a pivoting portion 723 protruding from the cover part 720. A stop position-limiting protrusion is provided below the pivoting portion 723. The pivoting portion 723 is pivotally mounted in the pivoting portion mounting groove 743. The stop position-limiting protrusion rotates with the cover member 720 to stop on the side wall.

The accommodating cavity 742 is recessedly provided on the side surface of the mounting bracket 740, and the side surface faces the first cavity 714. The accommodating cavity 742 can be configured to accommodate the cover part 720. The accommodating cavity 742 communicates with the pivoting portion mounting groove 743. The pivoting portion 723 is fixedly or detachably mounted to the cover part 720. When the cover part 720 is movably mounted in the accommodating cavity 742, the pivoting portion 723 is pivotally mounted in the pivoting portion mounting groove 743, so that the cover part 720 rotates. The stop position-limiting protrusion is provided below the pivoting portion 723. The pivoting portion 723 and the stop position-limiting protrusion are detachably or fixedly connected to each other. The stop position-limiting protrusion has a stopping and position-limiting function. When the pivoting portion 723 pivots, the stop position-limiting protrusion also rotates with the pivoting portion 723. When the cover part 720 rotates to reach a certain angle, the stop position-limiting protrusion stops on the side wall of the accommodating cavity 742, so that the cover part 720 is stopped from rotating, and a rotation angle of the cover part 720 is limited.

The accommodating cavity 742, the pivoting portion mounting groove 743, the pivoting portion 723, and the stop position-limiting protrusion cooperate with each other to limit the rotation angle of the cover part 720, so that the cover part 720 is prevented from being adsorbed to the side wall of the filtering box 711 due to the excessively large rotation angle of the cover part 720, and therefore, covering performance of the cover part 720 is not affected.

When the filtering box 711 is in the second motion state, an included angle between the cover part 720 and the filtering box 711 can be limited by the stop position-limiting protrusion. The included angle between the cover part 720 and the filtering box 711 is greater than or equal to 30° and less than or equal to 100°. The included angle between the cover part 720 and the filtering box 711 may be 30°, 43°, 54°, 65°, 76°, 87°, 90°, 98°, 100°, or the like. This is not limited herein. A range of the included angle between the cover part 720 and the filtering box 711 is limited, so that at least a part of the water in the first cavity 714 can flow out through the flow guiding opening 715 to increase the amount of water flowing out of the filtering box 711, and a risk that the cover part 720 is adsorbed onto the side wall of the filtering box 711 is reduced. In this embodiment, when the filtering box 711 is in the first motion state or the third motion state, the cover part 720 is disposed vertically relative to the filtering box 711 under the stop position-limiting protrusion, that is, the included angle between the cover part 720 and the filtering box 711 is 90°.

Optionally, in other embodiments, when the cover part 720 pivots around the filtering box 711, structures, such as the pivoting portion mounting groove 743, the pivoting portion 723, and the stop position-limiting protrusion between the cover part 720 and the mounting bracket 740, may also be disposed between the cover part 720 and the filtering box 711. Details are not described herein again.

Optionally, a lap portion 724 extends from an edge of the cover part 720. The lap portion 724 abuts against the inner side surface 725 of the mounting bracket 740 when the cover part 720 is accommodated in the accommodating cavity 742. The lap portion 724 is fixedly or detachably connected to the cover part 720. The lap portion 724 is disposed at the edge of the cover part 720. When the filtering box 711 is in the first motion state or the third motion state, the lap portion 724 of the cover part 720 may abut against the inner side surface 725 of the mounting bracket 740 when the cover part 720 is accommodated in the accommodating cavity 742.

In the above manner, sealing performance of the cover part 720 covering the flow guiding opening 715 is improved, so that water flowing into the filtering box 711 through a gap between the cover part 720 and the mounting bracket 740 is reduced, and therefore, cleaning efficiency of the cleaning device 10 is not affected.

FIG. 25 is a partial schematic view of the underwater cleaning device according to the second embodiment of the present disclosure. FIG. 26 is a partial exploded view of the underwater cleaning device according to the second embodiment of the present disclosure. With reference to FIG. 13 to FIG. 20, in some practical application scenarios, the filtering box 711 of the filtering assembly 710 in embodiments of the present disclosure is substantially square. The filtering box 711 has at least two configurations. In the first configuration, the filtering box 711 has an opening. The filtering box 711 includes a first side surface 7111a, a second side surface 7111b, a third side surface 7111c, and a fourth side surface 7111d. The first side surface 7111a, the second side surface 7111b, the third side surface 7111c, and the fourth side surface 7111d are jointly enclosed to form the opening. The first side surface 7111a and the second side surface 7111b are disposed opposite to each other. The third side surface 7111c and the fourth side surface 7111d are disposed opposite to each other. The first side surface 7111a is close to a front of a moving direction of the cleaning device 10. The flow guiding opening 715 may be provided on at least one of the first side surface 7111a, the second side surface 7111b, the third side surface 7111c, or the fourth side surface 7111d. At least one of the first side surface 7111a, the second side surface 7111b, the third side surface 7111c, or the fourth side surface 7111d may be provided with one, two, or more than two flow guiding openings 715. This is not limited herein. In other words, the cover part 720 may be pivotally connected to at least one of the first side surface 7111a, the second side surface 7111b, the third side surface 7111c, or the fourth side surface 7111d. The cover part 720 covers a corresponding flow guiding opening 715 or is opened to expose a corresponding flow guiding opening 715.

When the flow guiding opening 715 is provided on the first side surface 7111a, the cover part 720 is disposed on the first side surface 7111a1a and pivots toward the interior of the filtering box 711. When the flow guiding opening 715 is provided on both the second side surface 7111b and the third side surface 7111c, the cover parts 720 on the second side surface 7111b and the third side surface 7111c are provided with the pivoting portions 723. The pivoting portion 723 is vertically disposed on the mounting bracket 740 or the side wall of the filtering box 711. The cover part 720 may pivot toward the interior or the exterior of the filtering box 711. Certainly, in other embodiments, the cover part 720 may be disposed in other manners. This is not limited herein. When the flow guiding opening 715 is provided on the fourth side surface 7111d, the cover part 720 may be disposed on the fourth side surface 7111d and pivot toward the periphery of the filtering box 711.

In the second configuration, the filtering box 711 has no opening. The filtering box 711 includes a first side surface 7111a, a second side surface 7111b, a third side surface 7111c, a fourth side surface 7111d, and a fifth side surface 7111e. The fifth side surface 7111e covers an opening formed by enclosure of the first side surface 7111a, the second side surface 7111b, the third side surface 7111c, and the fourth side surface 7111d. The fifth side surface 7111e is fixedly or detachably connected to at least one of the first side surface 7111a, the second side surface 7111b, the third side surface 7111c, or the fourth side surface 7111d. The first side surface 7111a, the second side surface 7111b, the third side surface 7111c, the fourth side surface 7111d, and the fifth side surface 7111e are disposed to ensure that the filtering box 711 is in a closed state. The flow guiding opening 715 may be provided on at least one of the first side surface 7111a, the second side surface 7111b, the third side surface 7111c, the fourth side surface 7111d, or the fifth side surface 7111e. In other words, the cover part 720 may be pivotally connected to at least one of the first side surface 7111a, the second side surface 7111b, the third side surface 7111c, the fourth side surface 7111d, or the fifth side surface 7111e. The cover part 720 covers a corresponding flow guiding opening 715 or is opened to expose a corresponding flow guiding opening 715.

The cover part 720 may be disposed on the fifth side surface 7111e when the flow guiding opening 715 is provided on the fifth side surface 7111e. Alternatively, the cover part 720 may be disposed at a position on the cleaning device 10, and the position is close to the fifth side surface 7111e. In other words, the cover part 720 may pivotally rotate toward the interior or the exterior of the filtering box 711. Therefore, the position at which the cover part 720 is disposed is related to a structure of the filtering box 711, the position of the flow guiding opening 715, and the structure of the cleaning device 10. A structure of the cover part 720 may be determined and finely adjusted based on an actual situation, provided that the cover part 720 can cover the flow guiding opening 715 or be opened to expose the flow guiding opening 715. In this way, a thrust applied to the cleaning device 10 is improved, so that the wall climbing, slope climbing, or operating performance of the cleaning device 10 is improved. This improves user experience.

When the filtering assembly 710 is only provided with one flow guiding opening 715, the cover part 720 having the first configuration and the adjustment part 730a whose density is greater than 1 kg/m³ may be disposed at the flow guiding opening 715, or the cover part 720 having the second configuration, the adjustment part 730b whose density is less than 1 kg/m³, and the moving part 731 may be disposed at the flow guiding opening 715.

When the filtering assembly 710 is provided with two flow guiding openings 715, the cover part 720 having the first configuration and the adjustment part 730a whose density is greater than 1 kg/m³ may be disposed at each of the two flow guiding openings 715, or the cover part 720 having the second configuration, the adjustment part 730b whose density is less than 1 kg/m³, and the moving part 731 may be disposed at each of the two flow guiding openings 715, or the cover part 720 having the first configuration and the adjustment part 730a whose density is greater than 1 kg/m³ may be disposed at one of the two flow guiding openings 715, and the cover part 720 having the second configuration, the adjustment part 730b whose density is less than 1 kg/m³, and the moving part 731 may be disposed at the other one of the two flow guiding openings 715.

When the filtering assembly 710 is provided with three or more flow guiding openings 715, the type of the cover part 720 and the type of the adjustment part 730b disposed at each flow guiding opening 715 may be determined based on an actual situation. Details are not described herein again.

In addition, the shape of the flow guiding opening 715 may be regular or irregular. The regular shape may be a regular polygon, a circle, or the like. The irregular shape may be formed by an arc and a folded line. A shape of the cover part 720 may be the same as or different from that of the flow guiding opening 715. When the shape of the cover part 720 is different from the shape of the flow guiding opening 715, and the filtering box 711 is in the first motion state or the third motion state, the specific shape of the cover part 720 is not limited, provided that the cover part 720 can cover the flow guiding opening 715.

It may be understood that the cover part 720 of the filtering assembly 710 in this embodiment of the present disclosure is further provided with a second filtering layer. When the cover part 720 is not opened, the second filtering layer filters out debris to prevent normal operation of the cleaning device 10 from being affected by the cover part 720. A specific position and a form of the second filtering layer are not limited herein, provided that a position at which the second filtering layer is provided avoids the positions at which the adjustment parts 730a and 730b are disposed.

The cover part 720 may be movably connected to the cleaning device 10. For example, the cover part 720 may be mounted on a component of the cleaning device 10 other than the filtering box 711 through pivoting, telescoping, hinging, or the like. The cover part 720 is configured to cover the flow guiding opening 715 or be opened to expose the flow guiding opening 715. When the cover part 720 is pivotally connected to the cleaning device 10, a structure of the cover part 720 is the same as the structure of the above cover part 720 that is pivotally connected to the filtering box 711. Details are not described herein again. In other words, the cover part 720 may be disposed at various positions. A specific position of the cover part 720 is determined based on an actual situation.

FIG. 27 is a partial cross-sectional view of the underwater cleaning device according to the second embodiment of the present disclosure. With reference to FIG. 13 to FIG. 20, FIG. 25, and FIG. 26, in some embodiments, the cleaning device 10 includes a filtering assembly 710. The filtering assembly 710 is the filtering assembly 710 described in the above embodiments. Details are not described herein again. The filtering assembly 710 is disposed, so that the impact on the cleaning effect of the cleaning device 10 can be reduced, and the amount of water flowing into the main water pump 210 can be increased. In this way, the thrust applied to the cleaning device 10 is increased, so that wall climbing, slope climbing, or operating performance of the cleaning device 10 is improved. This improves user experience.

In an embodiment, the filtering box water inlet portion 716 is formed in the filtering box 711. The filtering box water inlet portion 716 communicates with the first cavity 714. In other words, water flows into the first cavity 714 through the filtering box water inlet portion 716. The cleaning device 10 further includes the main water pump 210. The main water pump 210 is disposed outside the filtering box 711. The main water pump 210 communicates with the first cavity 714 of the filtering box 711. The main water pump 210 provides a driving force to drive the water to flow and guide a flow direction of the water.

When the filtering assembly 710 is in the first motion state or the third motion state, the cover part 720 covers the flow guiding opening 715. The main water pump 210 is configured to guide the water to flow into the main water pump 210 sequentially through the filtering box water inlet portion 716, the first cavity 714, and the first filtering layer. In other words, the main water pump 210 is configured to guide the water in the pool to flow into the first cavity 714 through the filtering box water inlet portion 716, and the water in the first cavity 714 flows into the main water pump 210 through the first filtering layer on the filtering box 711.

When the filtering assembly 710 is in the second motion state, the cover part 720 is opened to expose the flow guiding opening 715. The main water pump 210 is configured to guide at least a part of the water to flow into the main water pump 210 sequentially through the filtering box water inlet portion 716, the first cavity 714, and the flow guiding opening 715. In other words, the main water pump 210 is configured to guide the water in the pool to flow into the first cavity 714 through the filtering box water inlet portion 716, at least a part of the water in the first cavity 714 directly flows into the main water pump 210 through the flow guiding opening 715, and another part of the water flows into the main water pump 210 through the first filtering layer.

Therefore, the main water pump 210 provides a driving force to drive the water to flow and limits the flow direction of the water, and a requirement for the amount of water flowing into the main water pump 210 can always be met. In this way, stable wall climbing, slope climbing, or operating performance of the cleaning device 10 can be maintained.

In an embodiment, the cleaning device 10 includes the filtering box cavity 1023. A second cavity 10231 is formed in the filtering box cavity 1023. The filtering assembly 710 is disposed inside the second cavity 10231. The second cavity 10231 communicates with the first cavity 714 of the filtering box 711 in the filtering assembly 710. For example, the second cavity 10231 may communicate with the first cavity 714 through the first filtering layer and the flow guiding opening 715. The main water pump 210 is disposed outside the filtering box cavity 1023. The filtering box water inlet portion 716 is formed between the filtering box 711 and the filtering box cavity 1023. The filtering box water inlet portion 716 communicates with the first cavity 714. In other words, water flows into the first cavity 714 through the filtering box water inlet portion 716. A position and a disposition manner of the filtering box water inlet portion 716 are not limited herein, provided that the water can directly enter the first cavity 714 through the filtering box water inlet portion 716.

When the cleaning device 10 is placed in the pool, the main water pump 210 is configured to guide water in the pool to flow into the first cavity 714 through the filtering box water inlet portion 716, and then, the water flows into the second cavity 10231 after being filtered by the first filtering layer, and the water flows into the main water pump 210 through the second cavity 10231.

When the filtering assembly 710 is in the first motion state or the third motion state, the cover part 720 covers the flow guiding opening 715. The main water pump 210 is configured to guide water to flow into the main water pump 210 sequentially through the filtering box water inlet portion 716, the first cavity 714, the first filtering layer, and the second cavity 10231. In other words, the main water pump 210 is configured to guide the water in the pool to flow into the first cavity 714 through the filtering box water inlet portion 716, the water in the first cavity 714 flows into the second cavity 10231 through the first filtering layer on the filtering box 711, and then, the water flows into the main water pump 210 through the second cavity 10231. The first motion state or the third motion state is a state of the filtering box 711 when the cleaning device 10 moves in a direction perpendicular to the gravity direction, or the first motion state or the third motion state is a state in which the cleaning device 10 is disposed at a certain tilting angle, and the cover part 720 cannot be opened under the gravity of the cover part 720 or an external force to expose the flow guiding opening 715.

When the filtering box 711 of the filtering assembly 710 is in the second motion state, the cover part 720 is opened to expose the flow guiding opening 715. The main water pump 210 is configured to guide at least a part of the water to flow into the main water pump 210 sequentially through the filtering box water inlet portion 716, the first cavity 714, the flow guiding opening 715, and the second cavity 10231. In other words, the main water pump 210 is configured to guide the water in the pool to flow into the first cavity 714 through the filtering box water inlet portion 716, at least a part of the water in the first cavity 714 directly flows into the second cavity 10231 through the flow guiding opening 715, another part of the water flows into the second cavity 10231 through the first filtering layer, and then, the water flows into the main water pump 210 through the second cavity 10231.

The filtering box cavity 1023 is disposed in the cleaning device 10, so that the water can be concentrated in the second cavity 10231 and concentratedly flow into the main water pump 210 to improve the requirement for the amount of water flowing into the main water pump 210. In this way, the wall climbing, slope climbing, or operating performance of the cleaning device 10 is further improved. The filtering box cavity 1023 is provided with a water outlet (not shown in the figure). The water outlet communicates with the main water pump 210. A side wall of the filtering box cavity 1023 is close to the main water pump 210, and the side wall is provided with the water outlet, or the water outlet may be provided at other positions on the filtering box cavity 1023. This is not limited herein.

In an embodiment, the cover part 720 is pivotally connected to the filtering box cavity 1023. A structure of the cover part 720 pivotally connected to the filtering box cavity 1023 is the same as a structure of the cover part 720 pivotally connected to the filtering box 711. Details are not described herein again. The cover part 720 is disposed on the filtering box cavity 1023 to reduce a resistance applied by the cover part 720 against the water flow, so that the water can flow out of the filtering box 711 more smoothly. For example, the cover part 720 may be disposed on the side wall of the filtering box cavity 1023 to cover the flow guiding opening 715 or be opened to expose the flow guiding opening 715.

In a process in which the cover part 720 is opened to expose the flow guiding opening 715, when the cleaning device 10 is switched from the second state to the first state, the cover part 720 can be automatically reset due to the structure thereof, so that the cover part 720 covers the flow guiding opening 715. Certainly, a reset assembly may be disposed between the cover part 720 and the filtering box 711 or between the cover part 720 and the filtering box cavity 1023. Resetting can be implemented quickly by the reset assembly. The reset assembly may be a torsion spring, a spring, a tension spring, or the like. This is not limited herein.

In an embodiment, the cleaning device 10 further includes a flipping cover (not shown in the figure). The filtering box cavity 1023 has an opening (not shown in the figure). The flipping cover covers the opening to seal the filtering box cavity 1023. The flipping cover is disposed on the top of the filtering box cavity 1023. The flow guiding opening 715 is provided at the top of the filtering box 711. In this case, the filtering box 711 is partially hollowed and is provided with the flow guiding opening 715. The cover part 720 is movably connected to the flipping cover to cover the flow guiding opening 715 of the filtering box 711 or be opened to expose the flow guiding opening 715 of the filtering box 711. In other words, the cover part 720 may be disposed on the flipping cover in addition to the filtering box cavity 1023.

In other embodiments, when the top of the filtering box 711 includes the fifth side surface 7111e, the cover part 720 may be movably mounted on a top cover housing (not shown in the figure) of the cleaning device 10. The top cover housing is an outermost housing of the cleaning device 10. When the top cover housing is opened, the filtering assembly 710 can be removed from the cleaning device 10 and may be cleaned or replaced. The cover part 720 covers the flow guiding opening 715 on the fifth side surface 7111e or is opened to expose the flow guiding opening 715 on the fifth side surface 7111e.

In some embodiments, when the top of the filtering box 711 includes the fifth side surface 7111e, the flow guiding opening 715 is formed on the fifth side surface 7111e. The cover part 720 may be movably mounted on the fifth side surface 7111e to cover the flow guiding opening 715 on the fifth side surface 7111e or be opened to expose the flow guiding opening 715 on the fifth side surface 7111e.

In an embodiment, the cover part 720 is further provided with a second filtering layer (not shown in the figure). The second filtering layer communicates with the first cavity 714 and the second cavity 10231. The second filtering layer is configured to perform filtering. When the filtering assembly 710 is in the first motion state or the third motion state, the cover part 720 covers the flow guiding opening 715. The water in the pool can flow into the first cavity 714 through the filtering box water inlet portion 716. The water in the first cavity 714 flows into the second cavity 10231 through the first filtering layer on the filtering box 711 and the second filtering layer on the cover part 720. Then, the water flows into the main water pump 210 through the second cavity 10231. The second filtering layer is disposed on the cover part 720, so that the cleaning efficiency of the cleaning device 10 can be improved. A structure of the second filtering layer may be the same as or different from the structure of the first filtering layer. This is not limited herein.

In an embodiment, the main water pump 210 includes a main water pump impeller casing 215. An area of the flow guiding opening 715 of the filtering assembly 710 is larger than a cross-sectional area, for water entering, of the main water pump impeller casing 215. Because the area of the flow guiding opening 715 is larger than the cross-sectional area, for water entering, of the main water pump impeller casing 215, an area for water flowing out of the filtering assembly 710 is increased. In this way, the amount of water flowing out of the filtering assembly 710 is larger than the amount of water flowing into the main water pump 210 to ensure that the requirement for the amount of water flowing into the main water pump 210 is always met when the cleaning device climbs the wall or the slope or the first filtering layer is clogged, so that the stable wall climbing, slope climbing, or operating performance is maintained.

The main water pump 210 further includes a main water pump impeller 212 and a main water pump motor 211. An output end of the main water pump motor 211 is connected to the main water pump impeller 212. The main water pump motor 211 drives the main water pump impeller 212 to rotate inside the main water pump impeller casing 215. The main water pump motor 211 in the main water pump 210 drives the main water pump impeller 212 to rotate, so that the water can flow into the main water pump impeller 212. In this way, a speed at which water flows out of the filtering assembly 710 is increased, and the cleaning efficiency of the cleaning device 10 for sewage in the pool is improved.

Because a size of garbage on the liquid surface 30 is larger than a size of garbage under the liquid surface 30, a size of the filtering mesh hole of the first filtering layer of the filtering assembly when the cleaning device 10 performs water surface cleaning is larger than a size of the filtering mesh hole of the first filtering layer of the filtering assembly when the cleaning device 10 performs underwater cleaning. In some embodiments, the filtering box 711 may be provided with two or more first filtering layers. The cover part 720 covers the flow guiding opening 715 on the filtering assembly 710 or is opened to expose the flow guiding opening 715 on the filtering assembly 710. When the cleaning device 10 performs underwater cleaning, the cover part 720 covers the flow guiding opening 715. The plurality of filtering layers are stacked to perform filtering, so that filtering efficiency for underwater cleaning is increased. When the cleaning device 10 performs water surface cleaning, the cover part 720 is at least partially opened to expose the flow guiding opening 715, and the flow guiding opening 715 is used, so that a quantity of first filtering layers is reduced. In this way, large garbage on the liquid surface 30 can be filtered easily, and the large garbage is less likely to block the plurality of first filtering layers. A structure, a disposition manner, and a position of the cover part 720 are the same as those described above. Details are not described herein again.

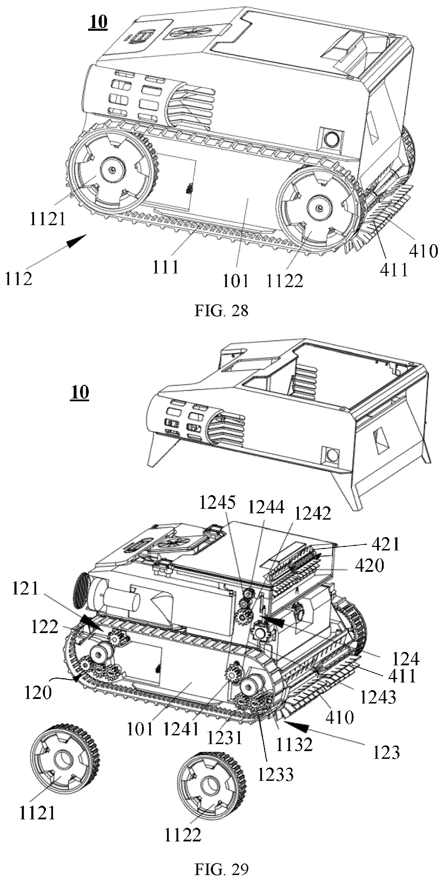

FIG. 28 is a schematic view of the cleaning device according to a fourth embodiment of the present disclosure. FIG. 29 is an exploded view of the cleaning device according to the fourth embodiment of the present disclosure. In some embodiments, the cleaning device 10 includes a movement propulsion mechanism 100 and a cleaning mechanism 400. The movement propulsion mechanism 100 includes a transmission assembly 120. The transmission assembly 120 includes a movement drive part 121, a first driven part 123, and a second driven part 124. The cleaning mechanism 400 includes a first cleaning part 410 and a second cleaning part 420. The first cleaning part 410 is configured to draw garbage under the liquid surface 30 into the filtering mechanism. The second cleaning part 420 is configured to draw garbage at the liquid surface 30 into the filtering mechanism. The movement drive part 121 is disposed inside the cleaning device body 101. An output end of the movement drive part 121 is adapted to be drivably connected to the wheels 112, so that the movement drive part 121 can drive the wheels 112 to rotate. The first driven part 123 is disposed on the cleaning device body 101. The first driven part 123 is drivably connected to the wheels 112. An output end of the first driven part 123 is adapted to be connected to the first cleaning part 410. The wheels 112 drive the first driven part 123 to rotate, so that the first driven part 123 drives the first cleaning part 410 to rotate. The second driven part 124 is disposed on the cleaning device body 101. The second driven part 124 is drivably connected to the wheels 112. An output end of the second driven part 124 is adapted to be connected to the second cleaning part 420. The wheels 112 drive the second driven part 124 to rotate, so that the second driven part 124 drives the second cleaning part 420 to rotate. For example, the first cleaning part 410 in this embodiment is the roller brush for underwater cleaning 411, and the second cleaning part 420 is the roller brush for water surface cleaning 421.

The movement drive part 121, the first driven part 123, and the second driven part 124 are disposed, so that only one movement drive part 121 is needed to drive the wheels 112, the first cleaning part 410, and the second cleaning part 420, leading to a simple driving structure and low manufacturing costs. The wheels 112 are driven by the movement drive part 121 to rotate, so that the wheels move forward or backward. During rotation, the wheels can drive the first driven part 123 and the second driven part 124 to rotate, so that the first driven part 123 and the second driven part 124 respectively drive the first cleaning part 410 and the second cleaning part 420 to rotate, and various cleaning parts can operate. In this way, cleaning functions of the cleaning device 10 are diversified. For example, when the first cleaning part 410 is the roller brush for underwater cleaning 411, and the second cleaning part 420 is the roller brush for water surface cleaning 421, the transmission assembly 120 drives the wheels 112 to rotate to drive the roller brush for underwater cleaning 411 and the roller brush for water surface cleaning 421 to rotate, so that cleaning functions of the cleaning device 10 are diversified. Optionally, the roller brush for underwater cleaning 411 and the roller brush for water surface cleaning 421 rotate in a same direction. In some embodiments, the wheels 112 include a first wheel 1121, a second wheel 1122, and a track 111. The first wheel 1121 is in transmission connection to the second wheel 1122 through the track 111. The output end of the movement drive part 121 is drivably connected to the first wheel 1121. Specifically, two first wheels 1121 and two second wheels 1122 are disposed in this embodiment. The two first wheels 1121 are disposed at the front portion of the cleaning device body 101, and the two second wheels 1122 are arranged at the rear portion of the cleaning device body 101.

For example, the movement drive part 121 in this embodiment includes a movement drive motor. The transmission assembly 120 further includes a first gear 122. An output end of the movement drive motor is connected to the first gear 122. The first gear 122 is engaged with the first wheel 1121, so that the first gear 122 can drive the first wheel 1121 to rotate. Alternatively, the movement drive part 121 may be any other component that can provide kinetic energy. This is not limited herein.

In some embodiments, the second driven part 124 includes a second gear 1241, a third gear 1242, a fourth gear 1244, a fifth gear 1245, a first rotating plate, and a second rotating plate. The second gear 1241 is connected to the first rotating plate. The third gear 1242 is connected to the second rotating plate. The first rotating plate is in transmission connection to the second rotating plate through the track 111. The second gear 1241 is engaged with the second wheel 1122. The fourth gear 1244 is engaged with the third gear 1242. The fourth gear 1244 is connected to the second cleaning part 420. The fifth gear 1245 is disposed between the third gear 1242 and the fourth gear 1244 and is engaged with both the third gear 1242 and the fourth gear 1244.

Specifically, during operation, after the movement drive part 121 is started, the movement drive part 121 drives the first gear 122 to rotate. Because the first gear 122 is engaged with the first wheel 1121, the first gear 122 can drive the first wheel 1121 to rotate. Under the action of the track 111, the first wheel 1121 can drive, through the track 111, the second wheel 1122 to rotate, the second wheel 1122 drives the second gear 1241 to rotate, and the second gear 1241 drives the first rotating plate to rotate. In this way, the first rotating plate drives, through the track 111, the second rotating plate to rotate, the second rotating plate drives the third gear 1242 to rotate, the third gear 1242 drives the fifth gear 1245 to rotate, the fifth gear 1245 drives the fourth gear 1244 to rotate, and the fourth gear 1244 drives the second cleaning part 420 to rotate. When the second cleaning part 420 is the roller brush for water surface cleaning 421, garbage on the water surface can be cleaned and stored.

In some optional embodiments, the second cleaning part 420 is connected to the fourth gear 1244 through a connecting shaft. In this embodiment, the second driven part 124 is disposed on only one side of the cleaning device body 101. This helps simplify the structure of the cleaning device 10, reduce costs, and reduce the weight of the device.

In some optional embodiments, the fourth gear 1244 and the second cleaning part 420 are removed from the second driven part 124 as a whole. This helps remove and clean the second cleaning part 420. The fourth gear 1244 may be disposed on the filtering box 711, or the fourth gear 1244 may be disposed on a filtering box cover plate. When the filtering box 711 is detached, the second cleaning part 420 and the fourth gear 1244 are also detached from the filtering box 711, so that the filtering box 711 and the second cleaning part 420 can be cleaned at the same time. This helps detach and clean the second cleaning part 420. Further, in this embodiment, the second gear 1241 is coaxially disposed with the first rotating plate, the third gear 1242 is coaxially disposed with the second rotating plate, and the second rotating plate is disposed right above the first rotating plate. This can shorten the track 111 as much as possible, reduce costs, and improve reliability and stability of the second driven part 124.

Still refer to FIG. 28 and FIG. 29. In some embodiments, the first driven part 123 includes a sixth gear 1231, a seventh gear 1132, and an eighth gear 1233. The sixth gear 1231 is engaged with the seventh gear 1232. The sixth gear 1231 is engaged with the second wheel 1122. The seventh gear 1232 is connected to the first cleaning part 410. The eighth gear 1233 is disposed between the sixth gear 1231 and the seventh gear 1232 and is engaged with both the sixth gear 1231 and the seventh gear 1232.

Specifically, during operation, after the movement drive part 121 is started, the movement drive part 121 drives the first gear 122 to rotate. Because the first gear 122 is engaged with the first wheel 1121, the first gear 122 can drive the first wheel 1121 to rotate. Under the action of the track 111, the first wheel 1121 drives the second wheel 1122 to rotate, the second wheel 1122 drives the sixth gear 1231 to rotate, the sixth gear 1231 drives the eighth gear 1233 to rotate, and the eighth gear 1233 drives the seventh gear 1232 to rotate, so that the seventh gear 1232 can drive the first cleaning part 410 to rotate. When the first cleaning part 410 is the roller brush for underwater cleaning 411, a surface of the pool can be cleaned. The surface of the pool may be the bottom surface of the pool or a wall surface of the pool.

Further, as shown in FIG. 29, the first cleaning part 410 is connected to the seventh gear 1232 through a connecting shaft, and the seventh gear 1232 may be detachably connected to the cleaning device body 101 through a bolt. This facilitates later replacement of the first cleaning part 410. The sixth gear 1231, the seventh gear 1232, and the eighth gear 1233 are disposed, so that when it is ensured that the first cleaning part 410 operates normally, the first cleaning part 410 can be detached. This avoids a problem in the conventional technology that the first cleaning part 410 is directly fixedly connected to the second wheel 1122 and cannot be detached, improves flexible application of the cleaning device 10 in this embodiment, and reduces costs.

According to the cleaning device 10 in this embodiment, one movement drive part 121 is configured to drive various cleaning parts, leading to diverse cleaning functions, a simple structure, low manufacturing costs, and the light weight. This helps carry and transport the cleaning device 10 and improve the operating efficiency. Specifically, the first cleaning part 410 may be the roller brush for underwater cleaning 411, and the second cleaning part 420 may be the roller brush for water surface cleaning 421. The transmission assembly 120 of the cleaning device 10 drives the wheels 112 to rotate to drive the roller brush for underwater cleaning 411 and the roller brush for water surface cleaning 421 to rotate, so that the cleaning functions of the cleaning device 10 are diversified.

Further, the cleaning device 10 in this embodiment includes two transmission assemblies 120, two first wheels 1121, and two second wheels 1122. Each transmission assembly 120 includes at least one first driven part 123, at least one movement drive part 121, and at least one second driven part 124.

In a specific implementation, each transmission assembly 120 includes one second driven part 124, so that the cleaning device 10 includes two first driven parts 123. The two first driven parts 123 are respectively disposed on two sides of the cleaning device body 101 and are respectively disposed at positions corresponding to two second wheels 1122. In this embodiment, the cleaning device 10 includes two first cleaning parts 410. In other words, each of two seventh gears 1232 drives one first cleaning part 410 independently, to improve the cleaning efficiency. The first cleaning part 410 may be a floor cleaning roller brush, so that the cleaning device 10 can clean the surface of the pool. The surface of the pool may be the bottom surface of the pool or the wall surface of the pool.

In a specific implementation, each transmission assembly 120 includes one movement drive part 121, so that the cleaning device 10 includes two movement drive parts 121. Each of the two movement drive parts 121 is drivably connected to one first wheel 1121, so that the cleaning device 10 can make a turn. The first wheel 1121 may be a front wheel of the cleaning device 10, and the second wheel 1122 may be a rear wheel of the cleaning device 10. For example, when the cleaning device 10 needs to make a turn, one movement drive part 121 enables one first wheel 1121 to stop operating, decelerate, or operate reversely, and the other movement drive part 121 acceleratively drives the other first wheel 1121 to rotate, so that the cleaning device 10 can make a turn. In this embodiment, two movement drive parts 121 are disposed to respectively drive the two first wheels 1121 to rotate, so that more power is provided to the cleaning device 10, and the operating efficiency is improved.

In another embodiment, the cleaning device 10 includes two transmission assemblies 120, two first wheels 1121, and two second wheels 1122, and each transmission assembly 120 includes two first driven parts 123, so that the cleaning device 10 has four first driven parts 123. The four first driven parts 123 are respectively drivably connected to the two first wheels 1121 and the two second wheels 1122, so that the four first driven parts 123 respectively drive the four first cleaning parts 410. This improves the cleaning efficiency of the cleaning device 10.

In still another embodiment, the cleaning device 10 includes four transmission assemblies 120, two first wheels 1121, and two second wheels 1122, and each transmission assembly 120 includes one first driven part 123 and one movement drive part 121. The four movement drive parts 121 respectively drive the two first wheels 1121 and the two second wheels 1122, and the four first driven parts 123 are respectively drivably connected to the two first wheels 1121 and the two second wheels 1122, so that the four first driven parts 123 respectively drive four first cleaning parts 410. This improves the cleaning efficiency of the cleaning device 10.

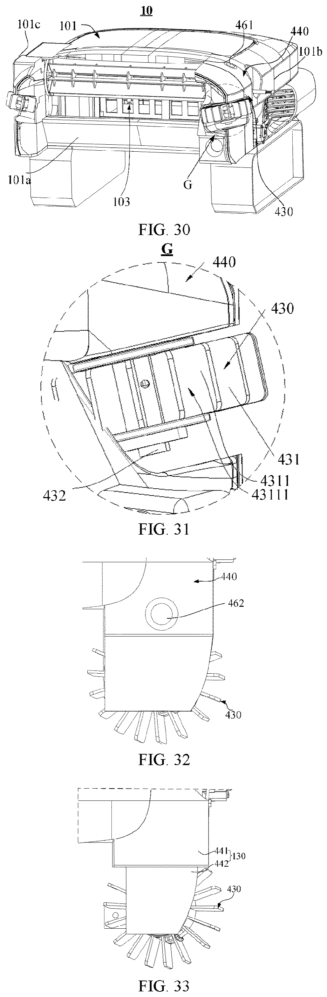

FIG. 30 is a cross-sectional view of the cleaning device according to a fifth embodiment of the present disclosure. The cleaning device 10 includes the cleaning device body 101, a cleaning member 430, and the movement drive assembly. The cleaning member 430 is disposed on the cleaning device body 101. The movement drive assembly (not shown in the figure) is disposed on the cleaning device body 101. The movement drive assembly is connected to the cleaning member 430 and is configured to drive the cleaning member 430 to move telescopically relative to the cleaning device body 101. The telescopic movement includes at least one of: an extension movement in a direction away from the cleaning device body 101 or a retraction movement in a direction close to the cleaning device body 101. At a first position, the cleaning member 430 is excessively retracted, and at a second position, the cleaning member 430 excessively extends. It may be understood that the cleaning member 430 may stop at the first position, the second position, or any position between the first position and the second position, to meet various application requirements. During the cleaning process, the cleaning device body 101 may move along the bottom wall of the pool, the side wall of the pool, the water surface of the pool, or suspend in the liquid in the pool.

The present disclosure is mainly applied in the field of robots. The cleaning device 10 in the present disclosure may drive, by using the movement drive assembly, the cleaning member 430 to move telescopically, so that the cleaning member 430 is more flexible and can comprehensively clean surfaces of the pool in different directions and at different distances or water in the pool. In this way, movements of the cleaning device 10 can be reduced to improve the cleaning efficiency. In addition, the movement drive assembly may further drive the cleaning member 430 to rotate. The rotation may be rotation of the cleaning member 430 at any angle around a position at which the cleaning member 430 is connected to the cleaning device body 101. The cleaning member 430 can be switched between an extended state and a retracted state through rotation.

FIG. 31 is a schematic structural view of a portion G in FIG. 30. The cleaning member 430 may include a rotary brush 431 and a rotation shaft 432. The rotary brush 431 is disposed around the rotation shaft 432. The rotation shaft 432 is rotatably connected to the cleaning device body 101 through the movement drive assembly. The rotary brush 431 has at least one cleaning surface 43111. The cleaning surface 43111 may be tilted and is configured to be in contact with and stir a water flow. Specifically, the rotary brush 431 includes a plurality of cleaning portions 4311. The cleaning portions 4311 are disposed around a periphery of the rotation shaft 432. The cleaning portions 4311 extend along an axial direction of the rotation shaft 432. The cleaning surface 43111 is formed on a side of the cleaning portion 4311. At least a part of the cleaning portion 4311 is made of a flexible material, such as rubber, elastic fabric, or bristles, and/or at least a part of the cleaning portion 4311 is made of a rigid material, such as steel wires. The rigid material can improve a cleaning capability of the cleaning member 430. In addition, the plurality of cleaning portions 4311 may be alternately made of various materials, such as made of rubber alternated with steel wires. The rotary brush 431 may be made of the same material as or different materials from the rotation shaft 432.

In some embodiments, when the cleaning member 430 is in the retracted state, the cleaning member 430 is entirely or at least partially located inside the cleaning device body 101. The retracted state is a state in which the movement drive assembly drives the cleaning member 430 to retract, or a state in which the movement drive assembly does not drive the cleaning member 430 to extend. For example, the retracted state is a state in which the movement drive assembly drives the cleaning member 430 to retract in a direction close to the cleaning device body 101. In this case, the cleaning member 430 is gradually retracted into the cleaning device body 101. When a part of the cleaning member 430 located inside the cleaning device body 101 reaches a first preset value, the cleaning member 430 stops retracting. The first preset value may be 50%, 60%, 85%, or 100%. For another example, the retracted state is a state in which the movement drive assembly does not drive the cleaning member 430 to extend, that is, the cleaning member 430 is in the retracted state. In this case, when the movement drive assembly drives the cleaning member 430 to move, the cleaning member 430 only extends.

In some other embodiments, when the cleaning member 430 is in the extended state, at least a part of the cleaning member 430 is located outside the cleaning device body 101. The extended state is a state in which the movement drive assembly drives the cleaning member 430 to extend, or a state in which the movement drive assembly does not drive the cleaning member 430 to retract. For example, the extended state is a state in which the movement drive assembly drives the cleaning member 430 to extend in a direction away from the cleaning device body 101. In this case, the cleaning member 430 gradually moves out of the cleaning device body 101. When a part of the cleaning member 430 located inside the cleaning device body 101 reaches a second preset value, the cleaning member 430 stops extending. The second preset value may be 50%, 60%, 85%, or the like. For another example, the extended state is a state in which the movement drive assembly does not drive the cleaning member 430 to retract, that is, the cleaning member 430 is in the extended state. In this case, when the movement drive assembly drives the cleaning member 430 to move, the cleaning member 430 is only retracted.

In some embodiments, the cleaning member 430 may be in the extended state or the retracted state. The cleaning member 430 may be in the retracted state when the cleaning member 430 is retracted in the direction close to the cleaning device body 101. The cleaning member 430 may be in the extended state when the cleaning member 430 extends in the direction away from the cleaning device body 101.

FIG. 32 is a schematic structural view of a connection portion of the cleaning device according to a sixth embodiment of the present disclosure. In some embodiments, the cleaning member 430 is driven to rotate and move telescopically. The movement drive assembly may include a connection portion 440 and a first drive assembly (not shown in the figure). The cleaning member 430 is connected to the cleaning device body 101 through the connection portion 440. The first drive assembly is connected to the connection portion 440 and is configured to drive the cleaning member 430 to move telescopically relative to the cleaning device body 101.

FIG. 33 is a schematic structural view of the connection portion of the cleaning device according to a seventh embodiment of the present disclosure. In some embodiments, the connection portion 440 may be a telescopic structure as shown in FIG. 33. The connection portion 440 includes a fixed portion 441 and a telescopic portion 442. The fixed portion 441 is fixedly connected to the cleaning device body 101. One end of the telescopic portion 442 is connected to the fixed portion 441, and the other end of the telescopic portion 442 is connected to the cleaning member 430. The telescopic portion 442 may move telescopically relative to the fixed portion 441. The first drive assembly includes a first power source (not shown in the figure). The first power source is disposed at a joint between the fixed portion 441 and the telescopic portion 442. The first power source is configured to drive the connection portion 440 to move telescopically to drive the cleaning member 430 to move telescopically. It may be understood that the first power source may be a motor or an air cylinder. This is not specifically limited herein.

In some other embodiments, the cleaning member 430 is movably connected to the movement drive assembly. The first drive assembly includes a first transmission mechanism 450 and the first power source. An input end of the first transmission mechanism 450 is connected to the first power source, an output end of the first transmission mechanism 450 is connected to the cleaning member 430, and the first power source is configured to provide power to the first transmission mechanism 450, so that the first transmission mechanism 450 drives the cleaning member 430 to move telescopically relative to the cleaning device body 101 and the connection portion 440.

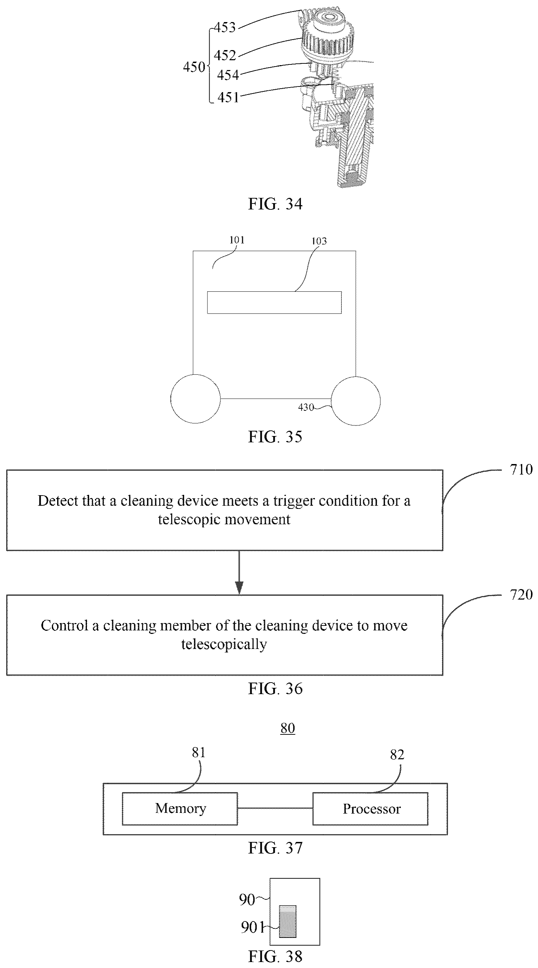

FIG. 34 is a schematic structural view of the first transmission mechanism of the cleaning device according to the sixth embodiment of the present disclosure. Specifically, an end of the connection portion 440 is connected to the cleaning member 430, and the first transmission mechanism 450 and the first power source may be disposed at the end to control the cleaning member 430 to move telescopically. The first transmission mechanism 450 may include a worm gear transmission mechanism and a gear transmission mechanism. For example, as shown in FIG. 34, the first transmission mechanism 450 includes an oscillating gear 451, a worm gear 452, a worm 453, and a transmission gear 454. The worm 453 is fixedly connected to an output end of the first power source. The worm 453 is engaged with the worm gear 452. The worm gear 452 and the transmission gear 454 are fixedly connected to each other through a concentric shaft. The transmission gear 454 is engaged with the oscillating gear 451. The oscillating gear 451 serves as the output end of the first transmission mechanism 450 and is configured to drive a component connected to the output end of the first transmission mechanism 450 to move telescopically. It may be understood that the first transmission mechanism 450 may include a transmission mechanism other than the worm gear transmission mechanism and the gear transmission mechanism. This is not specifically limited herein. For example, the component connected to the output end of the first transmission mechanism 450 is the cleaning member 430, and the cleaning member 430 is eccentrically connected to the oscillating gear 451 through a rotation shaft. The oscillating gear 451 and the rotation shaft eccentrically oscillate to drive the cleaning member 430 to extend in the direction away from the cleaning device body 101, so that the cleaning member 430 at least partially extends out of the cleaning device body 101, or to drive the cleaning member 430 to retract in the direction close to the cleaning device body 101, so that the cleaning member 430 is at least partially retracted into the cleaning device body 101. It may be understood that the first transmission mechanism 450 may be a transmission structure other than the above transmission structure. This is not specifically limited herein.

In some other embodiments, a first end of the connection portion 440 is connected to the cleaning member 430. The first drive assembly includes the first transmission mechanism 450 and the first power source. The input end of the first transmission mechanism 450 is connected to the first power source, and the output end of the first transmission mechanism 450 is connected to a second end of the connection portion 440 or connected to a component disposed between the second end and the cleaning device body 101. The first power source is configured to provide power to the first transmission mechanism 450, so that the first transmission mechanism 450 drives the connection portion 440 and the cleaning member 430 to move telescopically relative to the cleaning device body 101. The first transmission mechanism 450 controls any component connected thereto to rotate or translate, so that the cleaning member 430 moves telescopically relative to the cleaning device body 101.

In some embodiments, the movement drive assembly includes at least one group of second drive assemblies, and each second drive assembly is configured to drive the cleaning member 430 to rotate relative to the cleaning device body 101.

The first drive assembly and the second drive assembly can simultaneously control the connection portion 440 to rotate and move telescopically. In this case, the component disposed between the second end and the cleaning device body 101 may be the second drive assembly. In one specific embodiment, each second drive assembly includes a second transmission mechanism and a second power source. The second power source is connected to an input end of the second transmission mechanism and is configured to provide power to the second transmission mechanism, so that the second transmission mechanism directly or indirectly drives the cleaning member 430 to rotate. It may be understood that the second power source may be a motor, an air cylinder, or the like. This is not limited herein.

In another specific embodiment, the first end of the connection portion 440 is connected to the cleaning member 430. The at least one group of second drive assemblies includes a first group of second drive assemblies. The first end of the connection portion 440 is connected to the cleaning member 430, and each second drive assembly in the first group of second drive assemblies is connected to the cleaning device body 101 and the second end of the connection portion 440 to drive the connection portion 440 to rotate around a first direction shaft 461, to further indirectly drive the cleaning member 430 to rotate around the first direction shaft 461. The first direction shaft 461 may be a linear rotation shaft 432, and the linear rotation shaft 432 may be disposed vertically, so that the connection portion 440 rotates in the horizontal direction as shown in FIG. 30, or the linear rotation shaft 432 may be disposed horizontally, so that the connection portion 440 rotates in the vertical direction. The first direction shaft 461 may alternatively be a spherical rotation shaft 432, so that the connection portion 440 can rotate at any angle. The first direction shaft 461 is not specifically limited herein.

In another specific embodiment, the at least one group of second drive assemblies includes a second group of second drive assemblies. Refer to FIG. 32. The first end of the connection portion 440 is connected to the cleaning member 430 through each second drive assembly in the second group of second drive assemblies. Each second drive assembly in the second group of second drive assemblies is configured to drive the connection portion 440 to rotate around a second direction shaft 462 to directly drive the cleaning member 430 to rotate around the second direction shaft 462. It may be understood that the second direction shaft 462 may be a linear rotation shaft 432, a spherical rotation shaft 432, or the like. This is not specifically limited herein.

In another specific embodiment, the cleaning member 430 is movably connected to the cleaning device body 101. The at least one group of second drive assemblies includes the first group of second drive assemblies and the second group of second drive assemblies. Refer to FIG. 30 and FIG. 32. The first end of the connection portion 440 is connected to the cleaning member 430, and each second drive assembly in the first group of second drive assemblies is connected to the cleaning device body 101 and the second end of the connection portion 440 to drive the connection portion 440 to rotate around the first direction shaft 461. One end of each second drive assembly in the second group of second drive assemblies is connected to the cleaning member 430, and the other end thereof is connected to the connection portion 440 to drive the connection portion 440 to rotate around the second direction shaft 462, to implement multi-stage rotation control on the cleaning member 430. This improves a cleaning range of the cleaning member 430.

For example, the first direction shaft 461 is the linear rotation shaft 432 and is vertically disposed, and the second direction shaft 462 is the linear rotation shaft 432 and is horizontally disposed. Therefore, when the cleaning member 430 performs cleaning, each second drive assembly in the first group of second drive assemblies may first drive the connection portion 440 to rotate around the first direction shaft 461 in the horizontal direction. After the connection portion 440 rotates to a preset position, each second drive assembly in the second group of second drive assemblies may then drive the cleaning member 430 to rotate around the second direction shaft 462 in the vertical direction, to clean a to-be-cleaned object in the vertical direction. In addition, if the cleaning device 10 is trapped during performing cleaning, the cleaning member 430 and the connection portion 440 flexibly rotate and swing, so that the cleaning device 10 can escape from the trap more easily. Furthermore, the second drive assembly and the first drive assembly may be a same assembly.

It may be understood that when the first group of second drive assemblies and the second group of second drive assemblies are simultaneously configured to control the cleaning member 430 to rotate, the connection portion 440 is first controlled to rotate in the vertical direction, and then the cleaning member 430 is controlled to rotate in the horizontal direction, or the connection portion 440 is first controlled to rotate in the horizontal direction, and then the cleaning member 430 is controlled to rotate in the vertical direction. A scheme of multi-stage rotation control on the cleaning member 430 is not specifically limited herein.

In addition, the at least one group of second drive assemblies may include one, two, or more groups of second drive assemblies. A quantity of groups may be set based on an actual cleaning requirement. This is not specifically limited herein.

In addition, a third drive assembly (not shown in the figure) may be disposed in the movement drive assembly, so that the cleaning member 430 can conveniently clean the surface of the pool, a to-be-cleaned object, or the water in the pool. The third drive assembly is connected to the cleaning member 430 to drive, when the cleaning member 430 needs to operate, the cleaning member 430 rotates around its own axis, to brush and clean the surface of the pool, the to-be-cleaned object, or the water in the pool.

In some embodiments, there are a plurality of cleaning members 430. At least one of the plurality of cleaning members 430 is configured to perform cleaning. For example, the cleaning device 10 may be provided with one cleaning member 430, two cleaning members 430, or a plurality of cleaning members 430. A quantity of cleaning members 430 may be set based on a specific cleaning situation. The cleaning members 430 may be disposed on only a front wall 101a, only a rear wall, only a side wall, or two opposite side walls of the cleaning device body 101 as shown in FIG. 30. This is not specifically limited herein. For another example, at least one cleaning member 430 is configured to allow the cleaning device 10 to escape from a trap. For example, when the cleaning device 10 is trapped by water plants at the bottom of the water, the cleaning member 430 may rotate and move telescopically to escape from the water plants, or the cleaning member 430 may be retracted into the cleaning device 10 to reduce a width of the cleaning device 10, so that the cleaning device 10 passes through easily.

There are a plurality of cleaning members 430, and the plurality of cleaning members 430 are disposed on at least one of a left side wall 101b, a right side wall 101c, or the bottom of the cleaning device body 101.

As shown in FIG. 30, the cleaning device body 101 is further provided with the liquid inlet portion 103. The at least one cleaning member 430 is configured to expand a cleaning range of the liquid inlet portion 103. The cleaning member 430 may be a side brush. The liquid inlet portion 103 is configured to draw water flows, stains, and the like into the cleaning device body 101. The side brush is disposed on the side wall or the bottom of the cleaning device body 101. When the cleaning device 10 moves along an edge of the pool, the side brush may scrub the surface of the pool. There is a cleaning material on the side brush. The side brush moves around its own axis or reciprocates to scrub a to-be-cleaned object. The stains may be garbage floating on the pool, scale or black stains accumulated in the pool, or the like. The cleaning range of the liquid inlet portion 103 is a range in which the liquid inlet portion 103 may affect the water flow and the stains when the liquid inlet portion 103 is in a state of allowing the water flow and the stains to be sucked. As shown in FIG. 30, the liquid inlet portion 103 may be disposed on the front wall 101a of the cleaning device body 101. Along an opening direction of the liquid inlet portion 103, at least one cleaning member 430 is located in the front of the liquid inlet portion 103. For example, the at least one cleaning member 430 is disposed on the left side wall 101b and/or the right side wall 101c of the cleaning device body 101 and extends toward the front wall 101a. In addition, the cleaning member 430 tilts toward the liquid inlet portion 103, and a tilt angle may be 1°, 5°, 8°, 15°, 25°, 30°, 33°, 60°, 75°, 80°, or the like. A self-rotation direction of the cleaning member 430 is a direction facing the liquid inlet portion 103, so that the cleaning member 430 can stir a water flow and stains outside the cleaning range of the liquid inlet portion 103 and guide the water flow and the stains to the liquid inlet portion 103.

Further, a filtering structure and an accommodating cavity 742 may be disposed in the cleaning device body 101. The filtering structure may separate the water flow from the stains, that is, filter out the stains. The accommodating cavity 742 may accommodate the stains filtered out by the filtering structure. In the cleaning device body 101, the accommodating cavity 742, the filtering structure, and the liquid inlet portion 103 may be disposed to cooperate with each other. The filtering structure filters the water flow sucked by the liquid inlet portion 103 to separate the stains from the water flow, so that the stains are left in the accommodating cavity 742, and the clean water flow is discharged from the cleaning device body 101.

FIG. 35 is a schematic structural view of the cleaning device according to the seventh embodiment of the present disclosure. In some embodiments, when the liquid inlet portion 103 is disposed on the front wall 101a of the cleaning device body 101, the cleaning member 430 may be disposed at the bottom of the cleaning device body 101. As shown in FIG. 35, the cleaning member 430 is disposed at the bottom of the cleaning device body 101 and can extend out of the bottom of the cleaning device body 101. In addition, the cleaning member 430 may be disposed to tilt toward a center of the liquid inlet portion 103 or be parallel to the liquid inlet portion 103 to guide a water flow and stains under the liquid inlet portion 103 to the liquid inlet portion 103. In addition, when the cleaning member 430 extends out of the cleaning device body 101, the cleaning member 430 can further scrub a target object in contact with the cleaning member 430.

In addition, when the liquid inlet portion 103 is disposed on the front wall 101a of the cleaning device body 101, the at least one cleaning member 430 may be disposed on a side of the cleaning device body 101, such as the left side wall 101b or the right side wall 101c. The at least one cleaning member 430 may alternatively be disposed on both the left side wall 101b and the right side wall 101c of the cleaning device body 101. In this case, an end of the connection portion 440 is away from the cleaning device body 101, and the end extends toward the bottom of the cleaning device body 101, so that the cleaning member 430 located at the end of the connection portion 440 and away from the cleaning device body 101 is close to the bottom of the cleaning device body 101, and the cleaning member 430 tilts toward the liquid inlet portion 103 disposed at the bottom of the cleaning device body 101. In this way, a water flow and stains outside a range of the bottom of the cleaning device body 101 can be guided to the liquid inlet portion 103.

In some other embodiments, the liquid inlet portion 103 is disposed at the bottom of the cleaning device body 101. To extend the cleaning range of the liquid inlet portion 103, the at least one cleaning member 430 may alternatively be disposed at the bottom of the cleaning device body 101 and in the front of the liquid inlet portion 103.

In addition, when the liquid inlet portion 103 is disposed at the bottom of the cleaning device body 101, the at least one cleaning member 430 is disposed on the left side wall 101b and/or the right side wall 101c of the cleaning device body 101. An end of the connection portion 440 is away from the cleaning device body 101, and the end extends toward the bottom of the cleaning device body 101, so that the cleaning member 430 located at the end of the connection portion 440 and away from the cleaning device body 101 is close to the bottom of the cleaning device body 101, and the cleaning member 430 tilts toward the liquid inlet portion 103 located at the bottom of the cleaning device body 101. In this way, a water flow and stains outside a range of the bottom of the cleaning device body 101 can be guided to the liquid inlet portion 103.

In some embodiments, the cleaning device 10 further includes at least one of a trigger data collection unit or an in-position sensor. The trigger data collection unit is configured to collect trigger data about a preset movement of the cleaning member 430. The in-position sensor is configured to collect reference data about whether the preset movement of the cleaning member 430 is in position. For example, the in-position sensor may be an acceleration detection sensor, a distance sensor, a position detection sensor, or the like.

In some embodiments, the cleaning device body 101 may float on the water surface. When the cleaning device body 101 floats on the water surface, the cleaning member 430 is at least partially located under the water surface. For example, the cleaning member 430 may be partially or completely disposed under the water surface.

In a specific embodiment, when the cleaning device body 101 floats on the water surface, a half of the cleaning member 430 is located on the water surface, and the other half is located under the water surface. In this way, the cleaning member 430 can conveniently clean the stains on the water surface. In addition, when the cleaning member 430 tilts, a part of the cleaning member 430 is located on the water surface, and the part does not stir a water flow when rotating, so that the stains are prevented from being pushed forward by the water flow and therefore can reach the vicinity of the liquid inlet portion 103, leading to a better cleaning effect of the cleaning device 10.

In another specific embodiment, when the cleaning device body 101 floats on the water surface, the cleaning member 430 is completely located under the water surface. In this way, because the cleaning member 430 is entirely located under the water surface, the cleaning member 430 is less likely to splash water when rotating, so that a shore of the pool is less likely to be wet.

In addition, when the cleaning device body 101 floats on the water surface, and the liquid inlet portion 103 is located on the front wall 101a of the cleaning device body 101, the liquid inlet portion 103 may be at least partially located under the water surface. In a specific embodiment, a half of the liquid inlet portion 103 is located on the water surface, and the other half is located under the water surface. In this way, stains located close to the water surface can directly enter the liquid inlet portion 103, and the stains can move to the liquid inlet portion 103 without overcoming a buoyancy force, leading to high cleaning efficiency.

In another specific embodiment, when the cleaning device body 101 floats on the water surface, and the liquid inlet portion 103 is located on the front wall 101a of the cleaning device body 101, the liquid inlet portion 103 is completely located under the water surface, or when the liquid inlet portion 103 is located at the bottom of the cleaning device body 101, the liquid inlet portion 103 is completely located under the water surface. In this way, the liquid inlet portion 103 is completely located under the water surface to be in contact with a larger flow of water, leading to high stain absorption efficiency.

In some embodiments, the cleaning member 430 has a starting position and a telescopic position. The cleaning device 10 further includes a reset assembly (not shown in the figure). The reset assembly is disposed on the cleaning device body 101. The reset assembly is connected to the cleaning member 430. The reset assembly is configured to provide a reset force for the cleaning member 430 to remain at the starting position. The cleaning member 430 can reach the telescopic position when a power drive assembly drives the cleaning member 430 to move telescopically.

In a specific embodiment, when the cleaning member 430 is at the starting position, the cleaning member 430 is in the retracted state. When the cleaning member 430 is driven to reach the telescopic position, the cleaning member 430 is in the extended state. For example, the starting position of the cleaning member 430 is a retracted position, that is, the cleaning member 430 is a normally-retracted state. When the movement drive assembly drives the cleaning member 430 to move toward an extended position, the cleaning member 430 is switched from the normally-retracted state to the extended state. When the movement drive assembly no longer provides power for the cleaning member 430 in the extended state, the reset assembly provides the reset force for the cleaning member 430, so that the cleaning member 430 returns to the starting position again.

In another specific embodiment, when the cleaning member 430 is at the starting position, the cleaning member 430 is in the extended state. When the cleaning member 430 is driven to the telescopic position, the cleaning member 430 is in the retracted state. For example, the starting position of the cleaning member 430 is an extended position, that is, the cleaning component 430 is in a normally-extended state. When the movement drive assembly drives the cleaning member 430 to move toward the extended position, the cleaning member 430 is switched from the normally-extended state to the retracted state. When the movement drive assembly no longer provides power for the cleaning member 430 in the retracted state, the reset assembly provides the reset force for the cleaning member 430, so that the cleaning member 430 returns to the starting position again.

FIG. 36 is a flow chart of a control method for the cleaning device according to an embodiment of the present disclosure. The control method is used to control the cleaning device 10. Specifically, the method includes the following steps.

Step S710: Detect that the cleaning device 10 currently meets a trigger condition for a telescopic movement.

In some embodiments, the trigger condition for the telescopic movement includes at least one of the following: (1) A distance between the cleaning device 10 and a target object is within a preset distance range. The target object includes at least one of: a wall or an obstacle. Specifically, the trigger data collection unit includes a first trigger sensor. Therefore, it may be determined, based on first sensing data collected by the first trigger sensor of the cleaning device 10, that the distance between the cleaning device 10 and the target object is within the preset distance range. For example, a distance sensor on the cleaning device 10 is used to detect a moving direction of the cleaning device 10 or any surrounding object. If the target object is detected, and the distance between the cleaning device 10 and the target object is within the preset distance range, the movement drive assembly of the cleaning device 10 may be used to control the cleaning member 430 to move telescopically and rotate to clean the target object.
(2) The cleaning device 10 is in a trapped state. When the cleaning device 10 is detected to be in the trapped state, the cleaning member 430 may be controlled to move telescopically to reduce a range occupied by the cleaning device 10, so that the cleaning device 10 passes through easily. Situations in which the cleaning device 10 is detected to be in the trapped state may include, but is not limited to, the following situations:
2-1. It is determined, based on second sensing data collected by a second trigger sensor of the cleaning device 10, that there is a preset deviation between an actual rotation angle of the cleaning device 10 and a preset rotation angle. The second trigger sensor is included in the trigger data collection unit. In some embodiments, the preset rotation angle may be obtained by analyzing a received operation instruction by the cleaning device 10, and the second trigger sensor may be a gyroscope sensor. The gyroscope sensor may detect the actual rotation angle of the cleaning device 10 after the cleaning device 10 receives the operation instruction, and send the detected actual rotation angle to a central processing unit 52 of the cleaning device 10 to compare the detected actual rotation angle with the preset rotation angle. If a deviation exists between the detected actual rotation angle and the preset rotation angle and exceeds the preset deviation, the central processing unit 52 determines that the cleaning device 10 is currently trapped.
2-2. It is detected that the cleaning device 10 does not move for a target distance after moving for a first time. In some embodiments, an acceleration sensor is disposed in the cleaning device 10. The cleaning device 10 receives the operation instruction of moving forward for the target distance within the first time. The acceleration sensor detects an acceleration of the cleaning device 10 during moving and sends the detected acceleration to the central processing unit 52 of the cleaning device 10. The central processing unit 52 calculates, based on the acceleration and the first time, an actual moving distance of the cleaning device 10. If the calculated actual moving distance is unequal to the target distance, it is determined that the cleaning device 10 is currently trapped. The first time may be 3 seconds, 5 seconds, 10 seconds, 20 seconds, or the like.
2-3. It is detected that a difference between a position of the cleaning device 10 relative to a reference point before a second time and a position of the cleaning device 10 relative to the reference point after the second time is within a preset difference range. The reference point is determined by a third trigger sensor. In some embodiments, the third trigger sensor may be a time of flight (Time of Flight, TOF) sensor. The TOF sensor may be disposed on the front wall 101a of the cleaning device 10. The TOF sensor determines a point in front of the cleaning device 10 as the reference point, calculates a first relative position of the cleaning device 10 relative to the reference point at a current time, and calculates a second relative position of the cleaning device 10 relative to the reference point after the second time to compare the first relative position with the second relative position. If the difference is within the preset difference range, it indicates that the cleaning device 10 does not move or moves for a short distance, and it is determined that the cleaning device 10 is trapped. The second time may be 5 seconds, 10 seconds, 20 seconds, or the like.
2-4. A current of a drive motor of the cleaning device 10 increases, and a current increase meets a current change for a trapped situation. In some embodiments, while the difference between the position of the cleaning device 10 relative to the reference point before the second time and the position of the cleaning device 10 relative to the reference point after the second time is within the preset difference range, the current of the drive motor of the cleaning device 10 increases, further indicating that the cleaning device 10 is trapped. It may be understood that, in addition to the above situation, the situation 2-1 may be combined with the situation 2-4, or the situation 2-2 may be combined with the situation 2-4 or other situations to determine whether the cleaning device 10 is trapped.
(3) The cleaning device 10 receives a preset instruction. In some embodiments, it is detected that the cleaning device 10 receives the preset instruction, and the cleaning member 430 is controlled according to the preset instruction. The preset instruction may be a remote instruction. The remote instruction may be an instruction sent by a remote control or an instruction sent by a mobile phone, a tablet, or the like. The cleaning member 430 of the cleaning device 10 is controlled, according to the remote instruction, to move telescopically and/or rotate. It may be understood that, the preset instruction may be the remote instruction or an instruction that is automatically generated based on a current state of the cleaning device 10. This is not limited herein.
(4) The cleaning device 10 is in a preset operating mode. The preset operating mode includes at least one of: an energy saving mode, a return mode, or a charging mode. The return mode indicates that a cleaning operation has been completed and the cleaning device 10 is in a returning process. It may be understood that the preset operating mode may further include a trap escaping mode and the like other than the above operating modes. This is not specifically limited herein. In some embodiments, the cleaning member 430 is controlled when it is detected that the cleaning device 10 is in the preset operating mode. For example, when the cleaning device 10 is in the energy saving mode or the return mode, and the cleaning member 430 is in the extended state, the cleaning member 430 needs to be controlled to be retracted in the direction close to the cleaning device body 101. When the cleaning device 10 is in a rest mode, and the cleaning member 430 is in the retracted state, the cleaning member 430 does not need to be controlled to be repeatedly retracted in the direction close to the cleaning device body 101.

Step S720: Control the cleaning member 430 of the cleaning device 10 to move telescopically.

A telescopic movement includes at least one of: an extension movement in the direction away from the cleaning device body 101 or a retraction movement in the direction close to the cleaning device body 101. In some embodiments, a default state of the cleaning member 430 of the cleaning device 10 is the retracted state. When it is detected that the distance between the cleaning device 10 and the target object is within the preset distance range, the cleaning member 430 of the cleaning device 10 may be controlled to extend in the direction away from the cleaning device body 101 of the cleaning device 10 to clean the target object.

In some other embodiments, the default state of the cleaning member 430 of the cleaning device 10 is the extended state. When it is detected that the cleaning device 10 is in at least one of cases: in the trapped state, receiving the preset instruction, or in the preset operating mode, the cleaning member 430 of the cleaning device 10 may be controlled to be retracted in the direction close to the cleaning device body 101 of the cleaning device 10.

Further, in a process of controlling the cleaning member 430 to move telescopically, the in-position sensor is used to detect whether the telescopic movement is in position. In response to detecting that the telescopic movement is in position, it is determined to control the cleaning member 430 to stop moving telescopically.

In addition, when it is detected that the cleaning device 10 currently meets a rotation trigger condition, the cleaning member 430 of the cleaning device 10 may be controlled to rotate relative to the cleaning device body 101, or when it is detected that the cleaning device 10 is in a target operating state, the cleaning member 430 of the cleaning device 10 is controlled to rotate around its own axis, so that the cleaning member 430 operates.

In the present disclosure, the cleaning member 430 of the cleaning device 10 can rotate around its own axis, move telescopically, and rotate. In other words, the cleaning member 430 can move flexibly. This can expand a range of single cleaning of the cleaning device 10 during cleaning and reduce a cleaning path of the cleaning device 10. Therefore, the cleaning efficiency is improved. In addition, when the cleaning device 10 is trapped during cleaning the pool, the cleaning member 430 can move flexibly to escape from the trap. A range occupied by the cleaning device 10 is reduced, so that the cleaning device 10 escapes from the trap.

In addition, a position of the cleaning member 430 may be associated with the liquid inlet portion 103 to expand the cleaning range of the liquid inlet portion 103 and improve the cleaning efficiency.

A person skilled in the art may understand that, in the above method of the specific embodiments, an order in which the steps are written does not indicate that the steps should be strictly performed in the order and does not limit an implementation process. A specific order of performing the steps shall be determined based on functions and possible internal logic.

FIG. 37 is a diagram of a framework of a cleaning device according to the present disclosure. The electronic device 50 includes a memory 51 and a processor 52 coupled to each other. The processor 52 is configured to execute program instructions stored in the memory 51 to implement the steps of the control method for the cleaning device 10 in any of the above embodiments. In the present disclosure, the electronic device 50 is the cleaning device 10.

Specifically, the processor 52 is configured to control itself and the memory 51 to implement the steps of the control method for the cleaning device 10 in any of the above embodiments. The processor 52 may also be referred to as a central processing unit (Central Processing Unit, CPU). The processor 52 may be an integrated circuit chip having a signal processing capability. The processor 52 may alternatively be a general-purpose processor 52, a digital signal processor 52 (Digital Signal Processor, DSP), an application specific integrated circuit (Application Specific Integrated Circuit, ASIC), a field-programmable gate array (Field-Programmable Gate Array, FPGA), or another programmable logic device, a discrete gate, a transistor logic device, or a discrete hardware component. The general-purpose processor 52 may be a microprocessor 52, or the processor 52 may be any conventional processor 52. In addition, the processor 52 may be implemented by an integrated circuit chip.

FIG. 38 is a diagram of a framework of a computer-readable storage medium according to the present disclosure. The computer-readable storage medium 60 stores program instructions 901 that can be run by the processor 52. The program instructions 901 are executed to implement the steps of the control method for the cleaning device 10 in any of the above embodiments.

In some embodiments, the apparatus provided in embodiments of the present disclosure has functions or includes modules that can be used to perform the method described in the above method embodiment. For details about specific implementations, refer to the description of the above method embodiment. For brevity, details are not described herein again.

In some embodiments, as shown in FIG. 1, the cleaning device 10 includes a cleaning device body 101 and a filtering box 711. The filtering box 711 is detachably disposed on the cleaning device body 101. When the cleaning device 10 operates, the filtering box 711 can collect and filter out garbage in the pool, and the filtering box 711 is manually cleaned by a user to ensure a cleaning effect.

In the conventional technology, the cleaning device 10 still operates even when the filtering box 711 is not mounted or is not mounted in position, resulting in ineffective operation or a poor cleaning effect. For example, when the user forgets to mount the filtering box 711, the cleaning device 10 is still placed in the water and performs cleaning. However, the cleaning device 10 in this state cannot filter dirty water. After the cleaning device 10 sucks the dirty water, the dirty water is directly discharged through a water pump outlet immediately, resulting in ineffective operation of the cleaning device 10. In addition, if the cleaning device 10 operates without the filtering box 711, large and rigid debris may be sucked into a water pump impeller. Consequently, the water pump impeller is broken or entangled, leading to a machine failure.

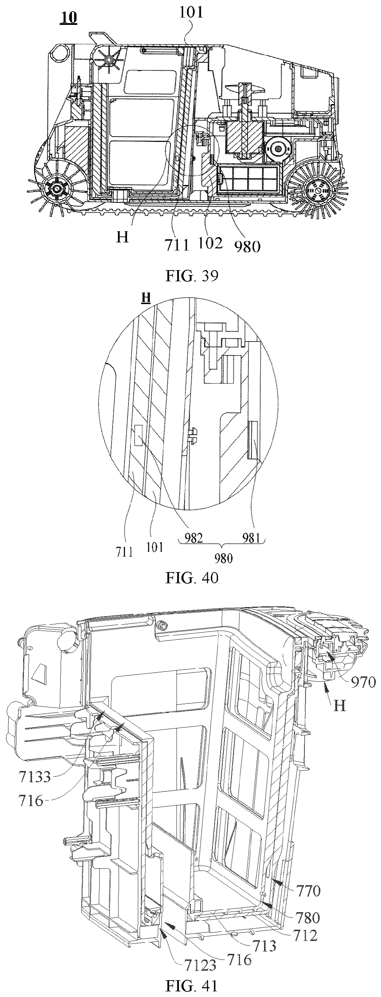

FIG. 39 is a cross-sectional view of the filtering assembly of the cleaning device according to an eighth embodiment of the present disclosure. FIG. 40 is an enlarged view of a portion H in FIG. 39. To solve the above problem, this embodiment provides a cleaning device 10. The cleaning device 10 includes an in-position detection mechanism for a filtering box. The in-position detection mechanism for the filtering box is configured to detect whether the filtering box 711 is mounted in position on the cleaning device body 101 to ensure that, only after the filtering box 711 is mounted in position, the cleaning device 10 can operate normally. This eliminates any user misoperation, prevents ineffective cleaning or a poor cleaning effect, and better improves intelligence of the cleaning device 10. The in-position detection mechanism for the filtering box includes at least one of: a sensing assembly 980, an inductance assembly, or a switch assembly. For example, the in-position detection mechanism for the filtering box may be the sensing assembly 980 or the inductance assembly or the switch assembly. The in-position detection mechanism for the filtering box may include all of the sensing assembly 980, the inductance assembly, and the switch assembly. The sensing assembly 980 may detect, in a sensing manner, whether the filtering box 711 is mounted in position, and the sensing manner may be implemented through cooperation between a Hall element and a Hall magnet. The inductance assembly may detect, in an inductive manner, whether the filtering box 711 is disposed in position. The switch assembly detects, by using a switching part, whether the filtering box 711 is disposed in position.

It should be noted that because the cleaning device 10 generally operates underwater or in water, waterproof performance of the sensing assembly 980, waterproof performance of the inductance assembly, and waterproof performance of the switch assembly are crucial. Therefore, in this embodiment, the sensing assembly 980, the inductance assembly, and the switch assembly may be provided with a waterproof structure as required, to prevent short circuits. This ensures use performance of the in-position detection mechanism for the filtering box and improves stability of the in-position detection mechanism for the filtering box.

While ensuring the cleaning effect of the cleaning device 10, the in-position detection mechanism for the filtering box can further prevent rigid debris from being sucked into the main water pump impeller 212, so that the main water pump impeller 212 is prevented from being damaged or entangled, and the cleaning device 10 is prevented from malfunctioning. This helps improve operation safety and a service life of the cleaning device 10. The in-position detection mechanism for the filtering box includes at least one of the sensing assembly 980, the inductance assembly, or the switch assembly, so that a quantity of detection manners can be increased. A detection manner can be selected based on an actual situation. In an actual process, the in-position detection mechanism for the filtering box may further have other detection manners. This is not limited herein.

In some embodiments, the in-position detection mechanism for the filtering box includes the sensing assembly 980. The sensing assembly 980 includes a sensing part 981 and a sensing mating part 982. When the filtering box 711 is mounted in position, the sensing part 981 and the sensing mating part 982 mate with each other to detect whether the filtering box 711 is mounted in position on the cleaning device body 101 to ensure that, only after the filtering box 711 is mounted in position, the cleaning device 10 can operate normally. This eliminates any user misoperation, prevents ineffective cleaning or a poor cleaning effect, and better improves intelligence of the cleaning device 10.

One of the sensing part 981 and sensing mating part 982 is disposed directly on the filtering box 711, and the other one of the sensing part 981 and the sensing mating part 982 is disposed on the cleaning device body 101. Specific positions at which the sensing part 981 and sensing mating part 982 are disposed can be determined based on an actual situation. Alternatively, the sensing part 981 and the sensing mating part 982 both are not disposed on the filtering box 711 but are disposed at other positions. The filtering box 711 moves to drive the sensing part 981 and the sensing mating part 982 to mate with each other to detect whether the filtering box 711 is mounted in position. The following describes the above two manners in detail.

In some embodiments, the sensing part 981 is disposed on one of the cleaning device body 101 and the filtering box 711, and the sensing mating part 982 is disposed on the other one of the cleaning device body 101 and the filtering box 711. For example, the sensing part 981 is disposed on the cleaning device body 101, and the sensing mating part 982 is disposed on the filtering box 711. Alternatively, the sensing part 981 is disposed on the filtering box 711, and the sensing mating part 982 is disposed on the cleaning device body 101. In other words, relative positions of the sensing part 981 and the sensing mating part 982 may be changed as required.

When the sensing part 981 is disposed on the cleaning device body 101, and the sensing mating part 982 is disposed on the filtering box 711, the sensing mating part 982 is detachably or fixedly connected to the filtering box 711. For example, the filtering box 711 is provided with a mounting groove. The sensing mating part 982 is sealed in the mounting groove, so that a magnetic field of the sensing mating part 982 is prevented from being affected by water, and a magnet is prevented from falling off. This helps ensure stable operation of the in-position detection mechanism for the filtering box. Alternatively, the sensing mating part 982 and the filtering box 711 are an integral structure, so that the sensing mating part 982 is disposed inside the side wall of the filtering box 711. This helps simplify an assembly process and improve assembly efficiency.

It may be understood that, because the filtering box 711 is detachable, it may be difficult to dispose a circuit for detection when the sensing part 981 is disposed on the filtering box 711. Therefore, the sensing part 981 in this embodiment is a Hall sensing part, and the sensing mating part 982 is a magnet. When the filtering box 711 is mounted in position, the magnet and the Hall sensing part may sense each other without contact under the action of a magnetic field of the magnet. In this way, the magnet can be disposed on the detachable filtering box 711 without considering a short circuit caused by being in contact with water or a connection problem, leading to a simple structure and high safety. Specifically, in the sensing assembly 980, the magnet is used to affect an internal magnetic field to conduct a circuit, so that whether the circuit is open or closed can be detected. When the filtering box 711 is mounted in position on the cleaning device body 101, the magnet gradually approaches the Hall sensing part, and strength of the magnetic field at the Hall sensing part is increased, so that the Hall sensing part is in a triggered state. When the filtering box 711 is removed, the magnet gradually moves away from the Hall sensing part, and the strength of the magnetic field at the Hall sensing part is decreased, so that the Hall sensing part cannot be triggered. When the Hall sensing part and the magnet are two independent components, the Hall sensing part and the magnet can be waterproofed independently. Magnetism can penetrate the filtering box 711 and the cleaning device body 101, so that the Hall sensing part and the magnet can sense each other.

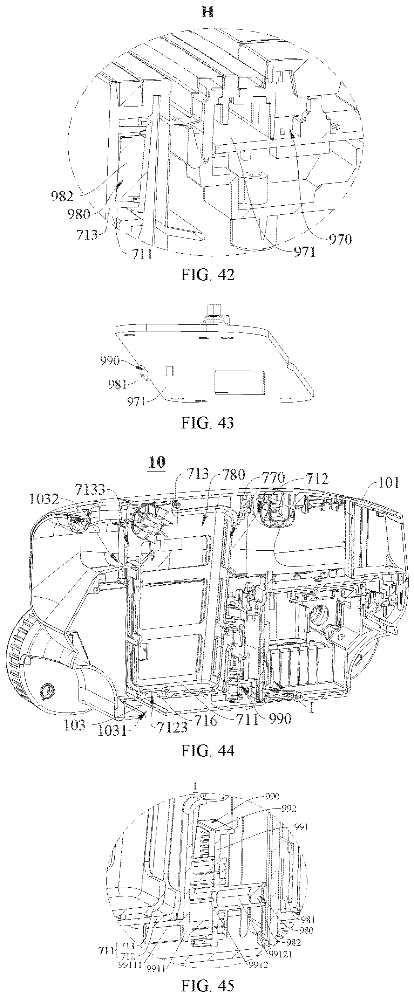

FIG. 41 is a cross-sectional view of the filtering assembly of the cleaning device according to a ninth embodiment of the present disclosure. FIG. 42 is an enlarged view of a portion I in FIG. 41. FIG. 43 is a partial schematic view of the cleaning device according to the ninth embodiment of the present disclosure. The Hall sensing part may not be waterproofed. The Hall sensing part is disposed in a sealed space. The sealed space may be a light assembly 970. In other words, the cleaning device 10 includes the light assembly 970. The light assembly 970 is sealed inside the cleaning device body 101. The Hall sensing part is disposed inside the light assembly 970 and is connected to a controller described later via signals. Further, the Hall sensing part is disposed directly on a light control board 971 of the light assembly 970 to fully use a space of the light control board 971. The Hall sensing part is connected to the controller via signals, or the light control board 971 is connected to the controller via signals.

The sealed space may alternatively be a first sealed cavity 1021. The cleaning device 10 includes the first sealed cavity 1021. The first sealed cavity 1021 is configured to mount the main water pump motor 211. The Hall sensing part is disposed in the first sealed space and is then connected to the controller via signals.

FIG. 44 is a cross-sectional view of the cleaning device according to a tenth embodiment of the present disclosure. FIG. 45 is an enlarged view of a portion J in FIG. 44. In some embodiments, the sensing part 981 and the sensing mating part 982 both are not disposed on the filtering box 711 but are disposed at other positions. Specifically, the cleaning device 10 includes the filtering box cavity 1023 and the first sealed cavity 1021. The filtering box 711 is detachably disposed in the filtering box cavity 1023. The in-position detection mechanism for the filtering box is configured to detect whether the filtering box 711 is mounted in position in the filtering box cavity 1023. The first sealed cavity 1021 is sealed. The in-position detection mechanism for the filtering box includes a sensing drive assembly 990. The sensing drive assembly 990 is connected to the filtering box cavity 1023. The sensing part 981 is disposed on one of the sensing drive assembly 990 and the first sealed cavity 1021. The sensing mating part 982 is disposed on the other one of the sensing drive assembly 990 and the first sealed cavity 1021. The filtering box 711 acts on the sensing drive assembly 990, so that the sensing part 981 and the sensing mating part 982 mate with each other. In a process of placing the filtering box 711 in the filtering box cavity 1023, the filtering box 711 presses down on the sensing drive assembly 990, and the sensing drive assembly 990 moves, so that the sensing part 981 can sense the sensing mating part 982 to detect whether the filtering box 711 is disposed in position in the filtering box cavity 1023. In a process of removing the filtering box 711 from the filtering box cavity 1023, the sensing drive assembly 990 rises, so that the sensing part 981 cannot sense the sensing mating part 982. The sensing drive assembly 990 is disposed between the filtering box cavity 1023 and the first sealed cavity 1021 and is configured to detect whether the filtering box 711 is mounted in position in the filtering box cavity 1023. The sensing part 981 is disposed in the first sealed cavity 1021, and the sensing mating part 982 is disposed on the filtering box 711, or the sensing part 981 is disposed on the filtering box 711, and the sensing mating part 982 is disposed in the first sealed cavity 1021. Positions of the sensing part 981 and the sensing mating part 982 may be determined as required.

The sensing drive assembly 990 may be connected to the filtering box cavity 1023 in a plurality of manners. For example, in some specific embodiments, the sensing drive assembly 990 is telescopically connected to the filtering box cavity 1023. In the process of placing the filtering box 711 in the filtering box cavity 1023, the filtering box 711 presses down on the sensing drive assembly 990. The sensing drive assembly 990 is compressed and lowered, so that the sensing part 981 can sense the sensing mating part 982 to detect whether the filtering box 711 is mounted in position in the filtering box cavity 1023. In the process of removing the filtering box 711 from the filtering box cavity 1023, the sensing drive assembly 990 is reset, so that the sensing part 981 cannot sense the sense coupling part 982.

In some other embodiments, the sensing drive assembly 990 is rotatably connected to the filtering box cavity 1023. In the process of placing the filtering box 711 in the filtering box cavity 1023, the filtering box 711 acts on one end of the sensing drive assembly 990, the end of the sensing drive assembly 990 is lowered, the sensing drive assembly 990 rotates relative to the filtering box cavity 1023, and the other end of the sensing drive assembly 990 rises, so that the sensing part 981 can sense the sensing mating part 982 to detect whether the filtering box 711 is mounted in position in the filtering box cavity 1023. In the process of removing the filtering box 711 from the filtering box cavity 1023, the end of the sensing drive assembly 990 rises and is reset, and the other end of the sensing drive assembly 990 is lowered and reset, so that the sensing part 981 cannot sense the sensing mating part 982.

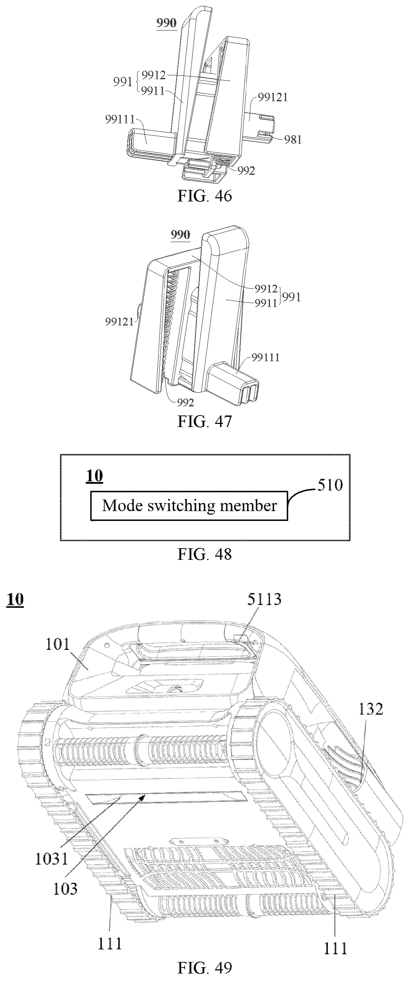

FIG. 46 is a schematic view of the sensing drive assembly of the cleaning device in a first state according to the tenth embodiment of the present disclosure. FIG. 47 is a schematic view of the sensing drive assembly of the cleaning device in a second state according to the tenth embodiment of the present disclosure. In some specific embodiments, when the sensing drive assembly 990 is telescopically connected to the filtering box cavity 1023, the sensing drive assembly 990 may include a sensing bracket 991 and a sensing elastic part 992. A first bracket portion 99111 and a second bracket portion 99121 are respectively disposed at two ends of the sensing bracket 991. The first bracket portion 99111 is disposed inside the filtering box cavity 1023. The second bracket portion 99121 is provided with the sensing mating part 982 and is located outside the filtering box cavity 1023. The sensing elastic part 992 has certain elasticity. The sensing elastic part 992 is connected between the sensing bracket 991 and the filtering box cavity 1023. The filtering box 711 presses down on the first bracket portion 99111, so that the second bracket portion 99121 moves downward to cooperate with the sensing part 981.

Specifically, in the process of placing the filtering box 711 in the filtering box cavity 1023, the filtering box cavity 1023 presses down on the first bracket portion 99111, the second bracket portion 99121 is pressed down as the first bracket portion 99111 moves, and the sensing elastic part 992 is compressed. In this case, the sensing mating part 982 moves to be close to sense the sensing part 981, and relative positions of the sensing mating part 982 and the sensing part 981 are within a sensing range. The sensing assembly 980 is triggered and transmits a signal to the cleaning device body 101, and the cleaning device body 101 recognizes that the filtering box 711 has been mounted in position in the filtering box cavity 1023, and then the cleaning device 10 performs cleaning.

In the process of removing the filtering box 711 from the filtering box cavity 1023, the sensing elastic part 992 is reset, so that the sensing bracket 991 pops up. In this case, the sensing mating part 982 moves away from the sensing part 981, and relative positions of the sensing mating part 982 and the sensing part 981 are beyond the sensing range. The sensing assembly 980 transmits a signal to the cleaning device body 101, and the cleaning device body 101 recognizes that the filtering box 711 is not mounted in position in the filtering box cavity 1023, and therefore, the cleaning device 10 does not perform cleaning. At the same time, the cleaning device 10 gives an alarm to prompt that the cleaning device cannot perform cleaning.

Further, the sensing bracket 991 includes a first sensing bracket 9911 and a second sensing bracket 9912. The first sensing bracket 9911 and the second sensing bracket 9912 are detachably connected. The first sensing bracket 9911 is disposed inside the filtering box cavity 1023. The second sensing bracket 9912 is disposed outside the filtering box cavity 1023. An end of the first sensing bracket 9911 faces the interior of the filtering box cavity 1023, and the end is provided with the first bracket portion 99111. An end of the second sensing bracket 9912 faces the exterior of the filtering box cavity 1023, and the end is provided with the second bracket portion 99121. The second bracket portion 99121 is provided with the sensing part 981 or the sensing mating part 982. The sensing elastic part 992 is disposed between the bottom of the second sensing bracket 9912 and the outer bottom of the filtering box cavity 1023. The filtering box cavity 1023 is provided with a sensing sliding groove (shown in the figure). The first sensing bracket 9911 or the second sensing bracket 9912 may slide in the sensing sliding groove, so that the sensing drive assembly 990 is located at various positions.

The sensing mating part 982 may be a magnet. The sensing part 981 may be a Hall sensing part. The magnet and the Hall sensing part may be interchangeably disposed on the sensing drive assembly 990 and the first sealed cavity 1021 as required. The sensing elastic part 992 may be a spring. When the Hall sensing part is disposed in the first sealed cavity 1021, the Hall sensing part does not need to be waterproofed. When the Hall sensing part is disposed on the sensing bracket 991, the Hall sensing part does not need to be waterproofed. In other embodiments, the Hall sensing part may be disposed at other positions on the cleaning device body 101. The in-position detection mechanism for the filtering box further includes a first sealed box. The sensing part 981 is disposed in the first sealed box. The first sealed box is located at a side of the filtering box 711. Because the first sealed box is sealed, the sensing part 981 is waterproofed, preventing the sensing part 981 from being failed caused by being in contact with water. While it is ensured that the sensing part 981 is waterproofed, because operation of the Hall sensing part is limited by a sensing distance, the first sealed box can be disposed close to the filtering box 711 in this manner, so that the Hall sensing part is prevented from being unable to sense the magnet. This ensures stable operation of the sensing assembly 980.

In addition, in some embodiments, the cleaning device body 101 further includes a controller. The controller is disposed on the cleaning device body 101. The controller is communicatively connected to the in-position detection mechanism for the filtering box. In a case where the filtering box 711 is mounted in position on the cleaning device body 101, the in-position detection mechanism for the filtering box sends a detection result to the controller to prevent the cleaning device 10 from operating when the filtering box 711 is not mounted in position. For example, the sensing assembly 980, the inductance assembly, and the switch assembly are communicatively connected to the controller. The controller may be disposed at various positions, and the controller needs to be waterproofed. For example, the controller may be disposed inside a second sealed box. Because the second sealed box is sealed, the controller can be waterproofed to prevent a short circuit caused by being in contact with water. This improves the service life of the cleaning device 10. It may be understood that because the second sealed box in which the controller is disposed is sealed, the second sealed box has a waterproof effect. In this embodiment, an inner side of a side wall of the second sealed box is close to the filtering box 711, and the inner side is provided with the sensing part 981, so that the sensing part 981 is protected because the second sealed box is sealed and waterproofed, leading to a simple structure and low costs.

For example, the controller may alternatively be disposed in the first sealed cavity 1021. The controller and the sensing part 981 are both disposed in the first sealed cavity 1021. No additional structure needs to be added, leading to a simple structure and low costs.

In some embodiments, the in-position detection mechanism for the filtering box further includes an alarm part. The alarm part may give an alarm when the filtering box 711 is not mounted in position, reminding the user to check a position of the filtering box 711 in time to avoid a fault.

In some embodiments, a distance between the Hall sensing part and the magnet directly affects sensing between the Hall sensing part and the magnet. Therefore, to ensure stable operation of the sensing assembly 980, the cleaning device 10 further includes a positioning assembly disposed between the cleaning device body 101 and the filtering box 711. The positioning assembly is configured to constrain a position of the filtering box 711 on the cleaning device body 101, to ensure that the filtering box 711 is stably disposed on the cleaning device body 101. In other words, as long as the filtering box 711 is mounted in position, the Hall sensing part can stably sense the magnetic field of the magnet.

For example, a positioning groove is provided on the cleaning device body 101, and a positioning protrusion is provided on the filtering box 711. When the filtering box 711 is mounted in position, the positioning protrusion and the positioning groove mate with each other to form a positioning assembly to constrain displacement of the filtering box 711, so that the filtering box 711 can be quickly limited relative to the cleaning device body 101. Certainly, the positioning groove may alternatively be provided on the filtering box 711, and the positioning protrusion is provided on the cleaning device body 101. The effect is the same as that described above. Details are not described herein again. Because the distance between the sensing part 981 and the sensing mating part 982 for the sensing part 981 to sense the sensing mating part 982 is limited, sensing between the sensing part 981 and the sensing mating part 982 can be stably triggered only when the filtering box 711 is mounted at a preset position, thereby improving operation stability of the sensing assembly 980.

In other embodiments, the positioning assembly may alternatively be implemented by providing a fastening groove on one of the cleaning device body 101 and the filtering box 711 and providing a fastening hook on the other one of the cleaning device body 101 and the filtering box 711. The fastening groove may be provided at an edge of the filtering box 711 to facilitate assembling and disassembling. The fastening groove and the fastening hook are clamped with each other to constrain the position of the filtering box 711 on the cleaning device body 101 to ensure that the filtering box 711 is stably disposed in the cleaning device body 101. In other words, as long as the filtering box 711 is mounted in position, the Hall sensing part can stably sense the magnetic field of the magnet.

Based on the above description, the cleaning device 10 can implement cleaning in the pool in various situations, including bottom cleaning, wall cleaning, water surface cleaning, waterline cleaning, and water quality processing at a set depth in the pool.

During bottom cleaning and wall cleaning, a dust-loaded water flow is sucked through the first water inlet 1031 at the bottom of the cleaning device 10, enters the filtering mechanism through the filtering box opening for underwater cleaning 7162 of the filtering mechanism to be filtered, and then is discharged from the cleaning device body through the liquid outlet portion 104. In addition, at least one first cleaning part 410 located at the bottom of the cleaning device 10 brushes the bottom and the wall of the pool. During waterline cleaning, the at least one first cleaning part 410 of the cleaning device 10 brushes the waterline along the side wall. In this way, stains adhering to the waterline are brushed off from the waterline and fall to the bottom of the pool or are partially drawn into the filtering mechanism of the cleaning device 10 through the first water inlet 1031.

During water surface cleaning, at least one filtering box opening for water surface cleaning 7161 (may be the same as the filtering box opening for underwater cleaning 7162) is provided on the cleaning device 10, so that garbage floating on the water surface is drawn into the filtering mechanism of the cleaning device 10. In addition, due to the impact of wind on the water surface, garbage may be blown to the wall or a corner of the pool. Due to the limitation of the structure, when the cleaning device 10 performs cleaning, the garbage at the waterline of the wall or the corner of the pool may be not cleaned. In this case, a nozzle may be disposed on the cleaning device 10 to blow the above garbage away from the waterline of the wall or the corner of the pool to a cleaning range of the filtering box opening for water surface cleaning 7161. This improves the cleaning efficiency.

If the filtering mechanism has a filtering mesh structure, the filtering mechanism may be clogged by garbage, floating algae, and the like in the water during operation. Consequently, water cannot flow smoothly. This affects the amount of water discharged from the cleaning device 10. When the cleaning device 10 operates at the bottom or on the wall of the pool, the discharged water provides a counter thrust for the cleaning device 10 to be attached to the wall. Especially when the cleaning device 10 operates on the side wall of the pool, the cleaning device 10 is likely to tumble if the counter thrust is not sufficient. Therefore, a second water flow path may be provided in the filtering mechanism to cope with clogging of the filtering mesh structure in the filtering mechanism, so that the cleaning device 10 can be still stably attached to the side wall and operate.

In some cases, because the first cleaning part 410 is limited by the structure of the cleaning device 10 and the effective cleaning range of the cleaning device 10, some specific regions are difficult to clean, such as a certain range of a joint between the bottom and the wall of the pool, a certain range of a joint between walls of the pool, and the like. In this case, at least one rotary brush 431 may be disposed on the cleaning device 10 to clean the above specific regions. To ensure that during the normal operation of the cleaning device 10, the rotary brush 431 does not affect the operation of the cleaning device 10, the rotary brush 431 may be configured in a telescopic manner. For example, the rotary brush 431 may be controlled to extend and perform cleaning when needed, and when cleaning is completed, the rotary brush 431 may be controlled to be retracted into the cleaning device 10.

FIG. 48 is a schematic diagram of modules of the cleaning device according to the second embodiment of the present disclosure. FIG. 49 a schematic structural view of the cleaning device according to the second embodiment of the present disclosure. The first adjustment assembly includes a mode switching member 510. The mode switching member 510 may adjust an action force received by the cleaning device 10 in a vertical direction, so that the cleaning device 10 can move along the vertical direction, and the cleaning device 10 can be switched between the position on the liquid surface 30 and the position under the liquid surface 30. In this way, the cleaning device 10 is switched between the first motion state and the third motion state. The mode switching member 510 may move in the vertical direction of the target region 40, so that the cleaning device 10 is switched between the position on the liquid surface 30 and the position under the liquid surface 30. When the cleaning device 10 is located under the liquid surface 30, the cleaning device 10 completely submerges under the liquid surface 30. When the cleaning device 10 is located on the liquid surface 30, at least a part of the cleaning device 10 is on the liquid surface 30. The vertical direction may be the vertical direction of the target region 40, for example, a vertical direction of the swimming pool, namely, a direction of gravity. A horizontal direction may be a horizontal direction of the target region 40, for example, a horizontal direction of the swimming pool, namely, a direction perpendicular to the direction of gravity. By disposing the mode switching member 510, the cleaning device 10 can be switched between the position on the liquid surface 30 and the position under the liquid surface 30, so that the position of the cleaning device can be adjusted based on various liquid environments and requirements, and the cleaning device can more flexibly perform corresponding operations at various positions in the liquid.

In some embodiments, the action force received by the cleaning device 10 in the vertical direction may include a buoyancy force applied to the cleaning device 10 in the vertical direction. When the action force includes the buoyancy force applied to the cleaning device 10 in the vertical direction, the mode switching member 510 may include a buoyancy adjustment assembly 511. The buoyancy adjustment assembly 511 is configured to adjust a magnitude of the buoyancy force applied to the cleaning device 10 in the vertical direction.

In some embodiments, the buoyancy adjustment assembly 511 may include a buoyancy cavity 5111 and a buoyancy adjustment part. The buoyancy cavity 5111 is configured to accommodate liquid and/or gas. The buoyancy cavity 5111 may be, but is not limited to, an inflatable buoyancy cavity, a liquid-containing buoyancy cavity, a partitioned buoyancy cavity, or the like. A volume of the buoyancy cavity 5111 may be preset. The buoyancy cavity 5111 may be made of a flexible material and/or a rigid material. The flexible material may include, but is not limited to, polyvinyl alcohol resin, polyethylene glycol terephthalate, rubber, and the like. The rigid material may include, but is not limited to, glass, ceramic, phenolic plastic, polyurethane plastic, epoxy plastic, unsaturated polyester plastic, and the like. For example, the buoyancy cavity 5111 may be of a two-layer structure: an inner layer and an outer layer. The inner layer may be made of the flexible material and is configured to accommodate liquid and/or gas. The outer layer is a rigid protective housing and may be configured to provide protection and stability for the inner layer.

In some embodiments, the buoyancy cavity 5111 may be provided at any position on the cleaning device 10. For example, the buoyancy cavity 5111 may be provided at a front portion and/or a rear portion and/or a middle portion of the cleaning device 10.

In some embodiments, the buoyancy adjustment assembly 511 may include one buoyancy cavity 5111. When there is only one buoyancy cavity 5111 in the cleaning device 10, the buoyancy cavity 5111 may be provided at a central position of the cleaning device 10 to ensure that the cleaning device 10 can remain stable when a volume of the liquid and/or the gas in the buoyancy cavity 5111 changes.

FIG. 50 is a partial schematic view of the cleaning device according to the twelfth embodiment of the present disclosure. With reference to FIG. 48 and FIG. 49, in some embodiments, the buoyancy adjustment assembly 511 may include a plurality of buoyancy cavities 5111. As shown in FIG. 50, the cleaning device 10 may have two buoyancy cavities 5111, and the two buoyancy cavities 5111 may be symmetrically disposed in the cleaning device 10. It may be understood that symmetrically disposing the two buoyancy cavities 5111 allows the cleaning device 10 to remain stable when the buoyancy cavities 5111 provide buoyancy forces for the cleaning device 10. This prevents the cleaning device 10 from tilting and flipping due to an uneven buoyancy force applied to the cleaning device under or on the liquid surface 30.

It should be noted that a size and a position of each buoyancy cavity 5111 can be adjusted based on weights and positions of various components of the cleaning device 10 to ensure that the cleaning device 10 can be in a preset state when volumes of liquid and/or gas in the buoyancy cavities 5111 change.

The buoyancy adjustment part may be configured to adjust the volume of the gas in the buoyancy cavity 5111. The cleaning device 10 may adjust the volume of the gas in the buoyancy cavity 5111 by using the buoyancy adjustment part to change the magnitude of the buoyancy force applied to the cleaning device 10 in the vertical direction. For example, when the buoyancy cavity 5111 made of the flexible material is in a deflated state, air may be input into the buoyancy cavity 5111 through an air inlet 5113 by using the buoyancy adjustment part to increase the volume of the gas in the buoyancy cavity 5111 and the magnitude of the buoyancy force applied to the cleaning device 10 in the vertical direction. It may be understood that the upward buoyancy force applied to the cleaning device 10 in the vertical direction is positively correlated with the volume of the gas in the buoyancy cavity 5111.

The buoyancy adjustment part may be further configured to adjust a volume of the liquid in the buoyancy cavity 5111. The buoyancy adjustment assembly 511 may adjust the volume of the liquid in the buoyancy cavity 5111 by using the buoyancy adjustment part to change a magnitude of a buoyancy force applied to the cleaning device 10 in the liquid. For example, when the buoyancy cavity 5111 made of the rigid material contains liquid, the liquid may be extracted from the buoyancy cavity 5111 by using the buoyancy adjustment part to increase the magnitude of the buoyancy force applied to the cleaning device 10 in the vertical direction. It may be understood that the upward buoyancy force applied to the cleaning device 10 in the vertical direction is negatively correlated with the volume of the liquid in the buoyancy cavity 5111. The liquid in the buoyancy cavity 5111 may be discharged through the air inlet 5113 or another inlet or outlet. The air inlet 5113 may or may not communicate with gas. When the air inlet 5113 does not communicate with the gas, a one-way valve may be disposed at the air inlet 5113. The one-way valve can prevent external water of the cleaning device body 101 from entering the buoyancy cavity 5111 through the air inlet 5113. The air inlet 5113 may alternatively communicate with the gas. For example, the air inlet 5113 may communicate with gas on the liquid surface 30. Alternatively, the air inlet 5113 may communicate with a gas tank or a gas generation apparatus. The gas tank is filled with gas. The gas generation apparatus may automatically generate gas. The gas enters the buoyancy cavity through the air inlet 5113 to change a pressure inside the buoyancy cavity 5111, so that the pressure of the buoyancy cavity 5111 is in a stable state, thereby facilitating discharging of the liquid from the buoyancy cavity 5111.

The buoyancy adjustment part may be any structure that can adjust the gas and/or the liquid in the buoyancy cavity 5111. As shown in FIG. 50, the buoyancy adjustment part may include a buoyancy cavity pump 5112. The buoyancy cavity pump 5112 can drive the buoyancy cavity 5111 to discharge the liquid therefrom. The buoyancy cavity pump 5112 may be, but is not limited to, a pneumatic pump, a hydraulic pump, or an electric pump. In an operating state, the buoyancy cavity pump 5112 can adjust the liquid and/or the gas in the buoyancy cavity 5111. In a non-operating state, the buoyancy cavity pump 5112 can prevent any external liquid and/or gas of the cleaning device 10 from entering the buoyancy cavity 5111, so that the buoyancy cavity 5111 is not affected by the external liquid and/or gas. The buoyancy adjustment part may alternatively be another structure. For example, the buoyancy adjustment part may be a piston assembly disposed inside the buoyancy cavity 5111. The piston assembly moves inside the buoyancy cavity 5111 to adjust the volume of the gas and/or liquid in the buoyancy cavity 5111.

In some embodiments, the buoyancy adjustment assembly 511 may further include the air inlet 5113. The air inlet 5113 is configured to allow gas to enter the buoyancy cavity 5111. In some embodiments, the air inlet 5113 may be further configured to allow the gas to leave the buoyancy cavity 5111 or for liquid to enter or leave the buoyancy cavity 5111. In some embodiments, the buoyancy adjustment assembly 511 may further include another inlet and outlet for the gas to leave or for the liquid to enter or leave the buoyancy cavity 5111. The air inlet 5113 is directly provided on the buoyancy cavity 5111 or independent of the buoyancy cavity 5111. The air inlet 5113 may be provided on a housing of the cleaning device 10 to communicate with the outside (such as external liquid or air) for gas and/or liquid exchanging. As shown in FIG. 49, the air inlet 5113 may be provided at the top of a front tail part of the cleaning device 10, so that the air inlet 5113 can more quickly communicate with the external air above the liquid surface 30 during floating of the cleaning device 10.

In some embodiments, the buoyancy adjustment assembly 511 may further include a connection duct 5114. The connection duct 5114 is configured to transport the gas or the liquid. The connection duct 5114 may be connected to one or more of the buoyancy cavity 5111, the buoyancy adjustment part, and the air inlet 5113. As shown in FIG. 50, the buoyancy adjustment part 511 may include two buoyancy cavities 5111, the buoyancy cavity pump 5112, the air inlet 5113, and the connection duct 5114. The buoyancy cavities 5111 may be connected to the buoyancy cavity pump 5112 through the connection duct 5114. The buoyancy cavity pump 5112 may be connected to the air inlet 5113 through the connection duct 5114. In the non-operating state, the buoyancy cavity pump 5112 has the same function as the one-way valve and can prevent the external liquid and/or gas from entering the buoyancy cavity 5111 through the air inlet 5113. In some other embodiments, when the buoyancy adjustment part is a centrifugal pump or the like, the one-way valve is disposed at the connection duct 5114 to prevent the external liquid and/or gas from entering the buoyancy cavity 5111 through the air inlet 5113.

The gas in the buoyancy cavity 5111 comes from various sources. For a first source of the gas, the gas is obtained directly from the outside. For example, the cleaning device 10 moves along the target side wall 402 of the target region 40 to the liquid surface 30 to obtain external gas. For example, the external gas enters the buoyancy cavity 5111 through the air inlet 5113 to change the volume of the gas in the buoyancy cavity 5111.

For a second source of the gas, the gas is obtained indirectly from the outside. In other words, the cleaning device 10 is provided with a protruding duct (not shown in the figure). The protruding duct communicates with the air inlet 5113. An end of the protruding duct is away from the air inlet 5113, and the end extends out of the water surface to allow gas to be directly discharged or sucked to change the volume of the gas in the buoyancy cavity 5111. In this way, the volume of the gas in the buoyancy cavity 5111 can be changed before the cleaning device 10 climbs the wall of the target region 40 to the liquid surface 30.

For a third source of the gas, a gas generation assembly (not shown) is disposed inside the cleaning device 10. The gas generation assembly can generate gas to change the volume of the gas in the buoyancy cavity 5111. In this way, the volume of the gas in the buoyancy cavity 5111 can be changed before the cleaning device 10 climbs the wall of the target region 40 to the liquid surface 30. This improves convenience. The gas generation assembly may generate gas through a chemical reaction, electrolysis, water boiling, and the like to increase or reduce the volume of the gas in the buoyancy cavity 5111.

In addition to discharging the gas from the buoyancy cavity 5111 through the air inlet 5113, the gas can alternatively be compressed by a compression cylinder (not shown in the figure) to reduce the volume of the gas in the buoyancy cavity 5111, so that the cleaning device 10 can submerge. In an actual process, the buoyancy adjustment assembly 511 may not include the air inlet 5113. The volume of the gas may be changed inside the buoyancy adjustment assembly 511, such as increasing the volume of the gas in the buoyancy cavity 5111 by the gas generation assembly or reducing the volume of the gas in the buoyancy cavity 5111 by the compression cylinder. In other embodiments, the volume of the gas may be increased or reduced in another manner. This is not limited herein.

As shown in FIG. 49 and FIG. 50, when the cleaning device 10 needs to be switched from the position under the liquid surface 30 to the position on the liquid surface 30, the cleaning device 10 may move to a position close to the liquid surface 30 and determine when to control the buoyancy cavity pump 5112 to input gas into the buoyancy cavity 5111. For details about a moment at which the cleaning device 10 needs to be switched from the position under the liquid surface 30 to the position on the liquid surface 30, refer to FIG. 61 and related descriptions. As shown in FIG. 51, when the cleaning device 10 needs to be switched from the position under the liquid surface 30 to the position on the liquid surface 30, the cleaning device 10 may be tightly attached to and move on the target side wall 402 of the target region 40 to be close to the liquid surface 30 and determine when to control the buoyancy adjustment part to increase the volume of the gas in the buoyancy cavity 5111. For details about content that the cleaning device 10 is tightly attached to and moves on the target side wall 402 of the target region 40, refer to the following description.

In some embodiments, when the cleaning device 10 needs to be switched from the position under the liquid surface 30 to the position on the liquid surface 30, the cleaning device 10 may be driven by a first driving force generated by a first propeller 131, to move to be close to the liquid surface 30, and determine when to control the buoyancy adjustment part to increase the volume of the gas in the buoyancy cavity 5111. For details about the first propeller 131 and the first driving force, refer to the following description.

In some embodiments, the cleaning device 10 may include a first sensor (not shown in the figure). The first sensor may be configured to determine a position of the cleaning device 10 in real time. The position may be a vertical position (or referred to as a depth) of the cleaning device 10 in the liquid. For example, the first sensor may be disposed at a central position of the cleaning device 10, and the position may be a depth of the central position of the cleaning device 10 in the liquid. The first sensor may be, but is not limited to, a pressure sensor, an ultrasonic sensor, an optical sensor, a distance measuring sensor, an infrared sensor, a distance code disk, and the like. The first sensor and the mode switching member 510 may further control the cleaning device 10 to move at a preset depth. For example, the cleaning device 10 performs underwater cleaning at the preset depth or moves at the preset depth toward a charging apparatus disposed at the wall of the pool.

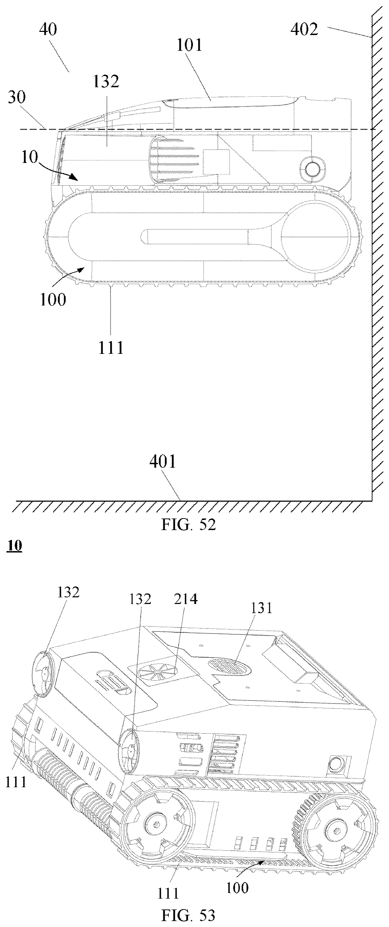

In some embodiments, the cleaning device 10 may further include a processor (not shown in the figure). The processor may be a micro-controller, an embedded processor, an application-specific integrated circuit (ASIC), or the like. The processor may obtain various pieces of data information of the cleaning device 10 and analyze the obtained data information to control various components of the cleaning device 10. When the cleaning device 10 needs to be switched from the position under the liquid surface 30 to the position on the liquid surface 30, the processor may obtain the position of the cleaning device 10 in real time from the first sensor. When the position of the cleaning device 10 meets a preset condition, the processor may control the buoyancy adjustment part to increase the volume of the gas in the buoyancy cavity 5111. The preset condition may be that the position of the cleaning device 10 is higher than a preset height. When a depth of the liquid in the target region 40 is fixed, the processor may determine whether the position of the cleaning device 10 meets the preset condition to determine whether the air inlet 5113 of the cleaning device 10 is on the liquid surface 30. When the position of the cleaning device 10 shown in FIG. 51 meets the preset condition, the processor may determine that the air inlet 5113 of the cleaning device 10 is on the liquid surface 30, the processor may control the buoyancy cavity pump 5112 to drive the liquid to be discharged from the buoyancy cavity 5111, and air may enter the buoyancy cavity 5111 through the air inlet 5113, to increase the volume of the gas in the buoyancy cavity 5111 and increase the buoyancy force applied to the cleaning device 10. When the buoyancy force applied to the cleaning device 10 in the vertical direction is greater than gravity of the cleaning device 10, the cleaning device 10 shown in FIG. 51 is switched to the cleaning device 10 shown in FIG. 52.

In some embodiments, the cleaning device 10 may further include a second sensor (not shown in the figure). The second sensor may be configured to detect in real time whether the air inlet 5113 of the buoyancy cavity 5111 is exposed to the air. For example, the second sensor may be an ultrasonic sensor. The second sensor may be disposed at the air inlet 5113 of the buoyancy cavity 5111. In some embodiments, the second sensor may alternatively be disposed at other positions on the cleaning device 10 and obtain, through position conversion, a detection result of whether the air inlet 5113 is exposed to the air.

In some embodiments, when the cleaning device 10 needs to be switched from the position under the liquid surface 30 to the position on the liquid surface 30, the processor may obtain the detection result of whether the air inlet 5113 of the buoyancy cavity 5111 is exposed to the air. When the detection result indicates that the air inlet 5113 is exposed to the air, the buoyancy adjustment part is controlled to increase the volume of the gas in the buoyancy cavity 5111 to switch the cleaning device 10 from the position under the liquid surface 30 to the position on the liquid surface 30. For details about content that the processor controls the buoyancy adjustment part to increase the volume of the gas in the buoyancy cavity 5111 to switch the cleaning device 10 from the position under the liquid surface 30 to the position on the liquid surface 30, refer to the above description.

When the cleaning device 10 needs to be switched from the position on the liquid surface 30 to the position under the liquid surface 30, the processor may control the buoyancy adjustment part to reduce the volume of the gas in the buoyancy cavity 5111. For details about a moment at which the cleaning device 10 needs to be switched from the position on the liquid surface 30 to the position under the liquid surface 30, refer to FIG. 61 and related descriptions. As shown in FIG. 49 and FIG. 51, the processor may discharge the gas from the buoyancy cavity 5111 through the connection duct 5114 to reduce the volume of the gas in the buoyancy cavity 5111 to reduce the buoyancy force, to switch the cleaning device 10 from the position on the liquid surface 30 to the position under the liquid surface 30.

The buoyancy adjustment assembly 511 is disposed to adjust the magnitude of the buoyancy force applied to the cleaning device 10 in the vertical direction to flexibly switch the cleaning device 10 between the position on the liquid surface 30 and the position under the liquid surface 30. This improves the operating efficiency and reliability of the cleaning device 10 in the liquid environment. The first sensor or the second sensor is disposed, so that the cleaning device 10 can automatically determine an environment in which the air inlet 5113 is located. This improves the use efficiency of the cleaning device 10.

In some embodiments, switching of the cleaning device 10 between the position on the liquid surface 30 and the position under the liquid surface 30 includes operating from the first motion state to the third motion state and operating from the third motion state to the first motion state. It may be understood that switching of the cleaning device 10 between the first motion state and the third motion state may be implemented by using the mode switching member 510, the first sensor, and the second sensor that are disposed in the cleaning device 10.

When the buoyancy cavity 5111 adjusts the buoyancy force by using gas, and the air inlet 5113 or an air outlet of the buoyancy cavity 5111 is located on the liquid surface, the buoyancy cavity pump 5112 is started to adjust the volume of the gas in the buoyancy cavity 5111. In this case, the cleaning device 10 may be switched from the first motion state to the second motion state until the air inlet 5113 is exposed at the water surface. Then, the attitude of the cleaning device 10 is adjusted to be in the third motion state. In this way, the cleaning device 10 is switched from the position under the liquid surface to the position on the liquid surface. After the cleaning device 10 completes water surface cleaning, the filtering box 711 is cleaned at the water surface, or the cleaning device 10 is charged at the water surface, the cleaning device 10 needs to be switched from the third motion state to the first motion state to continue cleaning the bottom of the pool. In this case, the buoyancy cavity pump 5112 may be started or the volume of the gas in the buoyancy cavity 5111 may be adjusted when the cleaning device 10 is in the third motion state, to reduce the buoyancy force. The cleaning device 10 is switched from the third motion state to the first motion state under the action of gravity thereof. In addition, an attitude sensor disposed on the cleaning device 10 may cooperate with a controller to control the attitude of the cleaning device 10 to be stable during state switching.

When the buoyancy cavity 5111 adjusts the buoyancy force by using liquid, the buoyancy cavity 5111 may be a rigid cavity having a confined space, and water is input into or discharged from the buoyancy cavity 5111 by using the buoyancy adjustment part. When water is input into the buoyancy cavity 5111 by using the buoyancy adjustment part, the gas in the buoyancy cavity 5111 is discharged, thereby facilitating submerging of the cleaning device 10. When water is discharged from the buoyancy cavity 5111 by using the buoyancy adjustment part, the liquid is discharged from the buoyancy cavity 5111 to reduce the overall gravity of the cleaning device 10, thereby facilitating floating of the cleaning device 10. The cleaning device 10 may be switched from the first motion state to the third motion state by discharging the water from the buoyancy cavity 5111 and by using another upward force. In this case, the cleaning device 10 does not need to be in the second motion state. The cleaning device 10 may be switched from the third motion state to the first motion state by inputting water into the buoyancy cavity 5111 and by using another downward force.

When the buoyancy cavity 5111 adjusts the buoyancy force by using gas, the volume of the gas in the buoyancy cavity 5111 is set to be a gas volume threshold, so that a balanced force is applied to the cleaning device 10 in the vertical direction. In this way, when the cleaning device 10 cleans the wall of the pool, the cleaning device 10 can be attached to the wall of the pool in the vertical direction and better clean the wall of the pool. When the cleaning device 10 is in the third motion state, there is a first volume of the gas in the buoyancy cavity 5111. When the cleaning device 10 is in the first motion state, there is a second volume of the gas in the buoyancy cavity 5111. The gas volume threshold is a value between the second gas volume and the first gas volume.

Similarly, when the buoyancy cavity 5111 adjusts the buoyancy force by using liquid, the volume of the liquid in the buoyancy cavity 5111 is set to be a liquid volume threshold, so that a balanced force is applied to the cleaning device 10 in the vertical direction. When the cleaning device 10 cleans the wall of the pool, the cleaning device 10 can be attached to the wall of the pool in the vertical direction and better clean the wall of the pool. When the cleaning device 10 is in the third motion state, there is a first volume of liquid in the buoyancy cavity 5111. When the cleaning device 10 is in the first motion state, there is a second volume of liquid in the buoyancy cavity 5111. The liquid volume threshold is a value between the second liquid volume and the first liquid volume.

In some embodiments, the action force applied to the cleaning device 10 in the vertical direction may include the first driving force applied to the cleaning device 10 in the vertical direction. The adjustment assembly includes a first adjustment assembly. The first adjustment assembly is configured to adjust the action force applied to the cleaning device 10 in the first direction. The action force in the first direction is the first driving force in the vertical direction. The first driving force extends along the first direction. The first adjustment assembly includes at least one of a first propulsion part, a biomimetic fin member, a lift propulsion apparatus, or an umbrella structure. For example, the first adjustment assembly may include one, two, three, or four of the first propulsion part, the biomimetic fin member, the lift propulsion apparatus, and the umbrella structure. For example, the first adjustment assembly may include the first propulsion part, or the first adjustment assembly may include the first propulsion part and the biomimetic fin member, or the first adjustment assembly may include the first propulsion part, the biomimetic fin member, the lift propulsion apparatus, and the umbrella structure.

In some embodiments, the adjustment assembly includes a second adjustment assembly. The second adjustment assembly is configured to adjust the action force applied to the cleaning device 10 in the second direction. The action force in the second direction is the first driving force in the vertical direction. The second adjustment assembly includes at least one of a first propulsion part or a biomimetic fin member. For example, the second adjustment assembly may include the first propulsion part, or the second adjustment assembly may include the biomimetic fin member, or the second adjustment assembly may include the first propulsion part and the biomimetic fin member.

Each of the first adjustment assembly and the second adjustment assembly may be the first propulsion part, or each of the first adjustment assembly and the second adjustment assembly may be the biomimetic fin member.

In some embodiments, the first adjustment assembly and the second adjustment assembly may be the same assembly. In other words, a structure of the first adjustment assembly may be the same as that of the second adjustment assembly. Certainly, in some other embodiments, the structure of the first adjustment assembly may be different from that of the second adjustment assembly. Structures of the first adjustment assembly and the second adjustment assembly may be determined based on an actual requirement. This is not limited herein.

In some embodiments, the first adjustment assembly or the second adjustment assembly may include a plurality of biomimetic fin members (not shown in the figure). The biomimetic fin member may oscillate over the cleaning device 10 to switch the cleaning device 10 between the position on the liquid surface 30 and the position under the liquid surface 30, so that the cleaning device 10 can float up and submerge. Under the action of the biomimetic fin member, the cleaning device 10 can operate stably in the liquid and can be quickly switched between the position under the liquid surface 30 and the position on the liquid surface 30. When the biomimetic fin member is not needed, the biomimetic fin member may be folded on a peripheral surface of the cleaning device 10.

The biomimetic fin member may be, but is not limited to, at least one of a biomimetic fish fin, a biomimetic turtle fin, a biomimetic pectoral fin, or a biomimetic tail fin. There may be, but is not limited to, two, three, and four biomimetic fin members. A plurality of oscillating bars oscillate, so that the biomimetic fin members oscillate over the cleaning device 10. The oscillating bars are driven by a drive assembly or the like to oscillate.

In some embodiments, the first adjustment assembly includes a lift propulsion assembly (not shown in the figure). The lift propulsion assembly is configured for the cleaning device 10 to be switched from the position under the liquid surface 30 to the position on the liquid surface 30 and/or to fly out from the liquid surface 30. In this way, the cleaning device 10 can float up or fly out. When the lift propulsion assembly flies out from the liquid surface 30, the cleaning device 10 may fly toward a station disposed on the shore, so that the cleaning device 10 can be charged or perform self-cleaning. When the lift propulsion assembly is not needed, the lift propulsion assembly may be folded on the peripheral surface of the cleaning device 10. The lift propulsion assembly may be of any structure, provided that the lift propulsion assembly can fly out of the liquid surface 30. For example, the lift propulsion assembly may include a plurality of rotor wings. The plurality of rotor wings may rotate, so that the cleaning device 10 flies out of the liquid surface 30.

In some embodiments, the first adjustment assembly includes the umbrella assembly (not shown in the figure). The umbrella assembly is disposed on the cleaning device 10. The umbrella assembly is configured for the cleaning device 10 to be switched from the position under the liquid surface 30 to the position on the liquid surface 30, so that the cleaning device 10 can float up. Further, the umbrella assembly includes a support skeleton and an umbrella surface. When the cleaning device 10 needs to float up, the support skeleton and the umbrella surface in the umbrella assembly are spread out to provide the upward buoyancy force, so that the cleaning device 10 can float up. When the cleaning device 10 does not need to float up, the umbrella assembly can be stored and folded.

The umbrella assembly is disposed around the cleaning device 10 to increase evenness of the buoyancy force, or a position at which the umbrella assembly is disposed may be related to a position at which the cleaning device 10 floats up to the liquid surface 30. When the top of the cleaning device 10 needs to float up to the liquid surface 30, the umbrella assembly is disposed on the top of the cleaning device 10. When the entire cleaning device 10 needs to float up to the liquid surface 30, the umbrella assembly is disposed at the bottom of the cleaning device 10.

In some embodiments, the cleaning device 10 is detachably connected to a first buoyancy module and/or a gravity module. In other words, the cleaning device 10 is detachably connected to the first buoyancy module, or the cleaning device 10 is detachably connected to the gravity module, or the cleaning device 10 is detachably connected to the first buoyancy module and the gravity module. The first buoyancy module may include a foam assembly. The foam assembly is made of foam and the like. The gravity module may include a counterweight assembly. The counterweight assembly includes a counterweight block. The first buoyancy module and/or the gravity module are/is disposed on a docking assembly disposed in the target region 40. The docking assembly may be a station or a positioning post or a positioning device. The docking assembly is disposed close to the target side wall 402 or located in the target region 40.

When the cleaning device 10 submerges, in a process of switching the cleaning device 10 from the position under the liquid surface 30 to the position on the liquid surface 30, the cleaning device 10 seeks the docking assembly under the liquid surface 30 and is docked with the docking assembly (not shown in the figure) to be connected to the first buoyancy module. In a process of switching the cleaning device 10 from the position on the liquid surface 30 to the position under the liquid surface 30, the cleaning device 10 seeks the docking assembly on the liquid surface 30 and is docked with the docking assembly to separate the first buoyancy module from the cleaning device 10.

When the cleaning device 10 is in a floating state, in a process of switching the cleaning device 10 from the position under the liquid surface 30 to the position on the liquid surface 30, the cleaning device 10 seeks the docking assembly and is docked with the docking assembly to remove the gravity module from the cleaning device 10. In a process of switching the cleaning device 10 from the position on the liquid surface 30 to the position under the liquid surface 30, the cleaning device 10 seeks the docking assembly to be connected to the gravity module. It should be noted that the first buoyancy module and/or the gravity module may be a mechanical module and different components in a floating-submerging system. When the mechanical module is in a floating state in the liquid, the mechanical module is the first buoyancy module. When the mechanical module is in a submerging state in the liquid, the mechanical module is the gravity module.

In some embodiments, the cleaning device 10 is telescopically connected to a second buoyant module. The second buoyancy module floats on the liquid surface 30 of the target region 40. The second buoyancy module is made of foam, or the second buoyancy module may be a mechanical module, and the mechanical module is a part of the cleaning device 10.

When the cleaning device 10 is switched from the position on the liquid surface 30 to the position under the liquid surface 30 or submerges in the liquid, the second buoyancy module extends and is separated from the cleaning device 10, and the second buoyancy module floats on the liquid surface 30, so that the cleaning device 10 submerges. In this case, the cleaning device 10 may pull the second buoyancy module when walking on the target bottom wall 401. When the cleaning device 10 is switched from the position under the liquid surface 30 to the position on the liquid surface 30 or floats up, the second buoyancy module is retracted into the cleaning device 10. In other words, the cleaning device 10 and the second buoyancy module are combined, so that the cleaning device 10 floats up.

The cleaning device 10 may be telescopically connected to the second buoyancy module through, but not limited to, a reel (not shown in the figure). For example, when the cleaning device 10 is in the submerging state, the second buoyancy module is ejected from the cleaning device 10 through the reel. When the cleaning device 10 is in the floating state, the second buoyancy module is retracted into the cleaning device 10 through the reel.

In some embodiments, the cleaning device 10 includes a first functional module (not shown in the figure) and a second functional module (not shown in the figure). The first functional module includes different first sub-functional modules (not shown in the figure). The first sub-functional module may correspond to a mechanical module for the moving apparatus to move and operate on the liquid surface 30. The second functional module includes different second sub-functional modules (not shown in the figure). The second sub-functional module may correspond to a mechanical module for the cleaning device 10 to move and operate under the liquid surface 30. A density of the first sub-functional module is less than a density of the liquid in the target region 40. In other words, the first sub-functional module floats or floats up when the first sub-functional module is separated from the cleaning device 10. A density of the second sub-functional module is greater than the density of the liquid in the target region 40. In other words, the second sub-functional module sinks or submerges when the second sub-functional module is separated from the cleaning device 10.

When the cleaning device 10 needs to be switched from the first motion state to the third motion state, the second sub-functional module is separated from the cleaning device 10, and the first sub-functional module is added to the cleaning device 10. In other words, the first sub-functional module for the cleaning device 10 to move and operate on the liquid surface 30 is added to the cleaning device 10, and the second sub-functional module for the cleaning device 10 to move and operate under the liquid surface 30 is separated from the cleaning device 10.

When the cleaning device 10 is switched from the third motion state to the first motion state, the first sub-functional module is separated from the cleaning device 10, and the second sub-functional module is added to the cleaning device 10. In other words, the first sub-functional module for the cleaning device 10 to move and operate on the liquid surface 30 is separated from a floating-submerging system, and the second sub-functional module for the cleaning device 10 to move and operate under the liquid surface 30 is added to the cleaning device 10.

In some embodiments, the action force applied to the cleaning device 10 in the vertical direction may include the first driving force applied to the cleaning device 10 in the vertical direction. The first adjustment assembly includes a first propulsion part (not shown in the figure). The first propulsion part may be configured to adjust the first driving force applied to the cleaning device 10 in the vertical direction. The first propulsion part may be any structure that can provide the first driving force. For example, the first propulsion part may be a screw propeller, and the screw propeller may be vertically disposed on the cleaning device 10. The screw propeller rotates, so that the cleaning device 10 can obtain the first driving force in the vertical direction. The first driving force in the vertical direction may be upward or downward. Under the action of the first driving force, the cleaning device 10 may move upward or downward in the vertical direction, or may suspend at a certain position in the liquid.

In some embodiments, as shown in FIG. 52, the first propulsion part may include a first propeller 131. The first propeller 131 can be configured to push the liquid to move along a first preset direction. The first preset direction may be a direction in which the first propeller 131 drives the liquid to be discharged. When the first propeller 131 pushes the liquid to move along the first preset direction, a reaction force in a direction opposite to the first preset direction may be applied to the cleaning device 10. The reaction force may include the first driving force. It should be understood that because the cleaning device 10 needs to obtain the first driving force in the vertical direction, the first preset direction at least tilts in the vertical direction to ensure that the obtained reaction force has a component force in the vertical direction, namely, the first driving force. Therefore, an included angle between the first preset direction and the vertical direction may be in a range of [0°, 90°).

A magnitude of the first driving force may be positively correlated with a speed at which the liquid moves along the first preset direction. A higher speed at which the liquid moves along the first preset direction indicates a larger reaction force applied to the cleaning device 10 in the direction opposite to the first preset direction and indicates a larger first driving force in the vertical direction.

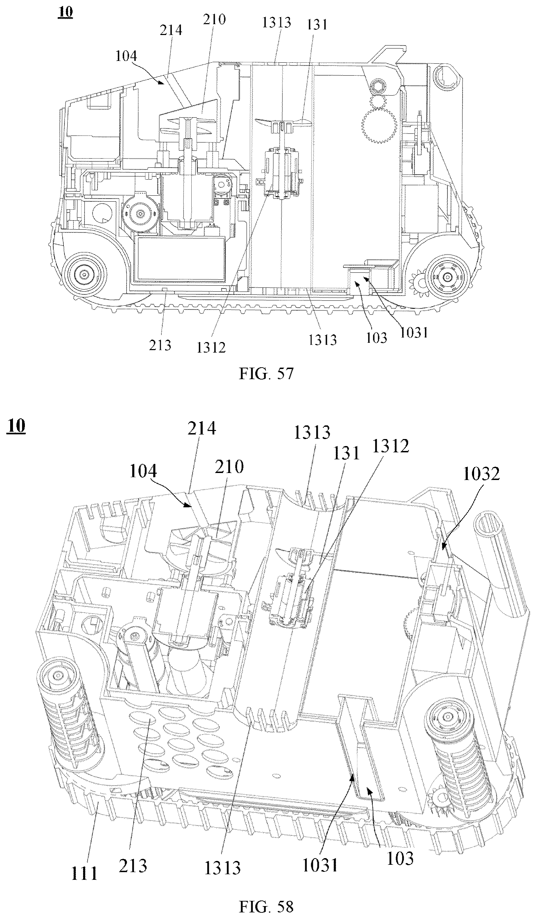

The magnitude of the first driving force may be negatively correlated with the angle between the first preset direction and the vertical direction. When the liquid moves at the same speed along the first preset direction, a larger angle between the first preset direction and the vertical direction indicates a smaller first driving force applied to the cleaning device 10 in the vertical direction. As shown in FIG. 57, when the angle between the first preset direction and the vertical direction is 0°, the reaction force applied to the cleaning device 10 can be fully converted into the first driving force in the vertical direction.

The cleaning device 10 includes one or more first propellers 131. The first propeller 131 may be disposed at various positions on the cleaning device 10. As shown in FIG. 53 and FIG. 57, the first propeller 131 may be vertically disposed at a central position of the cleaning device 10 to ensure balance of the cleaning device 10 during moving. The first propeller 131 may include a first propeller impeller 1311 and a first propeller motor 1312. The first propeller impeller 1311 may rotate to drive the liquid to move along the first preset direction. When the liquid moves along the first preset direction, the first driving force is applied to the cleaning device 10 in the vertical direction. The first propeller motor 1312 may provide power for the first propeller impeller 1311. As shown in FIG. 57, the first propeller 131 in the cleaning device 10 may include two first propeller openings 1313. One first propeller opening 1313 of the first propeller 131 may be located at the top of the cleaning device 10, and the other first propeller opening 1313 of the first propeller 131 may be located at the bottom of the cleaning device 10. The first propeller impeller 1311 may be driven by the first propeller motor 1312 to suck liquid through one of the two first propeller openings 1313 and discharge liquid through the other one of the two first propeller openings 1313. In this way, the cleaning device 10 obtains the first driving force in the vertical direction. When the cleaning device 10 is located in the liquid, the cleaning device 10 may adjust a rotation direction (such as forward rotation or reverse rotation) of the first propeller impeller 1311 to adjust the first preset direction to adjust the direction of the first driving force. In this way, the cleaning device 10 is switched between the position on the liquid surface 30 and the position under the liquid surface 30. The first propeller 131 is disposed, so that the cleaning device 10 can be quickly and conveniently switched between the position on the liquid surface 30 and the position under the liquid surface 30.

In some embodiments, the cleaning device 10 may further move in a horizontal direction of the target region 40. The action force applied to the cleaning device 10 in the horizontal direction may include the second driving force applied to the cleaning device 10 in the horizontal direction. The cleaning device 10 includes the movement propulsion mechanism 100. The movement propulsion mechanism 100 includes a second propulsion part. The second propulsion part may be configured to adjust the second driving force applied to the cleaning device 10 in the horizontal direction. The second propulsion part may be any structure that can provide the second driving force. For example, the second propulsion part may be a screw propeller, and the screw propeller may be horizontally disposed on the cleaning device 10. The screw propeller rotates, so that the cleaning device 10 can obtain the second driving force in the horizontal direction. The second driving force in the horizontal direction may be forward or backward. Under the action of the second driving force, the cleaning device 10 may move forward or backward in the horizontal direction, or may suspend at a certain position in the liquid.

In some embodiments, as shown in FIG. 49 and FIG. 53, the second propulsion part includes a second propeller 132. The second propeller 132 can push the liquid to move along a second preset direction to generate a second driving force in the horizontal direction. The cleaning device 10 can move along the horizontal direction under the action of the second driving force. The second preset direction may be a direction in which the second propeller 132 drives the liquid to be discharged. Similar to the first propeller 131, because the cleaning device 10 needs to obtain the second driving force in the horizontal direction, the second preset direction at least tilts in the horizontal direction to ensure that the obtained reaction force has a component force in the horizontal direction, namely, the second driving force. Therefore, an angle between the second preset direction and the horizontal direction may be in a range of [0°, - 90°).

Similar to the first propeller 131, a magnitude of the second driving force may be positively correlated with a speed at which the liquid moves along the second preset direction. A higher speed at which the liquid moves along the second preset direction indicates a larger reaction force applied to the cleaning device 10 in a direction opposite to the second preset direction and indicates a larger second driving force in the horizontal direction. The magnitude of the second driving force may be negatively correlated with the angle between the second preset direction and the horizontal direction. When the liquid moves at the same speed along the second preset direction, a larger angle between the second preset direction and the horizontal direction indicates a smaller second driving force applied to the cleaning device 10 in the horizontal direction. As shown in FIG. 57, when the angle between the second preset direction and the horizontal direction is 0°, the reaction force applied to the cleaning device 10 can be fully converted into the second driving force in the horizontal direction.

Similar to the first propeller 131, the second propeller 132 may also include a second propeller impeller and a second propeller motor. For details about the second propeller impeller and the second propeller motor, refer to the above description. From the above description, in terms of an overall direction of the cleaning device 10, the first preset direction is substantially perpendicular to the overall direction of the cleaning device 10, that is, perpendicular to a direction of a plane in which the cleaning device 10 is in contact with the to-be-cleaned surface. The second preset direction is substantially parallel to the overall direction of the cleaning device 10, that is, parallel to the direction of the plane in which the cleaning device 10 is in contact with the to-be-cleaned surface, and is consistent with a forward direction of the cleaning device 10.

The cleaning device 10 may include one or more second propellers 132. The second propeller 132 may be disposed at the bottom of the cleaning device 10. For example, when the cleaning device 10 includes only one second propeller 132, the second propeller 132 may be horizontally disposed at a center position of the bottom of the cleaning device 10 to ensure balance of the cleaning device 10. In some embodiments, the second propeller 132 may alternatively be disposed on a side of the cleaning device 10. It should be noted that when the second propeller 132 is disposed on the side of the cleaning device 10, the second propeller 132 should be at least partially located under a floating position of the cleaning device 10 on the liquid surface 30 to ensure that when the cleaning device 10 floats on the liquid surface 30, the second propeller impeller of the second propeller 132 can rotate to push the liquid to move along the second preset direction to provide the cleaning device 10 with the second driving force in the horizontal direction. In some embodiments, when the second propeller 132 is disposed on the side of the cleaning device 10, the second propeller 132 may be completely located under the floating position of the cleaning device 10 on the liquid surface 30.

In some embodiments, at least one second propeller 132 may be disposed on each of a left side and a right side of the cleaning device 10. As shown in FIG. 53, one second propeller 132 may be disposed on each of the left side and the right side of the cleaning device 10. When the cleaning device 10 moves in the liquid, the cleaning device 10 may adjust a power of the first propeller motor of the second propeller 132 on the left side and a power of the second propeller motor of the second propeller 132 on the right side to adjust speeds at which the liquid is pushed by the second propellers 132 on the left side and the right side to flow along the second preset direction, so that the cleaning device 10 can make a turn. For example, when the speed at which the liquid is pushed by the second propeller 132 on the left side to flow along the second preset direction is greater than the speed at which the liquid is pushed by the second propeller 132 on the right side to flow along the second preset direction, the cleaning device 10 may turn to the right under the action of the second propeller 132 on the left side.

In some embodiments, the cleaning device 10 includes at least one group of first power water inlet portions (not shown in the figure) and first power water outlet portions (not shown in the figure). There may be one or two groups of the first power water inlet portions and the first power water outlet portions, and a quantity of groups may be determined based on arrangement of the first propulsion part and the second propulsion part. When the cleaning device 10 includes the first propulsion part or the second propulsion part, the cleaning device 10 includes one group of the first power water inlet portion and the first power water outlet portion. When the cleaning device 10 includes both the first propulsion part and the second propulsion part, two groups of the first power water inlet portions and the first power water outlet portions are included.

One group of the first power water inlet portion and the first power water outlet portion are disposed on the cleaning device 10. The first propulsion part communicates with the first power water inlet portion and the first power water outlet portion. When the first propulsion part operates, liquid is sucked through one of the first power water inlet portion and the first power water outlet portion and is discharged through the other one of the first power water inlet portion and the first power water outlet portion. In this way, the cleaning device 10 obtains the first driving force in the vertical direction. The group of the first power water inlet portion and the first power water outlet portion extends along the vertical direction. Specifically, when the first propulsion part is the first propeller 131, the first power water inlet portion is the first propeller opening 1313, and the second power water outlet portion is another first propeller opening 1313.

In some embodiments, the other group of the first power water inlet portion and the first power water outlet portion are disposed on the cleaning device 10. The second propulsion part communicates with the other group of the first power water inlet portion and the first power water outlet portion. When the second propulsion part operates, liquid is sucked through one of the first power water inlet portion and the first power water outlet portion of the other group and is discharged through the other one of the first power water inlet portion and the first power water outlet portion of the other group. In this way, the cleaning device 10 obtains the second driving force in the horizontal direction. The other group of the first power water inlet portion and the first power water outlet portion extends along the horizontal direction.

The first adjustment assembly may be, but is not limited to, the first propeller 131, a first drum fan, and a first water pump. The second adjustment assembly may be, but is not limited to, the second propeller 132, a second drum fan, and a second water pump. The propeller, the drum fan, and the water pump communicate with the first power water inlet portion and the first power water outlet portion. The propeller, the drum fan, and the water pump rotate forwardly or reversely, so that the cleaning device 10 can move up and down in the vertical direction and move forward and backward in the horizontal direction. In this way, the cleaning device 10 can be switched between the position on the liquid surface 30 and the position under the liquid surface 30 and can be switched between moving forward and moving backward in the liquid.

In some embodiments, the cleaning device 10 includes one or two groups of second power water inlet portions (not shown in the figure) and second power water outlet portions (not shown in the figure). The second power water inlet portion and the second power water outlet portion are rotatably disposed on the cleaning device 10. In other words, arrangement of the second power water inlet portion and the second power water outlet portion is different from arrangement of the first power water outlet portion, that is, angles of the second power water inlet portion and the second power water outlet portion can be adjusted to change the flow direction of the liquid.

One group of first propulsion parts communicates with the second power water inlet portion and the second power water outlet portion. When the second propulsion part operates, liquid is sucked through one of the second power water inlet portion and the second power water outlet portion and is discharged through the other one of the second power water inlet portion and the second power water outlet portion. Because the second power water inlet portion and the second power water outlet portion are rotatably disposed on the cleaning device 10, the cleaning device 10 obtains propulsion forces in various directions. The propulsion forces include the first driving force in the vertical direction.

In some embodiments, the second propulsion part communicates with the second power water inlet portion and the second power water outlet portion. When the second propulsion part operates, liquid is sucked through one of the second power water inlet portion and the second power water outlet portion of the other group and is discharged through the other one of the second power water inlet portion and the second power water outlet portion of the other group. Because the second power water inlet portion and the second power water outlet portion are rotatably disposed on the cleaning device 10, the cleaning device 10 obtains propulsion forces in various directions. The propulsion forces include the second driving force in the horizontal direction.

The second power water inlet portion can rotate relative to the cleaning device 10 through cooperation between one power motor and one power transmission mechanism. The second power water outlet portion can rotate relative to the cleaning device 10 through cooperation between the other power motor and the other power transmission mechanism.

In some embodiments, the first power water inlet portion and the first power water outlet portion are disposed on the cleaning device 10 to provide propulsion forces in various directions by adjusting a direction of a water spray duct (not shown in the figure). When the first propulsion part includes the water pump, the water pump communicates with the first power water outlet portion through the water spray duct. The water spray duct may extend toward various angles. When the liquid enters or exits the water spray duct, propulsion forces in various directions may be provided. When the first power water inlet portion, the first power water outlet portion, and the first propulsion part communicate with each other, the propulsion forces may include the first driving force in the vertical direction. When the first power water inlet portion, the first power water outlet portion, and the second propulsion part communicate with each other, the propulsion forces include the second driving force in the horizontal direction.

Certainly, in other embodiments, a first guiding structure (not shown in the figure) is disposed on a path in which the first power water inlet portion, the first propulsion part, and the first power water outlet portion are disposed. The flow direction of the liquid is changed by the first guiding structure to provide propulsion forces in various directions. Similarly, a second guiding structure (not shown in the figure) is disposed on a path in which the first power water inlet portion, the second propulsion part, and the first power water outlet portion are disposed. The flow direction of the liquid is changed by the second guiding structure to provide propulsion forces in various directions. Specific structures of the first guiding structure and the second guiding structure are not limited herein, provided that the first guiding structure and the second guiding structure can change the flow direction of the liquid.

In addition, one of the second propeller 132 on the left side and the second propeller 132 on the right side is adjusted to be opened, and the other one of the second propeller 132 on the left side and the second propeller 132 on the right side is adjusted to be closed, so that the cleaning device 10 can rotate at a high speed in position to increase a lifting force or a descending force. In this way, the cleaning device 10 can float up or submerge. A movement speed of the first propeller 131 or the second propeller 132 may be determined as required. This is not limited herein. The second propeller 132 is disposed, so that the position of the cleaning device 10 can be switched in the horizontal direction. For example, the cleaning device 10 may move straight or make a turn in the horizontal direction. This can extend functions of the cleaning device 10, so that the cleaning device 10 is applicable to more usage scenarios.

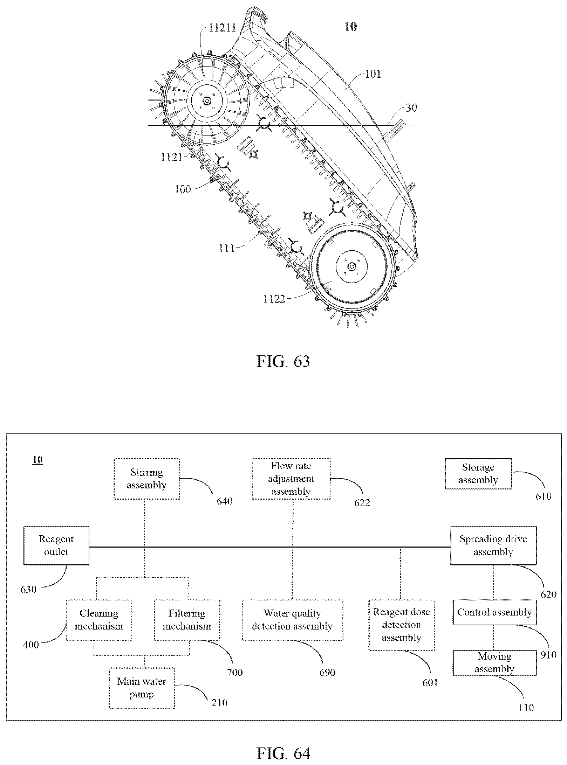

In some embodiments, as shown in FIG. 62 and FIG. 63, the cleaning device 10 includes at least a first wheel 1121. There may be two or more first wheels 1121. The first wheel 1121 is disposed at the bottom of the cleaning device 10. Drive paddles 11211 are disposed on an outer side surface of the first wheel 1121. The drive paddles 11211 are detachably or fixedly connected to the outer side surface of the first wheel 1121. When the cleaning device 10 moves on the liquid surface 30, the drive paddles 11211 are at least partially located under the liquid surface 30, and the first wheel 1121 rotates to generate the second driving force applied to the cleaning device 10 in the horizontal direction. In other words, when the cleaning device 10 moves on the liquid surface 30, the drive paddles 11211 are at least partially exposed at the liquid surface 30, and the drive paddles 11211 are at least partially located under the liquid surface 30. The first wheel 1121 rotates to drive the drive paddles 11211 to rotate. Some drive paddles 11211 located under the liquid surface 30 generate a certain action force with the liquid for adjusting the second driving force applied to the cleaning device 10 in the horizontal direction, so that the cleaning device 10 moves forward along the second direction. When the cleaning device 10 moves on the target bottom wall 401, the drive paddles 11211 are completely submerged, and a forward action force applied to the cleaning device 10 in the second direction and a backward action force applied to the cleaning device 10 in the second direction cancel each other out, so that movement of the cleaning device 10 on the target bottom wall 401 is not affected.

The drive paddles 11211 are disposed on the first wheel 1121 to provide the second driving force in the second direction for the cleaning device 10 to push the cleaning device 10 to move forward and backward in the second direction. Because an action of the drive paddles 11211 is the same as that of the second propeller 132, to some extent, the drive paddles 11211 may replace the second propeller 132. This reduces a quantity of components, costs, and a weight of the device.

In some embodiments, there are a plurality of drive paddles 11211. The plurality of drive paddles 11211 are disposed along a radial direction of the first wheel 1121. There may be, but is not limited to, three, four, five, six, or more drive paddles 11211.

In some embodiments, the cleaning device 10 includes at least a second wheel 1122. The second wheel 1122 is disposed at the bottom of the cleaning device 10. The first wheel 1121 and the second wheel 1122 drive the cleaning device 10 to move in the horizontal direction. When the cleaning device 10 is located on the target bottom wall 401 of the target region 40, the first wheel 1121 and the second wheel 1122 operate to drive the cleaning device 10 to move on the target bottom wall 401 and the target side wall 402 and move from the target bottom wall 401 to the target side wall 402.

In some embodiments, the cleaning device 10 includes the movement propulsion mechanism 100. The movement propulsion mechanism 100 includes the first wheel 1121, the second wheel 1122, and the track 111. The first wheel 1121 and the second wheel 1122 are connected to each other through the track 111. In other words, the first wheel 1121 and the second wheel 1122 rotate as the track 111 rotates. The track 111 can operate to drive the cleaning device 10 to move. The track 111 can drive the cleaning device 10 to move in the horizontal direction. As shown in FIG. 7, when the cleaning device 10 is located on the target bottom wall 401 of the target region 40, the track 111 can operate to drive the cleaning device 10 to move on the target bottom wall 401. The track 111 can further drive the cleaning device 10 to move in the vertical direction. As shown in FIG. 4 and FIG. 9, when the cleaning device 10 is tightly attached to the target side wall 402 of the target region 40, the track 111 can operate to drive the cleaning device 10 to move on the target side wall 402. For details about how the cleaning device 10 is tightly attached to the target side wall 402 of the target region 40, refer to the following description.

In some embodiments, the track 111 enables the cleaning device 10 to move from the target bottom wall 401 to the target side wall 402. As shown in FIG. 55, when the track 111 moves to an intersection between the target bottom wall 401 and the target side wall 402, a part of the track 111 moves on the target side wall 402, and the other part of the track 111 moves on the target bottom wall 401. The part of the track 111 on the target side wall 402 can drive the cleaning device 10 to move upward until the cleaning device moves from the target bottom wall 401 to the target side wall 402. After the cleaning device 10 moves from the target bottom wall 401 to the target side wall 402, the cleaning device 10 may be driven by the track 111 to move on the target side wall 402. The cleaning device 10 can move on the target side wall 402 under the action of the second driving force provided by the second propeller 132 after second propeller 132 performs steering. The cleaning device 10 can move on the target side wall 402 under the action of a third driving force provided by the main water pump 210. For details about the main water pump 210 and the third driving force provided by the main water pump 210, refer to the following description. The track 111 is disposed, so that the cleaning device 10 can move at various positions in the liquid, and the cleaning device 10 can move from the target bottom wall 401 to the target side wall 402.

In some embodiments, the cleaning device 10 includes a drive mechanism. The drive mechanism may further include the main water pump 210. The main water pump 210 may be configured to drive the cleaning device 10 to suck the liquid through a water inlet and discharge the liquid through a water outlet. The water inlet may include one or more inlets for liquid to enter the cleaning device 10. As shown in FIG. 53, FIG. 57, FIG. 58, and FIG. 59, the main pump water inlet 213 of the cleaning device 10 may serve as an inlet for liquid to enter the cleaning device 10, namely, the water inlet. The water outlet includes one or more outlets for liquid to be discharged from the cleaning device 10 into the target region 40. As shown in FIG. 53, FIG. 57, FIG. 58, and FIG. 59, the main pump water outlet 214 of the cleaning device 10 may serve as an outlet for the liquid in the cleaning device 10 to be discharged from the cleaning device 10 into the target region 40, namely, the water outlet.

Similar to the first propeller 131, the main water pump 210 may also include an impeller and a motor. The impeller may be driven by the motor to rotate to suck the liquid from the target region 40 through the water inlet and discharge the liquid from the cleaning device 10 to the target region 40 through the water outlet. In some embodiments, the cleaning device 10 may adjust a rotation direction of the impeller of the main water pump 210 to switch functions of the main pump water inlet 213 and the main pump water outlet 214. For example, when the impeller of the main water pump 210 rotates reversely, the main pump water inlet 213 may be configured to allow liquid to be discharged, and the main pump water outlet 214 may be configured to allow liquid to be sucked.

In some embodiments, when the cleaning device 10 is located on the target side wall 402, the water inlet (such as the main pump water outlet 214) may at least face the target region 40 and be parallel to the horizontal direction or tilt downward in the vertical direction to ensure that, when the main water pump 210 operates, and the liquid is discharged through the main pump water outlet 214, the third driving force can be applied to the cleaning device 10 to drive the cleaning device 10 to be tightly attached to the side wall 402. The third driving force may be a reaction force applied to the cleaning device 10 when the main water pump 210 drives the liquid to be discharged through the main pump water outlet 214. When the main pump water outlet 214 faces the target region 40 and is parallel to the horizontal direction, the third driving force applied to the cleaning device 10 is perpendicular to the target side wall 402, so that the cleaning device 10 can be tightly attached to the target side wall 402.

In some embodiments, when the cleaning device 10 needs to move on the target side wall 402, the main pump water outlet 214 may face the target region 40. When the main pump water outlet 214 tilts downward along the vertical direction, the third driving force applied to the cleaning device 10 has a horizontal component force facing the target side wall 402, so that the cleaning device 10 can be tightly attached to the target side wall 402. In addition, the third driving force further has an upward component force in the vertical direction, so that the cleaning device 10 can move upward along the target side wall 402. When the cleaning device 10 is located on the target bottom wall 401, the third driving force obtained by the main water pump 210 by discharging liquid through the main pump water outlet 214 further has a component force in the horizontal direction, so that the cleaning device 10 can move on the target bottom wall 401.

In some embodiments, the main pump water inlet 213 may be provided at the bottom of the cleaning device 10. When the cleaning device 10 needs to move on the target side wall 402, the main water pump 210 may suck the liquid through the main pump water inlet 213 to obtain a fourth driving force to drive the moving apparatus to be tightly attached to the target side wall 402. The fourth driving force may be a suction force generated by the main water pump 210 sucking the liquid through the main pump water inlet 213. The suction force may drive the cleaning device 10 to be tightly attached to the target side wall 402.

In some embodiments, when the cleaning device 10 needs to move on the target side wall 402, the main water pump 210 of the cleaning device 10 may drive the cleaning device 10 to be tightly attached to the target side wall 402. At least one of the track 111, the second propeller 132, and the main water pump 210 of the cleaning device 10 may provide an upward driving force in the vertical direction to drive the cleaning device 10 to move upward on the target side wall 402. At least one of the track 111 and the second propeller 132 of the cleaning device 10 may provide a downward driving force in the vertical direction to drive the cleaning device 10 to move downward on the target side wall 402. The main water pump 210 is disposed, so that the cleaning device 10 can be tightly attached to the target side wall 402 to limit a position of the cleaning device 10. In this way, the cleaning device 10 can conveniently move on the target side wall 402, and the cleaning device 10 can be switched from the position under the liquid surface 30 to the position on the liquid surface 30.

In some embodiments, the cleaning device 10 includes the main pump water inlet 213 and the main pump water outlet 214. The main pump water inlet 213 and the main pump water outlet 214 are rotatably provided on the cleaning device body 101, so that liquid at the main pump water inlet 213 and the main pump water outlet 214 rotatably flows to change a flow direction of the liquid in real time. In this way, the cleaning device 10 can obtain propulsion forces in various directions.

It should be noted that the above description of the cleaning device 10 and various members thereof is merely for ease of description and does not limit the present disclosure to the scope of the cited embodiments. It may be understood that a person skilled in the art, with understanding of the principle of the device, may make any combination of the various members or form a sub-member to be connected to other members without departing from the principle.

The cleaning device 10 may include a control member (not shown in the figure). The control member of the cleaning device 10 controls the cleaning device 10 to be switched between positions on the water surface or under the water surface of the swimming pool, to implement water surface cleaning or underwater cleaning.

The first adjustment assembly, the second adjustment assembly, the mode switching member 510, the movement propulsion mechanism 100, and the drive mechanism of the cleaning device 10 cooperate with each other, so that the cleaning device 10 is switched between the first motion state and the third motion state. The mode switching member 510, the first buoyancy module, the gravity module, the second buoyancy module, the first sub-functional module, the second sub-functional module, the lift propulsion assembly, and the umbrella assembly of the cleaning device 10, the first propeller 131 in the movement propulsion mechanism 100, and the main pump water outlet 214 and the main pump water inlet 213 in the drive mechanism all can provide the first driving force in the vertical direction for the cleaning device 10 to be switched between the first motion state and the third motion state. The track 111, the drive paddle 11211, and the second propeller 132 of the cleaning device 10, and the main pump water outlet 214 and the main pump water inlet 213 in the drive mechanism all can provide the second driving force in the horizontal direction for the cleaning device 10 to move forward and backward in the horizontal direction. The flow direction of the liquid is changed by the first propulsion part and the second propulsion part to provide driving forces in directions other than the vertical direction and the horizontal direction, so that the cleaning device 10 can move in various directions in the liquid. The mode switching member 510, the lift propulsion assembly, and the umbrella assembly of the cleaning device 10, and the main water pump 210 in the drive mechanism provide propulsion forces, so that the cleaning device 10 can suspend when balanced forces are applied to the cleaning device 10. When the cleaning device 10 cannot suspend under the action of the propulsion forces alone, the volume of the buoyancy cavity 5111 may be changed to compensate for the first driving force for floating and submerging.

When water quality of the pool is manually maintained, a reagent first needs to be prepared based on an amount of water in the pool, and then, the reagent is manually spread onto the water surface of the pool, leading to complex operations of maintaining the water quality, a long cleaning period, and high costs. According to the cleaning device 10, the cleaning device system 1, and the automatic underwater spreading method in some embodiments, the reagent is automatically spread to the liquid in the pool without manual operation. This simplifies operations of maintaining the water quality, shortens the cleaning period, and reduces costs.

The following describes the cleaning device 10 provided in the present disclosure in detail with reference to embodiments.

As shown in FIG. 64 to FIG. 66, the present disclosure provides a cleaning device 10. The cleaning device 10 is configured to perform cleaning, disinfecting, rescuing, and other tasks in a pool. The cleaning device 10 includes a cleaning device body 101, a storage assembly 610, a spreading drive assembly 620, a moving assembly 110, and a control assembly 910. The storage assembly 610 is provided with a first reagent opening 61811. The spreading drive assembly 620 is disposed on the cleaning device body 101 and is connected to the storage assembly 610. The spreading drive assembly 620 is configured to drive and control the storage assembly 610 to spread a reagent through the first reagent opening 61811. The moving assembly 110 is disposed on the cleaning device body 101. The moving assembly 110 is configured to drive the cleaning device 10 to move in liquid based on a motion path. The control assembly 910 is disposed on the cleaning device body 101 and is connected to the moving assembly 110 via signals. The control assembly 910 is configured to control the moving assembly 110 to move.

The storage assembly 610 may be configured to store a to-be-spread reagent. The storage assembly 610 is disposed on the cleaning device body 101. The storage assembly 610 may be disposed inside the cleaning device body 101, or the storage assembly 610 may be detachably mounted on the cleaning device body 101. The storage assembly 610 is provided with the first reagent opening 61811. The to-be-spread reagent may be a reagent required by an automatic underwater spreading apparatus to perform maintenance on the liquid, such as algae removal, clarification, and disinfection. The to-be-spread reagent may be solid or liquid. The to-be-spread reagent may include, but is not limited to, a clarifying agent, an algae removing agent, coagulation aids, disinfectant, a pH adjuster, and the like.

The spreading drive assembly 620 is disposed on the cleaning device body 101 and is connected to the storage assembly 610. The spreading drive assembly 620 is configured to drive and control the storage assembly 610 to spread the reagent through the first reagent opening 61811. The first reagent opening 61811 may be directly open to an external environment. The to-be-spread reagent may enter external liquid directly through the first reagent opening 61811. The first reagent opening 61811 may communicate with other structures, so that the to-be-spread reagent is indirectly spread into the external liquid through the other structures.

A manner in which the spreading drive assembly 620 drives and controls the storage assembly 610 to spread the reagent through the first reagent opening 61811 is not limited herein. In a specific embodiment, the spreading drive assembly 620 includes a push structure. The push structure is in contact with the to-be-spread reagent and may move relative to the storage assembly 610. When the push structure moves, the push structure pushes the to-be-spread reagent in the storage assembly 610 to leave the storage assembly 610. In another specific embodiment, the spreading drive assembly 620 includes a suction structure. The suction structure is connected to an outlet of the storage assembly 610. The suction structure may suck liquid located at the outlet of the storage assembly 610 to change a pressure at the outlet of the storage assembly 610. When the pressure at the outlet of the storage assembly 610 is reduced by using the suction structure, the to-be-spread reagent is driven by a suction force to leave the storage assembly 610.

The spreading drive assembly 620 may control, based on a first operating parameter, the storage assembly 610 to spread the reagent through the first reagent opening 61811. The first operating parameter may be an operating parameter of the spreading drive assembly 620. In some embodiments, the first operating parameter may include at least a speed at which the to-be-spread reagent leaves the storage assembly 610. For example, the first operating parameter may be a first water discharging speed, such as 0.25 mL/s, indicating that the spreading drive assembly 620 drives 0.25 mL of the to-be-spread reagent to leave the storage assembly 610 per second.

In some embodiments, the first operating parameter may further include one or more of: a spreading time range, a drive interval, and drive duration. The spreading time range may be a time range in which the spreading drive assembly 620 drives the to-be-spread reagent to leave the storage assembly 610. The drive interval may be an interval between two times of driving the to-be-spread reagent by the spreading drive assembly 620 to leave the storage assembly 610. The drive duration may be duration in which the spreading drive assembly 620 drives the to-be-spread reagent to leave the storage assembly 610. For example, the first operating parameter may further include the drive interval, such as 5s, and the drive duration, such as 3s. In other words, the spreading drive assembly 620 may drive the to-be-spread reagent to leave the storage assembly 610 for 3s, the spreading drive assembly 620 takes a rest of 5s, and then, the spreading drive assembly 620 drives the to-be-spread reagent to leave the storage assembly 610 for 3s, and the rest may be deduced by analogy. For another example, the first operating parameter may include the spreading time range, such as 13s, and the drive duration, such as 5s. In other words, within each spreading time range of 13s, the spreading drive assembly 620 may drive the to-be-spread reagent to leave the storage assembly 610 for 5s. The drive duration of 5s may be at any time range of the spreading time range. For example, the drive duration of 5s may be the first 5s or the last 5s of the spreading time range.

The moving assembly 110 is disposed on the cleaning device body 101. The moving assembly 110 is configured to drive the cleaning device 10 to move in the liquid based on the motion path.

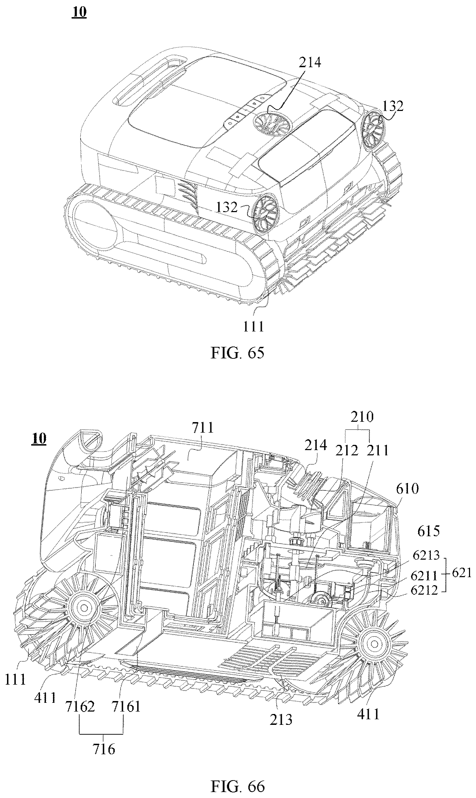

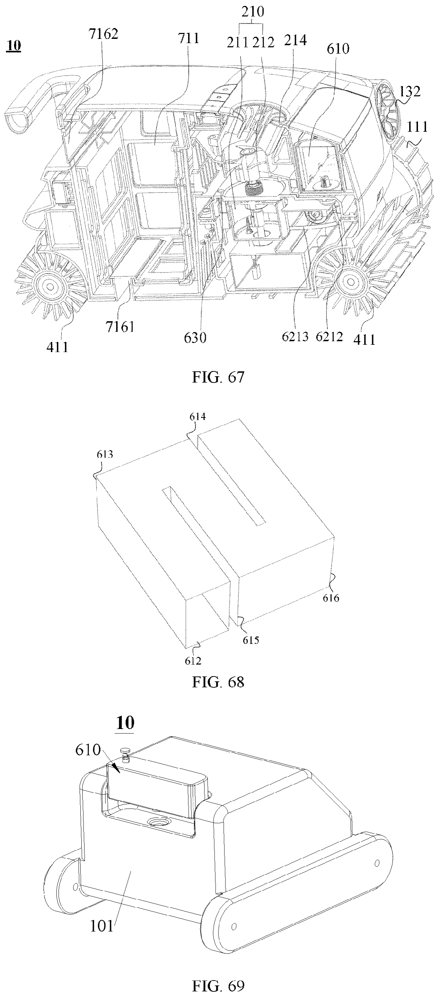

The moving assembly 110 may include various components for driving the cleaning device 10 to move. As shown in FIG. 66 and FIG. 67, the moving assembly 110 may include the track 111. The cleaning device 10 may move at the bottom of the pool by using the track 111. The moving assembly 110 may further include two second propellers 132, and the first propeller 131 and the second propellers 132 may be configured to drive the liquid to be discharged from the cleaning device 10 to generate a driving force to drive the cleaning device 10 to move in the liquid under an action force in a direction opposite to a water discharging direction.

The motion path may be a path at which the cleaning device 10 moves in the liquid when performing maintenance such as algae removal, clarification, and disinfection. The motion path may be, but is not limited to, a rectangular motion path, a random motion path, a Z-shaped motion path, a spiral motion path, a square spiral motion path, and the like. The motion path may be set by a user (for example, a pool maintainer) as required. For example, when the cleaning device 10 disinfects a large water body, the user may set the motion path as the spiral motion path or the square spiral motion path. In other words, the cleaning device 10 may move in the water body along the spiral motion path or the square spiral motion path and spread disinfectant. The cleaning device 10 may move from an outer portion to an inner portion of the water body until the entire surface of the water body is covered. In some embodiments, the motion path may be determined in other manners. For example, the control assembly 910 may determine the motion path based on a parameter determining model.

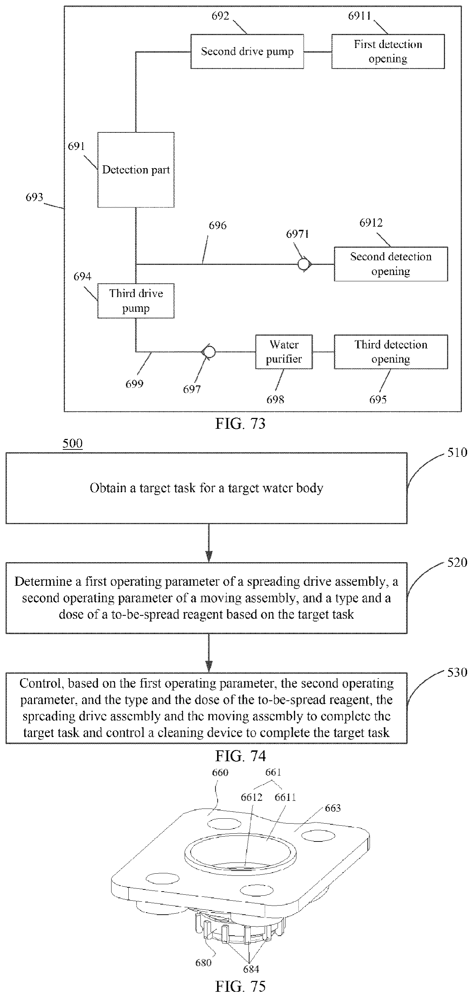

For more details about determining the motion path based on the parameter determining model, refer to FIG. 74 and related descriptions. The parameter determining model may be configured to quickly and accurately determine the motion path of the cleaning device 10 in the water body, so that the reagent is spread pertinently. This improves maintenance efficiency of the water body and reduces maintenance costs.

The control assembly 910 is disposed on the cleaning device body 101 and is connected to the moving assembly 110 via signals. The control assembly 910 is configured to control the moving assembly 110 to move. The control assembly 910 may control the moving assembly 110 based on a second operating parameter. The second operating parameter may be an operating parameter of the moving assembly 10. The second operating parameter may include a moving speed and a motion path of the moving assembly 110.

In some embodiments, the control assembly 910 may determine the first operating parameter and the second operating parameter in various methods. The first operating parameter and/or the second operating parameter may be a preset default parameter. When the first operating parameter or the second operating parameter is the preset default parameter, the control assembly 910 may adjust one of the first operating parameter or the second operating parameter that is not the default parameter, to control a quantity of to-be-spread reagents per unit volume (for example, per m³) in the liquid. When both the first operating parameter and the second operating parameter are preset default parameters, a concentration of the to-be-spread reagent may be adjusted in advance to adjust the quantity of reagents.

In some embodiments, the control assembly 910 may alternatively perform modeling or use various data analysis algorithms, such as regression analysis and discriminant analysis, to determine the first operating parameter and the second operating parameter. The control assembly 910 may determine the first operating parameter of the spreading drive assembly 620 and/or the second operating parameter of the moving assembly 110 based on a target task. For details about the above embodiments, refer to FIG. 74 and related descriptions.

Specifically, an operating mode of the cleaning device 10 may be that the control assembly 910 controls the moving assembly 110 to drive the cleaning device 10 to move in the liquid and simultaneously controls the spreading drive assembly 620 to operate. The to-be-spread reagent inside the storage assembly 610 is spread in the water body by using the spreading drive assembly 620, so that the to-be-spread reagent is evenly spread. The cleaning device 10 performs maintenance on the water body, so that the reagent is spread in the water body automatically instead of manually spreading the reagent. In addition, it is ensured that the reagent is fully and evenly mixed with the liquid without any circulation system (such as a swimming pool circulation system). This can shorten a maintenance period of the water body and reduce maintenance costs of the water body.

In some embodiments, the storage assembly 610 includes a storage cavity 611. The storage cavity 611 is further provided with a second reagent opening 61812. The second reagent opening 61812 is configured for fluid to enter the storage cavity 611. The fluid may be the to-be-spread reagent or any external liquid.

Based on the above disposition, when the to-be-spread reagent in the storage cavity 611 is insufficient, a user may replenish the to-be-spread reagent into the storage cavity 611 through the second reagent opening 61812, which is convenient to operate.

In some embodiments, a first one-way valve 6182 is disposed at the second reagent opening 61812. The first one-way valve 6182 is configured to allow the fluid to unidirectionally flow in a direction in which the fluid enters the storage cavity 611. Alternatively, the storage cavity 611 includes a detachable sealing cover configured to cover the second reagent opening 61812. Alternatively, a first one-way valve 6182 is disposed at the second reagent opening 61812, a sealing cover is detachably disposed at the second reagent opening 61812, and the sealing cover covers the first one-way valve 6182.

Specifically, when the sealing cover covers the second reagent opening 61812, the second reagent opening 61812 is closed, and the external liquid cannot enter the second reagent opening 61812. When the sealing cover is removed from the second reagent opening 61812, the second reagent opening 61812 is opened, and the external liquid can enter the storage cavity 611 through the second reagent opening 61812. The first one-way valve 6182 may be a known one-way valve, provided that the fluid can unidirectionally flow. Details are not described herein.

Based on the above disposition, the first one-way valve 6182 is disposed, so that the to-be-spread reagent is not easily leaked out of the storage assembly 610 through the second reagent opening 61812, leading to good sealing performance of the storage cavity 611. The sealing cover reduces a probability that external debris enters the storage cavity 611, so that the to-be-spread reagent cannot be easily contaminated, leading to a good cleaning effect of the cleaning device 10.

In some embodiments, the cleaning device body 101 is provided with a liquid adding opening and a reagent outlet 630. The liquid adding opening communicates with the second reagent opening 61812, and the first reagent opening 61811 communicates with the reagent outlet 630. The reagent spread through the first reagent opening 61811 enters the liquid through the reagent outlet 630.

The reagent outlet 630 may serve as an outlet for the to-be-spread reagent to leave the storage assembly 610 and then enter the liquid. The cleaning device 10 may include one or more reagent outlets 630. As shown in FIG. 67, the reagent outlet 630 may be disposed inside the cleaning device 10. After the to-be-spread reagent flows out through the reagent outlet 630, the to-be-spread reagent may be mixed with other liquid (such as cleaned liquid) that is located in a same space, and the mixed liquid may flow out through the main pump water outlet 214. For details about the cleaned liquid and the main pump water outlet 214, refer to the following description. In some embodiments, the reagent outlet 630 may be provided at least one of the top, the bottom, and a side portion of the cleaning device body 101, so that the to-be-spread reagent can enter the liquid directly through the reagent outlet 630 to complete spreading.

In some embodiments, when the cleaning device 10 floats on the water surface and spreads the reagent, the cleaning device 10 may include at least one reagent outlet 630 located under the water surface or located close to the water body to ensure that the to-be-spread reagent can enter the liquid. For example, when the cleaning device 10 floats on the water surface and spreads the reagent, the reagent outlet 630 may be located on a side portion, of the cleaning device 10, under the water surface or on the bottom of the cleaning device body 101 of the cleaning device 10.

Based on the above disposition, the user may add the to-be-spread reagent to the storage cavity 611 through the liquid adding opening instead of directly through the second reagent opening 61812. A position at which the storage cavity 611 is mounted may not be limited to a position close to a surface of the cleaning device 10, leading to a more flexible structural design. In addition, the liquid adding opening may be provided at a position that is easier for the user to operate, leading to convenient operation.

In some embodiments, a solid reagent is stored in the storage assembly 610. The spreading drive assembly 620 includes a liquid inlet pump communicating with the second reagent opening 61812 and a control valve for controlling operation of the liquid inlet pump. The liquid inlet pump is configured to drive external liquid to enter the storage cavity 611. The liquid inlet pump may be a peristaltic pump or any other pump that can perform the function. The control valve is configured to control the liquid inlet pump to start or stop operating, a speed at which liquid flows into the liquid inlet pump, and an amount of liquid flowing into the liquid inlet pump. In this way, a mixing speed of the to-be-spread reagent and the external liquid and a mixing dose of the to-be-spread reagent and the external liquid are controlled.

Specifically, the solid reagent may be solid. The solid reagent is mixed with the liquid and then discharged from the storage cavity 611. The solid reagent is gradually dissolved in the external liquid to form to-be-spread liquid. When a flow rate at which the liquid enters the storage cavity 611 changes, a speed at which the solid reagent is mixed with the external liquid changes. For example, when the flow rate at which the external liquid enters the storage cavity 611 increases, the speed at which the solid reagent is mixed with the liquid increases, and a speed at which the to-be-spread reagent leaves the storage cavity 611 increases.

Based on the above disposition, the storage assembly 610 controls the speed at which the to-be-spread reagent leaves the storage cavity 611 by controlling an operating state of the liquid inlet pump. This facilitates simple control and convenient use.

In some other embodiments, the storage assembly 610 includes a storage cavity 611. The storage cavity 611 is provided with a reagent opening 6181. The reagent opening 6181 is configured for the to-be-spread reagent to enter and leave the storage cavity 611. A first one-way valve 6182 is detachably disposed at the reagent opening 6181. The first one-way valve 6182 is configured to allow fluid to unidirectionally flow in a direction in which the fluid enters the storage cavity 611. The fluid may be the to-be-spread reagent. When the first one-way valve 6182 is disposed at the reagent opening 6181, the fluid can only enter the storage cavity 611. When the first one-way valve 6182 is detached from the reagent opening 6181, the fluid can enter or leave the storage cavity 611.

Based on the above disposition, the user may control the to-be-spread reagent to enter or leave the storage cavity 611 by mounting or detaching the first one-way valve 6182. The storage cavity 611 needs to be provided with only one reagent opening 6181, leading to a simple structure.

In some embodiments, the spreading drive assembly 620 includes a flow rate adjustment assembly 622. The flow rate adjustment assembly 622 includes a spreading duct 6221 and a flow rate adjustment part 6222. The spreading duct 6221 communicates with the first reagent opening 61811 of the storage assembly 610. The to-be-spread reagent is spread into the external liquid through the spreading duct 6221. The flow rate adjustment part 6222 is configured to change a flow rate of fluid in the spreading duct 6221. In this way, during spreading the to-be-spread reagent, the cleaning device 10 can precisely control a dose of the spread reagent. This facilitates convenient use and helps reduce a quantity of to-be-spread reagents and reduce costs.

A specific manner in which the flow rate adjustment part 6222 changes the flow rate in the spreading duct 6221 may be changing a cross-sectional area of the spreading duct 6221 or a size of an outlet of the storage cavity 611. This is not limited herein.

In a specific embodiment, the flow rate adjustment part 6222 covers the outlet of the storage cavity 611. The flow rate adjustment part 6222 may move relative to the storage cavity 611 to change an opening area of the outlet of the storage cavity 611.

In another specific embodiment, the flow rate adjustment part 6222 may move relative to the spreading duct 6221 between a first position and a second position. In a process in which the flow rate adjustment part 6222 moves from the first position to the second position, the flow rate adjustment part 6222 is in contact with and squeezes the spreading duct 6221 to change the cross-sectional area of the spreading duct. In this way, the flow rate adjustment part 6222 can change the flow rate in the spreading duct 6221 by squeezing the spreading duct 6221, leading to a simple structure.

In some embodiments, the spreading drive assembly 620 further includes a position-limiting groove 6223. The position-limiting groove 6223 is provided on a side of the spreading duct 6221. Along an axial direction of the spreading duct 6221, a shortest distance from the position-limiting groove 6223 to an axis of the spreading duct 6221 gradually increases or decreases. In other words, the position-limiting groove 6223 tilts relative to the axis of the spreading duct 6221. The flow rate adjustment part 6222 is slidably disposed in the position-limiting groove 6223. The flow rate adjustment part 6222 slides between the first position and the second position along the position-limiting groove 6223. Based on the above disposition, the flow rate adjustment part 6222 can slide along the position-limiting groove 6223, and the position-limiting groove 6223 may guide a movement of the flow rate adjustment part 6222. In this way, the flow rate adjustment part 6222 can precisely move to the first position or the second position, and the spreading drive assembly 620 can adjust the flow rate of the to-be-spread reagent more precisely.

The movement of the flow rate adjustment part 6222 may be controlled by the control assembly 910 or manually controlled. A shape of the flow rate adjustment part 6222 may be determined based on an actual situation, provided that the flow rate adjustment part 6222 can squeeze the spreading duct 6221. This is not limited herein. In a specific embodiment, the flow rate adjustment part 6222 includes a squeezing portion in a round-disc shape and a rotation shaft disposed on a side of the squeezing portion. The rotation shaft is slidably embedded in the position-limiting groove 6223. A periphery of the squeezing portion squeezes the spreading duct 6221.

In some embodiments, the spreading drive assembly 620 includes a spreading drive pump 621. The spreading drive pump 621 is configured to drive the to-be-spread reagent to leave the storage assembly 610. The spreading drive pump 621 may be a peristaltic pump or any other pump (such as a syringe pump) that can perform the function. One end of the spreading drive pump 621 is connected to the outlet of the storage assembly 610. The other end of the spreading drive pump 621 communicates with the reagent outlet 630. One end of the spreading drive pump 621 directly communicates with the reagent outlet 630 or communicates with the reagent outlet 630 through other components of the cleaning device 10.

As shown in FIG. 66 and FIG. 67, in some embodiments, the spreading drive pump 621 may include a spreading drive pump body 6211, a first duct 6212, and a second duct 6213. The spreading drive pump body 6211 is configured to provide a driving force for the to-be-spread reagent to leave the storage assembly 610. The first duct 6212 is a channel for the to-be-spread reagent to leave the storage assembly 610. One end of the first duct 6212 is connected to the outlet of the storage assembly 610, and the other end of the first duct 6212 is connected to the spreading drive pump body 6211. The second duct 6213 is configured to guide the to-be-spread reagent to the reagent outlet 630. One end of the second duct 6213 is connected to the spreading drive pump body 6211, and the other end of the second duct 6213 communicates with the reagent outlet 630. In this way, the to-be-spread reagent is driven by the spreading drive pump body 6211 to leave from the outlet of the storage assembly 610 and flow out of the reagent outlet 630 through the first duct 6212 and the second duct 6213. The spreading drive pump 621 drives the to-be-spread reagent to leave the storage assembly 610 and be spread in the liquid, so that the cleaning device 10 can evenly and comprehensively spread the reagent with high spreading efficiency.

The spreading drive pump 621 has a first operating state and a second operating state. When the spreading drive pump 621 is in the first operating state, the spreading drive pump 621 generates a driving force in a direction from the storage assembly 610 to the reagent outlet 630, and the spreading drive pump 621 drives the to-be-spread reagent to leave the storage assembly 610. When the spreading drive pump 621 is in the second operating state, the spreading drive pump 621 generates a driving force in a direction from the reagent outlet 630 to the storage assembly 610, and the spreading drive pump 621 drives residual liquid between the reagent outlet 630 and the storage assembly 610 to move to the storage assembly 610, so that a flow channel between the reagent outlet 630 and the storage assembly 610 is unobstructed. In this way, the spreading drive pump 621 drives the to-be-spread reagent to leave the storage assembly 610 in the first operating state, and the spreading drive pump 621 is switched to the second operating state after spreading the reagent, to pump and discharge the residual liquid between the reagent outlet 630 and the storage assembly 610, so that the flow channel between the reagent outlet 630 and the storage assembly 610 is not blocked easily.

In some embodiments, the cleaning device 10 further includes a reagent dose detection assembly 601. The reagent dose detection assembly 601 is configured to detect an in-position state of the storage assembly 610 and/or a quantity of to-be-spread reagents stored in the storage assembly 610.

Specifically, the in-position state of the storage assembly 610 is a state of whether the storage assembly 610 is mounted on the cleaning device 10. When the storage assembly 610 is mounted on the cleaning device 10, the storage assembly 610 is in the in-position state. When the storage assembly 610 is not mounted on the cleaning device 10, the storage assembly 610 is not in the in-position state. The reagent dose detection assembly 601 may be configured to detect only the in-position state of the storage assembly 610. The reagent dose detection assembly 601 may alternatively be configured to detect only the quantity of to-be-spread reagents stored in the storage assembly 610. The reagent dose detection assembly 601 may alternatively be configured to detect both the in-position state of the storage assembly 610 and the quantity of to-be-spread reagents stored in the storage assembly 610.

Based on the above disposition, the cleaning device 10 detects in time, by using the reagent dose detection assembly 601, whether the quantity of to-be-spread reagents meets a spreading requirement, so that the user can replenish the to-be-spread reagent in time, and the cleaning device 10 is used conveniently.

As shown in FIG. 73, in some embodiments, the cleaning device 10 further includes a water quality detection assembly 690. The water quality detection assembly 690 is configured to obtain water quality data of various regions of the pool. The water quality data may include a pH value, turbidity, a quantity of total solids, salinity, and the like of water. The water quality detection assembly 690 is connected to the control assembly 910 via signals. The spreading drive assembly 620 controls, based on the detection data of the water quality detection assembly 690, the storage assembly 610 to spread the reagent.

Based on the above disposition, the cleaning device 10 detects water quality by using the water quality detection assembly 690 and performs cleaning, so that the water quality of the pool can be well monitored and maintained at a better state without manually spreading the reagent. In this way, the water quality of the pool can be maintained simply and conveniently, a maintenance period of the pool is shortened, and maintenance costs are reduced.

In some embodiments, the water quality detection assembly 690 includes a detection part 691 and a second drive pump 692. The detection part 691 is configured to detect the water quality. The detection part 691 may include a water quality sensor or the like. The second drive pump 692 communicates with the detection part 691. The second drive pump 692 has a third operating state. When the second drive pump 692 is in the third operating state, the second drive pump 692 drives the external liquid to flow through the detection part 691. When the external liquid flows through the detection part 691, the detection part 691 obtains water quality data of the external liquid.

Based on the above disposition, the second drive pump 692 can actively drive the external liquid to reach the detection part 691, and the water quality detection assembly 690 is prevented from failing to detect the water quality due to being unable to be in contact with the external liquid, leading to stable performance.

In some embodiments, the water quality detection assembly 690 further includes a detection cavity 693. The detection part 691 is disposed in the detection cavity 693. The detection cavity 693 is provided with a first detection opening 6911 and a second detection opening 6912.

The first detection opening 6911 communicates with the detection part 691. The first detection opening 6911 is configured to allow the external liquid to enter the water quality detection assembly 690. The second detection opening 6912 communicates with the detection part 691. The second detection opening 6912 is configured for the external liquid to leave the water quality detection assembly 690. The second drive pump 692 is connected to the first detection opening 6911. The first detection opening 6911 and the second detection opening 6912 respectively communicate with two opposite sides of the detection part 691. When the second drive pump 692 is in the third operating state, the second drive pump 692 drives the external liquid to flow sequentially from the first detection opening 6911 to the detection part 691 and the second detection opening 6912.

In some embodiments, the water quality detection assembly 690 further includes a first flow channel 696. The first flow channel 696 is configured to allow the detection part 691 to communicate with the second detection opening 6912. A first detection one-way valve 6971 is disposed at the first flow channel 696. The first detection one-way valve 6971 is configured for the liquid to unidirectionally flow in a direction in which the liquid leaves the detection part 691. Based on the above disposition, the external liquid whose water quality has been detected by the detection part 691 can flow to the second detection opening 6912 through the first flow channel 696 to be discharged. In addition, the first detection one-way valve 6971 prevents the liquid from flowing to the detection part 691 through a second flow channel 699. This reduces a possibility that the liquid whose water quality has been detected flows back to the detection part 691 and interferes with a detection result.

In some embodiments, the water quality detection assembly 690 includes a water purifier 698. The water purifier 698 communicates with the detection cavity 693. The water purifier 698 may purify the external liquid. The second drive pump 692 further has a fourth operating state. When the second drive pump 692 is in the fourth operating state, the second drive pump 692 drives the external liquid to flow through the water purifier 698 and drives the purified and filtered liquid to flow into the detection cavity 693 to rinse the detection part 691.

Based on the above disposition, when the detection part 691 completes water quality detection, the second drive pump 692 may be switched to the fourth operating state, so that the clean liquid flows through and flushes the detection part 691. The detection part 691 can be kept clean by being flushed by the clean liquid. In this way, an error caused by accumulation of stains in the detection part 691 does not easily occur in a detection result, leading to stable performance of the water quality detection assembly 690.

A manner in which the water purifier 698 filters and purifies the external liquid includes, but is not limited to, disposing a micro-filtering film to filter debris, disposing adsorption cotton to filter debris, disposing alum to precipitate debris, and the like. When the external liquid flows through the water purifier 698, the external liquid is transformed into clean liquid with better water quality.

In some other embodiments, the water purifier 698 may be further provided with a water storage tank. The water storage tank stores clean liquid. The water purifier 698 may flush the detection part 691 by directly discharging the clean liquid from the storage tank.

In some embodiments, the water quality detection assembly 690 includes the second flow channel 699 and a second detection one-way valve 6972. The second flow channel 699 communicates with the second detection opening 6912, or the second flow channel 699 directly communicates with the detection part 691. The water purifier 698 is disposed in the second flow channel 699. The second detection one-way valve 6972 is disposed in the second flow channel 699. The second detection one-way valve 6972 is configured for the liquid to unidirectionally flow in a direction in which the liquid enters the detection part 691. When the second drive pump 692 is in the fourth operating state, the second drive pump 692 drives the external liquid to flow sequentially from the second flow channel 699 to the water purifier 698 and the second detection one-way valve 6972 and then flow into the detection cavity 693.

Based on the above disposition, when the detection part 691 completes water quality detection, the second drive pump 692 is switched to the fourth operating state, and the external liquid flows sequentially from the second flow channel 699 to the water purifier 698 and the second detection one-way valve 6972 and then flows into the detection cavity 693. The external liquid is transformed into the clean liquid by using the water purifier 698, and continues to flow to the detection part 691 to flush off the stains. The detection part 691 can be kept clean by being flushed with the clear liquid, so that an error caused by accumulation of stains does not easily occur in a detection result, leading to stable performance of the water quality detection assembly 690. In addition, the second detection one-way valve 6972 prevents the external liquid that has been detected from flowing from the second flow channel 699 in a direction in which the liquid leaves the detection part 691, so that the clean liquid provided by the water purifier 698 cannot be easily contaminated by stains.

It may be understood that the water quality detection assembly 690 may be further provided with a third drive pump 694. The third drive pump 694 may be disposed in the second flow channel 699. The third drive pump 694 drives the external liquid to flow through the water purifier 698 and then drives the purified and filtered liquid to flow into the detection cavity 693 to rinse the detection part 691. In this way, when the detection part 691 completes water quality detection, the third drive pump 694 is started to drive the external liquid to flow sequentially from the second flow channel 699 to the water purifier 698 and the second detection one-way valve 6972 and then flow into the detection cavity 693 to flush the detection part 691 to keep the detection part 691 clean.

The external liquid inside the second flow channel 699 is obtained by diverting liquid by other structures, such as the first detection opening 6911, or by directly sucking liquid from an external environment. In a specific embodiment, the detection cavity 693 is provided with a third detection opening 695, and the second flow channel 699 communicates with the third detection opening 695. The third detection opening 695 is configured for the external liquid to flow into the water quality detection assembly 690. When the second drive pump 692 is in the fourth operating state, the external liquid enters the second flow channel 699 through the third detection opening 695, flows sequentially to the water purifier 698 and the second detection one-way valve 6972, and then flows into the detection cavity 693.

FIG. 74 is a flow chart of an automatic underwater spreading method according to the present disclosure. In some embodiments, the method 500 may be applied to the cleaning device 10 in the above embodiments and may be executed by the control assembly 910. In other embodiments, the method 500 may alternatively be applied to the cleaning device system 1. For details about the cleaning device system 1, refer to the following description. As shown in FIG. 74, the method 500 may include the following steps.

Step 510: Obtain a target region in a target water body and a target task corresponding to the target region. For example, the target water body may be a swimming pool, and the target task includes a spreading task for the target region.

The target region may be a specific position in the target water body at which the target task needs to be performed. For example, the target region may include the entire swimming pool. For another example, the target region may further include a water surface of the swimming pool. For another example, the target region may further include each wall of the swimming pool. The spreading task may be a task of spreading a to-be-spread reagent in the target region.

In some embodiments, the target task may further include a cleaning task for the target region. The cleaning task may be a task of cleaning garbage or other debris in the target region.

The control assembly 910 may obtain the target task in various manners. For example, the control assembly 910 obtains the target task input by a user. For another example, the control assembly 910 may be configured to perform the target task periodically. For another example, the cleaning device 10 may further include a detection module, and the detection module may perform water quality detection for various regions in the target water body to obtain water quality data of various regions. The control assembly 910 obtains the water quality data and determines the target task based on the water quality data. The water quality data may be data reflecting water quality of various regions in the target water body. The water quality data includes, but is not limited to, a picture, a pH value, a total quantity of bacteria, free residual chlorine, urea, and the like of various regions in the target water body.

In some embodiments, the control assembly 910 may input the water quality data into a task determining model, and an output of the task determining model may include the target task. The task determining model may analyze the water quality data of the target water body to determine cleanliness (such as clarity, algae distribution, and debris) of various regions (such as the water surface, water in the pool, and each pool wall) to determine a corresponding target task. The task determining model may be a convolutional neural network model, a graph neural network model, or any machine learning model that implements the above functions. The task determining model may be obtained by performing training based on a plurality of groups of training samples with labels. The training samples may include sample water quality data of various regions in the sample water body, and the labels may include a sample task. The sample task may be obtained by manually labeling the sample water quality data.

In some embodiments, the obtaining a target region and a target task corresponding to the target region includes the following steps.

A region in the water body is selected, and water quality of the region in the water body is detected to obtain water quality data corresponding to the region in the water body. The region in the water body may be specified by a user or randomly selected in the target water body.

In a case where the water quality data exceeds a preset threshold, the region in the water body is the target region, and the corresponding target task is obtained based on the water quality data.

The control assembly 910 may further determine whether water quality data of each region in the target water body exceeds the preset threshold to determine the target task and the target region. The preset threshold may be a threshold at which the water quality data of each region in the target water body does not meet a requirement. For example, the preset threshold may include a pH value of less than 6.5 or more than 8.5. When a pH value in water quality data of a certain region does not exceed the preset threshold, the region is determined as the target region. The corresponding target task may be the spreading task for the target region. The control assembly 910 may control the cleaning device 10 to spread a pH adjuster to adjust the pH value in the target water body.

In some embodiments, the water quality data includes at least one of the pH value, the total quantity of bacteria, free residual chlorine, urea, turbidity, the total quantity of solids, and salinity. In a case where the water quality data exceeds the preset threshold, when the water quality data includes at least two of the pH value, the total quantity of bacteria, free residual chlorine, urea, turbidity, the total quantity of solids, and salinity, it is determined that the water quality data exceeds the preset threshold when at least any one of the at least two items exceeds the preset threshold. In this way, the user may flexibly set a triggering condition of the target task, and the cleaning device can be used flexibly.

In some embodiments, that a region in the water body is selected, and water quality of the region in the water body is detected to obtain water quality data corresponding to the region in the water body includes: Coordinates of the region in the water body and a requirement of detecting the water quality of the region in the water body are obtained.

A coordinate system may be stored in the cleaning device 10. The coordinate system may be set based on the target water body. The cleaning device 10 may determine an actual position of the region in the target water body based on the coordinates of the region. The requirement of detecting the water quality may be a requirement initiated by the user or may be a task set to be performed periodically by the control assembly 910. Based on the coordinates, a moving assembly 110 is controlled to drive the cleaning device 10 to move to the region in the water body.

External liquid in the region in the water body is extracted to flow to the detection part 691 to obtain the water quality data by using the detection part 691.

The external liquid may be extracted by a structure such as the second drive pump 692. In this way, the external liquid can be actively driven to flow to the detection part 691, and the detection part 691 is prevented from failing to obtain the water quality data due to being unable to be passively in contact with the external liquid, leading to stable detection.

In some embodiments, the method further includes: cleaning the detection part 691 in a case where the detection part 691 completes detection.

The second drive pump 692 is controlled to drive clean liquid to flow to the detection part 691 to clean the detection part 691. The clean liquid is liquid whose water quality is greater than that of the external liquid. When the detection part 691 completes detection, the detection part 691 is flushed to be clean again as the clean liquid flows through. The clean liquid may be provided by the water purifier 698. The clean liquid may be stored in advance in the water purifier 698 or may be formed by purifying the external liquid by the water purifier 698. It may be understood that a third drive pump 694 can drive the clean liquid to flow to the detection part 691 to clean the detection part 691.

Step 520: Determine a first operating parameter of a spreading drive assembly 620, a second operating parameter of the moving assembly 110, and a type and a dose of a to-be-spread reagent based on the target region and the target task.

The control assembly 910 may determine the first operating parameter of the spreading drive component 620, the second operating parameter of the moving assembly 110, the type and the dose of the to-be-spread reagent based on the target task in various manners (such as regression analysis and discriminant analysis).

In some embodiments, the first operating parameter includes at least a speed at which the to-be-spread reagent leaves a storage assembly 610. The second operating parameter may include a moving speed and a motion path of the moving assembly 110. It may be understood that, when the target task includes only the cleaning task, the first operating parameter and the dose of the to-be-spread reagent may be 0.

In some embodiments, the control assembly 910 may determine, based on three-dimensional data of the target water body, the water quality data, and the target task, the first operating parameter, the second operating parameter, and the type and the dose of the to-be-spread reagent by using the parameter determining model. The three-dimensional data of the target water body may include, but is not limited to, a length, a width, a height, and a positional relationship between various vertices of the target water body.

The parameter determining model may be one or more of the graph neural network model, the convolutional neural network model, a deep neural network model, or any other machine learning model that can implement the above functions. The control assembly 910 may obtain the parameter determining module by performing training based on a plurality of groups of training samples with labels. The training samples may include sample three-dimensional data of the sample water body, sample water quality data, and a sample task. The labels may be a sample first operating parameter, a sample second operating parameter, a sample reagent type, and a sample reagent dose existing when the cleaning device 10 performs the sample task for the sample water body. The training samples and the labels may be obtained by manually performing labeling based on historical maintenance data of the sample water body. The control assembly 910 may input the training samples into an initial parameter determining model, construct a loss function based on an output of the initial parameter determining model and the labels, iteratively update a parameter of the initial parameter determining model based on the loss function, and finish training until a preset condition is met, to obtain the trained parameter determining model. The preset condition may include, but is not limited to, that the loss function converges, a training period reaches a threshold, and the like.

In this embodiment, various pieces of data of the target water body and the target task are processed by using the machine learning model, so that the type and the dose of the to-be-spread reagent, the first operating parameter, and the second operating parameter required for performing the target task for the target water body can be determined pertinently. In this way, the cleaning device 10 can perform the target task for the target water body pertinently, and any error caused by manual calculation can be avoided. This shortens the maintenance period of the target water body and reduces maintenance costs.

In some embodiments, the output of the parameter determining model may further include a third operating parameter of the cleaning device 10. Correspondingly, when the parameter determining model is trained, the labels may further include a sample third operating parameter existing when the cleaning device 10 performs the sample task for the sample water body. In this way, the cleaning device 10 can be controlled more comprehensively, the maintenance period of the target water body is shortened, and the maintenance costs are reduced.

Step 530: Control, based on the first operating parameter, the second operating parameter, and the type and the dose of the to-be-spread reagent, the cleaning device 10 to complete the target task.

The control assembly 910 may determine, based on the type of the to-be-spread reagent, the storage assembly 610 (such as a certain storage cavity 611 storing the reagent of the corresponding type) connected to the spreading drive component 620, and drive, based on the parameters of the cleaning device 10, the to-be-spread reagent of the corresponding dose to leave the storage assembly 610. At the same time, the control assembly 910 may further control, based on the parameters of the cleaning device 10, the moving assembly 110 to move to complete the target task.

In some embodiments, the cleaning device 10 includes a reagent dose detection assembly 601. The controlling, based on the first operating parameter, the second operating parameter, and the type and the dose of the to-be-spread reagent, the cleaning device 10 to complete the target task includes the following steps.

The reagent dose detection assembly 601 is controlled to detect an in-position state of the storage assembly 610 and a storage quantity of to-be-spread reagents.

The in-position state of the storage assembly 610 indicates whether the storage assembly 610 is mounted on the cleaning device 10. When the storage assembly 610 is mounted on the cleaning device 10, the storage assembly 610 is in the in-position state. The reagent dose detection component 601 may separately detect the in-position state of the storage assembly 610 and the storage quantity of to-be-spread reagents. For example, the reagent dose detection component 601 may first detect the in-position state of the storage assembly 610 and then detect the storage quantity of to-be-spread reagents only when the storage assembly 610 is in the in-position state.

In a case where the storage assembly 610 is in the in-position state, and the storage quantity of to-be-spread reagents is greater than or equal to a reagent dose, the cleaning device 10 is controlled to complete the target task. The control assembly 910 may control the cleaning device 10 to perform the target task only when the storage quantity of to-be-spread reagents is greater than or equal to the reagent dose. This can reduce a probability that the water cleaning effect is reduced due to an insufficient storage quantity of to-be-spread reagents.

The cleaning device 10 may be further provided with a prompt module. The prompt module may send prompt information to the user. The control assembly 910 may further control, in a case where the storage assembly 610 is not in the in-position state or the storage quantity of to-be-spread reagents is less than the reagent dose, the prompt module to send the prompt information to the user, to remind the user to replenish the to-be-spread reagent in time.

In some embodiments, the spreading drive assembly 620 includes a spreading drive pump 621. The controlling the cleaning device 10 to complete the target task includes the following steps.

The spreading drive pump 621 is controlled to generate a driving force in a direction from the storage assembly 610 to a reagent outlet 630 to complete the target task. When the spreading drive pump 621 generates the driving force in the direction from the storage assembly 610 to the reagent outlet 630, the to-be-spread reagent can be driven to leave the storage assembly 610.

In a case where the target task is completed, the spreading drive pump 621 is controlled to generate a driving force in a direction from the reagent outlet 630 to the storage assembly 610. When the spreading drive pump 621 generates the driving force in the direction from the reagent outlet 630 to the storage assembly 610, residual liquid between the reagent outlet 630 and the storage assembly 610 is driven to flow to the storage assembly 610, so that a flow channel between the reagent outlet 630 and the storage assembly 610 is not easily blocked, and stains are not easily accumulated.

In some embodiments, that the spreading drive pump 621 is controlled, in a case where the target task is completed, to generate a driving force in a direction from the reagent outlet 630 to the storage assembly 610 includes: controlling the spreading drive pump 621 to continue to operate for preset duration and then stop operating. The preset duration may be 1 second, 2 seconds, 3 seconds, and the like. This is not limited herein. In this way, the residual liquid between the reagent outlet 630 and the storage assembly 610 can be better cleaned through suction, the flow channel between the reagent outlet 630 and the storage assembly 610 is not easily blocked, and stains are not easily accumulated. This improves a battery life of the cleaning device 10.

It should be noted that the above description of the method 500 is merely used as an example for description and does not limit the scope of the present disclosure. For a person skilled in the art, various amendments and changes may be made to the method 500 under the guidance of the present disclosure. However, these amendments and changes shall fall within the scope of the present disclosure.

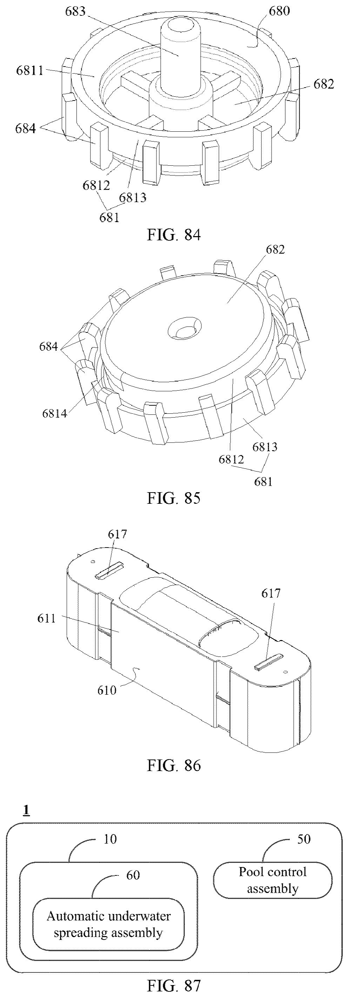

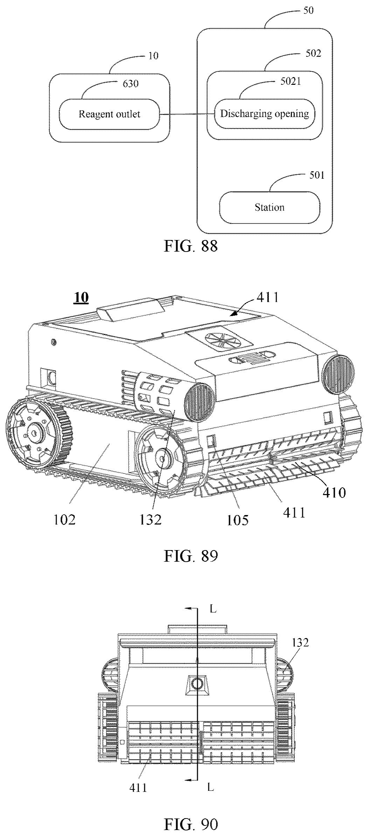

As shown in FIG. 87 and FIG. 88, the present disclosure provides an automatic underwater spreading assembly 60. The automatic underwater spreading assembly 60 is configured to spread a reagent in a water body (for example, a swimming pool). The automatic underwater spreading assembly 60 may spread the reagent in the liquid independently or may be combined with other structures to spread the reagent. For example, the automatic underwater spreading assembly 60 may automatically spread the reagent while floating on the water surface or fully submerging in the water body. The automatic underwater spreading assembly 60 may include a storage assembly 610, a spreading drive assembly 620, and a control assembly 910.

The storage assembly 610 may be configured to store a to-be-spread reagent. The to-be-spread reagent may be a reagent required for an automatic underwater spreading apparatus to perform maintenance for the water body, such as algae removal, clarification, and disinfection. The to-be-spread reagent may be solid or liquid. The to-be-spread reagent may include, but is not limited to, a clarifying agent, an algae removing agent, coagulant aids, disinfectant, a pH adjuster, and the like.

The spreading drive assembly 620 is connected to the storage assembly 610. The spreading drive assembly 620 is configured to drive the to-be-spread reagent to leave the storage assembly 610, and/or the spreading drive assembly 620 is configured to adjust a flow rate at which the to-be-spread reagent leaves the storage assembly 610.

The spreading drive assembly 620 may be configured to only drive the to-be-spread reagent to leave the storage assembly 610, or the spreading drive assembly 620 may be configured to only adjust the flow rate at which the to-be-spread reagent leaves the storage assembly 610, or the spreading drive assembly 620 may be configured to both drive the to-be-spread reagent to leave the storage assembly 610 and adjust the flow rate at which the to-be-spread reagent leaves the storage assembly 610.

A manner in which the spreading drive assembly 620 drives the to-be-spread reagent to leave the storage assembly 610 is not limited herein. In a specific embodiment, the spreading drive assembly 620 includes a push structure. The push structure is in contact with the to-be-spread reagent and may move relative to the storage assembly 610. When the push structure moves, the push structure pushes the to-be-spread reagent in the storage assembly 610 to leave the storage assembly 610. In another specific embodiment, the spreading drive assembly 620 includes a suction structure. The suction structure is connected to an outlet of the storage assembly 610. The suction structure may suck liquid at the outlet of the storage assembly 610 to change a pressure at the outlet of the storage assembly 610. When the pressure at the outlet of the storage assembly 610 is decreased by using the suction structure, the to-be-spread reagent is driven under the action of a suction force to leave the storage assembly 610.

A manner in which the spreading drive assembly 620 adjusts the flow rate at which the to-be-spread reagent leaves the storage assembly 610 is not limited herein. In a specific embodiment, the spreading drive assembly 620 is provided with a flow channel connected to the outlet of the storage assembly 610. The to-be-spread reagent flows out of the automatic underwater spreading assembly 60 through the flow channel. The spreading drive assembly 620 may change a cross-sectional area of the flow channel to adjust the flow rate of the to-be-spread reagent.

The reagent outlet 630 may serve as an outlet for the to-be-spread reagent to leave the storage assembly 610 and enter the liquid. The automatic underwater spreading assembly 60 may include one or more reagent outlets 630. As shown in FIG. 67, the reagent outlet 630 may be provided inside the automatic underwater spreading assembly 60. After the to-be-spread reagent flows out through the reagent outlet 630, the to-be-spread reagent may be mixed with other liquid (such as cleaned liquid) that is located in the same space, and then, the mixed liquid flows out through the main pump water outlet 214. For details about the cleaned liquid and the main pump water outlet 214, refer to the following description.

In some embodiments, the reagent outlet 630 may be provided on the storage cavity 611 of the automatic underwater spreading assembly 60. For example, the reagent outlet 630 may be provided on at least one of the top, the bottom, and a side portion of the storage cavity 611 of the automatic underwater spreading assembly 60, so that the to-be-spread reagent can enter the water body directly through the reagent outlet 630 to complete spreading.

In some embodiments, when the automatic underwater spreading assembly 60 floats on the water surface and spreads the reagent, the automatic underwater spreading assembly 60 may include at least one reagent outlet 630 located under the water surface or located close to the water body to ensure that the to-be-spread reagent can enter the liquid. For example, when the automatic underwater spreading assembly 60 floats on the water surface and spreads the reagent, the reagent outlet 630 may be located on the storage cavity 611 disposed at a side portion of the automatic underwater spreading assembly 60 under the liquid surface, or located on the storage cavity 611 disposed at the bottom of the automatic underwater spreading assembly 60.

The control assembly 910 is configured to control the spreading drive assembly 620. The control assembly 910 is connected to the spreading drive assembly 620 via signals (such as Bluetooth connection) to control the spreading drive assembly 620.

The control assembly 910 may control the spreading drive assembly 620 based on a first operating parameter. The first operating parameter may be an operating parameter of the spreading drive assembly 620. In some embodiments, the first operating parameter may include at least a speed at which the to-be-spread reagent leaves the storage assembly 610. For example, the first operating parameter may be a first water discharging speed, such as 0.25 mL/s, indicating that the spreading drive assembly 620 drives 0.25 mL of the to-be-spread reagent to leave the storage assembly 610 per second.

In some embodiments, the first operating parameter may further include one or more of: a spreading time range, a drive interval, and drive duration. The spreading time range may be a time range in which the spreading drive assembly 620 drives the to-be-spread reagent to leave the storage assembly 610. The drive interval may be an interval between two times of driving the to-be-spread reagent by the spreading drive assembly 620 to leave the storage assembly 610. The drive duration may be duration in which the spreading drive assembly 620 drives the to-be-spread reagent to leave the storage assembly 610. For example, the first operating parameter may further include the drive interval, such as 5s, and the drive duration, such as 3s. In other words, the spreading drive assembly 620 may drive the to-be-spread reagent to leave the storage assembly 610 for 3s, the spreading drive assembly 620 takes a rest of 5s, and then, the spreading drive assembly 620 drives the to-be-spread reagent to leave the storage assembly 610 for 3s, and the rest may be deduced by analogy. For another example, the first operating parameter may include the spreading time range, such as 13s, and the drive duration, such as 5s. In other words, within each spreading time range of 13s, the spreading drive assembly 620 may drive the to-be-spread reagent to leave the storage assembly 610 for 5s. The drive duration of 5s may be at any time range of the spreading time range. For example, the drive duration of 5s may be the first 5s or the last 5s of the spreading time range. Based on the above disposition, the automatic underwater spreading assembly 60 can automatically spread the reagent to the liquid of the pool, and the reagent does not need to be spread manually. In this way, water quality maintenance of the pool is simple and convenient, a maintenance period of the pool is accelerated, and maintenance costs are reduced.

In some embodiments, the automatic underwater spreading assembly 60 further includes a moving assembly 110. The moving assembly 110 may be configured to drive the automatic underwater spreading assembly 60 to move along a motion path. The moving assembly 110 may include various components for driving the automatic underwater spreading assembly 60 to move. As shown in FIG. 66 and FIG. 67, the moving assembly 110 may include a track 111. The automatic underwater spreading assembly 60 may move at the bottom of the pool by using the track 111. The moving assembly 110 may further include two second propellers 132. The second propellers 132 may be configured to drive the liquid to be discharged from the automatic underwater spreading assembly 60 to generate a driving force to drive the automatic underwater spreading assembly 60 to move in the water body under an action force in a direction opposite to a water discharging direction.

The motion path may be a path at which the automatic underwater spreading assembly 60 moves in the water body when performing maintenance such as algae removal, clarification, and disinfection. The motion path may be, but is not limited to, a rectangular motion path, a random motion path, a Z-shaped motion path, a spiral motion path, a square spiral motion path, and the like. The motion path may be set by a user (for example, a pool maintainer) as required. For example, when the automatic underwater spreading assembly 60 disinfects a large water body, the user may set the motion path as the spiral motion path or the square spiral motion path. In other words, the cleaning device 10 may move in the water body along the spiral motion path or the square spiral motion path and spread disinfectant. The cleaning device 10 may move from an outer portion to an inner portion of the water body until the entire surface of the water body is covered. In some embodiments, the motion path may be determined in other manners. For example, the control assembly 910 may determine the motion path based on a parameter determining model. For details about determining the motion path based on the parameter determining model, refer to FIG. 74 and related descriptions. The parameter determining model may be configured to quickly and accurately determine the motion path of the automatic underwater spreading assembly 60 in the water body, so that the reagent is spread pertinently. This improves maintenance efficiency of the water body and reduces maintenance costs.

When the automatic underwater spreading assembly 60 is provided with the moving assembly 110, the control assembly 910 is further configured to control the moving assembly 110. The control assembly 910 is connected to the moving assembly 110 via signals to control the moving assembly 110. The control assembly 910 may control the moving assembly 110 based on a second operating parameter. The second operating parameter may be an operating parameter of the moving assembly 10. The second operating parameter may include a moving speed and a motion path of the moving assembly 110.

In some embodiments, the control assembly 910 may determine the first operating parameter and the second operating parameter in various methods. The first operating parameter and/or the second operating parameter may be a preset default parameter. When the first operating parameter or the second operating parameter is the preset default parameter, the control assembly 910 may adjust one of the first operating parameter or the second operating parameter that is not the default parameter, to control a quantity of to-be-spread reagents per unit volume (for example, per m³) in the water body. When both the first operating parameter and the second operating parameter are preset default parameters, a concentration of the to-be-spread reagent may be adjusted in advance to adjust the quantity of reagents.

In some embodiments, the control assembly 910 may perform modeling or use various data analysis algorithms, such as regression analysis and discriminant analysis, to determine the first operating parameter and the second operating parameter. The control assembly 910 may determine the first operating parameter of the spreading drive assembly 620 and/or the second operating parameter of the moving assembly 110 based on a target task. For details about the above embodiments, refer to FIG. 74 and related descriptions.

Specifically, an operating mode of the automatic underwater spreading assembly 60 may be that the control assembly 910 controls the moving assembly 110 to drive the automatic underwater spreading assembly 60 to move in the water body and simultaneously controls the spreading drive assembly 620 to operate. The to-be-spread reagent inside the storage assembly 610 is spread in the liquid by using the spreading drive assembly 620, so that the to-be-spread reagent is evenly spread. In this embodiment, the automatic underwater spreading assembly 60 maintains the water body, so that the reagent is spread in the water body automatically instead of manually spreading the reagent. In addition, it is ensured that the reagent is fully and evenly mixed with the liquid without any circulation system (such as a swimming pool circulation system). This can shorten a maintenance period of the water body and reduce maintenance costs.

In some embodiments, the storage assembly 610 includes a storage cavity 611. The storage cavity 611 is configured to store the to-be-spread reagent. In some embodiments, the storage assembly 610 includes one or more storage cavities 611. Different storage cavities 611 are configured to store different to-be-spread reagents. When the storage assembly 610 includes a plurality of storage cavities 611, the spreading drive assembly 620 may be connected to each storage cavity 611, so that the spreading drive assembly 620 can drive a corresponding to-be-spread reagent to leave the storage cavity 611 when needed. In addition, a composite of various to-be-spread reagents may be spread to avoid the following case: The to-be-spread reagent stored in one storage cavity 611 needs to be replaced when different to-be-spread reagents need to be spread. The storage cavity 611 is provided with a reagent opening 6181 configured to allow the interior of the storage cavity 611 to communicate with the external environment. The reagent opening 6181 includes a second reagent opening 61812 and a first reagent opening 61811. The second reagent opening 61812 is configured for fluid to enter the storage cavity 611, and the fluid may be the to-be-spread reagent. The first reagent opening 61811 is configured for the fluid to flow out of the storage cavity 611.

The first reagent opening 61811 may be connected to other structures, so that the to-be-spread reagent can flow from the storage assembly 610 to the other structures. Alternatively, the first reagent opening 61811 may not be connected to other structures, so that the to-be-spread reagent can be spread directly into the liquid through the first reagent opening 61811. The second reagent opening 61812 and the first reagent opening 61811 may be respectively disposed on two opposite sides of the storage cavity 611. For example, in a gravity direction, a side of the storage cavity 611 faces downward, and the side is provided with the first reagent opening 61811, and a side of the storage cavity 611 faces upward, and the side is provided with the second reagent opening 61812, so that the to-be-spread reagent can enter the storage cavity 611 through the second reagent opening 61812 and leave the storage cavity 611 through the first reagent opening 61811 under the gravity. In this way, when the to-be-spread reagent in the storage cavity 611 is insufficient, the user may replenish the to-be-spread reagent into the storage cavity 611 through the second reagent opening 61812, which is convenient to operate.

In some embodiments, a first one-way valve 6182 is disposed at the second reagent opening 61812. The first one-way valve 6182 is configured to allow the fluid to unidirectionally flow in a direction in which the fluid enters the storage cavity 611. The first one-way valve 6182 may be a known one-way valve, provided that the fluid can unidirectionally flow. Details are not described herein. The first one-way valve 6182 is disposed, so that the to-be-spread reagent is not easily leaked out of the storage assembly 610 through the second reagent opening 61812, leading to good sealing performance of the storage cavity 611.

In some embodiments, a sealing cover is detachably disposed at an end of the second reagent opening 61812, and the end is away from the storage cavity 611. When the sealing cover covers the second reagent opening 61812, the second reagent opening 61812 is closed, and the external liquid cannot enter the second reagent opening 61812. When the sealing cover is detached from the second reagent opening 61812, the second reagent opening 61812 is opened, and the external liquid can enter the storage cavity 611 through the second reagent opening 61812. Based on the above disposition, the sealing cover can reduce a probability that external debris enters the storage cavity 611, so that the to-be-spread reagent is not easily contaminated, leading to a good cleaning effect of the automatic underwater spreading assembly 60.

The second reagent opening 61812 may directly communicate with the external environment or may be connected to other structures, and the to-be-spread reagent is added to the storage cavity 611 indirectly through the other structures.

In one embodiment, the automatic underwater spreading assembly 60 further includes a cleaning device body 101. The cleaning device body 101 is configured to carry the spreading drive assembly 620, the moving assembly 110, and the like. The storage cavity 611 is disposed inside the cleaning device body 101. The cleaning device body 101 is provided with a liquid adding opening communicating with the second reagent opening 61812. When the to-be-spread reagent flows to the liquid adding opening, the to-be-spread reagent flows to the second reagent opening 61812 through the liquid adding opening to enter the storage cavity 611. Based on the above disposition, the user may add the to-be-spread reagent to the storage cavity 611 through the liquid adding opening instead of directly through the second reagent opening 61812. A position at which the storage cavity 611 is mounted may not be limited to a position close to a surface of the automatic underwater spreading assembly 60, leading to a more flexible structural design. In addition, the liquid adding opening may be provided at a position that is easier for the user to operate, leading to convenient operation.

In some embodiments, a liquid inlet pump is disposed at the second reagent opening 61812. The liquid inlet pump is configured to drive the liquid to flow into the storage cavity 611. The liquid inlet pump may be a peristaltic pump or any other pump that can perform the above function. The liquid inlet pump may change a flow rate at which the liquid enters the storage cavity 611. The to-be-spread reagent cannot leave the storage cavity 611 before being mixed with the liquid. For example, the to-be-spread reagent may be in a solid state. The to-be-spread reagent may be gradually dissolved in the liquid. When the flow rate at which the liquid enters the storage cavity 611 changes, a speed at which the to-be-spread reagent is mixed with the liquid changes. For example, when the flow rate at which the liquid enters the storage cavity 611 increases, the speed at which the to-be-spread reagent is mixed with the liquid increases, and a speed at which the to-be-spread reagent leaves the storage cavity 611 increases. Based on the above disposition, the storage assembly 610 controls the speed at which the to-be-spread reagent leaves the storage cavity 611 by controlling an operating state of the liquid inlet pump. This facilitates simple control and convenient use.

In some other embodiments, the storage assembly 610 includes a storage cavity 611. The storage cavity 611 is provided with a reagent opening 6181. The reagent opening 6181 is configured for the to-be-spread reagent to enter and leave the storage cavity 611. A first one-way valve 6182 is detachably disposed at the reagent opening 6181. The first one-way valve 6182 is configured to allow fluid to unidirectionally flow in a direction in which the fluid enters the storage cavity 611. The fluid may be the to-be-spread reagent. When the first one-way valve 6182 is disposed at the reagent opening 6181, the fluid can only enter the storage cavity 611. When the first one-way valve 6182 is detached from the reagent opening 6181, the fluid can enter or leave the storage cavity 611. Based on the above disposition, the user may control the to-be-spread reagent to enter or leave the storage cavity 611 by mounting or detaching the first one-way valve 6182. The storage cavity 611 needs to be provided with only one reagent opening 6181, leading to a simple structure.

In some embodiments, the storage cavity 611 may include a flexible storage cavity 611 and/or a rigid storage cavity 611. In some embodiments, a sealing member may be disposed in the storage cavity 611. The sealing member is configured to allow the to-be-spread reagent to be sealed and stored in the storage cavity 611, to prevent the to-be-spread reagent from leaking into the external liquid. The sealing member may be any structure capable of sealing the storage cavity 611. For example, when the storage cavity 611 is the rigid storage cavity 611, the sealing member may be a sealing cover. A body of the rigid storage cavity 611 and the sealing cover may be provided with thread structures that mate with each other. The sealing cover may be configured to seal the rigid storage cavity 611 through the thread structures. The sealing cover may alternatively be a sealing structure 670 such as a rubber plug.

The to-be-spread reagent may be stored in the flexible storage cavity 611. The flexible storage cavity 611 may be made of a flexible material. The flexible material may include, but is not limited to, one or more of polyvinyl alcohol resin, polyethylene terephthalate, rubber, and the like. The flexible material has certain flexibility, so that the flexible storage cavity 611 can be deformed. It may be understood that when the to-be-spread reagent leaves the flexible storage cavity 611, a space of the flexible storage cavity 611 is reduced accordingly, so that pressure inside the flexible storage cavity 611 is automatically adjusted to ensure a balance between water pressure inside and water pressure outside the flexible storage cavity 611. In this way, the to-be-spread reagent can leave smoothly.

In some embodiments, the flexible storage cavity 611 may be a flexible storage bag. The flexible storage bag may store a liquid to-be-spread reagent or a solid to-be-spread reagent that is dissolved in the liquid in advance. Before use, the to-be-spread reagent may be stored in the flexible storage bag, and the to-be-spread reagent may be sealed in the flexible storage bag through a heat sealing process. An outlet of the flexible storage bag may be connected to an end of a drive pump. In some embodiments, the flexible storage cavity 611 may be in other flexible structures. For example, the flexible storage cavity 611 may be a flexible storage ball.

The to-be-spread reagent may alternatively be stored in the rigid storage cavity 611. An outlet of the rigid storage cavity 611 is connected to the spreading drive assembly 620. The rigid storage cavity 611 may be made of a rigid material (such as glass or ceramic). It may be understood that, because the rigid material is not deformed easily, pressure inside the rigid storage cavity 611 changes when the to-be-spread reagent leaves the rigid storage cavity 611, and if water pressure is not adjusted, the to-be-spread reagent cannot leave the rigid storage cavity 611 smoothly.

In some embodiments, the rigid storage cavity 611 may include a pressure adjustment part. The pressure adjustment part may be configured to adjust the pressure inside the rigid storage cavity 611, so that a balance between pressure inside and pressure outside the rigid storage cavity 611 is ensured. For example, when the to-be-spread reagent leaves the rigid storage cavity 611, the pressure adjustment part may drive air to be input into the rigid storage cavity 611 to ensure the balance between the pressure (for example, air and/or water pressure) inside and the water pressure outside the rigid storage cavity 611. In this way, the to-be-spread reagent can leave smoothly.

In some embodiments, when the automatic underwater spreading assembly 60 includes the flexible storage cavity 611 and the rigid storage cavity 611, the flexible storage cavity 611 may be disposed inside the rigid storage cavity 611 to protect the flexible storage cavity 611 from being damaged.

In some embodiments, the storage cavity 611 is provided with the reagent opening 6181. The reagent opening 6181 includes an avoidance opening 61813 and a connection opening 61814. The avoidance opening 61813 is provided on the rigid storage cavity 611. The connection opening 61814 is provided on the flexible storage cavity 611. The connection opening 61814 extends from the avoidance opening 61813 to an outer surface of the rigid storage cavity 611. The first one-way valve 6182 is disposed at the connection opening 61814. The first one-way valve 6182 is configured for the to-be-spread reagent to unidirectionally flow. In this way, the to-be-spread reagent can enter, through the protruding connection opening 61814, the flexible storage cavity 611 located inside the rigid storage cavity 611.

Further, the connection opening 61814 includes a rigid connection portion. Rigidness of the rigid connection portion is greater than that of the flexible storage cavity 611. The rigid connection portion has certain rigidness and is not deformed easily. The rigid connection portion extends through the avoidance opening 61813. A peripheral surface of the rigid connection portion is attached to an inner wall of the avoidance opening 61813. In this way, when the to-be-spread reagent is added to the flexible storage cavity 611, a shape of the rigid connection portion may be better maintained, and the rigid connection portion is not collapsed easily, leading to a stable process of adding the to-be-spread reagent. In addition, the peripheral surface of the rigid connecting portion is attached to the inner wall of the avoidance opening 61813, so that liquid, debris, and the like cannot easily enter a space between the flexible storage cavity 611 and the rigid storage cavity 611, and the storage assembly 610 can be clean.

In some embodiments, the automatic underwater spreading assembly 60 further includes a cleaning device body 101. The cleaning device body 101 is configured to carry the spreading drive assembly 620 and the moving assembly 110. The storage assembly 610 is detachably disposed on the cleaning device body 101. In this way, when the to-be-spread reagent in the underwater automatic dispersing assembly 60 is insufficient, the storage assembly 610 is directly replaced to replenish the to-be-spread reagent, leading to convenient use.

In some embodiments, the spreading drive assembly 620 includes a spreading drive pump 621. The spreading drive pump 621 is configured to drive the to-be-spread reagent to leave the storage assembly 610. The spreading drive pump 621 may be a peristaltic pump or any other pump (such as a syringe pump) that can perform the function. One end of the spreading drive pump 621 is connected to the outlet of the storage assembly 610. The other end of the spreading drive pump 621 communicates with the reagent outlet 630. One end of the spreading drive pump 621 directly communicates with the reagent outlet 630 or communicates with the reagent outlet 630 through other components of the underwater automatic dispersing assembly 60.

As shown in FIG. 66 and FIG. 67, in some embodiments, the spreading drive pump 621 may include a spreading drive pump body 6211, a first duct 6212, and a second duct 6213. The spreading drive pump body 6211 is configured to provide a driving force for the to-be-spread reagent to leave the storage assembly 610. The first duct 6212 is a channel for the to-be-spread reagent to leave the storage assembly 610. One end of the first duct 6212 is connected to the outlet of the storage assembly 610, and the other end of the first duct 6212 is connected to the spreading drive pump body 6211. The second duct 6213 is configured to guide the to-be-spread reagent to the reagent outlet 630. One end of the second duct 6213 is connected to the spreading drive pump body 6211, and the other end of the second duct 6213 communicates with the reagent outlet 630. In this way, the to-be-spread reagent is driven by the spreading drive pump body 6211 to leave from the outlet of the storage assembly 610 and flow out of the reagent outlet 630 through the first duct 6212 and the second duct 6213. The spreading drive pump 621 drives the to-be-spread reagent to leave the storage assembly 610 and be spread in the water body, so that the underwater automatic dispersing assembly 60 can evenly and comprehensively spread the reagent with high spreading efficiency.

In some embodiments, the spreading drive pump 621 has a first operating state and a second operating state. When the spreading drive pump 621 is in the first operating state, the spreading drive pump 621 generates a driving force in a direction from the storage assembly 610 to the reagent outlet 630, and the spreading drive pump 621 drives the to-be-spread reagent to leave the storage assembly 610. When the spreading drive pump 621 is in the second operating state, the spreading drive pump 621 generates a driving force in a direction from the reagent outlet 630 to the storage assembly 610, and the spreading drive pump 621 drives residual liquid between the reagent outlet 630 and the storage assembly 610 to move to the storage assembly 610, so that a flow channel between the reagent outlet 630 and the storage assembly 610 is unobstructed. In this way, the spreading drive pump 621 drives the to-be-spread reagent to leave the storage assembly 610 in the first operating state, and the spreading drive pump 621 is switched to the second operating state after spreading the reagent, to pump and discharge the residual liquid between the reagent outlet 630 and the storage assembly 610, so that the flow channel between the reagent outlet 630 and the storage assembly 610 is not blocked easily.

In some embodiments, the spreading drive assembly 620 may include a piston drive member. The piston drive member may move in the rigid storage cavity 611 to squeeze the to-be-spread reagent out of the rigid storage cavity 611. The pressure adjustment member adjusts the pressure in the rigid storage cavity 611, and the piston drive member is configured to squeeze the to-be-spread reagent out of the rigid storage cavity 611, so that the to-be-spread reagent can be spread evenly to the water body to ensure that an appropriate quantity of reagents are sufficiently mixed with the liquid in the pool.

The rigid storage cavity 611 may be structures in various shapes. For example, the rigid storage cavity 611 may be rectangular or cylindrical. In some embodiments, the rigid storage cavity 611 may include at least one bent portion. The bent portion may be bent at a right angle or another angle, or may be curvedly bent. As shown in FIG. 68, the rigid storage cavity 611 may include an outlet of the rigid storage cavity 611, a first bent portion 613, a second bent portion 614, a third bent portion 615, and a fourth bent portion 616. Each of the first bent portion 613, the second bent portion 614, the third bent portion 615, and the fourth bent portion 616 is bent at the right angle.

It may be understood that when the rigid storage cavity 611 is a hollow rectangular or other structures without any bent portion, and the piston drive member moves in the rigid storage cavity 611, if a volume of the rigid storage cavity 611 is large, the piston drive member may squeeze out a large quantity of to-be-spread reagents even when moving for a short distance, which is inconvenient to precisely control the quantity of to-be-spread reagents, or if the volume of the rigid storage cavity 611 is small, the quantity of to-be-spread reagents can be precisely controlled, but a total volume of the rigid storage cavity 611 for storing the to-be-spread reagents is small, leading to inconvenient use. In some embodiments of the present disclosure, at least one bent portion is disposed in the rigid storage cavity 611, so that the rigid storage cavity 611 is divided into a plurality of small duct structures. In this way, while the total volume of the rigid storage cavity 611 for storing the to-be-spread reagents is ensured, the quantity of to-be-spread reagents can be precisely controlled.

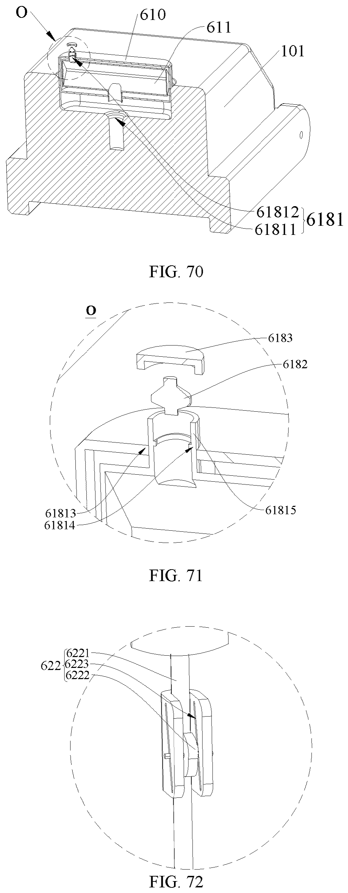

As shown in FIG. 72, in some embodiments, the to-be-spread reagent leaves the storage cavity 611 under the gravity. The spreading drive assembly 620 is configured to adjust a flow rate at which the to-be-spread reagent leaves the storage assembly 610. The spreading drive assembly 620 includes a spreading duct 6221 and a flow rate adjustment part 6222. The spreading duct 6221 communicates with an outlet of the storage cavity 611. The to-be-spread reagent is spread into the liquid through the spreading duct 6221. The flow rate adjustment part 6222 is configured to change a flow rate of fluid in the spreading duct 6221. Based on the above disposition, during spreading the to-be-spread reagent, the automatic underwater spreading assembly 60 can precisely control a dose of the spread reagent. This facilitates convenient use and helps reduce a quantity of to-be-spread reagents and reduce costs.

A specific manner in which the flow rate adjustment part 6222 changes the flow rate in the spreading duct 6221 may be changing a cross-sectional area of the spreading duct 6221 or a size of the outlet of the storage cavity 611. This is not limited herein.

In a specific embodiment, the flow rate adjustment part 6222 covers the outlet of the storage cavity 611. The flow rate adjustment part 6222 may move relative to the storage cavity 611 to change an opening area of the outlet of the storage cavity 611.

In another specific embodiment, a wall of the spreading duct 6221 may be elastic. The flow rate adjustment part 6222 may move relative to the spreading duct 6221 between a first position and a second position. The first position may be a position away from the spreading duct 6221. The second position may be a position close to the spreading duct 6221. In a process in which the flow rate adjustment part 6222 moves from the first position to the second position, the flow rate adjustment part 6222 is in contact with and squeezes the spreading duct 6221 to change the cross-sectional area of the spreading duct. In this way, the flow rate adjustment part 6222 can change the flow rate in the spreading duct 6221 by squeezing the spreading duct 6221, leading to a simple structure.

In some embodiments, the spreading drive assembly 620 further includes a position-limiting groove 6223. The position-limiting groove 6223 is provided on a side of the spreading duct 6221. Along an axial direction of the spreading duct 6221, a shortest distance from the position-limiting groove 6223 to an axis of the spreading duct 6221 gradually increases or decreases. In other words, the position-limiting groove 6223 tilts relative to the axis of the spreading duct 6221. The flow rate adjustment part 6222 is slidably disposed in the position-limiting groove 6223. The flow rate adjustment part 6222 slides between the first position and the second position along the position-limiting groove 6223. Based on the above disposition, the flow rate adjustment part 6222 can slide along the position-limiting groove 6223, and the position-limiting groove 6223 may guide a movement of the flow rate adjustment part 6222. In this way, the flow rate adjustment part 6222 can precisely move to the first position or the second position, and the spreading drive assembly 620 can adjust the flow rate of the to-be-spread reagent more precisely.

The movement of the flow rate adjustment part 6222 may be controlled by the control assembly 910 or manually controlled. A shape of the flow rate adjustment part 6222 may be determined based on an actual situation, provided that the flow rate adjustment part 6222 can squeeze the spreading duct 6221. This is not limited herein. In a specific embodiment, the flow rate adjustment part 6222 includes a squeezing portion in a round-disc shape and a rotation shaft disposed on a side of the squeezing portion. The rotation shaft is slidably embedded in the position-limiting groove 6223. A periphery of the squeezing portion squeezes the spreading duct 6221.

In some embodiments, the spreading drive assembly 620 may include the spreading drive pump 621, the spreading duct 6221, and the flow rate adjustment part 6222. The spreading drive pump 621 is configured to provide a driving force for the to-be-spread reagent to leave the storage assembly 610. The spreading duct 6221 is provided between the storage cavity 611 and the spreading drive pump 621. An end of the spreading duct 6221 communicates with the outlet of the storage cavity 611, and the other end communicates with the spreading drive pump 621. The spreading duct 6221 may alternatively be provided between the spreading drive pump 621 and the reagent outlet 630. One end of the spreading duct 6221 communicates with the spreading drive pump 621, and the other end communicates with the reagent outlet 630. In this way, the spreading drive assembly 620 is configured to drive the to-be-spread reagent to leave the storage assembly 610 and adjust the flow rate at which the to-be-spread reagent leaves the storage assembly 610.

As shown in FIG. 75 to FIG. 86, in some embodiments, the automatic underwater spreading assembly 60 further includes a sealing structure 670. The cleaning device body 101 has a reagent inlet portion 107. The reagent inlet portion 107 is configured for the to-be-spread reagent to enter the cleaning device body 101. The reagent inlet portion 107 may be concave. The reagent outlet 630 is provided on the cleaning device body 101 and communicates with the reagent inlet portion 107. The storage assembly 610 includes the storage cavity 611 and a valve structure 650 communicating with the storage cavity 611. The storage assembly 610 is disposed on the cleaning device body 101. At least a part of the valve structure 650 extends into the reagent inlet portion 107. The valve structure 650 is configured for the liquid to unidirectionally flow, so that at least a part of the liquid in the storage cavity 611 can flow into the reagent inlet portion 107 through the valve structure 650. At least a part of the sealing structure 670 is located in the reagent inlet portion 107 to seal a joint between the valve structure 650 and the reagent inlet portion 107.

According to the technical solution of this embodiment, during operation of the automatic underwater spreading assembly 60, the sealing structure 670 can seal the joint between the valve structure 650 and the reagent inlet portion 107, that is, the sealing structure 670 seals an assembling gap between an inner wall of the reagent inlet portion 107 and an outer circumferential surface of the valve structure 650, to prevent the liquid in the pool from flowing into the reagent inlet portion 107 through the assembling gap. This resolves a problem in the conventional technology that the liquid in the pool enters the automatic underwater spreading assembly 60 during operation. In this way, the following case is avoided: The reagent is ineffective because the liquid in the cleaning device body 101 is diluted with the liquid in the pool, so that cleaning reliability of the automatic underwater spreading assembly 60 is improved. In addition, debris in the liquid in the pool is prevented from entering the cleaning device body 101, and the structure inside the cleaning device body 101 is prevented from being blocked or even damaged by the debris, so that a service life of the automatic underwater spreading assembly 60 is extended.

In some embodiments, the sealing structure 670 has a through hole 672 configured to allow the valve structure 650 to pass through. The through hole 672 communicates with the reagent inlet portion 107. The automatic underwater spreading assembly 60 further includes a blocking structure 680. At least a part of the blocking structure 680 is movably disposed in the reagent inlet portion 107. The blocking structure 680 is configured to block the through hole 672 and has a blocking state and an open state. When the storage assembly 610 is detached from the cleaning device body 101, the blocking structure 680 is switched to the blocking state to block the through hole 672. When the storage assembly 610 is assembled on the cleaning device body 101, the blocking structure 680 is switched to the open state to avoid at least a part of the through hole 672. The valve structure 650 communicates with the reagent inlet portion 107.

After the storage assembly 610 is detached from the cleaning device body 101, the liquid in the pool enters the reagent inlet portion 107 through the through hole 672. Consequently, the liquid in the pool flows into the automatic underwater spreading assembly 60 through the through hole 672 and the reagent inlet portion 107. The blocking structure 680 is disposed, so that the through hole 672 can be blocked by the blocking structure 680 in the blocking state after the storage assembly 610 is detached. In this way, the liquid or other substances in the pool are prevented from flowing into the cleaning device body 101 through the through hole 672, so that a pipeline for spreading the reagent is prevented from being blocked, and therefore, reagent spreading performed by the automatic underwater spreading assembly 60 is not affected. In addition, when the storage assembly 610 is assembled on the cleaning device body 101, the blocking structure 680 is switched to the open state, so that the reagent discharged through the valve structure 650 can flow into the cleaning device body 101, ensuring that the blocking structure 680 does not affect normal operation of the underwater automatic spreading assembly 60.

Specifically, when the automatic underwater spreading assembly 60 operates, the storage assembly 610 may be assembled to or detached from the automatic underwater spreading assembly 60. The blocking structure 680 is disposed to block the through hole 672, so that the liquid in the pool is prevented from being sucked into the reagent inlet portion 107 through the through hole 672 when the storage assembly 610 is detached from the automatic underwater spreading assembly 60. In this way, the reagent in the reagent inlet portion 107 is prevented from being diluted, and cleaning reliability of the automatic underwater spreading assembly 60 is improved.

Specifically, when the automatic underwater spreading assembly 60 stops operating, if the storage assembly 610 is detached, the through hole 672 is blocked by the blocking structure 680. In this way, the to-be-spread reagent in the reagent inlet portion 107 can be sealed, so that the following case is avoided: The to-be-spread reagent is ineffective because media, such as air and debris, enters the reagent inlet portion 107 through the through hole 672. Therefore, an effective time of the to-be-spread reagent is extended, and a waste of the to-be-spread reagent is avoided.

In an embodiment, when the blocking structure 680 is switched to the blocking state, the blocking structure 680 moves toward the sealing structure 670. When the blocking structure 680 is switched to the open state, the valve structure 650 pushes the blocking structure 680 to move away from the sealing structure 670. In this way, switching between states of the blocking structure 680 is implemented through a movement of the blocking structure 680, so that states of the blocking structure 680 can be switched more simply and easily. In addition, while the storage assembly 610 is mounted, the valve structure 650 can push the blocking structure 680 to move to be in the open state to ensure that the blocking structure 680 does not affect normal liquid transfer of the storage assembly 610 after the storage assembly 610 is mounted, so that operation reliability of the automatic underwater spreading assembly 60 is improved.

In some embodiments not shown in the accompanying drawings, a manner in which the blocking structure 680 blocks the through hole 672 may be determined based on an operating condition and a use requirement. For example, the blocking structure 680 is configured as a clamping structure. The blocking structure 680 clamps or loosens the sealing structure 670, so that the sealing structure 670 is deformed, and the blocking structure 680 blocks or avoids the through hole 672. Alternatively, the blocking structure 680 is movably disposed on the sealing structure 670, and the blocking structure 680 moves along a surface of the sealing structure 670 to block or avoid the through hole 672.

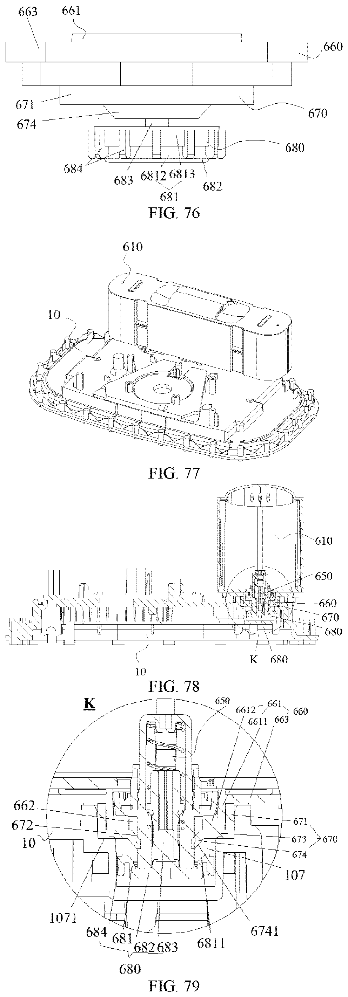

As shown in FIG. 78 and FIG. 79, the reagent inlet portion 107 is concave. The automatic underwater spreading assembly 60 further includes an elastic structure. One end of the elastic structure is connected to the blocking structure 680. The other end of the elastic structure is connected to a bottom wall of the reagent inlet portion 107. The elastic structure is configured to reset the blocking structure 680 to the blocking state. In this way, after the storage assembly 610 is detached, the blocking structure 680 can be automatically reset to the blocking state under an elastic force of the elastic structure without manual reset. This improves automation of the automatic underwater spreading assembly 60 and reduces labor intensity. In addition, the elastic structure can also push the blocking structure 680 to improve tightness of contact between the blocking structure 680 and the sealing structure 670. This improves blocking reliability of the blocking structure 680.

Optionally, the elastic structure may be a spring. In some embodiments, the elastic structure is sleeved on at least a part of the blocking structure 680. In this way, the blocking structure 680 supports and guides the elastic structure, so that the elastic structure can be prevented from deviating and being deformed, and the blocking structure 680 can be reset to the blocking state. This further improves resetting reliability of the elastic structure.

Specifically, one end of the spring is connected to the blocking structure 680, and the other end of the spring is connected to the bottom wall of the reagent inlet portion 107. The spring applies the elastic force to the blocking structure 680 in a direction toward the sealing structure 670, so that the blocking structure 680 is reset to the blocking state.

In some embodiments, when the blocking structure 680 is in the open state, an end of the sealing structure 670 is provided with the through hole 672, and there is a preset distance between the end and the blocking structure 680, so that a circulation gap is enclosed between at least a part of the blocking structure 680 and the sealing structure 670. The valve structure 650 communicates with the reagent inlet portion 107 through the circulation gap. In this way, when the blocking structure 680 is in the open state, the circulation gap is formed between the blocking structure 680 and the sealing structure 670, so that the liquid flowing out of the valve structure 650 can flow into the reagent inlet portion 107 through the circulation gap. This further improves the operation reliability of the automatic underwater spreading assembly 60.

As shown in FIG. 78 and FIG. 79, a stepped surface 1071 is disposed inside the reagent inlet portion 107. The sealing structure 670 includes a first sealing portion 671 and a second sealing portion connected to each other. The second sealing portion is disposed on the stepped surface 1071. The first sealing portion 671 is located on a side of the second sealing portion, and the side is away from the stepped surface 1071. The second sealing portion has the through hole 672. The inner wall of the through hole 672 is in an interference fit with the outer circumferential surface of the valve structure 650. The first sealing portion 671 is configured to seal at least a part of the gap between the valve structure 650 and the reagent inlet portion 107. In this way, a structure of the sealing structure 670 can mate with a structure of the reagent inlet portion 107. This increases a sealing area of the sealing structure 670 and improves sealing reliability of the sealing structure 670. In addition, because the through hole 672 is in an interference fit with the valve structure 650, the liquid flowing into the sealing structure 670 is blocked outside the sealing structure 670. This further improves the sealing reliability of the sealing structure 670.

The first sealing portion 671 is tubular. The second sealing portion includes an annular sealing portion 673 and a conical sealing portion 674. The annular sealing portion 673 is connected to the first sealing portion 671. The conical sealing portion 674 is connected to the annular sealing portion 673. The conical sealing portion 674 is disposed at an inner hole of the annular sealing portion 673 and is located at a side of the annular sealing portion 673, and the side is away from the first sealing portion 671. An end of the conical sealing portion 674 is away from the annular sealing portion 673, and the end is the through hole 672. In this way, the conical sealing portion 674 is disposed to increase a mating area between the through hole 672 and the valve structure 650. This improves the sealing reliability between a wall of the through hole 672 and the outer circumferential surface of the valve structure 650. In addition, structures of the first sealing portion 671 and the second sealing portion are simpler and can be processed more easily. This reduces processing costs of the sealing structure 670.

Optionally, the first sealing portion 671 is a tubular sealing ring, the annular sealing portion 673 is an annular sealing ring, and the conical sealing portion 674 is a conical sealing ring.

In some embodiments, the first sealing portion 671, the annular sealing portion 673, and the conical sealing portion 674 are an integral structure. This improves tightness of the connection between the first sealing portion 671, the annular sealing portion 673, and the conical sealing portion 674 and improves the sealing reliability of the sealing structure 670. In some embodiments, the sealing structure 670 is supported by a sealing-type material to improve the sealing reliability of the sealing structure 670. Optionally, the sealing-type material is silica gel.

Along a direction from the blocking structure 680 to the bottom wall of the reagent inlet portion 107, a diameter of the conical sealing portion 674 gradually decreases. An outer circumferential surface of the conical sealing portion 674 is a first conical mating surface 6741. The blocking structure 680 includes a tubular body 681, a blocking plate 682, and a pushing post 683. An end surface of the tubular body 681 is close to the sealing structure 670, and the end surface is provided with a second conical mating surface 6811. An end of the tubular body 681 is away from the sealing structure 670, and the end is provided with the blocking plate 682 to block the through hole 672. When the blocking structure 680 is in the blocking state, the tubular body 681 is sleeved on at least a part of the conical sealing portion 674, so that the first conical mating surface 6741 abuts against at least a part of the second conical mating surface 6811, and/or a plate surface of the blocking plate 682 faces the sealing structure 670, the plate surface is provided with the pushing post 683 configured to push a valve core of the valve structure 650, and the pushing post 683 is coaxially disposed with the through hole 672. In this way, the first conical mating surface 6741 mates with the second conical mating surface 6811, so that a mating area between the blocking structure 680 and the sealing structure 670 can be increased. This improves blocking reliability of the blocking structure 680 for the through hole 672. In addition, the pushing post 683 pushes the valve core of the valve structure 650 to open the valve structure 650, and the pushing post 683 coaxially disposed with the through hole 672 can be coaxially disposed with the valve structure 650, so that pushing reliability of the pushing post 683 for the valve core of the valve structure 650 is improved.

In some embodiments, in a process in which the valve structure 650 pushes the blocking structure 680 to be in the open state and continues to push the blocking structure 680 to enable the blocking structure 680 to abut against the bottom wall of the reagent inlet portion 107, the pushing post 683 continuously pushes the valve core of the valve structure 650, so that the valve structure 650 is opened. In this way, the liquid inside the storage cavity 611 can flow into the reagent inlet portion 107 through the valve structure 650.

In an embodiment, the tubular body 681 includes a second tubular structure 6812 and a third tubular structure 6813 connected to each other, and a second connection plate 6814. The third tubular structure 6813 is sleeved on the second tubular structure 6812 and is connected to the second tubular structure 6812 through the second connection plate 6814. The third tubular structure 6813 is disposed close to the sealing structure 670. A mounting space is enclosed by at least a part of an inner wall of the third tubular structure 6813, the second connection plate 6814, and at least a part of an outer circumferential surface of the second tubular structure 6812. The elastic structure is mounted in the mounting space. The second conical mating surface 6811 is disposed on an end of the third tubular structure 6813, and the end is close to the sealing structure 670. In this way, the mounting space is enclosed by the third tubular structure 6813, the second connection plate 6814, and the second tubular structure 6812, so that the elastic structure is mounted more stably and is prevented from falling off from the tubular body 681, and a resetting function of the elastic structure is not affected. This further improves the operation stability of the automatic underwater spreading assembly 60.

Specifically, the mounting space is a mounting groove. The elastic structure is sleeved on the second tubular structure 6812. An end of the elastic structure extends into the mounting groove and is limited and stopped by a groove wall of the mounting groove. Specifically, the blocking structure 680 further includes a positioning plate 684 disposed on an outer circumferential surface of the third tubular structure 6813. In this way, the positioning plate 684 is limited and stopped by the inner wall of the reagent inlet portion 107, so that the tubular body 681 is limited. There are at least two positioning plates 684. The at least two positioning plates 684 are spaced from each other around the tubular body 681. In this way, a moving direction of the tubular body 681 is limited by the positioning plates 684, so that the tubular body 681 is prevented from deviating or shaking, and reliability of the contact between the second conical mating surface 6811 and the first conical mating surface 6741 is not affected. This further improves the blocking reliability of the blocking structure 680. In addition, a quantity of positioning plates 684 may be set more flexible and diverse to be applicable to various operating conditions and use requirements. This improves processing flexibility of the worker.

In some embodiments, there are at least twelve positioning plates 684. The twelve positioning plates 684 are spaced from each other around the tubular body 681. It should be noted that a quantity of positioning plates 684 is not limited herein and may be adjusted based on an operating condition and a use requirement. Optionally, there may be two, three, four, five, six, or more positioning plates 684.

In some embodiments, an end surface of the positioning plate 684 is away from the sealing structure 670, and the end surface is provided with a guiding slope. In this way, in a process in which the worker sleeves the elastic structure, the guiding slope can guide a moving direction of the elastic structure. This reduces difficulty in sleeving the elastic structure.

In some embodiments, a plate surface of the positioning plate 684 faces the second tubular structure 6812, and the plate surface is flush with an inner wall of the third tubular structure 6813 to avoid unevenness of a joint between the positioning plate 684 and the third tubular structure 6813. This reduces sleeving smoothness of the elastic structure and reduces difficulty in sleeving the elastic structure.

In some embodiments, the automatic underwater spreading assembly 60 further includes a mounting structure 660. The mounting structure 660 is disposed between the storage assembly 610 and the sealing structure 670. The mounting structure 660 includes a tubular mounting portion 661 and a first connection plate 663 disposed on the tubular mounting portion 661. At least a part of the tubular mounting portion 661 is disposed in the reagent inlet portion 107. The tubular mounting portion 661 has a penetration hole 662 configured to allow the valve structure 650 to pass through. The first connection plate 663 is configured to be connected to the storage assembly 610 and/or the cleaning device body 101. In this way, the mounting structure 660 is disposed, so that the sealing structure 670 can be stably mounted in the reagent inlet portion 107 to prevent the sealing structure 670 from shaking or deviating, and the blocking structure 680 can completely block the through hole 672. This improves the sealing reliability of the sealing structure 670 and the blocking reliability of the blocking structure 680.

In some embodiments, the penetration hole 662 communicates with and is coaxially disposed with the through hole 672. This can reduce difficulty in enabling the valve structure 650 of the storage assembly 610 to pass through the through hole 672 and the penetration hole 662 and reduce disassembling difficulty and assembling difficulty.

In some embodiments, the first connection plate 663 is configured to be connected to the cleaning device body 101. This reduces a quantity of structures connected to the storage assembly 610. In this way, the worker can conveniently disassemble and assemble the storage assembly 610. This further reduces the disassembling difficulty and the assembling difficulty. In addition, because the first connection plate 663 is connected to the cleaning device body 101, the first connection plate 663 can be still configured to fix the tubular mounting portion 661 after the storage assembly 610 is disassembled. In some embodiments, the first sealing portion 671 is sleeved on the tubular mounting portion 661, and at least a part of the second sealing portion is located between the tubular mounting portion 661 and the stepped surface 1071. In this way, the first sealing portion 671 can seal a gap between an outer circumferential surface of the tubular mounting portion 661 and the inner wall of the reagent inlet portion 107, and the second sealing portion can seal a gap between the stepped face 1071 and a surface of the tubular mounting portion 661, where the surface faces the stepped face 1071. In this way, the sealing structure 670 seals the gap between the tubular mounting portion 661 and the reagent inlet portion 107 twice. This improves the sealing reliability of the sealing structure 670.

Specifically, although the sealing structure 670 can seal the gap between the outer circumferential surface of the tubular mounting portion 661 and the inner wall of the reagent inlet portion 107 twice, the liquid in the pool may still flow into the sealing structure 670 through a gap between a wall of the penetration hole 662 and the outer circumferential surface of the valve structure 650, and then flow into the reagent inlet portion 107 through the gap between the wall of the through hole 672 and the outer circumferential surface of the valve structure 650. The through hole 672 is in an interference fit with the valve structure 650, so that the liquid in the pool can be blocked outside the sealing structure 670. This further improves the sealing reliability of the sealing structure 670.

Specifically, the worker only needs to sleeve the first sealing portion 671 on the tubular mounting portion 661 to assemble the sealing structure 670. Specifically, if the through hole 672 is directly provided on the annular sealing portion 673, a mating area between the wall of the through hole 672 and the outer circumferential surface of the valve structure 650 depends on a thickness of the annular sealing portion 673, and the thickness of the annular sealing portion 673 depends on a distance of a gap between the tubular mounting portion 661 and the stepped surface 1071. In other words, based on the above disposition, the mating area between the wall of the through hole 672 and the outer circumferential surface of the valve structure 650 may be small, affecting the reliability of sealing between the through hole 672 and the valve structure 650. The conical sealing portion 674 is disposed, so that the mating area between the wall of the through hole 672 and the outer circumferential surface of the valve structure 650 can be adjusted to ensure that the mating area is sufficiently large. This improves the reliability of sealing between the through hole 672 and the valve structure 650.

In some embodiments, the tubular mounting portion 661 includes a first tubular structure 6611 and a plate structure 6612. The plate structure 6612 is disposed at an end of the first tubular structure 6611, and the end is close to the bottom wall of the reagent inlet portion 107. The penetration hole 662 is provided on the plate structure 6612. The first connection plate 663 is sleeved on the first tubular structure 6611. A fastener passes through the first connection plate 663 and the cleaning device body 101 to connect the tubular mounting portion 661 to the cleaning device body 101. The first sealing portion 671 is sleeved on the first tubular structure 6611. At least a part of the annular sealing portion 673 is disposed between the plate structure 6612 and the stepped surface 1071. In this way, the outer circumferential surface of the tubular mounting portion 661 can mate with the tubular first sealing portion 671 to ensure that the first sealing portion 671 is in close contact with the inner wall of the reagent inlet portion 107 and the outer circumferential surface of the first tubular structure 6611. This improves the sealing reliability of the first sealing portion 671. In addition, the annular sealing portion 673 can be in close contact with the stepped surface 1071 and the plate structure 6612. This improves the sealing reliability of the annular sealing portion 673.

Specifically, during assembling the storage assembly 610, the valve structure 650 extends through the penetration hole 662 and the through hole 672 sequentially and pushes the pushing post 683 of the blocking structure 680 in an extending process, so that the blocking structure 680 is pushed to move to be in the blocking state. After the blocking structure 680 abuts against the bottom wall of the reagent inlet portion 107, the pushing post 683 pushes the valve core of the valve structure 650. After the storage assembly 610 is assembled, the pushing post 683 pushes the valve structure 650 to be in the open state, and the storage cavity 611 of the storage assembly 610 communicates with the reagent inlet portion 107 of the cleaning device body 101.

In some embodiments, the automatic underwater spreading assembly 60 may further include a stirring assembly 640. The stirring assembly 640 is configured to stir the to-be-spread reagent that leaves the storage assembly 610, to evenly mix the reagent with liquid in a space in which the reagent is located. The stirring assembly 640 may be disposed at various positions on the automatic underwater spreading assembly 60. For example, the to-be-spread reagent flows out from a side of the reagent outlet 630, and the side is provided with the stirring assembly 640. For another example, the stirring assembly 640 may be disposed in another space in which the to-be-spread reagent enters after leaving the storage assembly 610.

In some embodiments, the stirring assembly 640 may include a stirring member that performs stirring based on a preset motion trajectory. For example, the stirring member may be a stirring rod or a rotating blade that performs stirring based on the preset motion trajectory. The preset motion trajectory may be a preset stirring trajectory in which the stirring member evenly mixes the to-be-spread reagent with the liquid in the space in which the reagent is located. For example, the preset motion trajectory may be a spiral motion trajectory. In other words, the stirring member rotates along a spiral trajectory to form a strong vortex in the water body, so that the to-be-spread reagent and the liquid are evenly mixed. The preset motion trajectory may be other trajectories, such as an up-down motion trajectory. As shown in FIG. 67, the stirring member may be an impeller of a main water pump 210. The impeller of the main water pump 210 performs stirring based on the preset motion trajectory, so that the to-be-spread reagent and the liquid which is located in the same space are mixed evenly. For more details about the main water pump 210, refer to the following description.

In some embodiments, the automatic underwater spreading assembly 60 may further include a filtering mechanism and the main water pump 210.

The filtering mechanism may be configured to clean liquid and/or a moving region of the automatic underwater spreading assembly 60. The filtering mechanism may include one or more of a filtering box 711, a filtering mesh (not shown in the figure), a roller brush for underwater cleaning 411, and other structures that can clean the liquid. The automatic underwater spreading assembly 60 may collect garbage or other debris on or under the water surface by using the filtering box 711. The filtering mesh may filter and remove the garbage or other debris in the liquid. When the automatic underwater spreading assembly 60 moves on a bottom wall or a side wall of a region (such as a swimming pool) that accommodates the liquid, the roller brush for underwater cleaning 411 may further clean the bottom wall or the side wall.

In some embodiments, the control assembly 910 may control the filtering mechanism based on a third operating parameter. The third operating parameter may be an operating parameter of the filtering mechanism. The third operating parameter may include, but is not limited to, an open state and a closed state of the filtering box 711, a rotation frequency of the roller brush for underwater cleaning 411, and the like. Similar to the first operating parameter and the second operating parameter, the third operating parameter may be a preset default parameter or may be determined based on the parameter determining module. For details about determining the third operating parameter based on the parameter determining model, refer to FIG. 74 and related descriptions.

The main water pump 210 may drive the external liquid to flow into the filtering mechanism of the automatic underwater spreading assembly 60 through a liquid inlet of the automatic underwater spreading assembly 60 and drive cleaned liquid in the filtering mechanism to be spread into the water body through a main pump water outlet 214. As shown in FIG. 66 and FIG. 67, the main water pump 210 may include the main water pump impeller and a main water pump motor 211. The main water pump motor 211 may provide power for the main water pump impeller to rotate. The main water pump impeller may rotate under the power of the main water pump motor 211 to provide a suction force to drive the liquid in the automatic underwater spreading assembly 60 to flow along a preset direction. In this way, the external liquid is driven to flow into the automatic underwater spreading assembly 60 through a filtering box opening for underwater cleaning 7162 and a filtering box opening for water surface cleaning 7161. The filtering mechanism may clean the liquid therein. The main water pump 210 may drive the filtering mechanism to discharge the cleaned liquid through the main pump water outlet 214.

In some embodiments, one end of the spreading drive assembly 620 communicates with the outlet of the storage assembly 610, and the other end of the spreading drive assembly 620 communicates with the reagent outlet 630. The main water pump 210 may drive the cleaned liquid to flow through the reagent outlet 630, evenly mix the to-be-spread reagent flowing through the reagent outlet 630 with the cleaned liquid, and spread the to-be-spread reagent to the water body through the main pump water outlet 214.

The automatic underwater spreading assembly 60 may include one or more liquid inlets and the main pump water outlet 214. The liquid inlet serves as an inlet for the external liquid to enter the automatic underwater spreading assembly 60. The main pump water outlet 214 serves as an outlet for the liquid in the automatic underwater spreading assembly 60 to leave the automatic underwater spreading assembly 60. In some embodiments, when the automatic underwater spreading assembly 60 floats on the water surface and spreads the reagent, the automatic underwater spreading assembly 60 includes at least one liquid inlet disposed under the water surface and the main pump water outlet 214 to ensure that liquid in the water body can be sucked through the liquid inlet and can be discharged into the water body through the liquid inlet. In some embodiments of the present disclosure, when the automatic underwater spreading assembly 60 floats on the water surface, the liquid inlet is disposed on the storage cavity 611, of the automatic underwater spreading assembly 60, under the water surface, to ensure that the automatic underwater spreading assembly 60 can operate normally. The main pump water outlet 214 is disposed on the storage cavity 611, of the automatic underwater spreading assembly 60, under the water surface, to ensure that the to-be-spread reagent is sufficiently effective in the water body.

In some embodiments, the main water pump 210 may further provide a driving force for the automatic underwater spreading assembly 60 to move. As shown in FIG. 66 and FIG. 67, the main water pump 210 may rotate to provide the suction force to drive the liquid in the automatic underwater spreading assembly 60 to flow along a preset direction. In this way, the external liquid is driven to flow into the automatic underwater spreading assembly 60 through the filtering box opening for underwater cleaning 7162, the filtering box opening for water surface cleaning 7161, and the main pump water inlet 213 and be discharged through the main pump water outlet 214. When the liquid is discharged through the main pump water outlet 214, a driving force in a direction opposite to a liquid discharging direction may be applied to the automatic underwater spreading assembly 60. For example, when the main pump water outlet 214 is disposed lower than the storage cavity 611 of the automatic underwater spreading assembly 60, and the main water pump 210 drives the liquid to be discharged through the main pump water outlet 214, an upward driving force may be applied to the automatic underwater spreading assembly 60. When the driving force is greater than the gravity of the automatic underwater spreading assembly 60 and another downward resistance, the automatic underwater spreading assembly 60 may move upward. In some embodiments of the present disclosure, the filtering mechanism and the main water pump 210 are disposed, so that the automatic underwater spreading assembly 60 can perform both cleaning and reagent spreading. This shortens a maintenance period of the water body and reduces maintenance costs of the water body.

In some embodiments, a driving mode of the spreading drive assembly 620 may include a continuous driving mode and an intermittent driving mode. When the spreading drive assembly 620 is in the continuous driving mode, the spreading drive assembly 620 may continuously drive the to-be-spread reagent to leave the storage assembly 610, and the corresponding first operating parameter may include the speed at which the to-be-spread reagent leaves the storage assembly 610. In this case, the automatic underwater spreading assembly 60 can continuously spread the reagent. The driving mode of the spreading drive assembly 620 may be preset by the user or determined by the control assembly 910. For details about determining the driving mode of the spreading drive assembly 620 by the control assembly 910, refer to FIG. 74 and related descriptions.

In some embodiments, the automatic underwater spreading assembly 60 may further include an operating mode selection module (not shown in the figure). The operating mode selection module may be configured to adjust an operating mode of the automatic underwater spreading assembly 60. The operating mode may include a spreading mode and a cleaning mode. The spreading mode may be a mode in which the to-be-spread reagent is spread from the automatic underwater spreading assembly 60 into the water body. The cleaning mode may be a mode in which garbage or other debris is cleaned and removed from the water body. That the automatic underwater spreading assembly 60 operates may mean that the automatic underwater spreading assembly 60 is in one operating mode or in two operating modes at the same time.

In some embodiments, the operating mode selection module may include a spreading selection unit. The spreading selection unit may be configured to adjust a driving mode of the automatic underwater spreading assembly 60 in the spreading mode. The driving mode of the automatic underwater spreading assembly 60 in the spreading mode may include the continuous driving mode and the intermittent driving mode. For more details about the continuous driving mode and the intermittent driving mode, refer to the above description. The spreading selection unit may control the driving mode of the spreading drive assembly 620 to perform mode switching between the continuous driving mode and the intermittent driving mode.

In some embodiments, the moving assembly 110 may be further configured to adjust a running mode of the automatic underwater spreading assembly 60. The running mode of the automatic underwater spreading assembly 60 may include a water surface running mode and an underwater running mode. The water surface running mode may indicate that the automatic underwater spreading assembly 60 floats and runs on the water surface. The underwater running mode may indicate that the automatic underwater spreading assembly 60 is submerged in the water body and runs. The moving assembly 110 may include a buoyancy cavity and/or a propeller in the vertical direction. The buoyancy cavity and/or the propeller in the vertical direction may provide an action force to the automatic underwater spreading assembly 60 in the vertical direction, so that the automatic underwater spreading assembly 60 can be switched between the position on the water surface and the position under the water surface.

In some embodiments of the present disclosure, various operating modes and running modes of the automatic underwater spreading assembly 60 are set, so that the automatic underwater spreading assembly 60 can perform water surface spreading, underwater spreading, water surface cleaning, and underwater cleaning. Further, the driving mode of the automatic underwater spreading assembly 60 may be adjusted during spreading. In this way, the user can select various modes based on requirements. This improves selection diversity of the user, enriches a manner in which the automatic underwater spreading assembly 60 can pertinently spread the reagent and/or clean the water body, and improves user experience.

In some embodiments, the automatic underwater spreading assembly 60 further includes a reagent dose detection assembly 601. The reagent dose detection assembly 601 is configured to detect an in-position state of the storage assembly 610 and/or a quantity of to-be-spread reagents stored in the storage assembly 610. Specifically, the in-position state of the storage assembly 610 is a state of whether the storage assembly 610 is mounted on the automatic underwater spreading assembly 60. When the storage assembly 610 is mounted on the automatic underwater spreading assembly 60, the storage assembly 610 is in the in-position state. When the storage assembly 610 is not mounted on the automatic underwater spreading assembly 60, the storage assembly 610 is not in the in-position state. The reagent dose detection assembly 601 may be configured to detect only the in-position state of the storage assembly 610. The reagent dose detection assembly 601 may alternatively be configured to detect only the quantity of to-be-spread reagents stored in the storage assembly 610. The reagent dose detection assembly 601 may alternatively be configured to detect both the in-position state of the storage assembly 610 and the quantity of to-be-spread reagents stored in the storage assembly 610. Based on the above disposition, the automatic underwater spreading assembly 60 detects in time, by using the reagent dose detection assembly 601, whether the quantity of to-be-spread reagents meets a spreading requirement, so that the user can replenish the to-be-spread reagent in time, and the automatic underwater spreading assembly 60 is used conveniently.

Compared to the conventional technology, this embodiment provides the automatic underwater spreading assembly 60 including the storage assembly 610, the spreading drive assembly 620, the reagent outlet 630, and the control assembly 910. The storage assembly 610 is configured to store the to-be-spread reagent. The spreading drive assembly 620 is connected to the storage assembly 610. The spreading drive assembly 620 is configured to drive the to-be-spread reagent to leave the storage assembly 610, and/or to adjust the flow rate at which the to-be-spread reagent leaves the storage assembly 610. The reagent outlet 630 serves as the outlet for the to-be-spread reagent to leave the storage assembly 610 and then enter the liquid. The control assembly 910 is connected to the spreading drive assembly 620 and the moving assembly 110 via signals to control the spreading drive assembly 620. In this way, the automatic underwater spreading assembly 60 can automatically spread the reagent to the liquid in the pool without manually spreading the reagent, leading to simple and convenient maintenance of water quality of the pool. This shortens the maintenance period of the pool and reduces maintenance costs.

As shown in FIG. 87 and FIG. 88, the present disclosure provides a cleaning device system 1. The cleaning device system 1 may be configured to clean a pool. The cleaning device system 1 includes the cleaning device 10 and a pool control assembly 50. The pool control assembly 50 is disposed in the pool. The pool control assembly 50 is configured for a water flow in the pool to circulate and/or serves as a related mating structure of the cleaning device 10. The cleaning device 10 and/or the pool control assembly 50 are/is provided with the automatic underwater spreading assembly 60. At least one of the cleaning device 10 and the pool control assembly 50 is further provided with a water quality detection assembly 690. The water quality detection assembly 690 is configured to obtain water quality data of various regions of the pool. The water quality data may include a pH value, turbidity, a quantity of total solids, salinity, and the like of the liquid in the pool. The water quality detection assembly 690 is connected to the control assembly 910 via signals. The water quality data may be transmitted to the control assembly 910.

Based on the above disposition, the cleaning device system 1 detects water quality by using the water quality detection assembly 690 and cleans water by using the automatic underwater spreading assembly 60, so that the water quality of the pool can be well monitored and maintained at a better state without manually spreading the reagent. In this way, the water quality of the pool can be maintained simply and conveniently, a maintenance period of the pool is shortened, and maintenance costs are reduced.

Disposition and distribution of the automatic underwater spreading assembly 60 and the water quality detection assembly 690 may be determined based on an actual situation. For example, the automatic underwater spreading assembly 60 may be disposed on only the cleaning device 10. The automatic underwater spreading assembly 60 may alternatively be disposed on only the pool control assembly 50. The automatic underwater spreading assembly 60 may alternatively be disposed on both the cleaning device 10 and the pool control assembly 50.

The water quality detection assembly 690 may be disposed on only the cleaning device 10. The water quality detection assembly 690 may alternatively be disposed on only the pool control assembly 50. The water quality detection assembly 690 may alternatively be provided on both the cleaning device 10 and the pool control assembly 50.

The automatic underwater spreading assembly 60 and the water quality detection assembly 690 are flexibly disposed, so that the user can flexibly configure the cleaning device system 1. For example, the automatic underwater spreading assembly 60 may be disposed on only the cleaning device 10, and the water quality detection assembly 690 may be disposed on the pool control assembly 50. In this way, the water quality of the pool can be detected by the pool control assembly 50, and the cleaning device 10 does not need to move frequently to reach a detection position. This increases a battery life of the cleaning device 10. For another example, the water quality detection assembly 690 may be disposed on the cleaning device 10, and the automatic underwater spreading assembly 60 may be disposed on the pool control assembly 50. In this way, water quality of each region of the pool can be detected more comprehensively based on a moving capability of the cleaning device 10. In addition, because the automatic underwater spreading assembly 60 is disposed on the pool control assembly 50, a weight of the cleaning device 10 can be reduced.

In some embodiments, the pool control assembly 50 includes a station 501. The station 501 may provide charging, signal relaying, cleaning, maintenance, and other functions for the cleaning device 10. The station 501 is disposed at an edge of the pool or floats on the water surface of the pool. The station 501 is provided with the pool control assembly 50 and/or the water quality detection assembly 690. In this way, the cleaning device 10 can cooperate with the station 501 to complete water quality detection and maintenance on the liquid in the pool, and the liquid can be cleaned well.

In some embodiments, the pool control assembly 50 includes a water circulation system 502. The water circulation system 502 is configured to add liquid to the pool. The water circulation system 502 is provided with the automatic underwater spreading assembly 60. The water circulation system 502 further includes a discharging opening 5021. The liquid enters the pool through the discharging opening 5021. The discharging opening 5021 communicates with the reagent outlet 630 in an open-close manner. When the reagent outlet 630 communicates with the discharging opening 5021, the liquid is evenly mixed with the to-be-spread reagent. When the reagent outlet 630 is closed, the reagent outlet 630 does not communicate with the discharging opening 5021, and the to-be-spread reagent does not enter the liquid.

Opening and closing of the reagent outlet 630 may be controlled by the control assembly 910. The reagent outlet 630 may be opened when the water quality detection assembly 690 detects poor water quality, so that the to-be-spread reagent enters the pool to purify the liquid in the pool. The reagent outlet 630 may be closed when the water quality detection assembly 690 detects good water quality, so that only the liquid is added to the pool through the discharging opening 5021. In this way, the cleaning device system 1 can spread the to-be-spread reagent into the liquid in the pool directly during water circulation, leading to a simple structure. In addition, the to-be-spread reagent can be mixed with the liquid and evenly distributed to various regions of the pool as the liquid flows, so that the cleaning device system 1 can clean the liquid more evenly, and cleaning blind corners may not be easily formed.

In some embodiments of the present disclosure, the cleaning device 10 can automatically maintain the water quality. This enriches functions of the cleaning device 10, reduces manual maintenance costs, and shortens the maintenance period of the target water body.

In some embodiments, the cleaning device body 101 further includes the storage assembly 610 and the first sealed cavity 1021. The storage assembly 610 is configured to store the to-be-spread reagent. The first sealed cavity 1021 is configured to accommodate at least one motor assembly of the cleaning device 10. The storage assembly 610, the first sealed cavity 1021, and the filtering mechanism are disposed sequentially along the forward direction of the cleaning device 10. In other words, the first sealed cavity 1021 is located between the storage assembly 610 and the filtering mechanism.

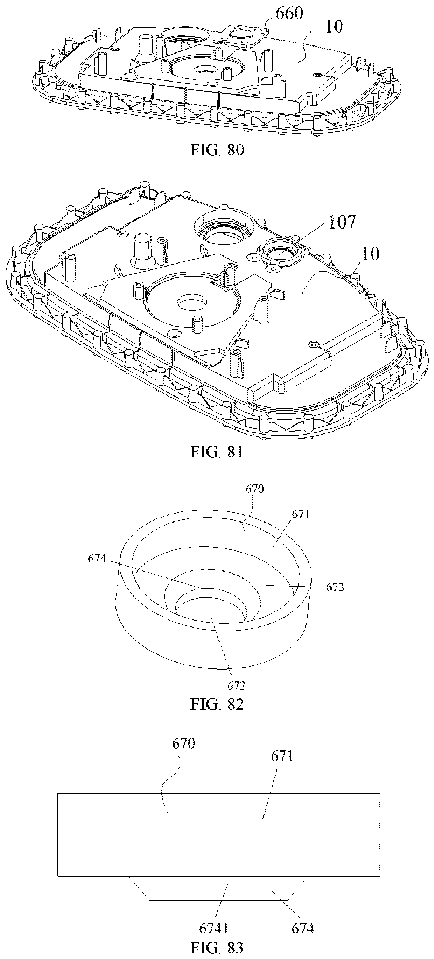

As shown in FIG. 81 to FIG. 84, this embodiment provides a cleaning device 10, mainly including a housing 102 and a control board 911. The housing 102 is provided with the first sealed cavity 1021. The control board 911 is connected to the first sealed cavity 1021 through a suspension arm 10213. The control board 911 is disposed along a first direction, so that the control board 911 is parallel to the bottom of the housing 102. The control board 911 is provided with an inertial measurement unit (IMU) module. An accelerometer and a gyroscope are disposed in the IMU module. For example, the suspension arm 10213 may be connected to the top of the first sealed cavity 1021 or the bottom of the first sealed cavity 1021, provided that it is ensured that the control board 911 is disposed along the first direction. It should be noted that the first direction in this embodiment is the X-axis direction in FIG. 83, that is, the control board 911 is parallel to the bottom of the first sealed cavity 1021. In other words, when the cleaning device 10 is placed horizontally, the control board 911 is in a horizontal state.

Based on the above disposition, in this embodiment, there are at least two suspension arms 10213, and every two adjacent suspension arms 10213 are spaced from each other. For example, there may be four suspension arms 10213, and the four suspension arms 10213 are respectively located at four corners of the control board 911. This improves stability and reliability of the control board 911. In addition, the control board 911 is suspended and horizontally disposed. This facilitates arrangement of various electronic elements on the control board 911 and increases a heat dissipation area. In this way, an upper end surface and a lower end surface of the control board 911 can dissipate heat for the electronic elements, so that heat dissipation efficiency is improved.

Optionally, the control board 911 in this embodiment is a PCB board. The control board 911 is disposed horizontally, so that the control board 911 is parallel to the bottom of the housing 102. In this way, the accelerometer and the gyroscope can better and accurately sense an acceleration and a direction of the cleaning device 10, so that a position of the cleaning device 10 can be accurately determined. In other words, the gyroscope is disposed horizontally, so that the gyroscope can determine a reference point and a three-dimensional coordinate axis. Then, the acceleration of the cleaning device 10 can be monitored in real time by the accelerometer, and the cleaning device 10 can accelerate or decelerate along a specific direction by using a torquer. In addition, the accelerometer and the gyroscope can sense whether a front portion or a rear portion of the cleaning device 10 is warped or depressed, so that the cleaning device 10 can be applied to pool bottom surfaces having various flatness. This improves operation efficiency and flexible applicability of the cleaning device 10 and reduces costs. It should be noted that specific operating principles of the accelerometer and the gyroscope in this embodiment are conventional technologies. Details are not described herein.

As shown in FIG. 82 to FIG. 84, in this embodiment, the cleaning device 10 includes a power supply assembly 810. The power supply assembly 810 is flatly disposed in the first sealed cavity 1021 and is disposed lower than the control board 911. The power supply assembly 810 is electrically connected to the control board 911. Because the power supply assembly 810 is heavy, the power supply assembly 810 is disposed lower than the control board 911 to lower a gravity center of the cleaning device 10. This improves stability of the cleaning device 10. Certainly, the power supply assembly 810 and the control board 911 may be disposed at a same height or disposed in other layouts. Details are not described herein.

In addition, the power supply assembly 810 may be disposed in the first sealed cavity 1021, so that the power supply assembly 810 is disposed inside the cleaning device 10. In this way, the weight of the cleaning device 10 is increased, and the cleaning device 10 can easily sink to the bottom of the pool to perform cleaning.

In some embodiments, there is a preset distance between the lower end surface of the control board 911 and an upper end surface of the power supply assembly 810. The preset distance is in a range of 5 cm to 20 cm, such as 5 cm, 8 cm, 10 cm, or 20 cm. The preset distance is configured to allow the electronic element to be mounted therein and dissipating heat for the control board 911. This increases the heat dissipation area, improves the heat dissipation efficiency, and extends a service life of the control board 911.

In some optional implementations, as shown in FIG. 83, the first sealed cavity 1021 in this embodiment includes an accommodating groove 10211. The power supply assembly 810 may be disposed in the accommodating groove 10211. In an example embodiment, the accommodating groove 10211 may be provided at the bottom of the first sealed cavity 1021. The accommodating groove 10211 is provided to improve the stability of the power supply assembly 810, so that the power supply assembly 810 is prevented from vibrating or even jumping when the cleaning device 10 operates. Optionally, a shape of the accommodating groove 10211 in this embodiment is rectangular and matches a shape of the power supply assembly 810.

Further, a cushion pad is disposed between the power supply assembly 810 and a side wall of the accommodating groove 10211 to further reduce vibration of the power supply assembly 810. This improves the stability of the power supply assembly 810 and extends the service life. Further, as shown in FIG. 83, a pressing plate 10212 is disposed on an inner wall of the first sealed cavity 1021, and the pressing plate 10212 is configured to tightly press the power supply assembly 810 to prevent the power supply assembly 810 from jumping up and down during operating. This improves stability, reliability, and safety performance of the power supply assembly 810.

In some embodiments, the cleaning device 10 further includes a buoyancy unit. The buoyancy unit is disposed inside the housing 102. The buoyancy unit is provided with a water inlet and a water outlet. The buoyancy unit is configured to control an amount of water inflow to maintain a difference obtained by subtracting a buoyancy force applied to the entire device from the gravity of the entire device to be in a range of 2 N to 8 N. For example, the difference may be 2 N, 3 N, 5 N, or 8 N. The buoyancy unit is disposed, so that the cleaning device 10 can conveniently perform water surface cleaning to clean garbage on the water surface. Specifically, the buoyancy unit can adjust the buoyancy force applied to the pool cleaning device to be equal to the gravity of the cleaning device, so that the cleaning device 10 can operate stably on the water surface.

Further, the buoyancy unit includes a water inlet pump and a water outlet pump. The water inlet pump communicates with the water inlet. The water outlet pump communicates with the water outlet. The water inlet pump and the water outlet pump are controlled by the control board 911. When the cleaning device 10 needs to sink, the user on the ground may wirelessly and remotely control the water inlet pump to be opened and control the water outlet pump to be closed. The water inlet pump input water into the buoyancy unit, so that the gravity of the entire device gradually increases, and the cleaning device 10 can sink smoothly to a predetermined position. Similarly, when the cleaning device 10 needs to float up, the user on the ground may wirelessly and remotely control the water outlet pump to be opened and control the water inlet pump to be closed. The water outlet pump drives the water inside the buoyancy unit to be discharged, so that the gravity of the entire device gradually decreases, and the cleaning device 10 can smoothly float up to a predetermined position.

In addition, the power supply assembly 810 in this embodiment is disposed inside the housing 102, so that the difference, obtained by subtracting the buoyancy force applied to the entire device from the gravity of the entire device, required by the cleaning device 10 can be reached quickly. This reduces a time for the water inlet pump to input water into the buoyancy unit and improves operating efficiency. In addition, a size of the buoyancy unit can be reduced, so that the cleaning device 10 is miniaturized and is easily carried by the user.

For example, a ratio of the size of the buoyancy unit to a size of the housing 102 in this embodiment is 0.15 to 0.4, such as 0.15, 0.20, 0.30, 0.40, or 0.45.

As shown in FIG. 81, an interaction connection portion 105 is disposed on an outer wall of the housing 102 in this embodiment. The interaction connection portion 105 is electrically connected to the power supply assembly 810 and/or the control board 911. The interaction connection portion 105 is configured to charge the power supply component 810 and/or exchange information with the control board 911. There may be two or more interaction connection portions 105 in this embodiment. A waterproof silica gel cover may be disposed on the interaction connection portion 105.

As shown in FIG. 83, in this embodiment, a second sealed cavity 1022 is disposed inside the housing 102. A liquid inlet portion 103 and a filtered liquid outlet portion 108 may be disposed on the second sealed cavity 1022. A filtering part 750 is disposed at the filtered liquid outlet portion 108. The filtered liquid outlet portion 108 communicates with the outside of the housing 102. In this embodiment, the main water pump motor 211 is disposed above the power supply assembly 810. An output end of the main water pump motor 211 extends out of the first sealed cavity 1021. The main water pump impeller 212 is disposed at the output end of the main water pump motor 211. When the cleaning device 10 is placed in the pool, the liquid in the pool can be automatically input into the second sealed cavity 1022 through the liquid inlet portion 103, filtered by the filtering part 750, and flow out through the filtered liquid outlet portion 108. In this case, the main water pump motor 211 can drive the main water pump impeller 212 to rotate, and a flow rate at which the liquid is discharged through the filtered liquid outlet portion 108 is increased, so that cleaning efficiency of the cleaning device 10 for sewage in the pool is improved.

Further, the control board 911 in this embodiment is provided with an avoidance portion 912, and the avoidance portion 912 is configured to avoid the main water pump motor 211. For example, the avoidance portion 912 is arc-shaped or in a shape of a folded line. The avoidance portion 912 is disposed to facilitate mounting of the main water pump motor 211.

Further, as shown in FIG. 85, in this embodiment, two filtering bags 760 are sleeved at the liquid inlet portion 103 of the second sealed cavity 1022, and each filtering bag 760 is disposed in an open state. In other words, the two filtering bags 760 are disposed bilaterally symmetrically at the liquid inlet portion 103 and do not completely block the liquid inlet portion 103. In addition, each filtering bag 760 is provided with a gravity part 761. When the cleaning device 10 is placed in the liquid, the filtering bag 760 at the liquid inlet portion 103 is automatically opened due to a tension of liquid to ensure that water can enter. When the cleaning device 10 stops operating, the gravity part 761 automatically falls down to seal the liquid inlet portion 103 due to gravity to ensure that debris in the second sealed cavity 1022 does not flow out through the liquid inlet portion 103. The gravity part 761 on the filtering bag 760 is disposed, so that a speed at which the cleaning device 10 enters the water is increased, and the debris can be prevented from flowing reversely. This improves the operating efficiency of the pool cleaning device.

Optionally, in this embodiment, a drum is disposed on the housing 102. A waterproof adhesive sheet is adhered on an outer circumferential side of the drum. The waterproof adhesive sheet is detachably adhered to the drum. The debris in the pool can adhere to the waterproof adhesive sheet. Alternatively, the drum is provided with a mounting hole, and a brush is detachably mounted at the mounting hole. The user may mount various types of brushes at the mounting hole based on an actual requirement. This improves flexible applicability of the cleaning device 10. Certainly, the user may flexibly mount other types of brushes based on an actual requirement, ensuring that the brush and the drum are detachably connected to each other. In this way, the user can flexibly replace the brushes based on a requirement of the user. Details are not described herein.

In some optional implementations, as shown in FIG. 83, to prevent the main water pump impeller 212 from drawing gas into the housing 102, the main water pump impeller 212 is disposed at the rear of the front wheel along the forward direction of the cleaning device 10. In this way, when the cleaning device 10 cleans the side wall of the pool, the user needs to make sure that the front wheel is not exposed at the water surface, so that the main water pump impeller 212 is prevented from being exposed at the water surface to suck air, and the operating efficiency is not affected. Certainly, during actual use, the housing 102 is provided with two roller brushes for underwater cleaning 411 respectively disposed at the front wheel and the rear wheel, and the user only needs to make sure that an axial of the roller brush for underwater cleaning 411 at the front wheel is not exposed at the water surface to ensure that the main water pump impeller 212 does not draw the air. This improves the operating efficiency of the cleaning device. For example, in this embodiment, a weight of the power supply assembly 810 is in a range of 1.0 kg to 1.3 kg, a weight of the main water pump motor 211 is in a range of 0.3 kg to 0.5 kg, and a water discharging volume of the second sealed cavity 1022 is in a range of 8 L to 15 L.

In some embodiments, the cleaning device body 101 includes the first sealed cavity 1021. The drive mechanism includes at least the main water pump motor 211. The movement propulsion mechanism 100 includes the moving drive part 121. The moving drive part 121 includes a movement drive motor. At least one of the main water pump motor 211, the movement drive motor, the power supply assembly 810, and the sensing part 981 may be disposed inside the first sealed cavity 1021. The first sealed cavity 1021 and the filtering mechanism are sequentially disposed along the forward direction of the cleaning device 10. The filtering mechanism is disposed at a front portion of the cleaning device body 101, so that a distance between the second water inlet and the filtering mechanism can be reduced, and a water inlet path is the shortest when the cleaning device 10 performs water surface cleaning. The first sealed cavity 1021 is disposed at a rear portion of the cleaning device body 101, so that a distance between the main water pump motor 211 and the main water pump impeller 212 is reduced, and a space occupied by the drive mechanism is reduced.

The present disclosure provides a cleaning device system. The cleaning device system 1 includes a cleaning device 10 and a solar energy system 20. The cleaning device 10 in this embodiment is the cleaning device 10 in the above embodiments. As shown in FIG. 86, the solar energy system 20 includes a solar panel 201 and a control mechanism 202. The control mechanism 202 is connected to the solar panel 201. The control mechanism 202 is configured to control, based on obtained information, the solar panel 201 and/or a first load mechanism associated with the solar panel 201 to execute a target event. The first load mechanism is directly or indirectly powered by the solar panel 201.

Specifically, the control mechanism 202 may be an electronic element, such as a controller or a controllable chip. In an application scenario, the control mechanism 202 is configured to control the solar panel 201. In another application scenario, the control mechanism 202 is configured to control the first load mechanism. In yet another application scenario, the control mechanism 202 may control both the solar panel 201 and the first load mechanism.

The first load mechanism may be directly or indirectly powered by the solar panel 201. For example, the first load mechanism may be a lighting device, a pool cover, a pool robot, or the like that is directly powered by the solar panel 201. The solar panel 201 may be carried by a carrying mechanism and then connected in real time to the first load mechanism to directly supply power to the first load mechanism. The solar panel 201 may alternatively be carried by the first load mechanism to directly supply power to the first load mechanism. In this case, the first load mechanism is a carrying mechanism of the solar panel 201. Alternatively, the first load mechanism is the pool robot or the like that is indirectly powered by the solar panel 201. In other words, the first load mechanism is connected to the solar panel 201 in non-real time. For example, the first load mechanism seeks the solar panel 201 and then is connected to the carrying mechanism of the solar panel 201 to obtain power provided by the solar panel 201.

After obtaining information, the control mechanism 202 controls, based on the obtained information, the solar panel 201 and/or the first load mechanism to execute the target event related to the information. The information is any information directly or indirectly related to the solar panel 201 and/or the first load mechanism, such as time information, weather information, or power level information. The control mechanism 202 may obtain the information through direct detection or obtain the information transmitted by other mechanisms. The target event is any event that is executed by the solar panel 201 alone, executed by the first load mechanism alone, or executed by the solar panel 201 and the first load mechanism. In this way, the solar panel 201 and/or the first load mechanism can be automatically managed, leading to efficient and convenient operation.

In an embodiment, the control mechanism 202 is further configured to: obtain an output current value of the solar panel 201 in a process of controlling the solar panel 201 to rotate in a plurality of directions sequentially, and control, based on the output current value of the solar panel 201, the solar panel 201 to be charged in an optimal charging direction.

Specifically, a larger output current value of the solar panel 201 indicates higher light intensity in an environment in which the solar panel 201 is located, and a smaller output current value of the solar panel 201 indicates lower light intensity in the environment in which the solar panel 201 is located. Therefore, in the process of controlling the solar panel 201 to rotate, the control mechanism 202 obtains the output current value of the solar panel 201 and determines, based on the output current value of the solar panel 201, the optimal charging direction of the solar panel 201. It may be understood that, when the solar panel 201 faces the optimal charging direction, charging efficiency of the solar panel 201 is maximized. Therefore, the control mechanism 202 controls the solar panel 201 to be charged in the optimal charging direction to efficiently charge the solar panel 201.

In an embodiment, the control mechanism 202 is further configured to: in a case where the output current value of the solar panel 201 is equal to a pre-stored first current threshold when the solar panel 201 faces a target direction, determine the target direction as the optimal charging direction, or in a case where the output current value of the solar panel 201 is less than the first current threshold, obtain a maximum output current value during rotation of the solar panel 201, and determine a direction corresponding to the maximum output current value as the optimal charging direction.

Specifically, the first current threshold is pre-stored. The pre-stored first current threshold may be a convertible maximum current value of the solar panel 201 or an output current value of the solar panel 201 when the solar panel 201 faces a direction in which light intensity is high.

During rotation of the solar panel 201, if the output current value of the solar panel 201 reaches the pre-stored first current threshold when the solar panel 201 faces a direction, it indicates that the light intensity in this direction is high, and the direction is determined as the optimal charging direction. Then, the solar panel 201 is controlled to stop rotating and be charged in the optimal charging direction.

If all output current values of the solar panel 201 are less than the first current threshold during the rotation of the solar panel 201, it indicates that the light intensity in the entire environment is low. In this case, the maximum output current value of the solar panel 201 during rotation is obtained to determine a direction in which the light intensity is highest, and the direction is determined as the optimal charging direction.

In an embodiment, the control mechanism 202 is further configured to: control the solar panel 201 to face a plurality of preset directions sequentially and stay for preset duration in each preset direction. For example, eight preset directions are set for rotation of the solar panel 201, and the solar panel 201 is controlled to stay for one minute in each preset direction during rotation to obtain an output current value of the solar panel 201 in each preset direction. The preset duration may be set based on whether a change in the output current value of the solar panel 201 is detected.

In other embodiments, the control mechanism 202 may further control the solar panel 201 to rotate at a uniform speed. In conclusion, a manner in which the control mechanism 202 controls the solar panel 201 to rotate is not limited in the present disclosure.

In a specific example, the control mechanism 202 first controls the solar panel 201 to rotate once at a uniform speed. During rotation, if the output current value of the solar panel 201 is equal to the pre-stored first current threshold when the solar panel 201 faces the target direction, the target direction is determined as the optimal charging direction, and the solar panel 201 is controlled to stop rotating and be charged in the optimal charging direction. However, if all output current values of the solar panel 201 are less than the first current threshold during rotation, the following operations may be performed. In one case, a maximum output current value of the solar panel 201 during rotation is obtained, a direction corresponding to the maximum output current value is determined as the optimal charging direction, and the solar panel 201 is controlled to be charged in the optimal charging direction. In another case, the solar panel 201 is controlled, based on a preset logic, to rotate again. For example, the solar panel 201 is controlled to rotate in eight preset directions sequentially and stay for one minute in each preset direction, the maximum output current value is determined from eight output current values of the solar panel 201 when the solar panel 201 faces the eight preset directions, a preset direction corresponding to the maximum output current value is determined as the optimal charging direction, and the solar panel 201 is controlled to be charged in the optimal charging direction.

In an embodiment, the control mechanism 202 is connected to a target component, and the control mechanism 202 receives the output current value of the solar panel 201 through the target component. The target component includes at least one of the first load mechanism directly or indirectly powered by the solar panel 201, a third-party mechanism communicating with the solar panel 201, and the carrying mechanism carrying the solar panel 201.

Specifically, the control mechanism 202 may obtain the output current value of the solar panel 201 through the first load mechanism, the third-party mechanism, or the carrying mechanism. A manner in which the control mechanism 202 is connected to the target component includes, but is not limited to, an electrical connection, a wireless connection, and the like. The first load mechanism may be a lighting device or the like. The third-party mechanism may be a current sensor, an image sensor, or the like that communicates with the solar panel 201. The carrying mechanism may be a station or the like.

In an embodiment, the solar panel 201 has a stored state and an unfolded state. A charging area of the solar panel 201 in the stored state is smaller than a charging area of the solar panel 201 in the unfolded state. The control mechanism 202 is further configured to control, based on the output current value and/or a motion state of the solar panel 201, the solar panel 201 to be in the stored state or the unfolded state.

Specifically, the solar panel 201 may be folded to be stored. The solar panel 201 can be unfolded or folded. When the solar panel 201 is in the stored state, the solar panel 201 may be charged. The charging area existing when the solar panel 201 is unfolded is greater than the charging area of the solar panel 201 in the stored state. In other words, charging efficiency of the solar panel 201 existing when the solar panel 201 is unfolded is higher than charging efficiency of the solar panel 201 in the stored state.

The control mechanism 202 controls, based on the output current value and/or the motion state of the solar panel 201, the solar panel 201 to be in the stored state or the unfolded state, so that use requirements in various scenarios can be met. The motion state of the solar panel 201 includes a static state, a moving state, a moving speed, and the like. This is not limited herein.

In an embodiment, the control mechanism 202 is further configured to: in a case where the solar panel 201 meets a first preset requirement, control the solar panel 201 to be in the unfolded state, or in a case where the solar panel 201 does not meet the first preset requirement, control the solar panel 201 to be in the stored state. The first preset requirement includes at least one of the following requirements: The output current value of the solar panel 201 is greater than a second current threshold, and the moving speed of the solar panel 201 is less than a speed threshold.

Specifically, when the output current value of the solar panel 201 is greater than the second current threshold, it indicates that the light intensity is high at this time, and a charging requirement is met. Therefore, the control mechanism 202 controls the solar panel 201 to be unfolded and charged, so that the solar panel 201 is efficiently charged. Alternatively, when the solar panel 201 does not need to move, or the moving speed is less than the speed threshold, it indicates that unfolding of the solar panel 201 does not affect a movement of the solar panel 201. Therefore, the solar panel 201 is controlled to be unfolded and charged.

In other embodiments, the control mechanism 202 may further control, according to an operation instruction, the solar panel 201 to be in the unfolded state or the stored state. The operation instruction may be sent by a user.

In an embodiment, a size of the solar panel 201 in the stored state is smaller than a size of the carrying mechanism for carrying the solar panel 201, so that stability of the carrying mechanism for carrying the solar panel 201 is improved. In another embodiment, the carrying mechanism for carrying the solar panel 201 is the first load mechanism. In this case, the size of the solar panel 201 in the stored state is smaller than a size of the first load mechanism.

In an embodiment, the control mechanism 202 is further configured to: in a case where the solar panel 201 is in the unfolded state, control the carrying mechanism that carries the solar panel 201 to stop moving. A size of the solar panel 201 in the unfolded state is greater than the size of the carrying mechanism.

Specifically, if the size of the solar panel 201 in the unfolded state is greater than the size of the carrying mechanism that carries the solar panel 201, and the carrying mechanism can move, the carrying mechanism is directly controlled to stop moving when the solar panel 201 is in the unfolded state. If the carrying mechanism is driven by another mechanism to move, another mechanism is controlled to stop moving. For example, if the carrying mechanism is connected to the first load mechanism in real time through a cable or the like, the first load mechanism is controlled to stop moving, so that the entire mechanism is prevented from flipping over due to weight imbalance when the carrying mechanism moves.

In an embodiment, the solar panel 201 includes a plurality of sub-panels. When the solar panel 201 is in the stored state, the plurality of sub-panels are stacked. In this case, only an uppermost sub-panel can be irradiated by the sun. When the solar panel 201 is in the unfolded state, charging surfaces of the plurality of sub-panels do not at least partially overlap with each other, so that all of the sub-panels can be irradiated by the sun, and the charging area of the solar panel 201 is increased.

In another embodiment, the solar panel 201 can be curled. The solar panel 201 is curled when the solar panel 201 needs to be stored. When the solar panel 201 is folded, some of sub-panels in the solar panel 201 can be irradiated by the sun, or none of the sub-panels are irradiated by the sun. When the solar panel 201 is in the stored state, the solar panel 201 may be stored in position, or the solar panel 201 may be stored at a specific storage position, and the solar panel 201 is removed from the storage position when needing to be charged. In conclusion, manners of folding and storing the solar panel 201 are not limited in the present disclosure.

In an embodiment, the control mechanism 202 is further configured to: in a case where the output current value of the solar panel 201 at a current position is greater than a third current threshold, save the current position of the solar panel 201 as a historical position. The control mechanism 202 is further configured to: search for a first target position that is closest to the current position of the solar panel 201 from saved historical positions, and control the solar panel 201 to move to the first target position to be charged.

Specifically, when an output current value of the solar panel 201 at a position is greater than the third current threshold, it indicates that light intensity at the position is high, the charging efficiency of the solar panel 201 is high at the position, and the position is saved as a historical position. It may be understood that all saved historical positions are positions at which light intensity is high. In a subsequent moving process, when the solar panel 201 needs to be charged, a historical position (the searched historical position is defined as the first target position) that is closest to the current position is searched from the saved historical positions, and the solar panel 201 is controlled to move to the first target position to be charged, to ensure the charging efficiency of the solar panel 201.

In an embodiment, a saved historical position corresponds to a scenario. For example, some historical positions correspond to a scenario of a swimming pool, and some historical positions correspond to a scenario of a playground. When the solar panel 201 is in the scenario of the swimming pool, a historical position closest to the current position is searched from a plurality of historical positions corresponding to the scenario of the swimming pool. When the solar panel 201 is in the scenario of the playground, a historical position closest to the current position is searched from a plurality of historical positions corresponding to the scenario of the playground.

In an embodiment, a saved historical position corresponds to a time period. For example, some historical positions correspond to a time period from 8 a.m. to 10 a.m., some historical positions correspond to a time period from 10 a.m. to 1 p.m., some historical positions correspond to a time period from 1 p.m. to 3 p.m., and some historical positions correspond to a time period from 3 p.m. to 5 p.m. If a current moment is within the time period from 8 a.m. to 10 a.m., a historical position closest to the current position is searched from a plurality of historical positions corresponding to the time period from 8 a.m. to 10 a.m. If a current moment is within the time period from 10 a.m. to 1 p.m., a historical position closest to the current position is searched from a plurality of historical positions corresponding to the time period from 10 a.m. to 1 p.m.

It may be understood that the saved historical positions are continuously updated. If an output current value of the solar panel 201 at a position is greater than the third current threshold, the position can be saved as the historical position. If a large quantity of historical positions are saved, some of saved historical positions may be deleted to reduce memory pressure. The saved historical positions may be deleted based on a sequence of saving historical positions. For example, a historical position that is saved early is deleted first.

In an embodiment, the control mechanism 202 is further configured to: after controlling the solar panel 201 to move to the first target position, in a case where an output current value of the solar panel 201 at the first target position is less than a fourth current threshold, search for a second target position closest to the first target position from the saved historical positions, control the solar panel 201 to move to the second target position to be charged, and delete the first target position from the saved historical positions.

Specifically, if the output current value of the solar panel 201 is greater than or equal to the fourth current threshold after the solar panel 201 is controlled to move to the first target position, it indicates that the first target position meets a charging requirement, and the solar panel 201 is controlled to be charged at the first target position. However, if the output current value of the solar panel 201 is less than the fourth current threshold, it indicates that the first target position does not meet the charging requirement, and the control mechanism 202 searches for a historical position (defined as the second target position) closest to the first target position and controls the solar panel 201 to move to the second target position to be charged. If an output current value of the solar panel 201 is still less than the fourth current threshold after the solar panel 201 moves to the second target position, it indicates that the second target position does not meet the charging requirement, and the control mechanism 202 continues to search for a next historical position. In this way, the above process is performed continuously and cyclically until a historical position that meets the requirement is found.

In addition, the control mechanism 202 deletes, from the historical positions, the first target position that does not meet the charging requirement, to improve efficiency in searching for the optimal charging position of the solar panel 201 next time. The fourth current threshold may be equal to or different from the third current threshold.

In an embodiment, the control mechanism 202 is specifically configured to: search for a historical position corresponding to a current time period to determine the first target position closest to the current position from the searched historical positions, and control the solar panel 201 to move to the first target position to be charged.

Specifically, saved historical positions correspond to a time period. In this way, when the historical position is searched for, the first target position closest to the current position is searched from the historical positions corresponding to the current time period. If a current moment is within the time period from 8 a.m. to 10 a.m., the first target position closest to the current position is searched from the historical positions corresponding to the time period from 8 a.m. to 10 a.m. If the current moment is within the time period from 10 a.m. to 1 p.m., the first target position closest to the current position is searched from the historical positions corresponding to the time period from 10 a.m. to 1 p.m. In this way, efficiency in searching for the historical position is improved.

In an embodiment, the control mechanism 202 is further configured to: in a case where all output current values of the solar panel 201 are less than a fifth current threshold after the solar panel 201 moves to each historical position corresponding to a current time period, search for a historical position corresponding to another time period adjacent to and after the current time period, determine a third target position closest to the current position from all searched historical positions, and control the solar panel 201 to move to the third target position to wait for being charged.

Specifically, if all output current values of the solar panel 201 are less than the fifth current threshold after the solar panel 201 moves to all historical positions corresponding to the current time period, it indicates that none of the historical positions corresponding to the current time period meets the charging requirement. In this case, historical positions corresponding to another time period (for ease of description, the another time period adjacent to and after the current time period is defined as a first time period) adjacent to and after the current time period are obtained, and a historical position (defined as a third target position) closest to the current position of the solar panel 201 is searched from the obtained historical positions. Then, the solar panel 201 is controlled to move to the third target position and wait until the current moment is within the first time period. Further, whether the third target position meets the charging requirement is determined. If the third target position meets the charging requirement, the solar panel 201 is controlled to be charged at the third target position. If the third target position does not meet the charging requirement, a historical position closest to the third target position is searched from the historical positions corresponding to the first time period. The above process is performed cyclically until the historical position that meets the charging requirement is found. The fifth current threshold may be equal to or different from the third current threshold.

In an embodiment, the control mechanism 202 is further configured to: determine light intensity on a motion path based on an output current value of the solar panel 201 on the motion path; in a case where a quantity of positions, on the motion path, at which light intensity is greater than a first intensity threshold is greater than a first quantity threshold, adjust a preset charging strategy of the first load mechanism when the first load mechanism performs a task; and in a case where the quantity of positions, on the motion path, at which light intensity is greater than the first intensity threshold is less than a second quantity threshold, maintain the preset charging strategy when the first load mechanism performs the task; or if the quantity of positions, on the motion path, at which light intensity is greater than the first intensity threshold is greater than the second quantity threshold and less than the first quantity threshold, determine, based on target information, to perform the task and/or whether to adjust the preset charging strategy. The target information includes at least one of: current remaining power of the first load mechanism, a remaining operating area of the first load mechanism, and distribution information. The distribution information is distribution information of positions, on the motion path, at which the light intensity is greater than the first intensity threshold, and distribution information of positions at which the light intensity is less than the first intensity threshold.

Specifically, in a moving process of the solar panel 201, the control mechanism 202 obtains the output current value of the solar panel 201 on the motion path, and determines the light intensity on the motion path based on the output current value of the solar panel 201. All output current values of the solar panel 201 on the entire motion path may be traversed to determine the light intensity on the motion path, or output current values of the solar panel 201 at a plurality of positions on the motion path that are widely spaced from each other may be obtained to determine the light intensity on the motion path. It may be understood that a larger output current value of the solar panel 201 at a position indicates higher light intensity at the position. The motion path may be related to the first load mechanism directly powered by the solar panel 201. For example, if the first load mechanism is the pool robot, the motion path may be a path that the pool robot needs to go through to perform a task, such as a cleaning task.

If the quantity of positions, on the motion path, at which the light intensity is greater than the first intensity threshold is greater than the first quantity threshold, it indicates that light intensity on the entire motion path is high. In this case, the preset charging strategy of the first load mechanism is adjusted when the first load mechanism performs the task. For example, the preset charging strategy of the first load mechanism is, during performing the task, charging the first load mechanism in real time by using a current converted by the solar panel 201 after the solar panel 201 is irradiated by the sun. In other words, the first load mechanism is charged by using a fixed current when the light intensity on the motion path remains unchanged, when the light intensity on the motion path changes, the first load mechanism is charged by using a large current at a position at which the light intensity is high, and the first load mechanism is charged by using a small current at a position at which the light intensity is low. After it is determined that the quantity of positions, on the motion path, at which the light intensity is greater than the first intensity threshold is greater than the first quantity threshold, the control mechanism 202 may control the first load mechanism to stop performing the task and be charged first and then control the first load mechanism to perform the task after the first load mechanism is fully charged. In other words, if the quantity of positions, on the motion path, at which the light intensity is greater than the first intensity threshold is greater than the first quantity threshold, the control mechanism 202 may adjust the preset charging strategy of the first load mechanism.

If the quantity of positions, on the motion path, at which light intensity is greater than the first intensity threshold is less than the second quantity threshold, it indicates that the light intensity on the entire motion path is low, and therefore, the charging efficiency is low. In this case, the control mechanism 202 maintains the preset charging strategy when the first load mechanism performs the task. In this way, the following case is avoided: The first load mechanism consumes an unnecessary amount of power due to adjustment of the charging strategy, and the consumed unnecessary amount of power cannot be replenished by adjusting the charging strategy, leading to an increase in overall power consumption of the first load mechanism. This improves charging effectiveness.

If the quantity of positions, on the motion path, at which light intensity is greater than the first intensity threshold is greater than the second quantity threshold and less than the first quantity threshold, the control mechanism 202 determines, based on the target information, to control the first load mechanism to perform the task and/or adjust the preset charging strategy.

In an embodiment, the control mechanism 202 is further configured to: determine, based on a remaining operating area, a target amount of power required for the first load mechanism to complete a remaining operation; in a case where the target amount of power is less than a current remaining amount of power of the first load mechanism, adjust the preset charging strategy to a strategy of controlling the first load mechanism to move to a fourth target position to charge the solar panel 201; and if the target amount of power is not less than the current remaining amount of power of the first load mechanism, adjust the preset charging strategy to a strategy of controlling the first load mechanism to maintain the preset charging strategy when the first load mechanism performs the task. An output current value of the solar panel 201 at the fourth target position is greater than a sixth current threshold.

Specifically, the control mechanism 202 first determines, based on the remaining operating area of the first load mechanism, the target amount of power required for the first load mechanism to complete the remaining operation. If the target amount of power is less than the current remaining amount of power of the first load mechanism, it indicates that the first load mechanism has insufficient power. In this case, the control mechanism 202 controls the first load mechanism to move to the fourth target position, namely, a position at which light strength is high, so that the solar panel 201 is charged. In other words, the preset charging strategy is adjusted. If the target amount of power is greater than or equal to the current remaining amount of power of the first load mechanism, it indicates that the first load mechanism has sufficient power. In this case, the control mechanism 202 controls the first load mechanism to maintain the preset charging strategy when the first load mechanism performs the task.

In an embodiment, the control mechanism 202 is further configured to: obtain a current orientation of the sun and control, based on the current orientation of the sun, the solar panel 201 to move to a fifth target position to be charged.

Specifically, the control mechanism 202 determines a charging position of the solar panel 201 based on the current orientation of the sun. For example, if the sun is in the east currently, the solar panel 201 may move directly to the west of a current site (such as the pool) to be charged.

In an embodiment, the control mechanism 202 is further configured to: determine a moving direction of the solar panel 201 based on a sunrise direction and a sunset direction. For example, when the sun rises in the east and sets in the west, the solar panel 201 may move from the west to the north and then to the east of the current site as time passes by, and the position of the solar panel 201 changes at an interval. A moving direction of the solar panel 201 may be determined by a magnetometer connected to the solar panel 201, so that a probability that the solar panel 201 is directly irradiated by the sun is increased, and the charging efficiency of the solar panel 201 is improved.

In an embodiment, the control mechanism 202 is further configured to: determine, based on the weather information, a first target moment at which the solar panel 201 can be charged, and make an operating plan of the first load mechanism from the current moment to the first target moment based on the current remaining amount of power of the first load mechanism and the first target moment.

Specifically, weather information of a certain moment of a certain day can be known based on obtained weather forecast information, so that the first target moment at which the first load mechanism can be charged can be estimated. Then, the operating plan of the first load mechanism from the current moment to the first target moment is made based on the current remaining amount of power of the first load mechanism and the first target moment, so that the operating plan of the first load mechanism is reasonably made.

In an embodiment, the control mechanism 202 is specifically configured to control the first load mechanism to perform a task at a target time interval from the current moment to the first target moment. The target time interval is related to at least one of the current remaining amount of power of the first load mechanism and a time interval from the current moment to the first target moment.

Specifically, the target time interval means that the first load mechanism is planned to perform the task at a moment t1 and a moment t2 adjacent to each other. An interval between the moment t1 and the moment t2 is equal to the target time interval. The target time interval may be determined based on the current remaining amount of power of the first load mechanism and/or the time interval between the current moment and the first target moment. Then, the control mechanism 202 controls the first load mechanism to perform the task at the target time interval from the current moment to the first target moment.

In an application scenario, completing an operating task is a high priority. If the current remaining amount of power of the first load mechanism is low, completing the operating task in a short time period needs to be first considered, so that the first load mechanism is prevented from running out of power. Therefore, the target time interval is set to be short. On the contrary, if the remaining amount of power is high, the target time interval is set to be long. The target time interval is set reasonably, so that the first load mechanism can be effectively guided to complete the operating task within a specified time period, and a problem that the task cannot be completed because power is exhausted or a problem that the task cannot be completed due to time pressure can be avoided.

In another application scenario, maintenance of the first load mechanism has a high priority. If the current remaining amount of power of the first load mechanism is low, the target time interval is set to be long to prevent the first load mechanism from running out of power due to frequently performing tasks. On the contrary, if the remaining amount of power is high, the target time interval is set to be short. The target time interval is set reasonably, so that a problem that the first load mechanism cannot be charged in time after the power is exhausted, affecting maintenance of the load mechanism can be avoided.

In an embodiment, the first load mechanism may alternatively be powered by a target power source different from the solar panel 201. In this case, the control mechanism 202 is specifically configured to: obtain a second target moment at which the target power source can supply power and that is closest to the current moment; and in a case where the first target moment is later than the second target moment, control the first load mechanism to perform the task within an operating time period closest to the second target moment.

Specifically, the target power source may be a battery, an alternating current power source, or the like. In other words, the first load mechanism may be charged by the solar panel 201 or the target power source.

If the first target moment (namely, the moment at which the first load mechanism can be charged by the solar panel 201) is later than the second target moment (namely, the moment at which the first load mechanism can be charged by the target power source), it indicates that the first load mechanism can be charged by only the target power source at the earliest moment. Therefore, the control mechanism 202 adjusts an operating time of the first load mechanism, so that the first load mechanism performs the task within the operating time period closest to the second target moment to ensure that power can be continuously supplied, and the task can be completed efficiently. For example, the second target moment is Saturday, the current moment is Tuesday, and the solar panel 201 cannot charge the first load mechanism recently (within a time period from Tuesday to Saturday), that is, a condition that the first target moment is later than the second target moment is met. Therefore, the control mechanism 202 controls the first load mechanism to perform the task on Thursday or Friday.

In an embodiment, the first load mechanism is directly powered by the solar panel 201, and the control mechanism 202 is configured to: obtain a time interval between the current moment and a sunset moment when the solar panel 201 receives an operating instruction; and in a case where the time interval is greater than a first interval threshold, control the first load mechanism to operate according to the operating instruction; or if the time interval is not greater than the first interval threshold, control the first load mechanism to be charged first until the remaining amount of power reaches an amount of power required for performing the task, or until the ambient light intensity is less than a second intensity threshold, and then control the first load mechanism to operate according to the operating instruction.

Specifically, the first interval threshold is preset, such as five hours. If the time interval is greater than the first interval threshold, it indicates that there is sufficient time for the solar panel 201 to be charged before sunset, and there is sufficient time for the solar panel 201 to charge the first load mechanism. Therefore, the control mechanism 202 controls the first load mechanism to operate first according to the operating instruction, and the first load mechanism may be charged simultaneously during operating. If the time interval is less than or equal to the first interval threshold, it indicates that the current moment is close to the sunset moment, there is not sufficient time for the solar panel 201 to be charged before sunset, and there is not sufficient time for the solar panel 201 to charge the first load mechanism. Therefore, the first load mechanism is controlled to be charged first until the remaining amount of power reaches the amount of power required for performing the task, or until the ambient light intensity is less than the second intensity threshold, and then, the first load mechanism is controlled to operate according to the operating instruction.

In an embodiment, the control mechanism 202 is configured to: obtain a first amount of power currently remaining in the first load mechanism and a second amount of power currently remaining in the solar panel 201; determine, based on the first amount of power and the second amount of power, whether to control the first load mechanism to move to the carrying mechanism in which the solar panel 201 is located; and when the first load mechanism reaches the carrying mechanism, control the first load mechanism to receive power supplied by the solar panel 201 or replace a battery on the first load mechanism with a battery on the solar panel 201.

Specifically, the control mechanism 202 determines, based on the first amount of power currently remaining in the first load mechanism and the second amount of power currently remaining in the solar panel 201, whether to charge the first load mechanism by the solar panel 201. If it is determined that the first load mechanism is charged by the solar panel 201, the control mechanism 202 controls the first load mechanism to move to the carrying mechanism, and after the first load mechanism reaches the carrying mechanism, the control mechanism 202 controls the solar panel 201 or the carrying mechanism to charge the first load mechanism directly. Alternatively, if the battery on the solar panel 201 and the battery on the first load mechanism are detachable, the battery on the first load mechanism that has insufficient power may be replaced with a fully charged battery on the solar panel 201. The battery on the first load mechanism may be manually replaced or replaced by a robot. This is not limited herein.

In an embodiment, the control mechanism 202 is specifically configured to: in a case where the first amount of power is less than a first power amount threshold, or the second amount of power is greater than a second power amount threshold, control the first load mechanism to move to the carrying mechanism in which the solar panel 201 is located.

Specifically, the first power amount threshold and the second power amount threshold are preset fixed values or may be determined based on an amount of power required for the first load mechanism to complete the remaining operation. For example, each of the first power amount threshold and the second power amount threshold is equal to 60% of the amount of power required for the first load mechanism to complete the remaining operation.

That the first amount of power is less than the first power amount threshold indicates that the first load mechanism has an insufficient amount of power. That the second amount of power is greater than the second power amount threshold indicates that the solar panel 201 has a sufficient amount of power. Therefore, when the first amount of power is less than the first power amount threshold, and the second amount of power is greater than the second power amount threshold, the control mechanism 202 controls the first load mechanism to move to the carrying mechanism in which the solar panel 201 is located to receive power supplied by the solar panel 201, or the battery on the first load mechanism is replaced with the battery on the solar panel 201.

In an embodiment, the control mechanism 202 is further configured to: determine an operating mode of the first load mechanism based on the output current value of the solar panel 201 to automatically manage the first load mechanism.

In an embodiment, the control mechanism 202 is specifically configured to: determine, based on a type of the first load mechanism and the output current value of the solar panel 201, whether to control the first load mechanism to enter an energy saving mode. After the first load mechanism enters the energy saving mode, at least some of power consuming mechanisms in the first load mechanism are in a closed state.

Specifically, after the first load mechanism enters the energy saving mode, some of or all power consuming mechanisms in the first load mechanism are closed.

When the output current value of the solar panel 201 is less than a preset current threshold, it indicates that current surrounding light intensity is low. In this case, the first load mechanism may enter the energy saving mode, so that the first load mechanism is prevented from running out of power when an amount of power supplied to the first load mechanism is low, and a large amount of power is consumed by the first load mechanism during operating.

The output current value of the solar panel 201 further indicates a surrounding environment. Therefore, an environment in which the first load mechanism is located can be determined based on the output current value of the solar panel 201, and then, whether to control the first load mechanism to enter the energy saving mode is determined based on the type of the first load mechanism.

For example, when the first load mechanism includes a mechanism, such as a lighting lamp, whose entry into the energy saving mode is related to the surrounding environment, if the output current value of the solar panel 201 is less than the preset current threshold, it indicates that the current surrounding light intensity is low, and it may be at night time or a cloudy day currently, and therefore, the control mechanism 202 controls the lighting lamp to be turned on to provide light; or if the output current value is greater than or equal to the preset current threshold, it indicates that the current surrounding light intensity is high, it may be at day time or a cloudy day, and the lighting lamp does not need to provide light, and therefore, the control mechanism 202 controls the lighting lamp to enter the energy saving mode.

In an embodiment, the first load mechanism includes a monitoring device, and the control mechanism 202 is configured to: determine a weather condition of a current day based on a current time period and the output current value of the solar panel 201, and determine, based on the weather condition of the current day, to control the monitoring device to be in a monitoring state or an off state.

Specifically, the current time period and the output current value of the solar panel 201 are checked, so that the weather condition of the current day can be intelligently inferred. Then, whether to enable the monitoring device to be in the monitoring state is determined based on the weather condition of the current day.

For example, if the output current value of the solar panel 201 during the day time is less than a preset current, or if duration in which the output current value of the solar panel 201 during the day time is less than the preset current reaches preset duration, it is determined that it is a cloudy day currently. Otherwise, it is determined that it is a sunny day currently.

In an embodiment, the control mechanism 202 is configured to: if the weather condition of the current day is determined as a first weather condition, control the monitoring device to be in the off state during a first time period and control the monitoring device to be in the monitoring state during a second time period. The first time period is a day time of the current day, and the second time period is a night time of the current day. The control mechanism 202 is further configured to: if the current weather condition is determined as the second weather condition, control the monitoring device to be in the monitoring state throughout the current day.

In an application scenario, the first weather condition is a cloudy day, and the second weather condition is a sunny day. When it is determined that the current day is a cloudy day, the control mechanism 202 may control the monitoring device to perform monitoring at night and to be turned off during the day time to reduce limited solar energy during the day time. When it is determined that the current day is a sunny day, the monitoring device may be controlled to perform monitoring for 24 hours to improve flexibility of energy utilization.

In an embodiment, the control mechanism 202 is further configured to: determine, based on at least one of brightness information of a current surrounding environment of the monitoring device, a current time period, and a type of a monitoring scenario, whether an abnormality occurs in a current monitoring scenario, and send an alarm signal if it is determined that the abnormality occurs. Specifically, the brightness information of the current surrounding environment of the monitoring device may be determined based on the output current value of the solar panel 201.

The current monitoring scenario can be evaluated based on at least one of the brightness information of the current surrounding environment of the monitoring device, the current time period, and the type of the monitoring scenario, to determine whether the abnormality occurs in the current monitoring scenario. When the abnormality occurs, the alarm signal is sent to provide a prompt.

For example, if the output current value of the solar panel 201 is less than the preset current for a long time during a preset time period (such as after 6 p.m. of a day till 5 a.m. of the next day), it indicates that it is currently at night at which an environment is dark. At this moment, if the monitoring device monitors that a quantity of target objects is greater than a quantity threshold, it is determined that the abnormality occurs in the monitoring scenario, and the monitoring device sends the alarm signal.

In an embodiment, the solar panel 201 is detachably connected to the carrying mechanism that carries the solar panel 201, and a positive pole and a negative pole of the solar panel 201 may be configured as a contact piece or a plugging structure. This helps detach the solar panel 201 from the carrying mechanism and clean the solar panel 201. In other embodiments, the solar panel 201 and the carrying mechanism may be an integral structure.

In an embodiment, the control mechanism 202 is configured to: if it is detected that cleanliness of the solar panel 201 does not meet a requirement, generate prompt information to prompt that the solar panel 201 needs to be cleaned. Specifically, when it is detected that the cleanliness of the solar panel 201 is lower than a preset cleanliness threshold, the control mechanism 202 prompts that the solar panel 201 needs to be cleaned. In other implementations, the control mechanism 202 may periodically generate the prompt information to periodically prompt that the solar panel 201 needs to be cleaned to extend the service life of the solar panel 201. The prompt information may be displayed close to the solar panel 201, such as on the carrying mechanism, or may be sent to a third-party mechanism, such as a user terminal, that is, displayed on the user terminal.

In an embodiment, the control mechanism 202 is configured to: if it is detected that the output current value of the solar panel 201 at the second weather condition is less than a seventh current threshold, determine that the cleanliness of the solar panel 201 does not meet the requirement, or analyze an image of the solar panel 201 to determine whether the cleanliness of the solar panel 201 meets the requirement, or detect heat of a surface of the solar panel 20 and if it is detected that heat of at least a part of the surface of the solar panel 201 is greater than a heat threshold, determine that the cleanliness of the solar panel 201 does not meet the requirement.

Specifically, the second weather condition may be a sunny day. When it is detected that the output current value of the solar panel 201 is less than the seventh current threshold on a sunny day, the control mechanism 202 determines that the cleanliness of the solar panel 201 does not meet the requirement. Alternatively, the control mechanism 202 may capture an image of the solar panel 201, a computer vision technology may be used to detect dirt, dust, and other debris on the solar panel 201, and the control mechanism 202 determines, by comparing a dirt condition in the image, whether the cleanliness of the solar panel 201 meets the requirement. Alternatively, because it is considered that heat of a local region on the surface of the solar panel 201 may be abnormal when the cleanliness of the solar panel 201 does not meet the requirement, the heat of the surface of the solar panel 201 may be detected, and when it is detected that the heat of at least a part of the surface of the solar panel 201 is greater than the heat threshold, it is determined that the cleanliness of the solar panel 201 does not meet the requirement. A heat sensor may be mounted to detect a temperature of the surface of the solar panel 201, and the detected heat may be compared with the heat threshold to determine whether the cleanliness meets the requirement. Alternatively, an infrared image of the solar panel 201 may be obtained to determine the heat of the surface of the solar panel 201.

In an embodiment, the first load mechanism is directly powered by the solar panel 201, and the control mechanism 202 is further configured to: control the first load mechanism to supply power to a second load mechanism. Specifically, a power supply manner of the second load mechanism is different from that of the first load mechanism. The first load mechanism is directly powered by the solar panel 201, the control mechanism 202 controls the first load mechanism to supply power to the second load mechanism, and the first load mechanism charges the second load mechanism in a wireless or wired manner.

In an embodiment, the first load mechanism includes a swimming pool cover, and the second load mechanism includes a component around the swimming pool. The control mechanism 202 is configured to: control the swimming pool cover to receive power supplied by the solar panel 201, and control the swimming pool cover to supply power to the component around the swimming pool. Specifically, while receiving the power supplied by the solar panel 201, the swimming pool cover further supplies power to the component around the swimming pool in a wired or wireless manner, so that the component around the swimming pool can be charged conveniently.

In another embodiment, as shown in FIG. 87, the first load mechanism includes a flipping plate 203. The control mechanism 202 is configured to: control the flipping plate 203 to flip (a flipping upward state and a flipping downward state of the flipping plate 203 are shown in FIG. 2) under power supplied by the solar panel 201. The solar panel 201 is disposed on a side surface of the flipping plate 203. Specifically, the flipping plate 203 may flip under electrical energies provided by the solar panel 201, to shield the first load mechanism, such as the pool robot, that is located at a position 204 on a connection mechanism (such as a station) of the flipping plate 203 from sunlight or to charge the first load mechanism, such as the pool robot, and the station. The solar panel 201 is disposed on the side surface of the flipping plate 203. When the flipping plate 203 shields the pool robot from sunlight, the solar panel 201 may be charged. In another embodiment, the solar panel 201 may shield the first load mechanism from sunlight and may be charged.

The above description describes only implementations of the present disclosure and is not intended to limit the scope of the present disclosure. Any equivalent structure or equivalent process transformation performed based on the contents of the specification and the accompanying drawings of the present disclosure or applied directly or indirectly in other related technical fields shall fall within the protection scope of the present disclosure.

## Claims

1. A cleaning device, comprising a cleaning device body, wherein the cleaning device body comprises:
at least one filtering mechanism, wherein the at least one filtering mechanism is at least partially disposed inside the cleaning device body;
at least one drive mechanism configured to generate a suction force to drive liquid to flow through the at least one filtering mechanism;
at least one adjustment assembly configured to adjust an action force applied to the cleaning device in a first direction or a second direction, so that the cleaning device is switched between a first motion state and a third motion state, wherein the cleaning device is configured to perform underwater cleaning in the first motion state, and the cleaning device is configured to perform water surface cleaning in the third motion state;
a moving assembly disposed at the bottom of the cleaning device body and configured to drive the cleaning device to move on a to-be-cleaned surface; and
a propulsion assembly configured to drive the cleaning device to move away from the to-be-cleaned surface.

2. The cleaning device according to claim 1, wherein the cleaning device body comprises a liquid inlet portion, the liquid inlet portion comprises at least one first water inlet, and the at least one first water inlet is provided at the bottom of the cleaning device body and in fluid communication with the at least one filtering mechanism.

3. The cleaning device according to claim 2, wherein the at least one filtering mechanism comprises at least one filtering box, the at least one filtering box comprises at least a first inlet, and the first inlet is in fluid communication with the at least one first water inlet.

4. The cleaning device according to claim 2, wherein the liquid inlet portion further comprises at least a second water inlet, the second water inlet is provided on a side surface or at the top of the cleaning device body, and the second water inlet is in fluid communication with the at least one filtering mechanism.

5. The cleaning device according to claim 4, wherein the second water inlet is in fluid communication with the first inlet.

6. The cleaning device according to claim 4, wherein the at least one filtering mechanism comprises at least one filtering box, the at least one filtering box further comprises at least a second inlet, the second inlet and the first inlet are located on different surfaces of the at least one filtering box, and the second inlet is in fluid communication with the second water inlet.

7. The cleaning device according to any one of claims 1 to 6, wherein the cleaning device further has a second motion state, the at least one filtering mechanism comprises at least one filtering box, the at least one filtering box is provided with at least one flow guiding opening and at least one cover part mating with the at least one flow guiding opening, when the cleaning device is in the first motion state, the at least one cover part covers the at least one flow guiding opening, and when the cleaning device is in the second motion state, the at least one cover part is opened to expose the at least one flow guiding opening.

8. The cleaning device according to claim 7, wherein the at least one cover part is pivotally connected to the at least one filtering box, the cleaning device further comprises an adjustment part mounted on the at least one cover part, and the adjustment part is configured to assist the at least one cover part in covering the at least one flow guiding opening or being opened to expose the at least one flow guiding opening.

9. The cleaning device according to any one of claims 1 to 8, wherein the at least one filtering mechanism comprises a filtering box, the filtering box comprises a first sub-filtering box and a second sub-filtering box, a first sub-filtering layer is disposed on a side wall of the first sub-filtering box, a second sub-filtering layer is disposed on a side wall of the second sub-filtering box, the second sub-filtering box is sleeved inside the first sub-filtering box, and first filtering mesh holes of the first sub-filtering layer and second filtering mesh holes of the second sub-filtering layer are at least partially staggered to each other.

10. The cleaning device according to any one of claims 1 to 9, wherein the cleaning device body comprises a movement propulsion mechanism and a first cleaning part, the movement propulsion mechanism comprises at least a first wheel, a second wheel, and a track, the first wheel and the second wheel are in transmission connection to each other through the track, the first wheel is driven by a moving drive part, and the second wheel is configured to drive the first cleaning part to rotate.

11. The cleaning device according to any one of claims 1 to 10, wherein the cleaning device body further comprises:
a cleaning member disposed on a side portion of the cleaning device body.

12. The cleaning device according to any one of claims 1 to 11, further comprising an in-position detection mechanism for the filtering box configured to detect whether the filtering box is mounted in position on the cleaning device body, wherein the in-position detection mechanism for the filtering box comprises at least one of a sensing assembly, a Hall assembly, an inductance assembly, or a switch assembly.

13. The cleaning device according to any one of claims 1 to 12, wherein the at least one adjustment assembly is configured to adjust a buoyancy force applied to the cleaning device or the action force applied to the cleaning device in the first direction or the second direction.

14. The cleaning device according to claim 13, wherein the at least one adjustment assembly is a mode switching member configured to adjust a magnitude of the buoyancy force applied to the cleaning device in a vertical direction; and
the mode switching member comprises:
a buoyancy cavity configured to accommodate liquid and/or gas; and
a buoyancy adjustment part configured to adjust a volume of the liquid or the gas in the buoyancy cavity.

15. The cleaning device according to any one of claims 1 to 14, wherein the cleaning device body comprises:
a storage assembly configured to store a to-be-spread reagent;
a spreading drive assembly connected to the storage assembly and configured to drive the to-be-spread reagent to be discharged from the storage assembly;
a reagent outlet configured to allow the to-be-spread reagent to be discharged from the storage assembly and enter liquid; and
a control assembly electrically connected to the spreading drive assembly and configured to control the spreading drive assembly.

16. The cleaning device according to claim 15, further comprising a water quality detection module, wherein the water quality detection module is electrically connected to the control assembly, and the control assembly is configured to control the spreading drive assembly based on detection information of the water quality detection module.

17. The cleaning device according to claim 15 or 16, wherein the cleaning device body further comprises a reagent inlet portion, and the reagent inlet portion is configured to allow the to-be-spread reagent to enter the storage assembly.

18. The cleaning device according to any one of claims 15 to 17, wherein the cleaning device body further comprises a first sealed cavity, the first sealed cavity is configured to accommodate at least one motor assembly of the cleaning device, and the storage assembly, the first sealed cavity, and the at least one filtering mechanism are disposed sequentially along a forward direction of the cleaning device.

19. The cleaning device according to any one of claims 1 to 18, wherein the cleaning device body comprises the first sealed cavity, the at least one drive mechanism comprises at least a main water pump motor, the moving assembly comprises a movement drive motor, the main water pump motor and the movement drive motor are disposed in the first sealed cavity, the first sealed cavity and the at least one filtering mechanism are sequentially disposed along the forward direction of the cleaning device, the at least one filtering mechanism is disposed at a front portion of the cleaning device body, and the first sealed cavity is disposed at a rear portion of the cleaning device body.

20. A cleaning device system, comprising the cleaning device according to any one of claims 1 to 19 and a solar energy system, wherein
the solar energy system comprises:
a solar panel and a control mechanism electrically connected to the solar panel, wherein the control mechanism is configured to control, based on obtained information, the solar panel and/or the cleaning device to perform a target event, and the cleaning device is powered directly or indirectly by the solar energy system.
